(19)

**Europäisches Patentamt**
**European Patent Office**
**Office européen des brevets**

(11) **EP 4 044 336 B1**

(12) **EUROPEAN PATENT SPECIFICATION**

(45) Date of publication and mention
of the grant of the patent:
**06.03.2024   Bulletin 2024/10**

(21) Application number: **22152245.1**

(22) Date of filing: **19.01.2022**

(51) International Patent Classification (IPC):
*H01M 50/188* (2021.01)    *H01M 50/534* (2021.01)
*H01M 50/545* (2021.01)    *H01M 50/586* (2021.01)
*H01M 50/593* (2021.01)    *H01M 50/538* (2021.01)
*H01M 50/536* (2021.01)    *H01M 50/186* (2021.01)
*H01M 50/184* (2021.01)    *H01M 50/179* (2021.01)
*H01M 50/167* (2021.01)    *H01M 50/152* (2021.01)
*H01M 50/107* (2021.01)    *H01M 10/04* (2006.01)
*H01M 50/213* (2021.01)    *H01M 50/249* (2021.01)
*H01M 50/503* (2021.01)

(52) Cooperative Patent Classification (CPC):
**H01M 10/0431; H01M 50/107; H01M 50/152;**
**H01M 50/167; H01M 50/179; H01M 50/184;**
**H01M 50/186; H01M 50/188; H01M 50/534;**
**H01M 50/536; H01M 50/538; H01M 50/545;**
**H01M 50/586; H01M 50/593;** H01M 50/213; (Cont.)

(54) **ELECTRODE ASSEMBLY, BATTERY, BATTERY PACK AND VEHICLE**

ELEKTRODENANORDNUNG, BATTERIE, BATTERIEPACK UND FAHRZEUG

ENSEMBLE ÉLECTRODE, BATTERIE, BLOC-BATTERIE ET VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.01.2021   KR 20210007278**
**19.02.2021   KR 20210022894**
**19.02.2021   KR 20210022891**
**19.02.2021   KR 20210022897**
**19.02.2021   KR 20210022881**
**23.02.2021   KR 20210024424**
**08.03.2021   KR 20210030300**
**08.03.2021   KR 20210030291**
**09.04.2021   KR 20210046798**
**04.05.2021   KR 20210058183**
**14.06.2021   KR 20210077046**
**28.06.2021   KR 20210084326**
**01.10.2021   KR 20210131225**
**01.10.2021   KR 20210131208**
**01.10.2021   KR 20210131205**
**01.10.2021   KR 20210131207**
**01.10.2021   KR 20210131215**
**14.10.2021   KR 20210137001**
**15.10.2021   KR 20210137856**
**22.10.2021   KR 20210142196**
**09.11.2021   KR 20210153472**
**19.11.2021   KR 20210160823**

**24.11.2021   KR 20210163809**
**26.11.2021   KR 20210165866**
**03.12.2021   KR 20210172446**
**10.12.2021   KR 20210177091**
**31.12.2021   KR 20210194611**
**31.12.2021   KR 20210194612**
**31.12.2021   KR 20210194572**
**31.12.2021   KR 20210194593**
**31.12.2021   KR 20210194610**
**05.01.2022   KR 20220001802**

(43) Date of publication of application:
**17.08.2022   Bulletin 2022/33**

(60) Divisional application:
**23215163.9 / 4 318 699**

(73) Proprietor: **LG Energy Solution, Ltd.**
**Seoul 07335 (KR)**

(72) Inventors:
• **PARK, Jong-Sik**
**07335 Seoul (KR)**
• **LIM, Jae-Won**
**07335 Seoul (KR)**
• **CHOE, Yu-Sung**
**07335 Seoul (KR)**

**(Cont. next page)**

- **KIM, Hak-Kyun**
  07335 Seoul (KR)
- **LEE, Je-Jun**
  07335 Seoul (KR)
- **LEE, Byoung-Gu**
  07335 Seoul (KR)
- **RYU, Duk-Hyun**
  07335 Seoul (KR)
- **LEE, Kwan-Hee**
  07335 Seoul (KR)
- **LEE, Jae-Eun**
  07335 Seoul (KR)
- **PARK, Pil-Kyu**
  07335 Seoul (KR)
- **HWANGBO, Kwang-Su**
  07335 Seoul (KR)
- **KIM, Do-Gyun**
  07335 Seoul (KR)
- **MIN, Geon-Woo**
  07335 Seoul (KR)
- **LIM, Hae-Jin**
  07335 Seoul (KR)
- **JO, Min-Ki**
  07335 Seoul (KR)
- **CHOI, Su-Ji**
  07335 Seoul (KR)
- **KANG, Bo-Hyun**
  07335 Seoul (KR)

- **KIM, Jae-Woong**
  07335 Seoul (KR)
- **JUNG, Ji-Min**
  07335 Seoul (KR)
- **KONG, Jin-Hak**
  07335 Seoul (KR)
- **LEE, Soon-O**
  07335 Seoul (KR)
- **CHOI, Kyu-Hyun**
  07335 Seoul (KR)

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 472 641**     **EP-A1- 2 677 592**
**GB-A- 2 564 670**     **US-A1- 2005 260 487**
**US-A1- 2016 043 373**     **US-A1- 2016 226 056**
**US-A1- 2017 256 769**     **US-A1- 2018 205 044**

(52) Cooperative Patent Classification (CPC): (Cont.)
H01M 50/249; H01M 50/503; H01M 2220/20;
Y02E 60/10; Y02P 70/50

## EP 4 044 336 B1

**Description**

TECHNICAL FIELD

The present disclosure relates to an electrode assembly, a battery, and a battery pack and a vehicle including the same.

BACKGROUND ART

GB 2 564 670 A describes an electrochemical energy storage device having a curved sidewall and two end faces with a plurality of tabs extending rom one end face of the cylindrical electrochemical cell assembly. The tabs are arranged on the end face in a spiral about the winding axis.

US 2016 226056 A1 describes a method for producing an electrochemical bundle of a lithium battery. An electrochemical bundle is folded through a radial folding with plastic deformation and an axial compacting.

EP 2 472 641 A1 describes a cylindrical Ni-Zn battery that includes a battery shell, an electrode assembly and a liquid electrolyte sealed in the shell. A nickel cathode and a zinc anode have an edge portion that is externally exposed and bent inwardly. Composite membranes of the electrode assembly are sealed together.

US 2005 260487 A1 describes a secondary battery including a cap assembly and collecting plates that are electrically connected to uncoated regions of positive and negative electrodes. The collecting plates have a plurality of holes for electrolyte infusion.

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor of 1865 (diameter: 18 mm, height: 65 mm) or 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

More generally, the problems known from the prior art are solved by the invention as defined according to the subject matter of the independent claims. Particular examples are given by the features of the dependent claims.

DISCLOSURE

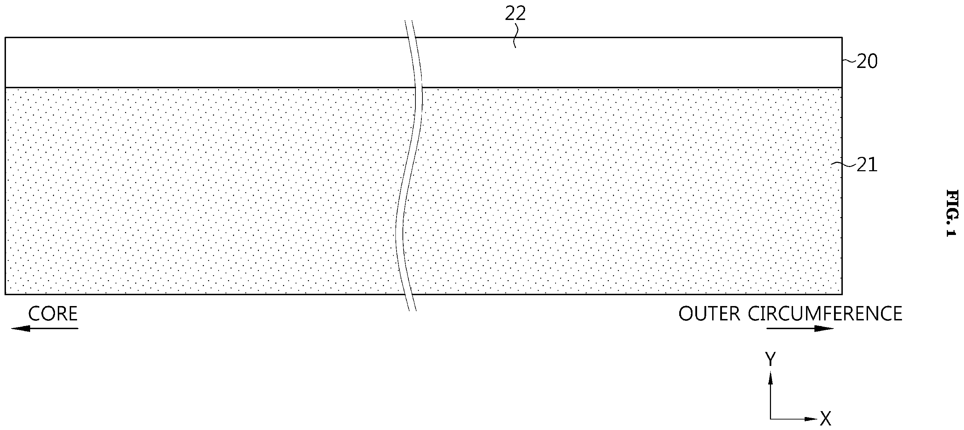

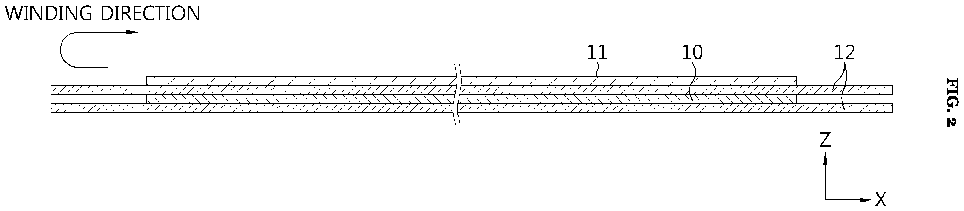

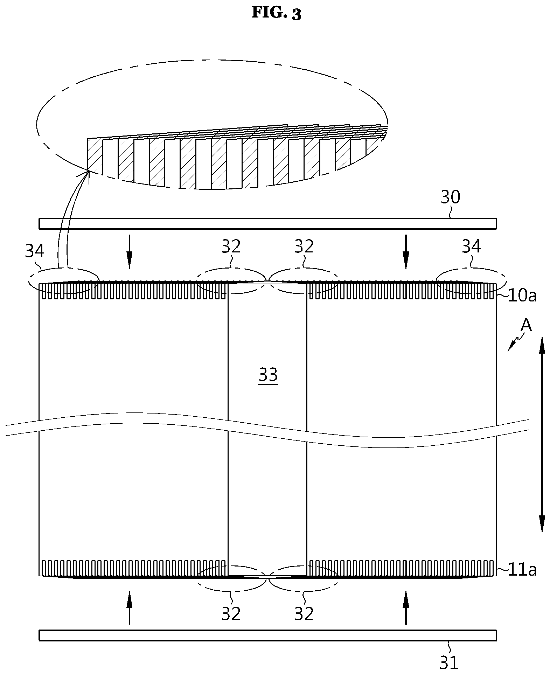

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a

3

current collector to a bent surface region of an uncoated portion.

Referring to FIGS. 1 to 3, a positive electrode 10 and a negative electrode 11 have a structure in which a sheet-shaped current collector 20 is coated with an active material 21, and include an uncoated portion 22 at one long side along the winding direction X. The long side is a direction parallel to the x-axis direction and means a side with a relatively long length.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions.

After the winding process, the uncoated portion 10a of the positive electrode 10 and the uncoated portion 11a of the negative electrode 11 are bent toward the core. After that, current collectors 30, 31 are welded and coupled to the uncoated portions 10a, 11a, respectively.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

In the tab-less cylindrical battery, in order to improve the welding characteristics of the uncoated portions 10a, 11a and the current collectors 30, 31, a strong pressure must be applied to the welding region of the uncoated portions 10a, 11a to bend the uncoated portions 10a, 11a as flat as possible.

However, when the welding region of the uncoated portions 10a, 11a is bent, the shapes of the uncoated portions 10a, 11a may be irregularly distorted and deformed. In this case, the deformed portion may come into contact with the electrode of opposite polarity to cause an internal short circuit or cause micro cracks in the uncoated portions 10a, 11a. In addition, as the uncoated portion 32 adjacent to the core of the electrode assembly A is bent, all or a significant portion of the cavity 33 in the core of the electrode assembly A is blocked. In this case, it causes a problem in the electrolyte injection process. That is, the cavity 33 in the core of the electrode assembly A is used as a passage through which an electrolyte is injected. However, if the corresponding passage is blocked, electrolyte injection is difficult. In addition, while an electrolyte injector is being inserted into the cavity 33, the electrolyte injector may interfere with the uncoated portion 32 near the core, which may cause the uncoated portion 32 to tear.

In addition, the bent portions of the uncoated portions 10a, 11a to which the current collectors 30, 31 are welded should be overlapped in multiple layers and there should not be any empty spaces (gaps). In this way, sufficient welding strength may be obtained, and even with the latest technology such as laser welding, it is possible to prevent laser from penetrating into the electrode assembly A and melting the separator or the active material.

Meanwhile, in the conventional tab-less cylindrical battery, the positive electrode uncoated portion 10a is formed entirely on the upper portion of the electrode assembly A. Therefore, when the outer circumference of the top of the battery housing is pressed inward to form a beading portion, a top edge area 34 of the electrode assembly A is compressed by the battery housing. This compression may cause a partial deformation of the electrode assembly A, which may tear the separator 12 and cause an internal short circuit. If a short circuit occurs inside the battery, it may cause heating or explosion of the battery.

TECHNICAL PROBLEM

The present disclosure is designed to solve the problems of the related art, and therefore the present disclosure is directed to providing an electrode assembly having an improved uncoated portion structure to relieve stress applied to the uncoated portion when bending the uncoated portion exposed at both ends of the electrode assembly.

The present disclosure is also directed to providing an electrode assembly in which an electrolyte injection passage is not blocked even if the uncoated portion is bent.

The present disclosure is also directed to providing an electrode assembly including a structure that may prevent a top edge of the electrode assembly from contacting an inner surface of a battery housing when the top of the battery housing is beaded.

The present disclosure is also directed to providing an electrode assembly improved physical properties of a welding region by applying a segment structure to the uncoated portion of the electrode and optimizing the dimensions (width, height, separation pitch) of the segments to sufficiently increase the number of overlapping layers of the segments in an area used as a welding target region.

The present disclosure is also directed to providing an electrode assembly with improved energy density and reduced resistance by applying a structure in which a current collector is welded over a large area to a bending surface region formed by bending the segments.

The present disclosure is also directed to providing a battery including a terminal and a current collector having an improved design so as to perform electrical wiring at an upper portion thereof.

The present disclosure is also directed to providing a battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.

TECHNICAL SOLUTION

The present invention is given by the subject matter of the independent claims. Particular examples of the present invention are given by the features of the dependent claims.

An electrode assembly may comprise a first electrode, a second electrode and a separator. The separator may be interposed between the first and second electrodes. The first electrode, the second electrode and the separator may be wound around a winding axis. The first electrode may include a first active material portion and a first uncoated portion. The first active material layer may be coated with an active material (layer). The first uncoated portion may be free of the active material layer. The first uncoated portion may be (formed, arranged, disposed) at an edge of the first electrode, wherein the edge extends along a winding direction of the electrode assembly. The first uncoated portion may be configured to provide an electrical connection to the first electrode. The first uncoated portion may include a first portion, a second portion and a third portion. The third portion may be interposed between the first and second portions. A height of the first portion and/or a height of the second portion may be smaller than a height of the third portion. The heights may be determined in a winding axis direction that is parallel to the winding axis of the electrode assembly. The height of the first uncoated portion may be determined as its size in the winding direction from the boundary of the active material portion, or from a region where the (first) active material is deposited.

The electrode assembly may have a (general, approximately, substantially) cylindrical shape and accordingly a cylindrical geometry. The outer circumference of the wound first and second electrode and the separator interposed therebetween may have a generally cylindrical shape. The cylindrical geometry may define an axial direction, a radial direction and a circumferential (tangential) direction in accordance with basic mathematics. The winding axis of the electrode assembly may be parallel to the axial direction. The axial direction may correspond to the winding axis direction of the electrode assembly. The winding direction may be perpendicular to the winding axis direction. The winding direction may correspond approximately to the circumferential direction of the electrode assembly. Herein, a height may be determined in the axial (i.e., winding axis) direction, unless indicated otherwise. Herein, a width may be determined in the winding or circumferential direction, unless indicated otherwise.

The wound first and second electrode and the separator interposed therebetween may have a cross section corresponding to a spiral shape. A core may refer to a generally cylindrical cavity, and may be referred to as a hollow core portion. The description as "generally cylindrical" as used herein with reference to the wound first and second electrode and the separator interposed therebetween shall be understood to refer to the inner and/or outer cylinder surface which may have a step-like transition at the terminal inner or outer winding edge, respectively, with respect to the penultimate winding. The terminal winding edge may extend (generally, approximately) parallel to the winding axis. The terminal winding edge may alternatively be referred to as a short side end. The other side ends connecting between the short side ends may be referred to as long side ends. The edge that extends in the winding direction and at which the uncoated portion is arranged may be a long side end of the first electrode.

In a spread-out view (i.e., without winding or rolling) of the electrode assembly, any of the first electrode, the second electrode and the separator may extend in the axial direction between two respective long side ends. Any of the first electrode, the second electrode and the separator may extend in the winding direction between two respective short side ends. In some examples, any of the long side ends may be longer than any of the short side ends. The long side end of any of the first and second electrodes and the separator may correspond to a longer or longest side end of any of the sheet-shaped first and second electrodes and separator. For example, for a first electrode, a second electrode or a separator having a substantially rectangular shape before being rolled to form the electrode assembly of the battery, an edge of the rectangle formed by the unrolled separator corresponding to the longer side of the rectangle may correspond to the respective "long side end". The long side end of any of the first and second electrodes and the separator may hence be perpendicular to a height direction of the battery. In said direction perpendicular to the height of the battery, the first uncoated portion of the first electrode may protrude from and/or extend beyond the separator. Alternatively, the expressions long and short may be denominations only, and any of the short side ends may be longer than the long side ends. Any of the long side ends may be linear, curved, or patterned (e.g., provided with segments as described below) or a combination thereof.

The first electrode may include a sheet, a plate or a foil on which the active material is deposited. Generally, the first electrode may be a positive electrode or a negative electrode. A region of the first electrode on which the active material is deposited (coated with the active material) may be referred to as the first active material portion. The fist electrode may be coated with the active material except for the uncoated portion along the edge (which may be one of the long sides as described above) of the first electrode. Here, an edge may refer to an end side, a terminal edge, a boundary of the respective component.

The electrode assembly may have any of the features of an electrode assembly as disclosed herein. Any of the first electrode, the second electrode, the separator may have any of the respective features as described below.

The first uncoated portion may be made of a conductive material to provide an electrical connection to the first electrode. The first uncoated portion may be a partial region of a sheet, plate or foil of the first electrode. The first uncoated portion may be dimensioned and arranged such as to provide said electrical connection to the first electrode. In particular, the first uncoated portion may be configured to electrically connect between a terminal and the first electrode. Thus, the first uncoated portion may function as a tab for the first electrode. As such, since the first uncoated portion is a part of the first electrode, the first electrode itself may function as a tab.

The first portion, the second portion and the third portion of the first uncoated portion may be arranged adjacent to one another in the winding direction. The first, second and third portions may have different sizes (i.e., total widths) in the winding direction. In the wound electrode assembly, the first uncoated portion or any of the first, second and third portions may be bendable in the radial direction towards the winding axis (i.e., inwardly) or outwardly. Herein, unless inappropriate or indicated otherwise, expressions such as "inner", "inward(ly)", "innermost" are used towards a center of volume of the (wound) electrode assembly. Accordingly, expressions such as "outer", "outward(ly)", "outermost" are used to indicate a direction or away from the center of volume of the (wound) electrode assembly.

In the wound electrode assembly, the first uncoated portion of the first electrode may first protrude in the winding axis direction above and from between end faces of the second electrode and the separator. The end faces may be collectively referred to as one end face of the electrode assembly, referring to the cylindrical geometry. Accordingly, the wound electrode assembly may have two end faces and a lateral surface extending therebetween.

The first, second and third portion of the first uncoated portion of the first electrode of the electrode assembly may be dimensioned and arranged such, in particular in terms of the respective height, to provide an optimized contact surface to the first electrode. In particular, the uncoated portion may be used to provide a contact surface for a current collector as described below. The first uncoated portion may be exploited to increase the contact surface in comparison to the conventional arrangements, in particular for enlarged battery cell arrangements. The height of any or each of the first portion, second portion and third portion may be determined as a respective size in the winding direction from the boundary of the active material portion, or from a region where the (first) active material is deposited.

In one aspect, there is provided an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, at least a part of the first uncoated portion is defined as an electrode tab by itself, the first uncoated portion includes a first portion adjacent to the core of the electrode assembly, a second portion adjacent to the outer circumference of the electrode assembly, and a third portion interposed between the first portion and the second portion, and the first portion or the second portion has a smaller height than the third portion in the winding axis direction.

In an example, the second portion may be defined as the electrode tab in a state of being bent along the radial direction of the electrode assembly. Additionally or alternatively, the third portion may be defined as the electrode tab in a state of being bent along the radial direction of the electrode assembly. The third portion may be defined as the electrode tab in a state of being bent along a radial direction of the electrode assembly. Generally, an electrode tab may refer to a structure that provide an electrical connection to a respective electrode, in particular for an external load or a terminal of a battery cell,

In another example, the second portion and the third portion may be defined as the electrode tab in a state of being bent along a radial direction of the electrode assembly.

For example, the third portion may be at least partially formed into multiple separate tabs. The separata tabs may be bendable, for example in the radial direction. Alternatively or additionally, at least a partial region of the third portion may be divided into a plurality of segments that are independently bendable. Herein, the terms separate tab and segment may be used interchangeably. Furthermore, the separate tabs may also be referred to as foil tabs, tab fingers, distinct parts, separation parts, cut portions, or the like.

Each or any of the separate tabs may have a polygonal shape, in particular a quadrangular shape with an inner side (i.e., a base) adjoining a continuous (stripe-shaped) part of the first uncoated portion Each or any of the separate tabs may extend from the inner side in the axial (winding axis) direction to an outer side. Each or any of the separate tabs may have lateral sides extending between the inner side and the outer side. The separate tabs may be provided in a consecutive manner along the edge of the first electrode at which the first uncoated portion is arranged. As specified below, the separate tabs may have individual or groupwise identical shapes and/or dimensions. The separate tabs may have any of the features described below.

For example, each of the plurality of separate tabs (segments) may have a geometric shape in which one or more straight lines, one or more curves, or a combination thereof are connected. For example, each or any of the separate tabs may have a non-polygonal shape with at least one of the outer side and the lateral sides being non-straight. Generally, any two-dimensional shape in a plan view may be contemplated for the separate tabs.

In an example, the third portion may be at least partially formed into multiple separate tabs that are individually bendable. Each or any of the separate tabs may be configured such as to be bent. In particular, the separate tabs may be shaped (e.g., individual shape and/or according to a pattern) and/or dimensioned (e.g., in terms of heights, widths, thicknesses) such that they can be individually bent by exerting an external force. Each, any or all of the separate tabs may be bent in a state where the electrode assembly is wound.

As indicated above, the width may be determined in the winding direction. In an example, the width of one or more or each of the multiple separate tabs may decrease in the winding axis direction away from the active material layer. Alternatively, the width of one or more or each of the multiple separate tabs may decrease and then increase in the winding axis direction away from the active material layer. Alternatively, the width of one or more or each of the multiple separate tabs may increase and then decrease in the winding axis direction away from the active material layer. Alternatively, the width of one or more or each of the multiple separate tabs may increase and then remain constant along the winding axis direction away from the active material layer. Alternatively, the width of one or more or each of the multiple separate tabs may decrease and then remain constant along the winding axis direction away from the active material layer. Alternatively, the width of one or more or each of the multiple separate tabs may remain unchanged along the winding axis direction.

In an example, in each of the plurality of segments, a width of a lower portion may be greater than a width of an upper portion.

In an example, in each of the plurality of segments, a width of a lower portion may be identical to a width of an upper portion.

In an example, each of the plurality of segments may have a width that gradually decreases from a lower portion to an upper portion.

In an example, each of the plurality of segments may have a width that gradually decreases and then increases from a lower portion to an upper portion.

In an example, each of the plurality of segments may have a width that gradually increases and then decreases from a lower portion to an upper portion.

In an example, each of the plurality of segments may have a width that gradually increases and then is kept constant from a lower portion to an upper portion.

In an example, each of the plurality of segments may have a width that gradually decreases and then is kept constant from a lower portion to an upper portion.

In an example, the width of at least one of the multiple separate tabs at an outermost position may be smaller than at an innermost position in the winding axis direction. Alternatively, the width of at least one of the multiple separate tabs at an outermost position may be equal to that at an innermost position in the winding axis direction. As such, the width of each or any of the separate tabs may change along the winding axis direction. This may be exploited to optimize a contact surface, an arrangement of the tabs, or the electrical connection.

For example, each of the plurality of segments may have a side formed with one or more straight lines, one or more curves, or a combination thereof.

In one example, each of the plurality of segments may have a side that is convex outward or convex inward.

In another example, a corner of an upper portion of each of the plurality of segments may have a round shape.

In an example, the multiple separate tabs may be shaped such to form internal angles proximal to the active material layer that increases individually or groupwise in the winding direction. Proximal to the active material layer may refer to the inner side of the respective separate tab. The internal angles may be formed between the inner side and the lateral sides of a particular separate tab in a view (in a thickness direction of the first electrode plate, or in the radial direction of the wound electrode assembly). The internal angle may also be referred to as lower angles hereinafter. For example, the plurality of segments may have a lower internal angle that increases individually or in groups in one direction parallel to the winding direction.

In an example, the (lower) internal angle of the plurality of segments may increase individually or in groups in the range of 60 to 85 degrees in one direction parallel to the winding direction. For example, the range may be 45 to 90 degrees, or 45 degrees or greater, 55 degrees or greater, 60 degrees or greater, 65 degrees or greater, or 70 degrees or greater, and 90 degrees or less, 85 degrees or less, 80 degrees or less, or 75 degrees or less.

In an example, the width of one or more or each of the multiple separate tabs decreases in the winding axis direction away from the active material layer. A lower internal angle $\theta$ of a separate tab located at a position corresponding to a radial distance r from the winding axis of the electrode assembly satisfies the formular below.

$$\cos^{-1}\left(\frac{0.5 * D}{r}\right) \leq \theta \leq \tan^{-1}\left(\frac{2 * H * tan\theta_{refer}}{2 * H - p * tan\theta_{refer}}\right)$$

Here, D is a width of the segment in the winding direction; r is a radius of the winding turn including the segment; H is a height of the segment; p is a separation pitch of the segment. Additionally or alternatively, each of the plurality of segments may have a geometric shape with a width that gradually decreases from a lower portion to an upper portion, and a lower internal angle ($\Theta$) of a segment located in a winding turn having a radius (r) based on the core of the electrode assembly may fall within an angle range of the above formula. The radial distance may be determined in the radial direction. The separation pitch may imply a regular spacing and refer to a distance between repetitive positions of the separation tabs.

In an example, each of the plurality of segments has a side formed with one or more straight lines, one or more curves, or a combination thereof.

In an example, each of the plurality of segments has a side that is convex outward or convex inward. The side may refer to any of the outer side, and the lateral sides described above.

In an example, one or more or each of the multiple separate tabs may have a rounded corner at a respective outermost side. In other words, a corner of an upper portion of each of the plurality of segments has a round shape. The corner may be between the outer side and one of the lateral sides of the respective separate tab.

For example, a cut groove may be formed between each of the separate tabs adjacent in the winding direction. Corners of the cut groove may be rounded. In other words, a cut groove may be interposed between segments adjacent to each other along the winding direction, and a lower portion of the cut groove may include a bottom portion and a round portion for connecting both ends of the bottom portion to sides of the segments at both sides of the cut groove. The cut groove may refer to a cavity extending inwardly from the edge of the first electrode in the winding axis direction. As such, a cut groove may separate two separate tabs that are adjacent along the winding direction from each other. The cut groove may also be referred to a notch or a recess or the like.

In an example, the corners of the cut groove may be rounded with a curvature radius of 0 to 0.1 mm, or 0.01 mm to 0.05 mm. In other words, the round portion may have a radius of curvature greater than 0 and equal to or smaller than 0.1 mm, more preferably 0.01 mm to 0.05 mm. The curvature radius may be 0.02 to 0.04 mm.

In an example, the inner side (bottom portion) of the cut groove may be flat. Flat may refer to a substantially straight linear shape in a view in the radial direction (or the thickness direction).

In an example, the multiple separate tabs are spaced from each other in the winding direction by a separation pitch, which may be 0.05 to 1.00 mm. In other words, wherein a separation pitch defined as an interval between two points at which lines extending from the sides of two segments located at both sides of the cut groove meet a line extending from the bottom portion of the cut groove may be 0.05 mm to 1.00 mm.

In an example, the plurality of segments may be made of an aluminum foil. A separation pitch defined as an interval between two points at which lines extending from the sides of two segments located at both sides of the cut groove meet a line extending from the bottom portion of the cut groove may be 0.5 mm to 1.00 mm.

In an example, an inner side of the cut groove maybe spaced from the active material layer by a fixed distance. In other words, the bottom portion of the cut groove may be spaced apart from the active material layer by a predetermined distance.

For example, the fixed distance (a separation distance) between the bottom portion of the cut groove and the active material layer may be 0.2 mm to 4 mm.

For example, one or more or each the multiple separate tabs may be bent at a position located at an inner side of the adjacent cut groove or outwardly offset from an inner side of the adjacent cut groove by 1 mm or less. In other words, a bending region of the plurality of segments in a radial direction of the electrode assembly locates at the range of 0 to 1 mm above a lower end of the cut groove.

In an example, one or more or each of the multiple separate tabs may have lateral sides defining boundaries of the respective separate tab in the winding direction. Optionally, the lateral sides may be provided such as to form, after bending of the respective separate tab, a central angle of 45 degrees or less at the winding axis of the electrode assembly. In other words, in each of the plurality of segments, a circumferential angle of an arc formed by a lower end of the segment based on a core center of the electrode assembly may be 45 degrees or less. Further optionally, the lateral sides may be provided such as to form, after bending of the respective separate tab, central angles at the winding axis of the electrode assembly remain constant.

For example, for one or more or each of the multiple separate tabs, D(r) may satisfy the following formula, wherein r is a distance of the respective separate tab from the winding axis of the electrode assembly in the radial direction, and D(r) is a width of the respective separate tab in the winding direction.

$$1 \le D(r) \le (2 \cdot \pi \cdot r / 360^\circ) \cdot 45^\circ.$$

In other words, in each of the plurality of segments, assuming that a radius of a winding turn including the segment based on a core center of the electrode assembly is r and a width of the segment in the winding direction is D(r), D(r) may satisfy the above formula.

In examples, D(r) may increase as r increases, continuously or stepwise. Alternatively, D(r) may decrease as r increases, continuously or stepwise. Alternatively, D(r) increases and then decreases as r increases, continuously or stepwise.

In other words, in each of the plurality of segments, as the radius (r) of the winding turn where the segment is located based on the core center of the electrode assembly increases, the width D(r) in the winding direction may increase gradually or stepwise, or versa.

In an example, wherein in each of the plurality of segments, as the radius (r) of the winding turn where the segment is located based on the core center of the electrode assembly increases, the width D(r) in the winding direction increases gradually or stepwise and then decreases gradually or stepwise, or vice versa.

In an example, in the plurality of segments, the circumferential angle may be substantially the same based on the core center of the electrode assembly.

In examples, the widths of the multiple separate tabs in the winding direction may increase at a constant rate in the winding direction of the electrode assembly. Alternatively or additionally, the widths of the multiple separate tabs may increase as a function of a distance r from the winding axis of the electrode assembly in the radial direction. Alternatively or additionally, the widths of the multiple separate tabs may change within a range of 1 mm to 11 mm.

In an example, the widths of the plurality of segments in the winding direction may increase at substantially the same rate along one direction parallel to the winding direction of the electrode assembly.

For example, in each of the plurality of segments, as the radius (r) of the winding turn where the segment is located based on the core center of the electrode assembly increases, the width in the winding direction may increase gradually or stepwise within the range of 1 mm to 11 mm.

In an example, in at least a partial region of the second portion and/or the third portion of the first uncoated portion, the height of the first uncoated portion, more particularly the multiple separate tabs thereof, may change continuously or stepwise in the winding direction. Particularly, the heights of the multiple separate tabs may differ in two different regions. In other words, in at least a partial region of the third portion, the height in the winding axis direction may change gradually or stepwise along one direction parallel to the winding direction.

For example, in at least a partial region of the third portion, the height in the winding axis direction may change gradually or stepwise along one direction parallel to the winding direction.

For example, wherein the third portion is divided into multiple regions along the winding direction. The height of the first uncoated portion may differ in two different regions. the third portion and, optionally, the second portion may be divided into a plurality of regions having different heights along one direction parallel to the winding direction, and the height of the uncoated portion in the plurality of regions may increase gradually or stepwise along one direction parallel to the winding direction.

In an example, a height variable region in which the heights of the separate tabs may increase stepwise from a first height (h1) to an (N-1)-th height $h_{N-1}$, wherein N is a height index and a natural number of 2 or above, more particularly 2 to 30. A height uniform region in which the heights of the separate tabs are maintained unchanged at an N-th height $h_N$, wherein $h_N$ is greater than $h_{N-1}$. In other words, the first uncoated portion may include a height variable region in which the height of the segment increases stepwise from a first height ($h_1$) to an N-1$^{th}$ height ($h_{N-1}$, N is height index and a natural number of 2 or above) and a height uniform region in which the height of the segment is maintained as an N$^{th}$ height ($h_N$, greater than $h_{N-1}$). The height of any or each of the separate tabs may be determined as a respective size in the winding direction from a continuous (strap-shaped) portion of the first uncoated portion, i.e., from a point where the separate tabs are structurally distinctive.

For example, the N may be a natural number of 2 to 30.

In an example, separate tabs having a same height hk are disposed in a same winding turn around the winding axis. In other words, the height $h_k$ (k is a natural number of 1 to N) may be allocated to a plurality of segments, and the plurality of segments having the height $h_k$ may be disposed in at least one winding turn.

In an example, at least 90% of a hollow core portion of the electrode assembly, determined with respect to a radial size in the radial direction, may remain uncovered by the separate tabs after bending. In other words, when a start radius of a winding turn including the segment having the height $h_k$ (k is a natural number of 1 to N) is defined as $r_k$, the core of the electrode assembly may not be covered by a bent portion of the segment located at the $r_k$ by at least 90% or more of a diameter thereof. The hollow core portion may refer to a cylindrical cavity around the winding axis of the electrode assembly, around which the first electrode, second electrode and the separator interposed therebetween are wound. Hereinafter, the hollow core portion may also be referred to as a core.

In an example, wherein $r_k$ indicates a distance from the winding axis in a radial direction and $r_c$ indicates a radius of a central hollow portion of the electrode assembly, and $h_k$ indicates the height of separate tabs located at $r_k$, $h_k$ and $r_k$ may be such to satisfy the following:

$$2 \text{ mm} \leq h_k \leq r_k - \alpha^* r_c \ (\alpha \text{ is 0.90 to 1}).$$

In other words, when a start radius of a winding turn including the segment having the height $h_k$ (k is a natural number of 1 to N) is defined as $r_k$ and a radius of the core is $r_c$, the height $h_k$ of the segment may satisfy the above formula.

For example, the electrode assembly may include a tab skip region, a height variable region and a height uniform region. The tab skip region may also be referred to as a segment skip region, and may have no separate tabs. The first portion may correspond to the tab skip region. In the height variable region, the separate tabs may have variable heights. In the height uniform region, the separate tabs may have a uniform height in a radial direction or in the winding direction. The multiple separate tabs disposed in the height variable region and the height uniform region may be bent in the radial direction to form a bending surface region. In other words, the electrode assembly may include a segment skip region having no segment, a height variable region where segments have variable heights, and a height uniform region where segments have a uniform height in order along a radial direction, based on a cross section along the winding axis direction, and the plurality of segments may be disposed in the height variable region and the height uniform region and bent along the radial direction of the electrode assembly to form a bending surface region.

In an example, the third portion may correspond to the height variable region and the height uniform region. Alternatively, the height variable region and the height uniform region correspond to the second portion and the third portion, respectively. In further examples, the first portion may be not divided into segments, and the segment skip region may correspond to the first portion.

In an example, the third portion may be divided into a plurality of segments that are independently bendable, and the height variable region and the height uniform region may correspond to the third portion.

In an example, the second portion and the third portion may be divided into a plurality of segments that are independently bendable, and the height variable region and the height uniform region may correspond to the second portion and the third portion.

For example, in the height variable region and the height uniform region, a maximum height $h_{max}$ of the segments may satisfy the following formula:

$$h_{max} \leq W_{foil} - W_{scrap,min} - W_{margin,min} - W_{gap}$$

wherein $W_{foil}$ is a width of a current collector foil before segments are formed; $W_{scrap,min}$ is a width corresponding to a minimum cut scrap margin when segments are formed by cutting the current collector foil; $W_{margin,min}$ is a width corresponding to a minimum meandering margin of the separator; and $W_{gap}$ is a width corresponding to an insulation gap between an end of the separator and an end of the second electrode facing the first electrode with the separator interposed therebetween. The parameters used herein may be as shown in the drawings.

For example, first electrode is a positive electrode, and the insulation gap may be in the range of 0.2 mm to 6 mm, or 2 mm or more, 3 mm or more, or 4 mm or more, and 6 mm or less, 5.5 mm or less, or 5 mm or less.

For example, the first electrode is a negative electrode and the insulation gap may be in the range of 0.1 mm to 2 mm, or 0.1 mm or more, 0.2 mm or more, 0.5 mm or more, or 1 mm or more, and 2 mm or less, 1.8 mm or less, 1.5 mm or less, or 1.2 mm or less.

For example, wherein the minimum cut scrap margin may be in the range of 1.5 mm to 8 mm, or 1.5 mm or more, or 1.8 mm or more, or 2 mm or more, or 2.5 mm or more, and 8 mm or less, or 6 mm or less, or 3 mm or less.

For example, the minimum meandering margin may be in the range of 0 to 1 mm, or 1 mm or less, or 0.8 mm or less, or 0.5 mm or less, or 0.2 mm or less. In the modification, the minimum cut scrap margin may be zero.

For example, the heights of the separate tabs (segments) disposed in the height variable region may increase gradually or stepwise within the range of 2 mm to 10 mm, or 2 mm or more, 3 mm or more, 4 mm or more, or 5 mm or more, and 10 mm or less, 8 mm or less, 6 mm or less, or 5 mm or less.

In an example, a ratio of a radial size in the radial direction (radial length) of the segment skip region to a radius of the electrode assembly except for the core in the radial direction of the electrode assembly may be 10% to 40%, or 10% or more, 15% or more, 20% or more, or 25% or more, and 40% or less, 35% or less, 30% or less, or 25% or less.

In an example, a ratio of a radial size of the height variable region to a radial size corresponding to the height variable region and the height uniform region in the radial direction of the electrode assembly may be 1% to 50%, or 1% or more, 5% or more, 10% or more, 20% or more or 30% or more, and 50% or less, 40% or less, 35% or less or 30% or less.

In an example, a ratio of a length of an electrode area corresponding to the segment skip region to a total length of the first electrode in the winding (or radial) direction may be 1% to 30%, or 1% or more, 5% or more, 10% or more, 15% or more or 20% or more, and 50% or less, 40% or less, 30% or less or 25% or less.

In an example, a ratio of a length of an electrode area corresponding to the height variable region to the total length of the first electrode in the winding (or radial) direction may be 1% to 40%, or 1% or more, 5% or more, 10% or more, or 20% or more, and 40% or less, 35% or less or 30% or less, or 25% or less.

In an example, a ratio of a length of an electrode area corresponding to the height uniform region to the total length of the first electrode in the winding (or radial) direction may be 50% to 90%, or 50% or more, 60% or more, or 70% or more, and 90% or less, 80% or less, or 70% or less.

For example, widths in the winding direction and/or heights in the winding axis direction of the multiple separate tabs (i.e., at least one selected from widths of the plurality of segments in the winding direction and heights thereof in the winding axis direction) may increase gradually or stepwise along one direction parallel to the winding direction.

In an example, widths in the winding direction and/or heights in the winding axis direction of the multiple separate tabs (i.e., at least one selected from widths of the plurality of segments in the winding direction and heights thereof in the winding axis direction) may increase gradually or stepwise and then decrease gradually or stepwise along one direction parallel to the winding direction, or vice versa (i.e., decrease and then increase).

In an example, the multiple separate tabs may form a multiple tab groups along one direction parallel to the winding direction of the electrode assembly. Separate tabs belonging to one of the tab groups may have a same width in the winding direction and/or a same height in the winding axis direction. Alternatively or additionally, separate tabs belonging to one other of the tab groups may have increasing widths in the winding direction and/or increasing heights in the winding direction. Alternatively or additionally, three successively ones of the tab groups may have widths W1, W2 and W3, respectively, in the winding direction, wherein a ratio W3/W2 is smaller than a ratio W2/W1.

In other words, the plurality of segments may form a plurality of segment groups along one direction parallel to the winding direction of the electrode assembly, and segments belonging to the same segment group may be substantially the same as each other in terms of a width in the winding direction and a height in the winding axis direction.

For example, at least one of widths of the segments belonging to the same segment group in the winding direction and heights thereof in the winding axis direction may increase stepwise along one direction parallel to the winding direction of the electrode assembly.

For example, when three segment groups successively adjacent to each other in one direction parallel to the winding direction of the electrode assembly have widths in the winding direction of W1, W2 and W3, respectively, a combination of segment groups in which W3/W2 is smaller than W2/W1 may be included.

In an example, the first portion and/or the second portion may not be formed into (i.e., do not comprise any) separate tabs and may not be bent along a radial direction of the electrode assembly. For example, the first portion may not be divided into segments, and the first portion may not be bent along a radial direction of the electrode assembly.

For example, the second portion may not be divided into segments, and the second portion may not be bent along a radial direction of the electrode assembly.

For example, an insulating coating layer, for example a polymer resin and an inorganic filler dispersed in the polymer resin, may be formed at a boundary between the active material layer and the first uncoated portion provided. In other words, an insulating coating layer may be formed at a boundary between the active material layer and a region of an uncoated portion provided in a section where the bottom portion of the cut groove and the active material layer are separated.

In an example, the insulating coating layer may include a polymer resin and an inorganic filler dispersed in the polymer resin.

In another example, the insulating coating layer may be formed to cover a boundary portion of the active material layer and the first uncoated portion along the winding direction.

In still another example, the insulating coating layer may be formed to cover the boundary portion of the active material layer and the first uncoated portion along the winding axis direction by a width of 0.3 mm to 5 mm.

In still another example, an end of the insulating coating layer may be located within the range of -2 mm to 2 mm along the winding axis direction based on an end of the separator.

For example, the insulating coating layer may be exposed from (out of) the separator. In other words, the insulating coating layer may be partly uncovered or not overlapped by the separator in a view in the radial (thickness) direction.

For example, an inner side of a cut groove formed in the first uncoated portion and the insulating coating layer may be spaced apart by a distance of 0.5 mm to 2 mm. In other words, an inner side (i.e., a lower end) of the cut groove formed in and the insulating coating layer may be spaced apart by a distance of 0.5 mm to 2 mm.

For example, an end of the insulating coating layer in the winding axis direction may be located within the range of -2 mm to +2 mm with respect to (based on) the inner side (lower end) of the cut groove.

For example, the second electrode may be coated with an active material layer in a second active material portion. An end of the second active material portion in the winding axis direction may overlap the insulating coating layer in a view in the radial direction. In other words, the second electrode may include a second active material portion coated with an active material layer along the winding direction, and an end of the second active material portion may be located between an upper end and a lower end of the insulating coating layer in the winding axis direction. The active material of the second electrode may be different from the active material of the first electrode. In particular, the active material of the second electrode may be configured to provide a different electrochemical potential than the active material of the first electrode.

In still another example, the third portion and/or the second portion may be each formed into a multiple separate tabs that are independently bendable. The electrode assembly may include a bending surface region formed by bending the multiple separate tabs along a radial direction of the electrode assembly. In other words, the third portion and, optionally, the second portion may be divided into a plurality of segments that are independently bendable, and the electrode assembly may include a bending surface region formed by bending the plurality of segments along a radial direction of the electrode assembly.

For example, the number of segments meeting a virtual line parallel to the winding axis direction at any radial location of the bending surface region with reference to the winding axis (based on a core center) of the electrode assembly may be defined as the number of overlapping layers of segments at the corresponding radial location. Here, the bending surface region may include an overlapping layer number uniform region in which the number of overlapping layers of segments is uniform along a radial direction (e.g., away from the winding axis toward an outer circumference, or vice versa), and an overlapping layer number decreasing region located out of the overlapping layer number uniform region in which the number of overlapping layers of segments continuously (gradually) decreases in the radial direction, e.g, toward an outer circumference.

In an example, a radial size of the overlapping layer number uniform region and the overlapping layer number decreasing region may correspond to a radial size of a region in which the multiple separate tabs are formed. In other words a radial size (radial length) of the overlapping layer number uniform region and the overlapping layer number decreasing region based on the core center of the electrode assembly may correspond to a radial length of a radial region in which winding turns including the plurality of segments are located.

In another example, the electrode assembly may include, optionally in the following order, a segment skip region having no separate tabs (segments), a height variable region where the separate tabs (segments) have variable heights, and a height uniform region where separate tabs (segments) have a uniform height along the radial direction. A radius from the winding axis of the electrode assembly, or a radial position, at which the overlapping layer number uniform region starts may correspond to a radius at which the height variable region starts.

For example, in the overlapping layer number uniform region, the number of overlapping layers of the segments may be 10 to 35, or 10 or more, 12 or more, or 15 or more, and 35 or less, 30 or less, 25 or less, or 20 or less.

In an example, the first electrode may be a positive electrode, and in the overlapping layer number uniform region, an overlapping thickness of the segments may be in the range of 100 $\mu$m to 875 $\mu$m, or 100 $\mu$m or more, 200 $\mu$m or more, 400 $\mu$m or more or 500 $\mu$m or more, and 875 $\mu$m or less, 650 $\mu$m or less, or 500 $\mu$m or less.

In another example, the first electrode may be a negative electrode, and in the overlapping layer number uniform region, an overlapping thickness of segments may be in the range of 50 $\mu$m to 700 $\mu$m, or 50 $\mu$m or more, 100 $\mu$m or more, 200 $\mu$m or more, or 350 $\mu$m or more, and 700 $\mu$m or less, 600 $\mu$m or less, 500 $\mu$m or less, or 400 $\mu$m or less.

In still another example, a ratio of to a radial size (radial length) of the overlapping layer number uniform region to a radial size (radial length) of the overlapping layer number uniform region and the overlapping layer number decreasing region may be 30% to 85%, or 30% or more, 40% or more, or 50% or more, and 85% or less, 70% or less, or 60% or less.

For example, the electrode assembly may further comprise a current collector welded to the bending surface region. A welding region of the current collector may overlap the overlapping layer number uniform region by at least 50% in the radial direction of the electrode assembly. In other words, in the radial direction of the electrode assembly, a welding region of the current collector may overlap with the overlapping layer number uniform region by at least 50%.

In an example, the welding region of the current collector may extend such as also to overlap the overlapping layer number decreasing region. In other words, in the radial direction of the electrode assembly, a region of the welding region of the current collector not overlapping with the overlapping layer number uniform region may overlap with the overlapping layer number decreasing region.

In another example, an edge of the current collector may be disposed on the bending surface region to cover an end of a bent portion of outermost separate tabs in the radial direction of the electrode assembly. In other words, an edge of the current collector may be disposed on the bending surface region to cover an end of a bent portion of the outermost segment in the radial direction of the electrode assembly and welded to the bending surface region.

For example, the current collector is welded to the bending surface region such to have a welding strength of 2 kgf/cm$^2$ or more, or 4 kgf/cm$^2$ or more, 6 kgf/cm$^2$ or more or 10 kgf/cm$^2$ or more. In other words, a welding strength of the current collector to the welding region may be 2 kgf/cm$^2$ or more or as indicated.

More preferably, a welding strength of the current collector to the welding region may be 4 kgf/cm$^2$ or more or as indicated.

In still another example, the first uncoated portion may be made of a metal foil. The metal foil may have an elongation of 1.5% to 3.0% and a tensile strength of 25 kgf/mm$^2$ to 35 kgf/mm$^2$. The elongation may be measured according to the standard ASTM E8 / E8M - 16a.

For example, the metal foil may be an aluminum foil.

For example, the first electrode may have a camber length smaller than 20 mm. The camber length may be measured according to US 4,794,773 A.

For example, in the first active material portion, a ratio of a length of a short side along (parallel to) the winding axis direction to a length of a long side along (parallel to) the winding direction may be 1% to 4%, or 2% or more, or 3% or more, and 4% or less.

In an example, a height of the second portion may decrease continuously (gradually) or stepwise in the radial direction or in the winding direction, e.g., from the core toward the outer circumference of the electrode assembly.

In an example, the second portion and the third portion may be formed (divided) into multiple separate tabs (a plurality of segments) that are individually (independently) bendable. Widths and/or heights of the separate tabs in the second portion may be greater than those of the separate tabs in the third portion. In other words, the segments included in the second portion may be greater than the segments included in the third portion in terms of at least one of a width in the winding direction and a height in the winding axis direction.

In an example, the third portion may include a tab skip region (segment skip region) having no separate tabs (segments) along the winding direction of the electrode assembly.

For example, the third portion may include multiple tab skip regions (a plurality of segment skip regions) in the winding direction (i.e., along one direction parallel to the winding direction).

In an example, the multiple tab skip regions may have widths that increase or decrease along the winding direction. In other words, the plurality of segment skip regions may have widths gradually increasing or decreasing along one direction parallel to the winding direction.

For example, a height of the tab skip region may be equal to a height of the first portion or the second portion. In other words, a height of an uncoated portion of the segment skip region may be substantially the same as a height of an uncoated portion of the first portion or an uncoated portion of the second portion.

For example, the plurality of segments may be located within a circumferential angle range preset based on a core center of the electrode assembly.

In an example, the plurality of segments may be located in at least two sectoral regions or polygonal regions disposed in a circumferential direction based on a core center of the electrode assembly.

For example, the multiple separate tabs may be located within a preset central angle, which is for example 20 degrees or more, at the winding axis of the electrode assembly. In other words, the sectoral region may have a circumferential angle of 20 degrees or more. The central angle may refer to an angle at the winding axis corresponding to a circular sector, and may be herein also referred to as circumferential angle. The preset central angle may be 25 degrees or more, 30 degrees or more, or 40 degrees or more.

In an example, the second electrode may include a second active material portion coated with another active material (layer) and a second uncoated portion. The second uncoated portion may be free of the other active material (layer) (i.e., not coated with the active material layer). The second uncoated portion may be arranged at an edge of the second electrode that extends along the winding direction. The second uncoated portion may be configured to provide an electrical connection to the first electrode (i.e., at least a part of the second uncoated portion may be defined as an electrode tab by itself) The second uncoated portion may be partly divided into multiple separate tabs that are individually bendable (i.e., the second uncoated portion may include a region divided into a plurality of segments that are individually (independently) bendable). The multiple separate tabs may be bent along a radial direction of the electrode assembly to form a bending surface region, i.e., the plurality of segments may be bent along a radial direction of the electrode assembly to form a bending surface region.

The electrode assembly as described above may comprise any of the features of an electrode assembly specified below, in particular with reference to the drawings, unless technically inappropriate. The first electrode and the second electrode may be a positive electrode and a negative electrode, respectively. Alternatively, the first electrode and the second electrode may be a negative electrode and a positive electrode, respectively.

According to an aspect, an electrode assembly may comprise a first electrode, a second electrode, and a separator interposed therebetween. The first electrode, the second electrode and the separator may be wound around a winding axis. The first electrode may include a first active material portion coated with an active material layer and a first uncoated portion free of the active material layer. The first uncoated portion may be at an edge of the first electrode that extends along a winding direction. The first uncoated portion may be partly formed into multiple separate tabs that are individually bendable in a radial direction of the electrode assembly. The multiple separate tabs may be bent along the radial direction towards the winding axis of the electrode assembly to form a bending surface region. The bending surface region may include an overlapping layer number uniform region in which the number of overlapping layers of the separate tabs may be 10 or more, and an overlapping layer number decreasing region located adjacent to the overlapping layer number uniform region in which the number of overlapping layers of the separate tabs may decrease in the radial direction away from the overlapping layer number uniform region.

Accordingly, there may be provided an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, the first uncoated portion includes a region divided into a plurality of segments that are independently bendable from the core toward the outer circumference of the electrode assembly, the plurality of segments are bent along a radial direction of the electrode assembly to form a bending surface region, and the bending surface region includes an overlapping layer number uniform region in which the number of overlapping layers of the segments is 10 or more and an overlapping layer number decreasing region located adjacent to the overlapping layer number uniform region so that the number of overlapping layers of the segments gradually decreases away from the overlapping layer number uniform region, along the radial direction.

For example, the electrode assembly may include a tab skip region having no separate tabs, a height variable region in which the separate tabs have heights that increase stepwise along the radial direction of the electrode assembly, and a height uniform region in which the separate tabs have a uniform height along the radial direction of the electrode assembly. From a winding axis of the electrode assembly, a radial position at which the overlapping layer number uniform region starts corresponds to a radial position at which the height variable region starts. The tab skip region, the height variable region and the height uniform region may be as described above.

The electrode assembly according to the above aspect may comprise any of the features of an electrode assembly specified above and specified below, in particular with reference to the drawings, unless technically inappropriate.

In particular, the electrode assembly according to the above aspect may implement any of the following features. An innermost region of the first uncoated portion may not be formed into separate tabs. A ratio of to a radial size of the overlapping layer number uniform region to a radial size of the overlapping layer number uniform region and the overlapping layer number decreasing region may be 30% to 85% or any other value indicated above. A ratio of a length of an electrode area in the winding direction corresponding to the tab skip region to a total length of the first electrode in the winding direction maybe 1% to 30% or any other value indicated above. A ratio of a length of an electrode area in the winding direction corresponding to the height variable region to a total length of the first electrode in the winding direction may be 1% to 40% or any other value indicated above. A ratio of a length of an electrode area in the winding direction corresponding to the height uniform region to a total length of the first electrode in the winding direction may be 50% to 90% or any other value indicated above. In the region divided into the multiple separate tabs, at least one selected from widths of the separate tabs in the winding direction, heights thereof in the winding axis direction, and a lower internal angle thereof may increase stepwise along one direction parallel to the winding direction. A height of the innermost region of the first uncoated portion or an outermost region of the first uncoated portion may be smaller than heights of the multiple separate tabs. The multiple separate tabs may be bent toward the winding axis of the electrode assembly. At least 90% or more, based on a radial size, of a central cylindrical region surrounded by the electrode assembly may be uncovered (not covered) by the bent portion of the separate tabs.

According to a further aspect, an electrode assembly may comprise a positive electrode, a negative electrode, and a separator interposed therebetween. The positive electrode, the negative electrode and the separator may be wound around a winding axis. The positive electrode may include a positive active material portion coated with a positive active material and a first uncoated portion free of the positive active material. The first uncoated portion may be at an edge of the positive electrode that extends along a winding direction of the electrode assembly. The first uncoated portion may be configured to provide an electrical connection to the positive electrode. The first uncoated portion may include multiple separate tabs that are individually bendable in a radial direction of the electrode assembly. The multiple separate tabs may be bent towards the winding axis to form a bending surface region. The bending surface region may include an overlapping layer number uniform region in which the number of overlapping layers of the separate tabs is uniform and an overlapping layer number decreasing region located adjacent to the overlapping layer number uniform region in which the number of overlapping layers of the separate tabs decreases in a direction away from the overlapping layer number uniform region. A combined thickness of the overlapping layers of the separate tabs in the overlapping layer number uniform region is between 100 $\mu$m and 875 $\mu$m.

Accordingly, there may be provided an electrode assembly in which a positive electrode, a negative electrode, and a separator interposed therebetween are wound based on a winding axis to define a core and an outer circumference, wherein the positive electrode includes a first active material portion coated with an active material layer and a first uncoated portion not coated with an active material layer along a winding direction, at least a part of the first uncoated portion is used as an electrode tab by itself, the first uncoated portion includes a plurality of segments that are independently bendable from the core toward the outer circumference of the electrode assembly, the plurality of segments are bent along a radial direction of the electrode assembly and overlapped into multiple layers to form a bending surface region, the bending surface region includes an overlapping layer number uniform region in which the number of overlapping layers of the segments is uniform and an overlapping layer number decreasing region located adjacent to the overlapping layer number uniform region so that the number of overlapping layers of the segments gradually decreases away from the overlapping layer number uniform region, along the radial direction, and in the overlapping layer number uniform region, an overlapping thickness of segments is between 100 um and 875 um.

The electrode assembly according to the above aspect may also comprise any of the features of an electrode assembly specified above and specified below, in particular with reference to the drawings, unless technically inappropriate.

For example, the electrode assembly may further comprise a current collector welded to the overlapping layer number uniform region such that at least a part of a welding region of the current collector overlaps with the overlapping layer number uniform region, and the overlapping layers of segments in the welding region has a thickness in the range of 100 $\mu$m to 875 $\mu$m, or any other value indicated herein.

According to a further aspect, an electrode assembly may comprise a positive electrode, a negative electrode, and a separator interposed therebetween. The positive electrode, the negative electrode and the separator may be wound around a winding axis. The negative electrode may include a negative active material portion coated with a negative active material and a uncoated portion free of the negative active material. The uncoated portion may be at an edge of the negative electrode extending along a winding direction. The uncoated portion may be configured to provide an electrical connection to the negative electrode. The uncoated portion may include multiple separate tabs that may be individually bendable in a radial direction. The multiple separate tabs may be bent toward the winding axis to form a bending surface region. The bending surface region may include an overlapping layer number uniform region in which the number of overlapping layers of the separate tabs is uniform and an overlapping layer number decreasing region adjacent to the overlapping layer number uniform region in which the number of overlapping layers of the separate tabs decreases in a direction away from the overlapping layer number uniform region. A combined thickness of the overlapping layers of the separate tabs in the overlapping layer number uniform region may be between 50 $\mu$m and 700 $\mu$m.

Accordingly, there may be provided an electrode assembly in which a positive electrode, a negative electrode, and a separator interposed therebetween are wound based on a winding axis to define a core and an outer circumference, wherein the negative electrode includes a first active material portion coated with an active material layer and a first uncoated portion not coated with an active material layer along a winding direction, at least a part of the first uncoated portion is used as an electrode tab by itself, the first uncoated portion includes a plurality of segments that are independently bendable from the core toward the outer circumference of the electrode assembly, the plurality of segments are bent along a radial direction of the electrode assembly and overlapped into multiple layers to form a bending surface region, the bending surface region includes an overlapping layer number uniform region in which the number of overlapping layers of the segments is uniform and an overlapping layer number decreasing region located adjacent to the overlapping layer number uniform region so that the number of overlapping layers of the segments gradually decreases away from the overlapping layer number uniform region, along the radial direction, and in the overlapping layer number uniform region, an overlapping thickness of segments is between 50 $\mu$m and 700 $\mu$m.

The electrode assembly according to the above aspect may also comprise any of the features of an electrode assembly specified above and specified below, in particular with reference to the drawings, unless technically inappropriate.

For example, the electrode assembly may further comprise a current collector welded to the overlapping layer number uniform region such that at least a part of a welding region of the current collector overlaps with the overlapping layer number uniform region, and the overlapping layers of segments in the welding region has a thickness in the range of 50 $\mu$m to 700 $\mu$m or any other value indicated herein.

According to another aspect, a battery is provided. The battery may comprise any of the aspects of an electrode assembly as described above. Furthermore, the electrode assembly of the battery may comprise any of the features as specified above.

The battery may further comprise a battery housing, a sealing body and a terminal. The battery housing may include an open first end face and a second end face opposite to the first end face, wherein the electrode assembly is accommodated in the battery housing, and the battery housing is electrically connected to one of the first electrode and the second electrode of the electrode assembly. The sealing body may (be configured to) seal the open first end face of the battery housing. The terminal may be electrically connected to the other one of the first electrode and the second electrode, wherein the terminal may have a surface exposed to the outside of the battery housing.

For example, there may be provided a battery, comprising: an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, at least a part of the first uncoated portion is defined as an electrode tab by itself, the first uncoated portion includes a first portion adjacent to the core of the electrode assembly, a second portion adjacent to the outer circumference of the electrode assembly, and a third portion interposed between the first portion and the second portion, and the first portion or the second portion has a smaller height than the third portion in the winding axis direction; a battery housing including an open end and a bottom portion opposite thereto, wherein the electrode assembly is accommodated in a space between the open end and the bottom portion, and the battery housing is electrically connected to any one of the first electrode and the second electrode to have a first polarity; a sealing body configured to seal the open end of the battery housing; and a terminal electrically connected to the other of the first electrode and the second electrode to have a second polarity and configured to have a surface exposed to the outside.

In an example, a height of the second portion may be smaller than a height of the third portion, the heights being determined in the winding axis direction. The battery housing may include a beading portion pressed inwardly at a region adjacent to the first end face, wherein the beading portion faces and the second portion are spaced apart by a predetermined distance. In other words, the second portion may have a smaller height than the third portion in the winding axis direction, the battery housing may include a beading portion press-fitted inward at a region adjacent to the open end, and an inner circumference of the beading portion facing a top edge of the electrode assembly and the second portion may be spaced apart by a predetermined distance.

The term beading portion may be figurative, and may refer to a circumferential indentation, circumferential groove or recess formed at a sidewall of the battery can. The beading portion may be formed at a position close to (near, proximal to, adjacent) the side end face of the battery housing. The beading portion may have any of the features described below, in particular with reference to the drawings.

For example, a press-in depth (D1) of the beading portion is equal to or larger than a distance (D2) from the inner circumference of the battery housing to a boundary between the second portion and the third portion. In other words, a press-in depth (D1) of the beading portion and a distance (D2) from the inner circumference of the battery housing to a boundary between the second portion and the third portion may satisfy a formula $D1 \leq D2$.

In another example, the battery may further comprise a current collector electrically coupled to the third portion; and an insulator configured to cover the current collector and have an edge interposed and fixed between the inner circumference of the beading portion and the current collector.

For example, a diameter of the current collector may be smaller than a minimum inner diameter of the inner circumference of the beading portion, and a diameter of the current collector may be equal to or greater than an outermost diameter of the third portion.

In another example, the current collector may be located higher than the beading portion in the winding axis direction.

In an example, the sealing body may include a cap configured to seal the open end of the battery housing, a gasket interposed between an edge of the cap and the open end of the battery housing, and a crimping portion bent and extended into the battery housing and configured to surround and fix the edge of the cap together with the gasket. The terminal may be the cap. The terminal may have a second polarity. The cap, gasket and the crimping portion may have any of the respective features as described below, in particular with reference to the drawings.

In an example, the battery may further comprise a first current collector electrically connected to the first uncoated portion. The terminal may be a feed-through terminal inserted into a perforation hole formed in the second end face of the battery housing. The feed-through terminal may be insulated from the battery housing and electrically connected to the first current collector, for example by an insulator interposed between an inner surface of the bottom portion of the battery housing and an upper surface of the first current collector to electrically insulate the inner surface of the bottom portion of the battery housing and the first current collector. In other words, and the terminal may be a rivet terminal installed in a perforation hole formed in the bottom portion of the battery housing to be insulated therefrom and electrically connected the first current collector to have the second polarity.

In an example, the battery may further comprise an insulator interposed between an inner surface of the bottom portion of the battery housing and an upper surface of the first current collector to electrically insulate the inner surface of the bottom portion of the battery housing and the first current collector.

For example, the insulator may have a thickness corresponding to a distance between the inner surface of the bottom portion of the battery housing and the upper surface of the first current collector and be in close contact with the inner surface of the bottom portion of the battery housing and the upper surface of the first current collector.

In an example, the terminal may include a flat portion at a lower end thereof, the insulator may have an opening for exposing the flat portion, and the flat portion may be welded to the first current collector through the opening.

In an example, the second electrode may include a second active material portion coated with an active material layer and a second uncoated portion not coated with an active material layer along the winding direction, the second electrode may have the first polarity, at least a part of the second uncoated portion may be defined as an electrode tab by itself, and the battery may further include a second current collector electrically connected to the second uncoated portion and having an edge at least partially coupled to a sidewall of the battery housing.

In an example, the second electrode may include a second active material portion coated with a second active material and a second uncoated portion free of the second active material, the second uncoated portion being at an edge of the second electrode extending along the winding direction. The second uncoated portion may provide an electrical connection to the second electrode. The battery may further include a second current collector electrically connected to the second uncoated portion and having an edge electrically coupled to a sidewall of the battery housing extending between the first end face and the second end face. The first current collector may have an outer diameter equal to or greater than that of the second current collector.

In other words, the second electrode may include a second active material portion coated with an active material layer and a second uncoated portion not coated with an active material layer along the winding direction, the second electrode may have the first polarity, at least a part of the second uncoated portion may be defined as an electrode tab by itself, the battery may further include a second current collector electrically connected to the second uncoated portion and having an edge at least partially coupled to a sidewall of the battery housing, and the first current collector may have an outer diameter equal to or greater than that of the second current collector.

For example, the first current collector and the second current collector may be respectively welded to the first uncoated portion and the second uncoated portion along a radial direction of the electrode assembly to form a respective welding pattern. A length of the welding pattern of the first current collector may be longer than a length of the welding pattern of the second current collector. The welding pattern may refer to a shape of an area in which the parts are welded together in a respective plan view (e.g., in a direction perpendicular to said area).

In other words, the first current collector and the second current collector may be respectively welded to the first uncoated portion and the second uncoated portion along a radial direction of the electrode assembly to form welding patterns, and a length of the welding pattern of the first current collector may be longer than a length of the welding pattern of the second current collector.

For example, the welding pattern of the first current collector and the welding pattern of the second current collector may be located substantially at the same distance from a core center of the electrode assembly.

For example, the battery housing may include a beading portion that is pressed inwardly (press-fitted inward at an inner wall) adjacent to the first end face of the battery housing (i.e., the open end thereof). The edge of the second current collector may be electrically connected, for example welded, to the beading portion.

For example, a region of the second current collector in electrical contact with the second uncoated portion may be located inner than an inner circumference of the beading portion.

In still another example, the battery may include a cap having an edge supported by the beading portion and having no polarity, a gasket interposed between the edge of the cap and the open end of the battery housing, and a crimping portion bent and extended into the open end of the battery housing and configured to surround and fix the edge of the cap together with the gasket. For example, the edge of the second current collector may be interposed and fixed between the beading portion and the gasket by the crimping portion.

For example, the edge of the second current collector may be welded to the beading portion.

In another aspect of the present disclosure, there is also provided a battery, comprising: an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, the first uncoated portion includes a region divided into a plurality of segments that are independently bendable from the core toward the outer circumference of the electrode assembly, the plurality of segments are bent along a radial direction of the electrode assembly to form a bending surface region, and the bending surface region includes an overlapping layer number uniform region in which the number of overlapping layers of the segments is 10 or more and an overlapping layer number decreasing region located adjacent to the overlapping layer number uniform region so that the number of overlapping layers of the segments gradually decreases away from the overlapping layer number uniform region, along the radial direction, a battery housing including an open end and a bottom portion opposite thereto, wherein the electrode assembly is accommodated in a space between the open end and the bottom portion, and the battery housing is electrically connected to any one of the first electrode and the second electrode to have a first polarity; a sealing body configured to seal the open end of the battery housing; and a terminal electrically connected to the other of the first electrode and the second electrode to have a second polarity and configured to have a surface exposed to the outside.

The battery according to the above aspect may also comprise any of the features of the battery specified above and specified below, in particular with reference to the drawings, unless technically inappropriate. The battery may also comprise any of the aspects of an electrode assembly as described above. Furthermore, the electrode assembly of the battery may comprise any of the features as specified above.

In another aspect of the present disclosure, there is also provided a battery, comprising: an electrode assembly in which a positive electrode, a negative electrode, and a separator interposed therebetween are wound based on a winding axis to define a core and an outer circumference, wherein the positive electrode includes a first active material portion coated with an active material layer and a first uncoated portion not coated with an active material layer along a winding direction, at least a part of the first uncoated portion is used as an electrode tab by itself, the first uncoated portion includes a plurality of segments that are independently bendable from the core toward the outer circumference of the electrode assembly, the plurality of segments are bent along a radial direction of the electrode assembly and overlapped into multiple layers to form a bending surface region, the bending surface region includes an overlapping layer number uniform region in which the number of overlapping layers of the segments is uniform and an overlapping layer number decreasing region located adjacent to the overlapping layer number uniform region so that the number of overlapping layers of the segments gradually decreases away from the overlapping layer number uniform region, along the radial direction, and in the overlapping layer number uniform region, an overlapping thickness of segments is between 100 um and 875 um; a battery housing including an open end and a bottom portion opposite thereto, wherein the electrode assembly is accommodated in a space between the open end and the bottom portion, and the battery housing is electrically connected to any one of the first electrode and the second electrode to have a first polarity; a sealing body configured to seal the open end of the battery housing; and a terminal electrically connected to the other of the first electrode and the second electrode to have a second polarity and configured to have a surface exposed to the outside.

The battery according to the above aspect may also comprise any of the features of the battery specified above and specified below, in particular with reference to the drawings, unless technically inappropriate. The battery may also comprise any of the aspects of an electrode assembly as described above. Furthermore, the electrode assembly of the battery may comprise any of the features as specified above.

For example, the battery may further comprise a current collector welded to the overlapping layer number uniform region such that at least a part of a welding region of the current collector overlaps with the overlapping layer number uniform region, and the overlapping layers of segments in the welding region has a thickness in the range of 100um to 875um.

In another aspect of the present disclosure, there is also provided a battery, comprising: an electrode assembly in which a positive electrode, a negative electrode, and a separator interposed therebetween are wound based on a winding axis to define a core and an outer circumference, wherein the negative electrode includes a first active material portion coated with an active material layer and a first uncoated portion not coated with an active material layer along a winding direction, at least a part of the first uncoated portion is used as an electrode tab by itself, the first uncoated portion includes a plurality of segments that are independently bendable from the core toward the outer circumference of the electrode assembly, the plurality of segments are bent along a radial direction of the electrode assembly and overlapped into multiple layers to form a bending surface region, the bending surface region includes an overlapping layer number uniform region in which the number of overlapping layers of the segments is uniform and an overlapping layer number decreasing region located adjacent to the overlapping layer number uniform region so that the number of overlapping layers of the segments gradually decreases away from the overlapping layer number uniform region, along the radial direction, and in the overlapping layer number uniform region, an overlapping thickness of segments is between 50 um and 700 um; a battery housing including an open end and a bottom portion opposite thereto, wherein the electrode assembly is accommodated in a space between the open end and the bottom portion, and the battery housing is electrically connected to any one of the first electrode and the second electrode to have a first polarity; a sealing body configured to seal the open end of the battery housing; and a terminal electrically connected to the other of the first electrode and the second electrode to have a second polarity and configured to have a surface exposed to the outside.

The battery according to the above aspect may also comprise any of the features of the battery specified above and specified below, in particular with reference to the drawings, unless technically inappropriate. The battery may also comprise any of the aspects of an electrode assembly as described above. Furthermore, the electrode assembly of the battery may comprise any of the features as specified above.

For example, the battery may further comprise a current collector welded to the overlapping layer number uniform region such that at least a part of a welding region of the current collector overlaps with the overlapping layer number uniform region, and the overlapping layers of segments in the welding region has a thickness in the range of 50um to 700um.

In another aspect of the present disclosure, there is also provided a battery pack, comprising a plurality of batteries described above. Accordingly, the battery pack may comprise any of the features of the battery specified above and specified below, in particular with reference to the drawings, unless technically inappropriate. Any or each of the battery pack may comprise any of the aspects of an electrode assembly as described above. Furthermore, the electrode assembly included in the battery pack may comprise any of the features as specified above.

For example, a ratio of diameter to height of the battery may be greater than 0.4, or greater than 0.42, greater than 0.44, or greater than 5, and smaller than 10, smaller than 8, or smaller than 6.

For example, the battery may have a form factor of 46110, 4875, 48110, 4880 or 4680.

For example, the battery may have a resistance of 4 milliohms or less. The resistance of the battery cell may be at least 0.5 m$\Omega$, or at least 1.0 m$\Omega$, and/or 3.8 m$\Omega$ or less, 3.5 m$\Omega$ or less, or 3 m$\Omega$ or less.

According to an example, in the battery pack, the plurality of batteries may be arranged in a predetermined number of columns, so that an electrode terminal of each battery and an outer surface of a bottom portion of a battery housing of each battery face upward.

According to another example, the battery pack may further comprise a plurality of bus bars configured to connect the plurality of batteries in series and in parallel.

For example, the plurality of bus bars may be disposed at an upper portion of the plurality of batteries, and each of the bus bars may include a body portion configured to extend between the terminals of neighboring batteries; a plurality of first bus bar terminals configured to extend from one side of the body portion and electrically coupled to an electrode terminal of a battery located at one side; and a plurality of second bus bar terminals configured to extend from the other side of the body portion and electrically coupled to an outer surface of the bottom of the battery housing of a battery located at the other side.

In another aspect of the present disclosure, there is also provided a vehicle, comprising the battery pack.

ADVANTAGEOUS EFFECTS

According to an example, since the uncoated portions themselves protruding from the upper and lower portions of the electrode assembly are used as electrode tabs, it is possible to reduce the internal resistance of the battery and increase the energy density.

According to another example, since the structure of the uncoated portion of the electrode assembly is improved so that the electrode assembly does not interfere with the inner circumference of the battery in the process of forming the beading portion of the battery housing, it is possible to prevent a short circuit in the cylindrical battery caused by partial deformation of the electrode assembly.

According to still another example, since the structure of the uncoated portion of the electrode assembly is improved, it is possible to prevent the uncoated portion from being torn when the uncoated portion is bent, and the number of overlapping layers of the uncoated portions is sufficiently increased to improve welding strength of the current collector.

According to still another example, it is possible to improve physical properties of a region where the current collector is welded, by applying a segment structure to the uncoated portion of the electrode and optimizing the dimensions (width, height, separation pitch) of the segments to sufficiently increase the number of overlapping layers of the segments in an area used as a welding target region. As mentioned above, the plurality of segments may also be referred to herein as multiple separate tabs.

According to still another example, it is possible to provide an electrode assembly with improved energy density and reduced resistance by applying a structure in which a current collector is welded over a large area to a bending surface region formed by bending the segments.

According to still another example, it is possible to provide a cylindrical battery having an improved design so as to perform electrical wiring at an upper portion thereof.

According to still another example, since the structure of the uncoated portion adjacent to the core of the electrode assembly is improved, it is possible to prevent the cavity in the core of the electrode assembly from being blocked when the uncoated portion is bent. Thus, the electrolyte injection process and the process of welding the battery housing (or the terminal) and the current collector may be carried out easily.

According to still another example, it is possible to provide a cylindrical battery having a structure that has a low internal resistance, prevents internal short circuit and improves welding strength of the current collector and the uncoated portion, and a battery pack and a vehicle including the cylindrical battery.

In particular, the present disclosure may provide a cylindrical battery having a diameter to height ratio of 0.4 or more and a resistance of 4 milliohms (mohm) or less, and a battery pack and a vehicle including the same. The resistance of the battery cell may be at least 0.5 m$\Omega$, or at least 1.0 m$\Omega$, and/or 3.8 m$\Omega$ or less, 3.5 m$\Omega$ or less, or 3 m$\Omega$ or less.

In addition, the present disclosure may have several other effects, and such effects will be described in each example, or any description that can be easily inferred by a person skilled in the art will be omitted for an effect.

DESCRIPTION OF DRAWINGS

The accompanying drawings illustrate a preferred and together with the foregoing disclosure, serve to provide further understanding of the technical features of the present disclosure, and thus, the present disclosure is not construed as being limited to the drawing.

FIG. 1 is a plan view showing a structure of an electrode used for manufacturing a conventional tab-less cylindrical battery.

FIG. 2 is a diagram showing an electrode winding process of the conventional tab-less cylindrical battery.

FIG. 3 is a diagram showing a process of welding a current collector to a bent surface region of an uncoated portion in the conventional tab-less cylindrical battery.

FIG. 4 is a plan view showing a structure of an electrode.

FIG. 5 is a plan view showing a structure of an electrode.

FIG. 6 is a plan view showing a structure of an electrode.

FIG. 7a is a plan view showing a structure of an electrode.

FIG. 7b is a diagram showing the definitions of width, height and separation pitch of a segment according to an example. As mentioned above, the plurality of segments may also be referred to herein as multiple separate tabs. In the following, the term segments is used consistently, and may refer to the separate tabs as recited in the claims.

FIG. 7c is a diagram showing an arc formed by a lower end of a segment defining a width of the segment based on a core center of an electrode assembly, when the electrode is wound according to an example.

FIG. 7d is a diagram showing a relationship of heights $h_1$, $h_2$, $h_3$, $h_4$ of the segments, a core radius ($r_c$), and radii $r_1$, $r_2$, $r_3$, $r_4$ of a winding turns where the segments start appearing, according to an example the present disclosure.

FIG. 7e is a diagram for determining a maximum value ($h_{max}$) of the height (H) of the segments in a height variable region of the segments.

FIG. 7f is a schematic diagram for illustrating a formula for determining a lower internal angle ($\theta$) of the segment.

FIG. 7g is a plan view showing a modified structure of the electrode.

FIG. 7h is a top plan view showing an independent region where a plurality of segments may be located, when the electrode according to the modification of the present disclosure is wound as an electrode assembly.

FIG. 8a is a plan view showing a structure of an electrode.

FIG. 8b is a diagram showing the definitions of width, height and separation pitch of a segment according to another example.

FIG. 8c is a plan view showing a modified structure of the electrode.

FIG. 9 is a diagram showing segment structures according to various modifications of the present disclosure.

FIG. 10a is a diagram showing a cross section of a bending surface region formed by bending the segment toward the core of the electrode assembly.

FIG. 10b is a top perspective view schematically showing an electrode assembly in which the bending surface region is formed.

FIG. 10c is a graph showing results obtained by counting the number of overlapping layers of segments along a radial direction in a bending surface region of a positive electrode formed at an upper portion of the electrode assemblies according to Examples 1-1 to 1-7 and a comparative example.

FIG. 10d is a graph showing results obtained by counting the number of overlapping layers of segments measured along the radial direction in a bending surface region of a positive electrode formed at an upper portion of the electrode assemblies according to Examples 2-1 to 2-5, Examples 3-1 to 3-4, Examples 4-1 to 4-3, and Examples 5-1 and 5-2.

FIG. 10e is a graph showing results obtained by counting the number of overlapping layers of segments measured along the radial direction in a bending surface region of a positive electrode formed at an upper portion of the electrode assemblies according to Examples 6-1 to 6-6 and Examples 7-1 to 7-6.

FIG. 10f is a top plan view of the electrode assembly showing an overlapping layer number uniform region b1 and an overlapping layer number decreasing region b2 in the bending surface region of the segment according to an example.

FIG. 11 is a sectional view showing a jelly-roll type electrode assembly in which the electrode of the first example is applied to a first electrode (a positive electrode) and a second electrode (a negative electrode), taken along the Y-axis direction (winding axis direction).

FIG. 12 is a sectional view showing a jelly-roll type electrode assembly in which the electrode of the second example is applied to the first electrode (the positive electrode) and the second electrode (the negative electrode), taken along the Y-axis direction (winding axis direction).

FIG. 13 is a sectional view showing a jelly-roll type electrode assembly in which any one of the electrodes of the third to fifth examples (modifications thereof) is applied to the first electrode (the positive electrode) and the second electrode (the negative electrode), taken along the Y-axis direction (winding axis direction).

FIG. 14 is a sectional view showing an electrode assembly, taken along the Y-axis direction (winding axis direction). This does not fall into the scope of the invention.

FIG. 15 is a sectional view showing an electrode assembly according to still another example, taken along the Y-axis direction (winding axis direction).

FIG. 16 is a sectional view showing an electrode assembly according to still another example, taken along the Y-axis direction (winding axis direction).

FIG. 17 is a sectional view showing a cylindrical battery according to an example, taken along the Y-axis direction.

FIG. 18 is a sectional view showing a cylindrical battery according to another example, taken along the Y-axis direction.

FIG. 19 is a sectional view showing a cylindrical battery according to still another example, taken along the Y-axis direction.

FIG. 20 is a sectional view showing a cylindrical battery according to still another example, taken along the Y-axis.

FIG. 21 is a sectional view showing a cylindrical battery according to still another example, taken along the Y-axis.

FIG. 22 is a sectional view showing a cylindrical battery according to still another example, taken along the Y-axis.

FIG. 23 is a sectional view showing a cylindrical battery according to still another example, taken along the Y-axis.

FIG. 24 is a sectional view showing a cylindrical battery according to still another example, taken along the Y-axis.

FIG. 25 is a sectional view showing a cylindrical battery according to still another example, taken along the Y-axis.

FIG. 26 is a top plan view showing a structure of a first current collector according to an example.

FIG. 27 is a top plan view showing a structure of a second current collector according to an example.

FIG. 28 is a top plan view showing a state in which a plurality of cylindrical batteries are electrically connected.

FIG. 29 is a partially enlarged view of FIG. 28.

FIG. 30 is a diagram schematically showing a battery pack according to an example.

FIG. 31 is a diagram schematically showing a vehicle including the battery pack according to an example.

EXAMPLES

Hereinafter, preferred examples of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the invention, in the accompanying drawings, some components may not be drawn to scale, but their dimensions may be exaggerated. Also, the same reference numbers may be assigned to the same components in different examples.

When it is explained that two objects are 'identical', this means that these objects are 'substantially identical'. Accordingly, the substantially identical objects may include deviations considered low in the art, for example, deviations within 5%. Also, when it is explained that certain parameters are uniform in a region, this may mean that the parameters are uniform in terms of an average in the corresponding region.

First, an electrode assembly according to an example will be described. The electrode assembly may be a jelly-roll type electrode assembly in which a first electrode and a second electrode having a sheet shape and a separator interposed therebetween are wound in one direction. However, the present invention is not limited to a specific kind of the electrode assembly.

For example, at least one of the first electrode and the second electrode includes an uncoated portion not coated with an active material at a long side end in the winding direction. At least a part of the uncoated portion is used as an electrode tab by itself. The uncoated portion includes a core-side uncoated portion adjacent to a core of the electrode assembly, a circumferential uncoated portion adjacent to an outer circumference of the electrode assembly, and an intermediate uncoated portion interposed between the core-side uncoated portion and the circumferential uncoated portion.

For example, at least one of the core-side uncoated portion and the circumferential uncoated portion has a relatively lower height than the intermediate uncoated portion.

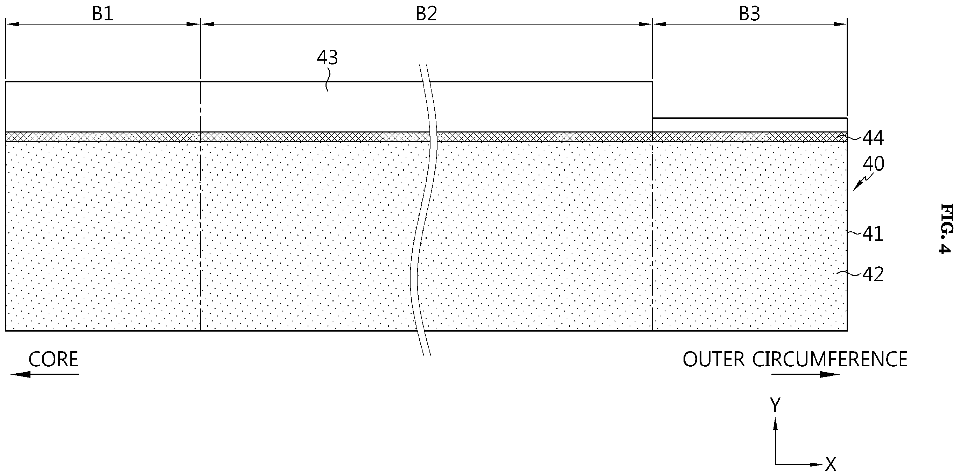

FIG. 4 is a plan view showing a structure of an electrode 40.

Referring to FIG. 4, the electrode 40 of the first example includes a current collector 41 made of metal foil and an active material layer 42. The metal foil may be metal with conductivity, for example aluminum or copper, and is appropriately selected according to the polarity of the electrode 40. The active material layer 42 is formed on at least one surface of the current collector 41. The active material layer 42 is formed along the winding direction X. The electrode 40 includes an uncoated portion 43 at the long side end in the winding direction X. The uncoated portion 43 is a partial area of the current collector 41 where the active material is not coated. The region of the current collector 41 where the active material is formed may be called an active material portion.

In the electrode 40, the width of the active material portion in a direction along a short side of the current collector 41 may be 50 mm to 120 mm, and the length of the active material portion in a direction along a long side of the current collector 41 may be 3 m to 5 m. Accordingly, the ratio of the short side to the long side of the active material portion may be 1% to 4%.

For example, in the electrode 40, the width of the active material portion in a direction along a short side of the current collector 41 may be 60 mm to 70 mm, and the length of the active material portion in a direction along a long side of the current collector 41 may be 3 m to 5 m. Accordingly, the ratio of the short side to the long side of the active material portion may be 1.2% to 2.3%.

The ratio of the short side to the long side of the active material portion is significantly smaller than the ratio of the short side to the long side of an active material portion in the electrode used in a cylindrical battery having a form factor of 1865 or 2170, which is 6% to 11%.

For example, the current collector 41 may have an elongation of 1.5% to 3.0% and a tensile strength of 25 kgf/mm$^2$ to 35 kgf/mm$^2$. The elongation and tensile strength may be measured according to the measurement method of IPC-TM-650. The electrode 40 is manufactured by forming an active material layer 42 on the current collector 41 and then compressing the same. During the compression, a region of the uncoated portion 43 and a region of the active material layer 42 have different elongations. Therefore, a swell occurs on the electrode 40 after the compression, and the swell is more severe as the electrode 40 is longer.

Optimization of the elongation and tensile strength for the current collector 41 reduces the camber length after the compression to less than 20 mm when the length of the electrode 40 is about 4m. The camber length is a maximum amount of deflection of the electrode 20 in the winding direction X when the swelled electrode 20 is unfolded. The maximum amount of deflection may be measured at a circumferential end. The electrode 40 in which the elongation and tensile strength of the current collector 41 are optimized has a small camber length, so that there is no meandering defect while notching the uncoated portion 43 or winding the electrode 40.

The current collector 41 tends to be easily ruptured as the elongation is small. When the elongation of the current collector 41 is less than 1.5%, the rolling process efficiency of the current collector 41 is deteriorated, and thus, when the electrode 40 coated with the active material layer 42 is compressed onto the current collector 41, a disconnection may occur in the current collector 41. Meanwhile, when the elongation of the current collector 41 exceeds 3.0%, the active material portion of the electrode 40 is elongated more, and accordingly the camber length increases significantly. When the tensile strength of the current collector 41 is less than 25 kgf/mm$^2$ or more than 35 kgf/mm$^2$, the electrode process efficiency of the electrode 40 is deteriorated.

The camber phenomenon is particularly problematic in a positive electrode current collector made of an aluminum foil. According to the present disclosure, if an aluminum foil having an elongation of 1.5% to 3.0% and a tensile strength of 25 kgf/mm$^2$ to 35 kgf/mm$^2$ is used as a current collector, the camber phenomenon may be suppressed. It is preferable that an active material layer is formed on the current collector to serve as a positive electrode.

For example, an insulating coating layer 44 may be formed at a boundary between the active material layer 42 and the uncoated portion 43. The insulating coating layer 44 is formed such that at least a part thereof overlaps with the boundary between the active material layer 42 and the uncoated portion 43. The insulating coating layer 44 prevents a short circuit between two electrodes having different polarities and facing each other with a separator interposed therebetween. The insulating coating layer 44 has a width of 0.3 mm to 5 mm and thus may cover the boundary portion of the active material layer 42 and the uncoated portion 43. The width of the insulating coating layer 44 may vary in a winding direction of the electrode 40. The insulating coating layer 44 contains a polymer resin and may contain inorganic fillers such as Al$_2$O$_3$. The portion of the current collector 41 covered by the insulating coating layer 44 is not an area coated with an active material layer and thus may be regarded as an uncoated portion.

The uncoated portion 43 may comprise a core-side uncoated portion B1 adjacent to the core side of the electrode assembly, a circumferential uncoated portion B3 adjacent to the outer circumference side of the electrode assembly, and an intermediate uncoated portion B2 interposed between the core-side uncoated portion B1 and the circumferential uncoated portion B3.

The core-side uncoated portion B1, the circumferential uncoated portion B3 and the intermediate uncoated portion B3 may be defined as an uncoated portion of a region adjacent to the core, an uncoated portion of a region adjacent to the outer circumference, and an uncoated portion of a remaining region excluding the above, respectively, when the electrode 40 is wound into a jelly-roll type electrode assembly.

Hereinafter, the core-side uncoated portion B1, the circumferential uncoated portion B3, and the intermediate uncoated portion B2 will be referred to as a first portion, a second portion, and a third portion, respectively.

The first portion B1 is an uncoated portion of the electrode area including an innermost winding turn, and the second portion is an uncoated portion of the electrode area including an outermost winding turn.

In another example, the boundary of B1/B2 may be suitably defined as a point at which the height (or, change pattern) of the uncoated portion substantially changes from the core of the electrode assembly to the outer circumference, or a certain percentage (%) point based on the radius of the electrode assembly (e.g., 5% point, 10% point, 15% point of the radius, etc.).

The boundary of B2/B3 is a point at which the height (or, change pattern) of the uncoated portion substantially changes from the outer circumference of the electrode assembly to the core, or a certain percentage (%) point based on the radius of the electrode assembly (e.g., 85% point, 90% point, 95% point of the radius, etc.). When the boundary of B1/B2 and the boundary of B2/B3 are specified, the third portion B2 may be specified automatically.

If only the boundary of B1/B2 is specified, the boundary of B2/B3 may be appropriately selected at a point near the circumference of the electrode assembly. In an example, the second portion may be defined as an uncoated portion of the electrode region that constitutes an outermost winding turn. Conversely, if only the boundary of B2/B3 is specified, the boundary of B1/B2 may be appropriately selected at a point near the core of the electrode assembly. In an example, the first portion may be defined as an uncoated portion of the electrode region that constitutes an innermost winding turn.

In the first example, the height of the uncoated portion 43 is not constant and there is a relative difference in the winding direction X. That is, the height (length in the Y-axis direction) of the second portion B3 is relatively smaller than that of the first portion B1 and the third portion B2.

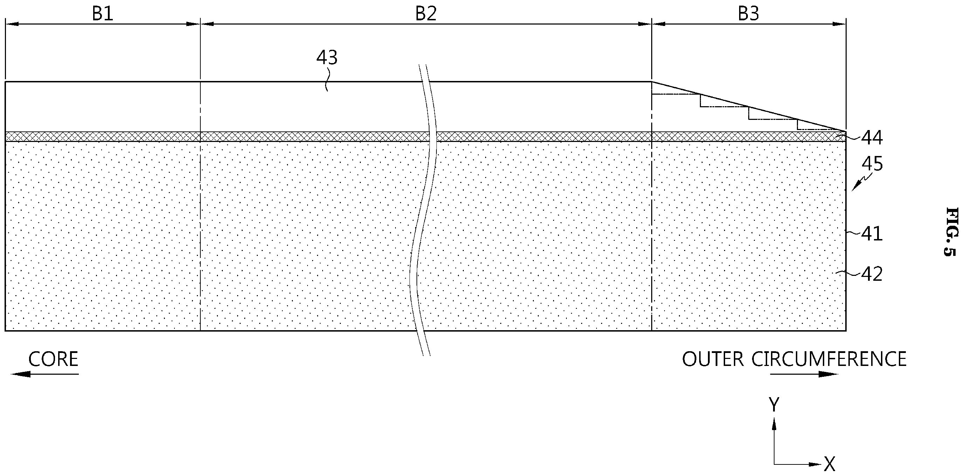

FIG. 5 is a plan view showing a structure of an electrode 45.

Referring to FIG. 5, the electrode 45 of the second example differs from that of the first example only in that the height of the second portion B3 gradually decreases toward the outer circumference, and the other configuration is substantially the same.

In one modification, the second portion B3 may be transformed into a step shape (see dotted lines) in which the height is decreased stepwise.

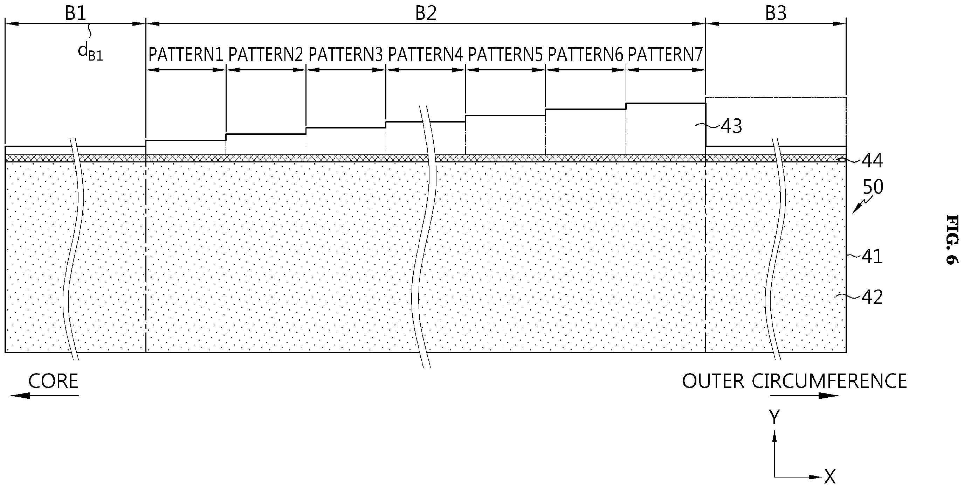

FIG. 6 is a plan view showing a structure of an electrode 50.

Referring to FIG. 6, in the electrode 50 of the third example, the heights of the first portion B1 and the second portion B3 are 0 or more and relatively smaller than that of the third portion B2. In addition, the heights of the first portion B1 and the second portion B3 may be the same or different from each other.

For example, the height of the third portion B2 may have a step shape that increases stepwise from the core to the outer circumference.

Patterns 1 to 7 classify the third portion B2 based on the position where the height of the uncoated portion 43 changes. For example, the number of patterns and the height (length in the Y-axis direction) and width (length in the X-axis direction) of each pattern may be adjusted to disperse stress as much as possible during the bending process of the uncoated portion 43. The stress dispersion is to prevent the uncoated portion 43 from being torn when the uncoated portion 43 is bent toward the core of the electrode assembly.

The width ($d_{B1}$) of the first portion B1 is designed by applying a condition that the core of the electrode assembly is not covered when the patterns of the third portion B2 are bent toward the core. The core means a cavity existing at the winding center of the electrode assembly.

In one example, the width ($d_{B1}$) of the first portion B1 may increase in proportion to the bending length of Pattern 1. The bending length corresponds to the height of the pattern based on the bending point of the pattern.

For example, the width ($d_{B1}$) of the first portion B1 may be set so that the radial width of the winding turns formed by the first portion B1 is equal to or greater than the bending length of Pattern 1. In a modified example, the width ($d_{B1}$) of the first portion B1 may be set so that the value obtained by subtracting the radial width of the winding turns formed by the first portion B1 from the bending length of Pattern 1 is less than 0 or equal to or less than 10% of the radius of the core.

In a specific example, when the electrode 60 is used to manufacture an electrode assembly of a cylindrical battery having a form factor of 4680, the width ($d_{B1}$) of the first portion B1 is set to 180 to 350 mm according to the diameter of the core of the electrode assembly and the bending length of Pattern 1.

In an example, the width of each pattern may be designed to constitute one or more winding turns of the electrode assembly.

In one modification, the height of the third portion B2 may have a step shape that increases and then decreases from the core to the outer circumference.

In another modification, the second portion B3 may be modified to have the same structure as the second example.

In still another modification, the pattern structure applied to the third portion B2 may be expanded to the second portion B3 (see a dotted line).

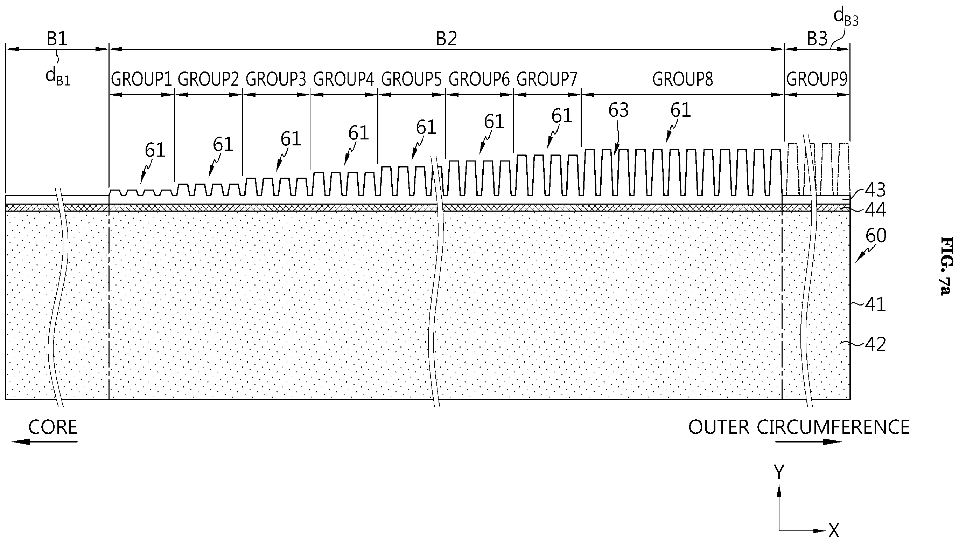

FIG. 7a is a plan view showing a structure of an electrode 60.

Referring to FIG. 7a in the electrode 60 of the fourth example, the heights of the first portion B1 and the second portion B3 in the winding axis (Y) direction are 0 or more and relatively smaller than that of the third portion B2. In addition, the height of the first portion B1 and the second portion B3 in the winding axis (Y) direction may be the same or different.

For example, at least a partial region of the third portion B2 may include a plurality of segments 61. As mentioned above, the plurality of segments may also be referred to herein as multiple separate tabs. In the following, the term segments is used consistently, and may refer to the separate tabs as recited in the claims. The plurality of segments 61 may increase in height stepwise from the core to the outer circumference. The plurality of segments 61 have a geometric shape in which the width gradually decreases from the bottom to the top. For example, the geometric shape is a trapezoidal shape. As will be explained later, the shape of the geometric figure may be modified in various ways.

The segment 61 may be formed by laser notching. The segment 61 may be formed by a known metal foil cutting process such as ultrasonic cutting or punching.

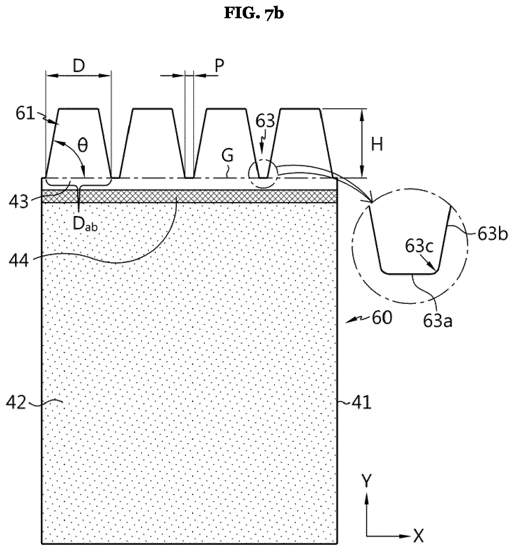

In the fourth example, in order to prevent the active material layer 42 and/or the insulating coating layer 44 from being damaged during bending of the uncoated portion 43, it is preferable to provide a predetermined gap between a bottom G (see FIG. 7b) of a cut groove 63 between the segments 61 and the active material layer 42. This is because stress is concentrated near the bottom of the cut groove 63 when the uncoated portion 43 is bent. The gap is preferably 0.2 mm to 4 mm, more preferably 1.5 mm to 2.5 mm. The gap may by vary along a winding direction of the electrode 60. If the gap is adjusted within the corresponding numerical range, it is possible to prevent the active material layer 42 and/or the insulating coating layer 44 from being damaged near the bottom of the cut groove 63 by the stress generated during bending of the uncoated portion 43. In addition, the gap may prevent the active material layer 42 and/or the insulating coating layer 44 from being damaged due to tolerances during notching or cutting of the segments 61. The lower end of the cut groove 63 and the insulating coating layer 44 may be separated by 0.5 mm to 2.0 mm. When the electrode 60 is wound, the end of the insulating coating layer 44 in the winding axis (Y) direction may be located in the range of -2 mm to 2 mm along the winding axis direction with respect to the end of the separator. The insulating coating layer 44 may prevent a short circuit between two electrodes having different polarities facing each other with a separator interposed therebetween and support the bending point when the segments 61 are bent. In order to improve the effect of preventing a short circuit between the two electrodes, the insulating coating layer 44 may be exposed out of the separator. In addition, in order to further maximize the effect of preventing a short circuit between the two electrodes, the width of the insulating coating layer 44 may be increased so that its end in the winding axis (Y) direction is located higher than the lower end of the cut groove 63. In one example, the end of the insulating coating layer 44 in the winding axis direction may be located within the range of -2 mm to +2 mm with respect to the lower end of the cut groove 63.

The plurality of segments 61 may form a plurality of segment groups from the core to the outer circumference. The plurality of segments belonging to the same segment group may be substantially the same as each other in terms of at least one of a width, a height, and a separation pitch. The width, height and separation pitch of segments belonging to the same segment group may be the same as each other.

FIG. 7b is a diagram showing the definitions of width (D), height (H) and separation pitch (P) of the trapezoidal segment 61.

Referring to FIG. 7b, the width (D), height (H) and separation pitch (P) of the segment 61 are designed to prevent abnormal deformation of the uncoated portion 43 while sufficiently increasing the number of overlapping layers in order to prevent the uncoated portion 43 near the bending point from being torn during bending of the uncoated portion 43 and improve sufficient welding strength of the uncoated portion 43.

The segment 61 is bent on a line G passing through the lower end of cut groove 63 or above the line G. The cut groove 63 may render bending of the segment 61 smooth and easy in a radial direction of the electrode assembly.

The width (D) of the segment 61 is defined as a length between two points where two straight lines extending from both sides 63b of the segment 61 meet a straight line extending from the bottom portion 63a of the cut groove 63. The height (H) of the segment 61 is defined as a shortest distance between the uppermost side of the segment 61 and a straight line extending from the bottom portion 63a of the cut groove 63. The separation pitch (P) of the segment 61 is defined as a length between two points where a straight line extending from the bottom portion 63a of the cut groove 63 meets straight lines extending from two sides 63b connected to the bottom portion 63a. When the side 63b and/or the bottom portion 63a is curved, the straight line may be replaced with a tangent line extending from the side 63b and/or the bottom portion 63a at the intersection point where the side 63b and the bottom portion 63a meet.

For example, the width (D) of the segment 61 is at least 1 mm. If D is less than 1 mm, an area where the segment 61 does not overlap enough to secure welding strength or an empty space (gap) may occur when the segment 61 is bent toward the core.

For example, the width (D) of the segment 61 may be adaptively adjusted according to the radius of the winding turn where the segment 61 is located so that the segment 61 easily overlaps in the radial direction when the segment 61 is bent toward the core of the electrode assembly.

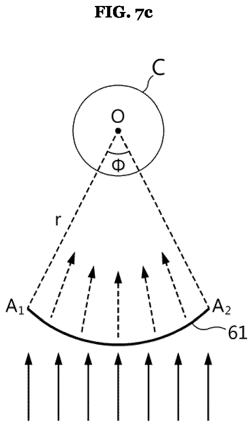

FIG. 7c is a diagram showing an arc ($A_1A_2$) formed by the lower end (line segment $D_{ab}$ of FIG. 7b) of the segment 61 where the width (D) of the segment 61 is defined when the electrode 60 is wound according to an example, based on the core center O of the electrode assembly.

Referring to FIG. 7c, the arc ($A_1A_2$) has a length corresponding to the width (D) of the segment 61, and has a circumferential angle ($\Phi$) with respect to the core center of the electrode assembly. The circumferential angle ($\Phi$) may be defined as an angle between two line segments connecting both ends of the arc ($A_1A_2$) and the core center O on a plane perpendicular to the winding axis passing through the arc ($A_1A_2$).

When the length of the arc ($A_1A_2$) of the segment 61 is the same, the circumferential angle ($\Phi$) decreases as the radius (r) of the winding turn where the segment 61 is located increases. Conversely, when the circumferential angle ($\Phi$) of the segment 61 is the same, as the radius (r) of the winding turn where the segment 61 is located increases, the length of the arc ($A_1A_2$) increases proportionally.

The circumferential angle ($\Phi$) affects the bending quality of the segment 61. In the drawing, a solid arrow indicates a direction of a force applied to bend the segment 61, and a dotted arrow indicates a direction in which the segment 61 is bent. The bending direction is toward the core center O.

The circumferential angle ($\Phi$) of the segment 61 maybe preferably 45 degrees or less and more preferably 30 degrees or less depending on a radius (r) of a winding turn at which the segment 61 is located, thereby to improve the uniformity of bending and prevent cracks from occurring.

In one aspect, the circumferential angle ($\Phi$) of the segment 61 may increase or decrease gradually or stepwise along a radial direction of the electrode assembly within the above numerical range. In other aspect, the circumferential angle ($\Phi$) of the segment 61 may increase gradually or stepwise and then decreases gradually or stepwise along a radial direction of the electrode assembly within the above numerical range, or vice versa. In another aspect, the circumferential angle ($\Phi$) of the segment 61 may be substantially the same along a radial direction of the electrode assembly within the above numerical range.

According to the experiment, when the circumferential angle ($\Phi$) of the segment 61 exceeds 45 degrees, the bending shape of the segment 61 is not uniform. The force applied to a middle part of the segment 61 is seriously different from the force applied to a side part, so the segment 61 is not uniformly pressed in the circumferential direction. In addition, if the pressing force is increased for the uniformity of bending, there is a possibility that cracks may occur in the uncoated portion 43 near the cut groove 63.

In one example, the circumferential angle ($\Phi$) of the segments 61 included in the electrode 60 is substantially the same, and the width of the segment 61 may be proportionally increased as the radius (r) of the winding turn where the segment 61 is located increases. The term 'substantially identical' means that they are completely identical or that there is a deviation of less than 5%.

For example, when the radius of the electrode assembly is 22 mm, the radius of the core is 4 mm, and the segment 61 starts to be disposed from the winding turn located at a point where the radius is 7 mm, if the circumferential angle ($\Phi$) of the segments 61 is constant at 28.6 degrees, the width (D) of the segment 61 may be proportionally increased according to the radius (r) of the winding turn where the segment 61 is located as shown in Table 1 below. That is, the width of the segment 61 may be increased at substantially the same rate by 0.5 mm whenever the radius (r) of the winding turn increases by 1 mm.

Table 1

| winding turn radius (mm) | 7.0 | 8.0 | 9.0 | 10.0 | 11.0 | 12.0 | 13.0 | 14.0 | 15.0 | 16.0 | 17.0 | 18.0 | 19.0 | 20.0 | 21.0 | 22.0 |
|---|---|---|---|---|---|---|---|---|---|---|---|---|---|---|---|---|
| segment width (D, mm) | 3.5 | 4.0 | 4.5 | 5.0 | 5.5 | 6.0 | 6.5 | 7.0 | 7.5 | 8.0 | 8.5 | 9.0 | 9.5 | 10.0 | 10.5 | 11.0 |
| circumferential angle (degree) | 28.6 | 28.6 | 28.6 | 28.6 | 28.6 | 28.6 | 28.6 | 28.6 | 28.6 | 28.6 | 28.6 | 28.6 | 28.6 | 28.6 | 28.6 | 28.6 |

For example, the width D(r) of the segment 61 located in a winding turn having a radius of r with respect to the core center O of the electrode assembly may be determined in a range satisfying Formula 1 below.

<Formula 1>

$$1 \le D(r) \le (2*\pi*r/360°)*45°$$

For example, each of the plurality of segments 61, as the radius (r) of the winding turn where the segment is located based on the core center of the electrode assembly increases, the width D(r) in the winding direction increases gradually or stepwise, or vice versa.

In another aspect, each of the plurality of segments 61, as the radius (r) of the winding turn where the segment is located based on the core center of the electrode assembly increases, the width D(r) in the winding direction increases gradually or stepwise within the range of 1mm to 11mm, or vice versa.

In another aspect, each of the plurality of segments 61, as the radius (r) of the winding turn where the segment is located based on the core center of the electrode assembly increases, the width D(r) in the winding direction increases gradually or stepwise and then decrease gradually or stepwise, or vice versa.

In another aspect, each of the plurality of segments 61, as the radius (r) of the winding turn where the segment is located based on the core center of the electrode assembly increases, the width D(r) in the winding direction increases gradually or stepwise and then decrease gradually or stepwise within the range of 1mm to 11mm, or vice versa.

In another aspect, a variation ratio of D(r), as the radius (r) of the winding turn where the segment is located based on the core center of the electrode assembly increases, may be substantially the same or different depending on the radius (r).

In another aspect, a variation ratio of D(r), as the radius (r) of the winding turn where the segment is located based on the core center of the electrode assembly increases, may be substantially the same or different depending on the radius (r), within the range of 1mm to 11mm.

Referring to FIG. 7b again, the height (H) of the segment 61 may be 2 mm or more. If D2 is less than 2 mm, an area where the segment 61 does not overlap enough to secure welding strength or an empty space (gap) may occur when the segment 61 is bent toward the core.

The height (H) of the segment 61 may be determined by applying the condition that the segment 61 does not cover the core when being bent toward the core. For example, the height (H) of the segment 61 may be adjusted so that the core may be opened to the outside by 90% or more of its diameter.

For example, the height (H) of the segment 61 may gradually increase from the core to the outer circumference depending on the radius of the core and the radius of the winding turn where the segment 61 is located.

In one example, assuming that the height (H) of the segment 61 increases stepwise over N steps from $h_1$ to $h_N$ as the radius of the winding turn increases, when a $k^{th}$ height of the segment 61 is $h_k$ (k is a natural number of 1 to N), a start radius of the winding turn including the segment 61 having the height $h_k$ is $r_k$, and the radius of the core is $r_c$, the height $h_1$ to $h_N$ of the segment 61 may be determined to satisfy Formula 2 below.

<Formula 2>

$$2 \text{ mm} \le h_k \le r_k - \alpha*r_c \text{ (preferably, } \alpha \text{ is 0.90 to 1)}$$

If the height ($h_k$) of the segment 61 satisfies Formula 2, even if the segment 61 is bent toward the core, 90% or more of the diameter of the core may be opened to the outside.

In one example, the total winding turn radius of the electrode 60 is 22 mm, the height of the segment 61 starts from 3 mm, the height of the segment 61 increases sequentially to 3 mm, 4 mm, 5 mm, and 6 mm whenever the radius of the winding turn including the segment 61 increases by 1 mm, and the height of the segment 61 may be kept substantially the same at 6 mm in the remaining winding turn. That is, among the radii of all winding turns, the radial direction width of a height variable region of the segment 61 is 3 mm, and the remaining radial region corresponds to a height uniform region.

In this case, according to the radius ($r_c$) of the core of the electrode assembly, the start radius $r_1$, $r_2$, $r_3$, $r_4$ of the winding turn including the segment 61 with the height of 3 mm, 4 mm, 5 mm and 6 mm may be as shown in Table 2 below, when $\alpha$ is 1 and the equal sign condition is applied in a right inequation of the above formula.

Table 2

| item | | segment height (mm) | | | |
|---|---|---|---|---|---|
| | | 3 ($h_1$) | 4 ($h_2$) | 5 ($h_3$) | 6 ($h_4$) |
| core radius ($r_c$) (mm) | 2 | 5 ($r_1$) | 6 ($r_2$) | 7 ($r_3$) | 8 ($r_4$) |
| | 2.5 | 5.5 ($r_1$) | 6.5 ($r_2$) | 7.5 ($r_3$) | 8.5 ($r_4$) |
| | 3 | 6 ($r_1$) | 7 ($r_2$) | 8 ($r_3$) | 9 ($r_4$) |
| | 3.5 | 6.5 ($r_1$) | 7.5 ($r_2$) | 8.5 ($r_3$) | 9.5 ($r_4$) |
| | 4 | 7 ($r_1$) | 8 ($r_2$) | 9 ($r_3$) | 10 ($r_4$) |

When the segment 61 is disposed at the radial location shown in Table 2, the core is not covered by the segment 61 even if the segment 61 is bent toward the core. Meanwhile, $r_1$, $r_2$, $r_3$, $r_4$ shown in Table 2 may be shifted toward the core according to $\alpha$ value. In one example, when $\alpha$ is 0.90, $r_1$, $r_2$, $r_3$, $r_4$ may be shifted toward the core by 10% of the core radius. In this case, when the segment 61 is bent toward the core, 10% of the core radius is covered by the segment 61. $r_1$, $r_2$, $r_3$, $r_4$ shown in Table 2 are limit values of the location where the segment 61 starts. Accordingly, the location of the segment 61 may be shifted by a predetermined distance to the outer circumference further to the radius shown in Table 1.

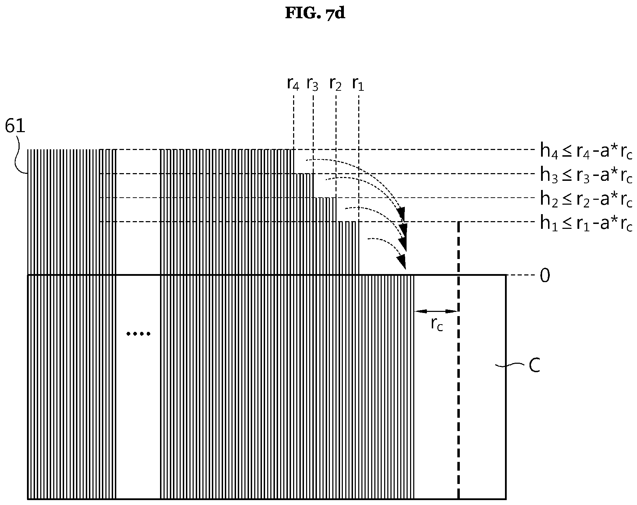

FIG. 7d is a diagram schematically illustrating the relationship between the heights $h_1$, $h_2$, $h_3$, $h_4$ of the segment, the core radius ($r_c$), and the radius $r_1$, $r_2$, $r_3$, $r_4$ of the winding turn at which the segment 61 begins to appear.

Referring to Table 2 and FIG. 7d together, for example, when the radius ($r_c$) of the core C is 3 m, the start radius $r_1$, $r_2$, $r_3$ and $r_4$ of the winding turn including the segment 61 having the height of 3 mm ($h_1$), 4 mm ($h_2$), 5 mm ($h_3$) and 6 mm ($h_4$) may 6 mm, 7 mm, 8 mm and 9 mm, respectively, and the height of the segment 61 may be maintained as 6 mm from the radius of 9 mm to the last winding turn. Also, a winding turn having a radius less than 6 mm ($r_1$) may not include the segment 61. In this example, since the segment 61 of height 3 mm ($h_1$) closest to the core C is located from the winding turn having the radius of 6 mm, even if the segment 61 is bent toward the core C, the segment 61 covers only the radial region of 3 mm to 6 mm, and the core C is substantially not shielded. According to the $\alpha$ value of Formula 2, the location of the segment 61 may be shifted toward the core C within 10% of the core radius ($r_c$).

In another aspect, a height of the segment 61, as the start radius (r) of the winding turn where the segment 61 is located based on the core center of the electrode assembly increases, may increase in substantially the same rate or different rage depending on the radius (r).

For example, the height (H) of the segment 61 may satisfy Formula 2 and simultaneously the maximum height of the segment may be limited.

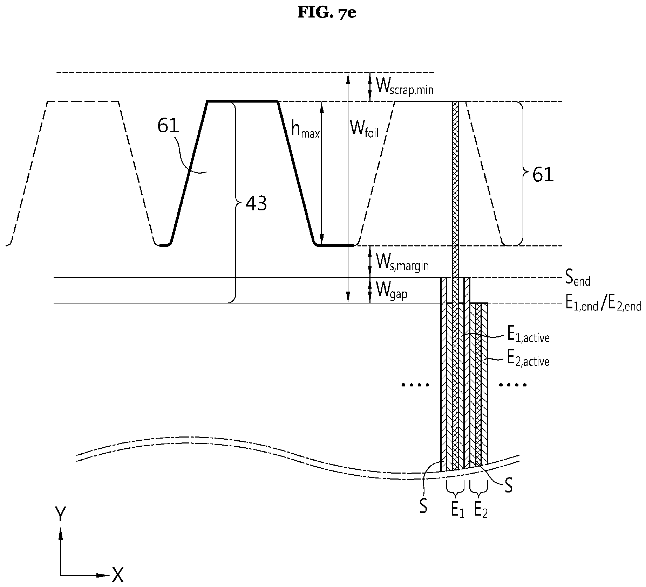

FIG. 7e is a conceptual diagram for determining the maximum value ($h_{max}$) for the height (H) of the segment 61 in the height variable region of the segment 61.

Referring to FIG. 7e, in the winding structure of the electrode assembly, an electrode ($E_1$) including the segment 61 faces an electrode ($E_2$) of opposite polarity with the separator S interposed therebetween in the radial direction. Both surfaces of the electrode ($E_1$) are coated with an active material layer ($E_{1,active}$), and both surfaces of the electrode ($E_2$) are also coated with an active material layer ($E_{2,active}$). For electrical insulation, the end ($S_{end}$) of the separator S may further extend outward by a length corresponding to the insulation gap ($W_{gap}$) from the end ($E_{2,end}$) of the electrode ($E_2$). In addition, the end of the electrode ($E_1$) does not extend outward further to the end of the electrode ($E_2$) for electrical insulation. Therefore, a region corresponding to the insulation gap ($W_{gap}$) must be secured at the lower end of the uncoated portion 43. Also, when the electrodes ($E_1$, $E_2$) and the separator S are wound, the end ($S_{end}$) of the separator S causes meandering. Therefore, in order for the segment 61 to be exposed out of the separator S, a region ($W_{margin,min}$) corresponding to the minimum meandering margin of the separator S must be allocated to the uncoated portion 43. In addition, in order to cut the segment 61, a minimum cut scrap margin ($W_{scrap,min}$) must be allocated to the end of the current collector foil. Therefore, the maximum height ($h_{max}$) of the segment 61 in the height variable region of the segment 61 may be determined by Formula 3 below. In Formula 3, $W_{foil}$ corresponds to the width of the current collector foil before the current collector foil is cut.

<Formula 3>

$$h_{max} = W_{foil} - W_{scrap,min} - W_{margin,min} - W_{gap}$$

For example, the insulation gap ($W_{gap}$) may be in the range of 0.2mm to 6mm when the first electrode is a positive electrode and in the range of 0.1mm to 2mm when the first electrode is a negative electrode.

For example, the minimum cut scrap margin ($W_{scrap,min}$) may be in the range of 1.5mm to 8mm. The minimum cut scrap margin ($W_{scrap,min}$) may not be considered depending on the process of cutting the segment 61. For example, the cut groove 63 may be formed such that the upper side of the segment 61 is coincided with that of the current collector foil. In this case, $W_{scrap,min}$ of the formula 3 may be zero.

For example, the minimum meandering margin ($W_{margin,min}$) may be in the range of 0 to 1mm.

In one example, the minimum cut scrap margin ($W_{scrap,min}$) may be 1.5 mm, and the minimum meandering margin ($W_{margin,min}$) of the separator S may be 0.5 mm. Under these conditions, when the width ($W_{foil}$) of the current collector foil before forming the segment 61 is 8 mm to 12 mm and the insulation gap ($W_{gap}$) is 0.6 mm, 0.8 mm and 1.0 mm, the result of calculating the maximum height ($h_{max}$) of the segment 61 using Formula 3 is as shown in Table 3 below.

Table 3

| item | | separator $\leftrightarrow$ negative electrode gap (mm) | | |
|---|---|---|---|---|
| | | 0.6 | 0.8 | 1 |
| current collector foil width (mm) | 8 | 5.4 | 5.2 | 5 |
| | 9 | 6.4 | 6.2 | 6 |
| | 10 | 7.4 | 7.2 | 7 |
| | 11 | 8.4 | 8.2 | 8 |
| | 12 | 9.4 | 9.2 | 9 |

Considering Table 3, the maximum height ($h_{max}$) of the segment 61 in the height variable region of the segment 61 may be set to 10 mm. Therefore, in the height variable region of the segment 61, the height of the segment 61 satisfies Formula 2 and at the same time may be increased stepwise or gradually along the radial direction of the electrode assembly in the region of 2 mm to 10 mm.

Referring to FIG. 7b again, the separation pitch (P) of the segment 61 may be adjusted in the range of 0.05 to 1 mm. If the separation pitch (P) is less than 0.05 mm, cracks may occur in the uncoated portion 43 near the lower end of the cut groove 63 due to stress when the electrode 60 travels in a winding process or the like. Meanwhile, if the separation pitch (P) exceeds 1 mm, an empty space (gap) or an area where the segments 61 do not overlap with each other enough to sufficiently secure the welding strength may occur when the segment 61 is bent.

Meanwhile, when the current collector 41 of the electrode 60 is made of aluminum, the separation pitch (P) is more preferably set to 0.5 mm or more. When the separation pitch (P) is 0.5 mm or more, it is possible to prevent cracks from occurring in the lower portion of the cut groove 63 even if the electrode 60 travels at a speed of 100 mm/sec or more under a tension of 300 gf or more during the winding process or the like.

According to the experimental results, when the current collector 41 of the electrode 60 is an aluminum foil with a thickness of 15 um and the separation pitch (P) is 0.5 mm or more, cracks do not occur in the lower portion of the cut groove 63 when the electrode 60 travels under the above conditions.

As shown in FIG. 7b, the cut groove 63 is interposed between two segments 61 adjacent to each other in the winding direction X. The cut groove 63 corresponds to the space created as the uncoated portion 43 is removed. For example, the both ends of the lower portion of the cut groove 63 has a round shape. That is, the cut groove 63 includes a substantially flat bottom portion 63a and a round portion 63c. The round portion 63c connects the bottom portion 63a and the side 63b of the segment 61. In a modified example, the bottom portion 63a of the cut groove 63 may be replaced with an arc shape. In this case, the sides 63b of the segments 61 may be smoothly connected by the arc shape of the bottom portion 63a.

The curvature radius of the round portion 63c may be preferably in the range of 0 to 0.5 mm, more preferably in the range of 0 to 0.1mm, or more preferably in the range of 0.01 mm to 0.05 mm. When the curvature radius of the round portion 63c meets the above numerical range, it is possible to prevent cracks from occurring in the lower portion of the cut groove 63 while the electrode 60 is traveling in the winding process or the like.

In the plurality of segments 61, a lower internal angle ($\theta$) may increase from the core to the outer circumference. The lower internal angle ($\theta$) is an angle between a straight line extending from the bottom portion 63a of the cut groove 63 and a straight line extending from the side portion 53b of the segment 61. When the segment 61 is symmetrical in the left and right direction, the lower internal angles ($\theta$) at the left and right sides are substantially the same.

If the radius of the electrode assembly increases, the radius of curvature increases. If the lower internal angle ($\theta$) of the segments 61 increases as the radius of the electrode assembly increases, the stress generated in the radial and circumferential directions when the segment 61 is bent may be relieved. In addition, if the lower internal angle ($\theta$) increases, when the segment 61 is bent, its area overlapping with the segment 61 located at an inner side and the number of overlapping layers also increase together, thereby ensuring uniform welding strength in the radial and circumferential directions and forming the bending surface region in a flat form.

For example, the lower internal angle ($\theta$) may be determined by the radius of the winding turn where the segment 61 is located and the width (D) of the segment 61.

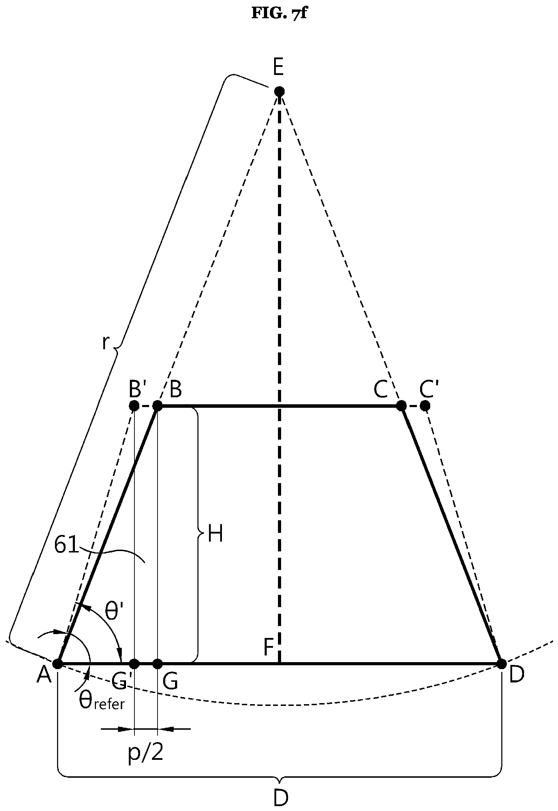

FIG. 7f is a schematic diagram for explaining a formula for determining the lower internal angle ($\theta$) of the segment 61.

Referring to FIG. 7f, the side of the segment 61 identically coincides with a line segment AE and a line segment DE connecting the core center (E) with both endpoints A and D of a line segment AD corresponding to the width (D) of the segment 61.

When the side of the segment 61 extends in the most ideal direction, assuming that line segment EF is approximately equal to the line segment AE and the line segment DE, the lower internal angle ($\theta_{refer}$) of the segment 61 may be determined approximately from the width (D) of the segment 61 and the radius (r) of the winding turn where the segment 61 is located by using Formula 4 below.

<Formula 4>

$$\theta_{refer} = \cos^{-1}\left(\frac{0.5 * D}{r}\right)$$

The angle in Formula 4 is an ideal criterion angle for the lower internal angle ($\theta_{refer}$) of the segment 61. Meanwhile, a separation pitch (P) exists between adjacent segments 61 located in the same winding turn. The length of the separation pitch (P) is indicated by p. Since the separation pitch (P) exists between adjacent segments 61, a tolerance may be given to the lower internal angle ($\theta$) by 50% of the separation pitch (P). That is, the width of the upper side BC of the segment 61 may be increased by p/2 at maximum to the upper side B'C'. The lower internal angle ($\theta'$) reflecting the tolerance may be expressed by Formula 5 below. The lower internal angle ($\theta_{refer}$) is the ideal criterion angle LBAG, and the lower internal angle ($\theta'$) is the angle LB' AG' that reflects the tolerance according to the separation pitch (P). In Formula 5, H corresponds to the height of the segment 61, and p corresponds to the separation pitch.

<Formula 5>

$$\theta' = \tan^{-1}\left(\frac{2 * H * \tan\theta_{refer}}{2 * H - p * \tan\theta_{refer}}\right)$$

For example, the lower internal angle ($\theta$) of the segment 61 located at each winding turn of the electrode assembly may satisfy Formula 6 below. Then, when the segments 61 are bent toward the core center of the electrode assembly, the segments 61 adjacent in the circumferential direction do not interfere with each other and be bent smoothly.

<Formula 6>

$$\cos^{-1}\left(\frac{0.5 * D}{r}\right) \leq \theta \leq \tan^{-1}\left(\frac{2 * H * \tan\theta_{refer}}{2 * H - p * \tan\theta_{refer}}\right)$$

In one example, when the electrode 60 forms a winding structure with a diameter of 22 mm and a core radius of 4 mm, the lower internal angle of the segment 61 may be increased stepwise in the range of 60 degrees to 85 degrees in the height variable region.

Meanwhile, the lower internal angles of the segment 61 at the left and right sides may be different from each other. Nonetheless, at least one of the lower internal angles at the left and right sides of the segment 61 may be designed to satisfy the formula 6.

Referring to FIG. 7a again, the width ($d_{B1}$) of the first portion B1 is designed so that the core of the electrode assembly is opened to the outside by 90% or more based on the diameter of the core when the segment 61 of the third portion B2 is bent toward the core. The width ($d_{B1}$) of the first portion B1 may increase in proportion to the bending length of segment 61 of Group 1. The bending length corresponds to a length from the bending point to the uppermost side of the segment 61. For example, when the electrode 60 is used to manufacture an electrode assembly of a cylindrical battery having a form factor of 4680, the width ($d_{B1}$) of the first portion B1 may be set as 180 mm to 350 mm according to the diameter of the core of the electrode assembly and the height of the segment 61 included in Group 1.

The bending point of the segment 61 may be set at a line passing through the lower end of the cut groove 63 or at a point spaced upward from the line by a predetermined distance. When the segments 61 are bent toward the core at a point spaced from the lower end of the cut groove 63 by a predetermined distance, the segments may overlap more easily in the radial direction. When the segments 61 are bent, a segment located at an outer side based on the center of the core presses a segment at an inner side. At this time, if the bending point is spaced from the lower end of the cut groove 63 by a predetermined distance, a segment at an inner side is pressed by a segment at an outer side in the winding axis direction, so that the segments overlap better. For example, the separation distance of the bending point may be 1 mm or less. The minimum height of the segment 61 is 2mm and thus a ratio of the separation distance to the minimum height of the segment 61 may be 50% or less.

In one example, the width of each segment group may be designed to constitute the same winding turn of the electrode assembly. Here, the winding turn may be counted based on the end of the first portion B1 when the electrode 60 is in a wound state.

In another modified example, the width of each segment group may be designed to constitute at least one winding turn of the electrode assembly.

In still another modification, the width and/or height and/or separation pitch of the segment 61 belonging to the same segment group may be increased or decreased gradually and/or stepwise and/or irregularly within the group or between the adjacent groups.

Groups 1 to 8 are only an example of segment groups included in the third portion B2. The number of groups, the number of segments 61 included in each group, and the width of each group may be adjusted desirably so that the segments 61 overlap in multiple layers to disperse stress as much as possible during the bending process of the uncoated portion 43 and sufficiently secure the welding strength with a current collector.

In another modification, the height of the second portion B3 may be decreased gradually or step by step, as in the first example and the second example.

In still another modification, the segment structure of the third portion B2 is expandable to the second portion B3 (see dotted line). In this case, the second portion B3 may also include a plurality of segments like the third portion B2. For example, the segment structure of the second portion B3 may be substantially the same as the segment group at the outermost side of the third portion B2. In this case, the segments included in the second portion B3 and the third portion B2 may have substantially the same in terms of the width, height, and separation pitch. In a modification, the segment of the second portion B3 may have a width and/or height and/or separation pitch greater than that of the third portion B2.

In third portion B2, the region (Groups 1 to 7) in which the height of the segment 61 increases stepwise based on the winding direction of the electrode 60 is defined as a height variable region of the segment, and the segment group at the last (Group 8) may be defined as a height uniform region in which the height of the segment is maintained uniformly.

That is, in the third portion B2, when the height of the segment 61 is gradually increased from $h_1$ to $h_N$, the region in which segments 61 having a height of $h_1$ to $h_{N-1}$ (N is height index and a natural number of 2 or above) is arranged corresponds to a height variable region, and the region in which segments 61 having a height of $h_N$ are arranged corresponds to a height uniform region. The ratio of the height variable region and the height uniform region to the length of the electrode 60 in the winding direction will be described later with reference to specific examples.

When the electrode plate 60 is used to manufacture an electrode assembly of a cylindrical battery having a form factor of 4680, the width ($d_{B1}$) of the first portion B1 may be 180 to 350 mm. The width of Group 1 may be 35 to 40% of the width of the first portion B1. The width of Group 2 may be 130 to 150% of the width of Group 1. The width of Group 3 may be 120 to 135% of the width of Group 2. The width of group 4 may be 85 to 90% of the width of group 3. The width of Group 5 may be 120 to 130% of the width of Group 4. The width of Group 6 may be 100 to 120% of the width of Group 5. The width of Group 7 may be 90 to 120% of the width of Group 6. The width of Group 8 may be 115 to 130% of the width of Group 7. The width ($d_{B3}$) of the second portion B3 may be 180 to 350 mm, like the width of the first portion B1.

The reason that the widths of Groups 1 to 8 do not show a constant increase or decrease pattern is that the segment width gradually increases from Group 1 to Group 8, but the number of segments included in the group is limited to an integer number and the thickness of the electrode has slight deviation along a winding direction. Accordingly, the number of segments may be reduced in a specific segment group. Therefore, the widths of the groups may show an irregular change pattern as in the above example from the core to the outer circumference.

That is, assuming that the width in the winding direction for each of the three segment groups consecutively adjacent to each other in the circumferential direction of the electrode assembly is W1, W2, and W3, respectively, it is possible to include a combination of segment groups in which W3/W2 is smaller than W2/W1.

In the specific example, Groups 4 to 6 corresponds to the above case. The width ratio of Group 5 to Group 4 is 120 to 130%, and the width ratio of Group 6 to Group 5 is 100 to 120%, which is smaller than 120 to 130%.

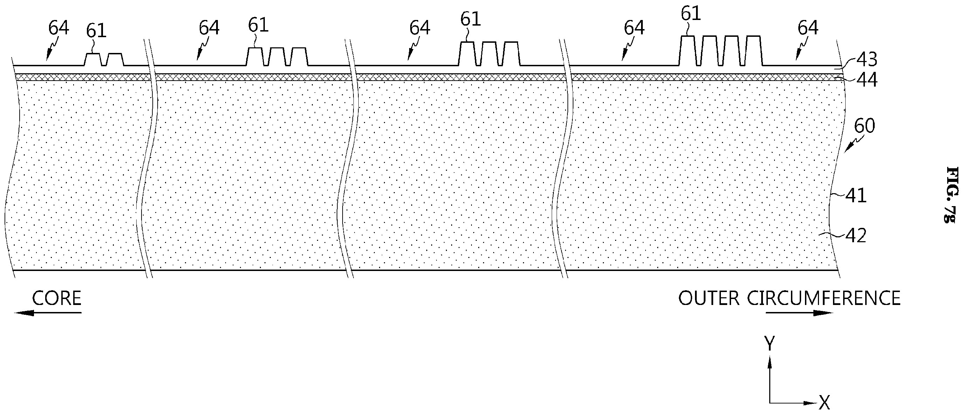

According to another modification, when the uncoated portion 43 of the electrode 60 has a segment structure, the electrode 60 may include a segment skip region 64 in which some of the plurality of segments are regularly or irregularly omitted as shown in FIG. 7g.

For example, the segment skip region 64 may be provided in plural. In an example, the width of the segment skip region 64 may be constant from the core toward the outer circumference. In another example, the width of the segment skip region 64 may increase or decrease regularly or irregularly from the core toward the outer circumference. For example, the height of the uncoated portion existing in the segment skip region 64 may correspond to the height of the first portion B1 and/or the second portion B3.

The number of segments 61 existing between the segment skip regions 64 may be at least one. As shown in FIG. 7g, the electrode 60 may include an uncoated portion in which the number of segments 61 existing between the segment skip regions 64 increases from the core toward the outer circumference.

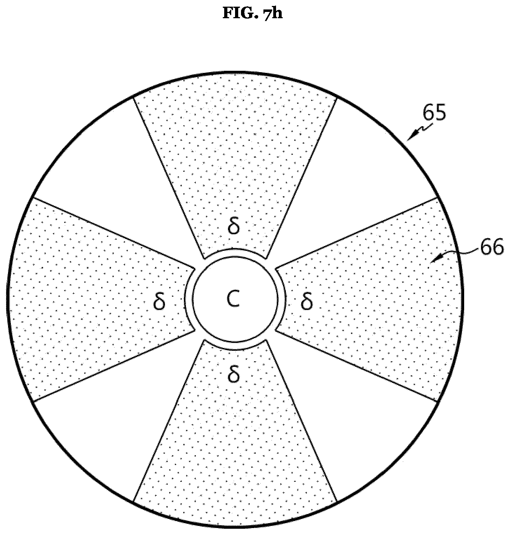

For example, the width of the segment skip region 64 may be set such that when the electrode 60 is wound as shown in Fig. 7h, segments located in each winding turn may be located in a preset independent region 66 with respect to the core center C of the electrode assembly 65.

That is, the plurality of segments 61 may be located within a plurality of independent regions 66 with respect to the core center C when the electrode assembly 65 is viewed in the winding axis direction. The number of independent regions 66 may be changed to 2, 3, 4, 5, or the like.

For example, the independent region 66 may have a sectoral shape. In this case, the angle between the independent regions 66 may be substantially the same. In addition, the circumferential angle ($\delta$) of the independent region 66 may be 20 degrees or more, optionally 25 degrees or more, optionally 30 degrees or more, optionally 35 degrees or more, or optionally 40 degrees or more.

In a modified example, the independent region 66 may have a geometric shape such as a square, a rectangle, a parallelogram, a trapezoidal, or the like.

In the present disclosure, the shape of the segment 61 may be variously modified.

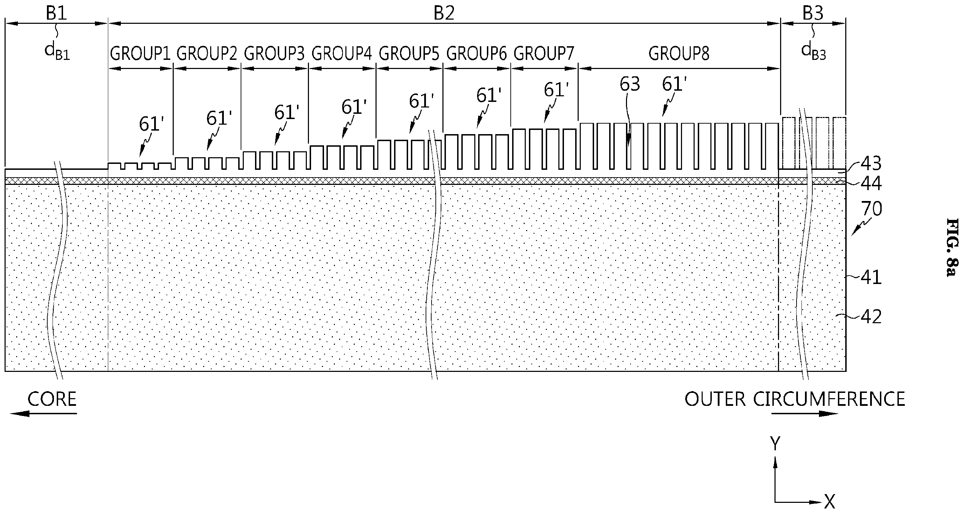

FIG. 8a is a plan view showing the structure of an electrode 70.

Referring to FIG. 8a, the electrode 70 of the fifth example has substantially the same configuration as that of the former example, except that the shape of the segment 61' is different. Therefore, unless otherwise stated, the configuration of the fourth example may be equally applied to the fifth example.

The segment 61' has a geometric shape with substantially the same width at the top and bottom. For example, the segment 61' may have a rectangular shape.

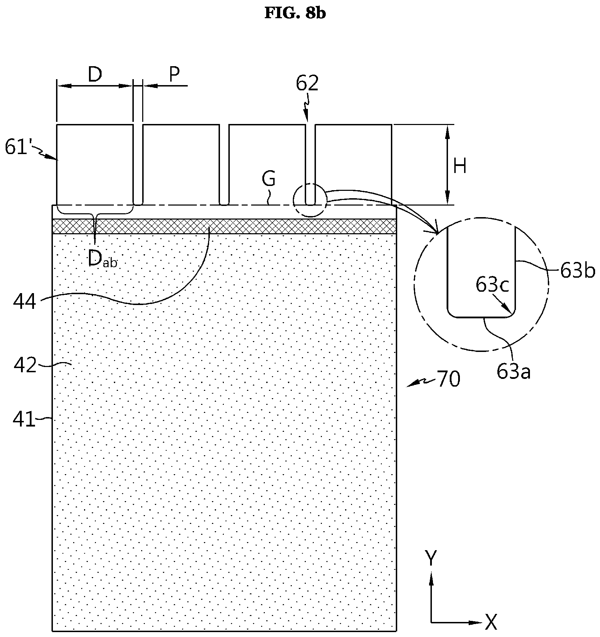

FIG. 8b is a diagram showing the definition of the width, height, and separation pitch of the rectangular segment 61'.

Referring to FIG. 8b, the width (D), height (H) and separation pitch (P) of the segment 61' may be set to prevent the uncoated portion 43 from being abnormally deformed while sufficiently increasing the number of overlapping layers of the uncoated portion 43, in order to prevent the uncoated portion 43 from being torn while bending the uncoated portion 43 and improve the welding strength with a current collector. The abnormal deformation means that the uncoated portion below the bending point does not maintain a straight line state and is collapsed and deformed irregularly.

The width (D) of the segment 61' is defined as a length between two points where two straight lines extending from both sides of the segment 61' meet a straight line extending from the bottom portion 63a of the cut groove 63. The height (H) of the segment 61' is defined as a shortest distance between the uppermost side of the segment 61' and the straight line extending from the bottom portion 63a of the cut groove 63. The separation pitch (P) of the segment 61' is defined as a length between two points where the straight line extending from the bottom portion 63a of the cut groove 63 meets straight lines extending from two sides 63b connected to the bottom portion 63a. When the side 63b and/or the bottom portion 63a is curved, the straight line may be replaced with a tangent line extending from the side 63b and/or the bottom portion 63a at the intersection point where the side 63b and the bottom portion 63a meet.

For example, the conditions regarding the width (D), height (H), and separation pitch (P) of the segment 61' are substantially the same as those of the fourth example, and thus will not be described again. However, since the segment 61' has a rectangular shape, the lower internal angle of the segment 61' may be constant at 90 degrees.

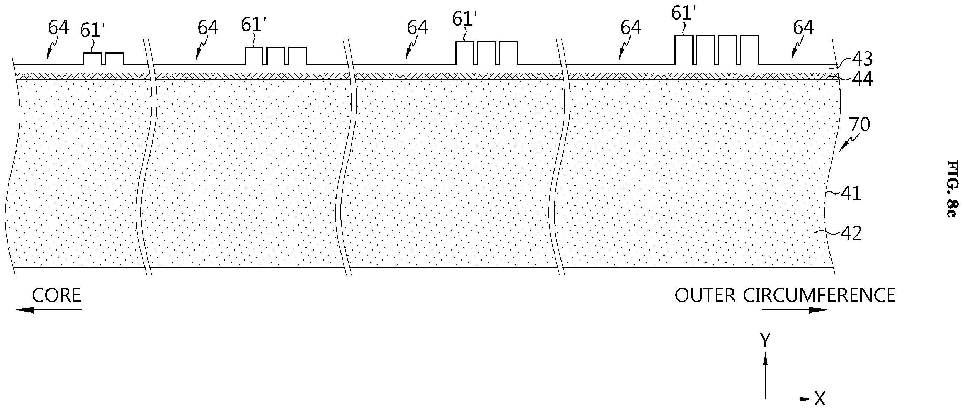

Similar to the electrode 60 of the fourth example, the electrode 70 according to the example may also include a segment skip region 64 in which some of the plurality of segments are regularly or irregularly omitted as shown in FIG. 8c.

In addition, when the electrode 70 including the segment skip region 64 is wound into an electrode assembly, the segments may be located within a plurality of independent regions 66 as shown in FIG. 7h.

As in the fourth example and the fifth example, when the third portion B2 and the second portion B3 include a plurality of segments 61, 61', the shape of each segment 61, 61' may be variously modified.

For example, the segment may be deformed into various shapes while satisfying at least one of the following conditions.

Condition 1: The width of the lower portion is greater than the width of the upper part.

Condition 2: The width of the lower portion and the width of the upper part are the same.

Condition 3: The width remains the same from the bottom to the top.

Condition 4: The width decreases from bottom to top.

Condition 5: The width decreases and then increases from bottom to top.

Condition 6: The width increases and then decreases from bottom to top.

Condition 7: The width increases from the bottom to the top and remains constant.

Condition 8: The width decreases from the bottom to the top and remains constant.

Condition 9: The internal angle of one side of the lower portion and the internal angle of the other side are the same

Here, the internal angle may be defined as an angle formed by the side portion of the segment based on the width direction of the lower portion of the segment. When the side portion is curved, the internal angle is defined as an angle between a tangent line drawn at the lowest end of the curve and the width direction of the lower portion of the segment.

Condition 10: The internal angle of one side of the lower portion and the internal angle of the other side are different from each other.

Condition 11: The internal angle of one side of the lower portion and the internal angle of the other side of the lower portion have an acute angle, a right angle, or an obtuse angle, respectively.

Condition 12: Left and right symmetrical with respect to the winding axis direction.

Condition 13: Left and right asymmetrical with respect to winding axis direction.

Condition 14: The side portion has a straight line shape.

Condition 15: The side portion is curved.

Condition 16: The side portion is outwardly convex.

Condition 17: The side portion is inwardly convex.

Condition 18: The corner of the upper portion and/or the lower portion has a structure where a straight line meets a straight line.

Condition 19: The corner of the upper portion and/or the lower portion has a structure where a straight line meets a curve.

Condition 20: The corner of the upper portion and/or the lower portion has a structure where a curve meets a curve

Condition 21: The corner of the upper portion and/or the lower portion has a round structure.

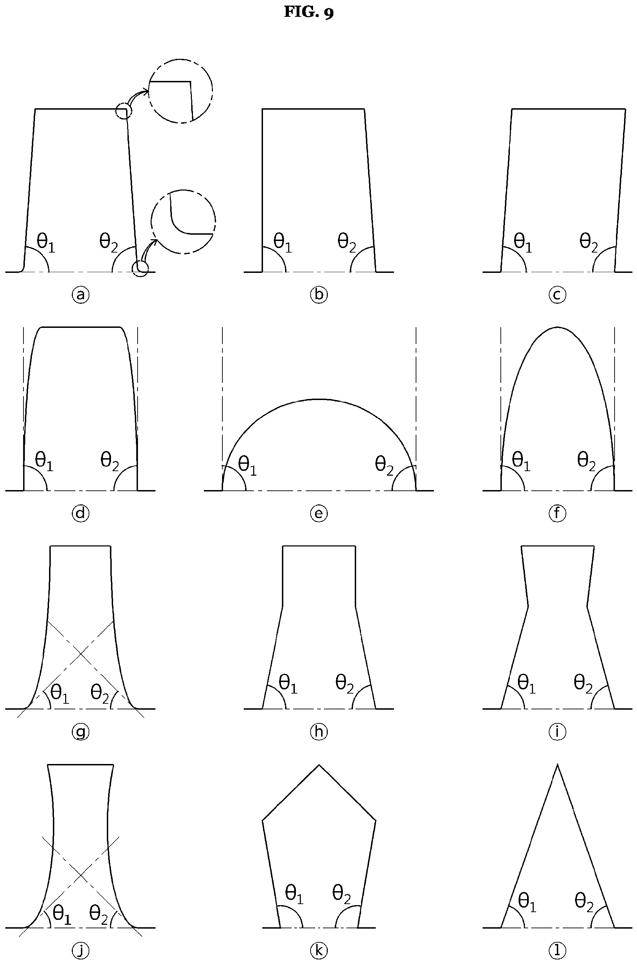

FIG. 9 is a diagram exemplarily showing the shapes of segments according to modified examples of the present disclosure.

As shown in the drawing, the segment may have various geometric shapes in which a dotted line connecting the bottom portions of the cut grooves at both sides is the base. The geometric figure has a structure in which one or more straight lines, one or more curves, or a combination thereof is connected. In one example, the segment may have a polygonal shape, a round shape, or various shapes combined therewith.

Specifically, the segment may have a left-right symmetric trapezoidal shape (ⓐ); a left-right asymmetric trapezoidal shape (ⓑ); a parallelogram shape (ⓒ); a triangular shape (ⓓ); a pentagonal shape ((ⓚ)); an arc shape (ⓔ); or an elliptical shape (ⓕ).

Since the shape of the segment is not limited to those shown in FIG. 9, it may be transformed into other polygonal shapes, other round shapes, or a combination thereof so as to satisfy at least one of Conditions 1 to 21 described above.

In the polygonal shapes ⓐ, ⓑ, ⓒ, ⓚ and ⓓ of the segment, the corner of the upper portion and/or the lower portion may be a shape where a straight line meets a straight line, or a round shape (see the enlarged view of the corner of the upper portion and the lower portion of the shape ⓐ).

In the polygonal shapes ⓐ, ⓑ, ⓒ, ⓚ and ⓓ of the segment and the curve shapes ⓔ and ⓕ of the segment, the internal angle ($\theta_1$) at one side of the lower portion and the internal angle ($\theta_2$) at the other side thereof may be the same or different from each other, and the internal angle ($\theta_1$) at one side of the lower portion and the internal angle ($\theta_2$) at the other side thereof may be any one of an acute angle, a right angle, or an obtuse angle, respectively. The internal angle is an angle where the base and the side of a geometric figure meet. When the side is a curve, the straight line may be replaced by a tangent line extending at a point where the base and the side meet.

The shape of the side portion of the segment having a polygonal shape may be modified in various ways.

In one example, the side portion of the segment shape ⓐ may be transformed into an outwardly convex curve as in the shape d0 or into a curve recessed into the segment as in the shape ⓖ or ⓙ.

In another example, the side portion of the segment shape ⓐ may be transformed into a bent straight line recessed into the segment as in the shape ⓗ or ⓘ. Although not shown, the side portion of the segment shape ⓐ may be transformed into a bent straight line convex outwardly.

In the segment shapes ⓓ, ⓖ, ⓙ, ⓗ and ⓘ in which the side portion is variously modified, the internal angle ($\theta_1$) at one side of the lower portion and the internal angle ($\theta_2$) at the other side thereof may be the same or different from each other, and the internal angle ($\theta_1$) of one side of the lower portion and the internal angle ($\theta_2$) at the other side thereof may be any one of an acute angle, a right angle, or an obtuse angle, respectively.

The width of the segment may have various change patterns from the bottom to the top.

In one example, the width of the segment may be kept constant from the bottom to the top (shape ©). In another example, the width of the segment may gradually decrease from the bottom to the top (shapes ⓐ, ⓑ, ⓓ, ⓔ, ⓕ, and ⓖ). In still another example, the width of the segment may gradually decrease and then increase from the bottom to the top (shape ⓘ and ⓙ). In still another example, the width of the segment may gradually increase from the bottom to the top and then decrease (shape ⓚ). In still another example, the width of the segment may gradually decrease from the bottom to the top and then be maintained constant (shape ⓗ). Although not shown, the width of the segment may gradually increase from the bottom to the top and be maintained constant.

Meanwhile, among the shapes of the segments shown in FIG. 9, a polygonal shape with a flat top may be rotated by 180 degrees. In one example, when the segment shape ⓐ, ⓑ, ⓓ or ⓖ is rotated by 180 degrees, the width of the segment may gradually increase from the bottom to the top. In another example, if the segment shape ⓗ is rotated by 180 degrees, the width of the segment may be kept constant from the bottom to the top and then gradually increase.

In the above examples (modifications), according to another aspect of the present disclosure, it is possible to change the shapes of the segments 61, 61' differently depending on the region of the third portion B2. In one example, a round shape (e.g., semicircle, ellipse, etc.) that is advantageous for stress distribution is applied to a region where the stress is concentrated, and a polygonal shape (e.g., a rectangle, trapezoid, parallelogram, etc.) with the largest area may be applied a region where the stress is relatively low.

In the above examples (modifications), the segment structure of the third portion B2 may also be applied to the first portion B1. However, if the segment structure is applied to the first portion B1, when the segments 61, 61' of the third portion B2 are bent according to the radius of curvature of the core, the end of the first portion B1 may be bent toward the outer circumference, which is called reverse forming. Therefore, the first portion B1 has no segment, or even if the segment structure is applied to the first portion B1, it is desirable to control the width and/or height and/or separation pitch of the segments 61, 61' as small as possible in consideration of the radius of curvature of the core such that reverse forming does not occur.

According to still another aspect of the present disclosure, after the electrode 60, 70 is wound into an electrode assembly, the segments exposed at the upper and lower portions of the electrode assembly may be overlapped into multiple layers along the radial direction of the electrode assembly to form a bending surface region.

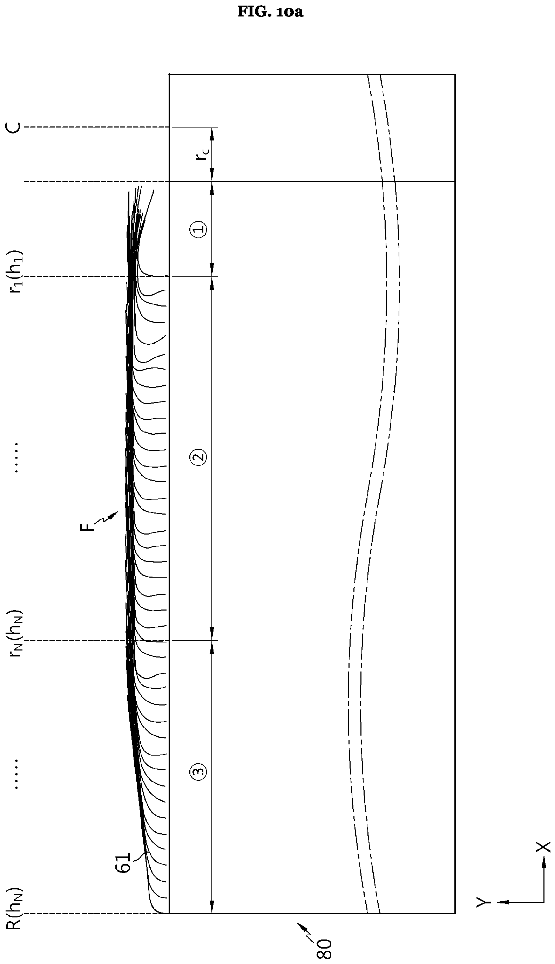

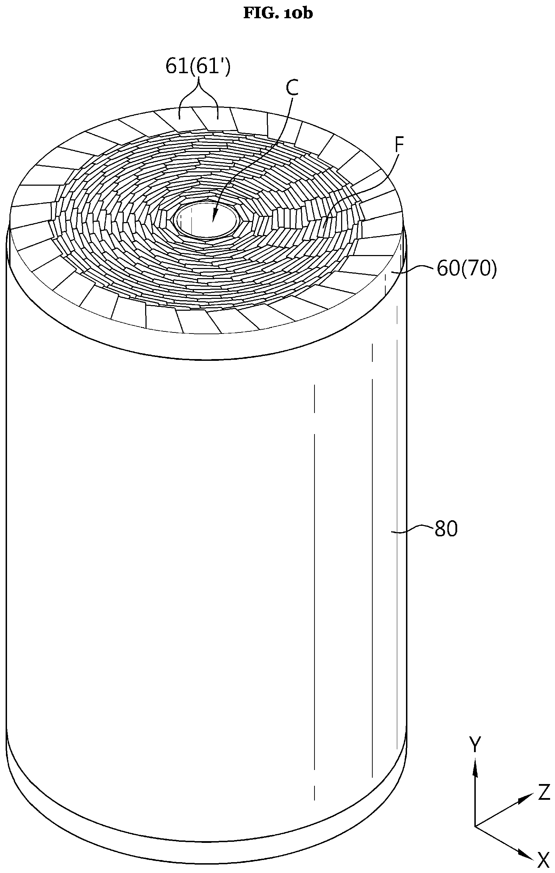

FIG. 10a is a schematic diagram showing a cross section of the bending surface region F formed as the segment 61 is bent toward the core C of the electrode assembly 80. In FIG. 10a, only on a left side of the cross section of the bending surface region F is shown with respect to the winding axis of the electrode assembly 80. The bending surface region F may be formed at both the upper and lower portions of the electrode assembly 80. FIG. 10b is a top perspective view schematically showing the electrode assembly 80 at which the bending surface region F is formed.

Referring to FIGS. 10a and 10b, the bending surface region F has a structure in which the segments 61 are overlapped into multiple layers in the winding axis direction. The overlapping direction is the winding axis direction (Y). Region ① is a segment skip region (the first portion B1) having no segment, and Regions ② and ③ are regions where the winding turn including the segment 61 is located. Region ② is a height variable region in which the height of the segment 61 is variable, and Region ③ is a height uniform region in which the height of the segment is maintained uniformly to the outer circumference of the electrode assembly. As will be described later, the radial lengths of Region ② and Region ③ may be variable. Meanwhile, the uncoated portion (the second portion B3) included in at least one winding turn including the outermost winding turn may not include a segment structure. In this case, the second portion B3 may be excluded from Region ③.

In Region ②, the heights of the segments 61 may be changed stepwise from the minimum height $h_1$ (=$h_{min}$) to the maximum height $h_N$ (=$h_{max}$) in the radius region of $r_1$ to $r_N$ of the electrode assembly 80. The height variable region in which the heights of segments 61 are variable is $r_1$ to $r_N$. From the radius $r_N$ to the radius R of the electrode assembly 80, the heights of the segments 61 are uniformly maintained at $h_N$. Uniform height means that the height deviation is within 5%.

At any radial location of Region ② and Region ③, the number of overlapping layers of the segments 61 varies depending on the radial location. In addition, the number of overlapping layers of the segments 61 may vary based on the width of Region ②, the minimum height ($h_1$) and the maximum height ($h_{N-1}$) of the segments in the height variable region of the segment 61, and the height change amount ($\Delta h$) of the segments 61. The number of overlapping layers of the segments 61 is the number of segments that meet a virtual line when the virtual line is drawn in the winding axis direction at any radial location of the electrode assembly 80.

For example, the number of overlapping layers of the segments 61 at each position of the bending surface region F may be optimized suitable for the required welding strength of the current collector by adjusting the height, width and separation pitch of the segment 61 according to the radius of the winding turn including the segment 61.

First, when the minimum height ($h_1$) of the segment is the same in the height variable region (②) of the segment 61, it will be described through specific examples how the number of overlapping layers of the segments 61 is changed along the radial direction of the bending surface region F according to the change in the maximum height ($h_N$) of the segment 61.

The electrode assemblies of Examples 1-1 to 1-7 are prepared. The electrode assemblies of these examples have a radius of 22 mm and a core diameter of 4 mm. The positive electrode and the negative electrode included in the electrode assembly have the electrode structure shown in FIG. 7a. That is, the segment has a trapezoidal shape. The second portion B3 of the positive electrode and the negative electrode has no segment. The length of the second portion B3 is 2% to 4% compared to the total length of the electrode. The positive electrode, the negative electrode and the separator are wound by the method described with reference to FIG. 2. The winding turns are between 48 turns and 56 turns, whereas the winding turns of these examples are 51 turns. The thicknesses of the positive electrode, the negative electrode and the separator are 149 um, 193 um, and 13 um, respectively. The thickness of the positive electrode and the negative electrode is the thickness including the thickness of the active material layer. The thickness of the positive electrode current collecting plate and the negative electrode current collecting plate are 15 um and 10 um, respectively. The lengths of the positive electrode and the negative electrode in the winding direction are 3948 mm and 4045 mm, respectively.

In each example, the minimum height of the segment 61 is set to 3 mm so that the height variable region (②) of the segment 61 starts from a radius of 5 mm. Also, in each example, the height of the segment 61 is increased by 1 mm for every 1 mm increase in radius, and the maximum height of the segment 61 is changed variously from 4 mm to 10 mm.

Specifically, in Example 1-1, the height variable region (②) of the segment 61 is 5 mm to 6 mm, and the height of the segment 61 is variable at a radius from 3 mm to 4 mm. In Example 1-2, the height variable region (②) of the segment 61 is 5 mm to 7 mm, and the height of the segment 61 is variable from 3 mm to 5 mm. In Example 1-3, the height variable region (②) of the segment 61 is 5 mm to 8 mm, and the height of the segment 61 is variable from 3 mm to 6 mm. In Example 1-4, the height variable region (②) of the segment 61 is 5 mm to 9 mm, and the height of the segment 61 is variable from 3 mm to 7 mm. In Example 1-5, the height variable region (②) of the segment 61 is 5 mm to 10 mm, and the height of the segment 61 is variable from 3 mm to 8 mm. In Example 1-6, the height variable region (②) of the segment 61 is 5 mm to 11 mm, and the height of the segment 61 is variable from 3 mm to 9 mm. In Example 1-7, the height variable region (②) of the segment 61 is 5 mm to 12 mm, and the height of the segment 61 is variable from 3 mm to 10 mm. In Examples 1-1 to 1-7, the height of the segment 61 is uniform from the radius corresponding to the upper limit of the height variable region (②) to the outer circumference. In one example, in Example 1-7, the height of the segment 61 located at a radius from 12 mm to 22 mm is uniform as 10 mm. Meanwhile, in the electrode assembly of the comparative example, the height of segment 61 is maintained at a single height of 3 mm from the radius of 5 mm to the radius of 22 mm.

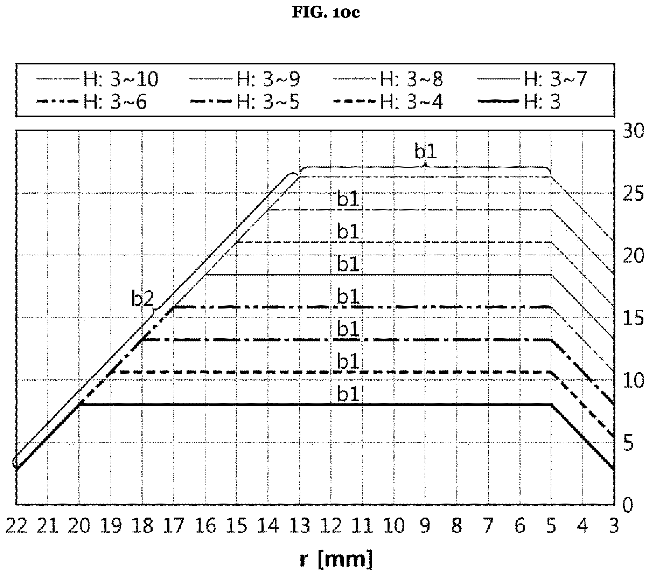

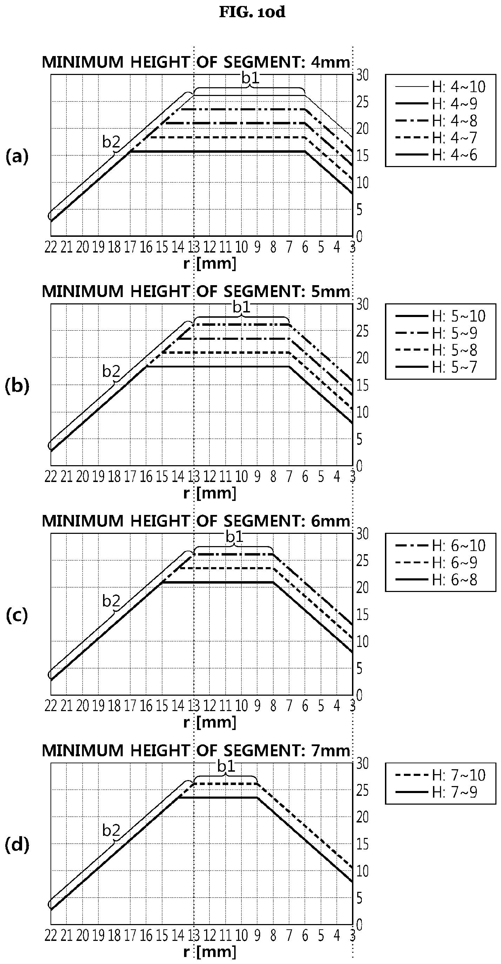

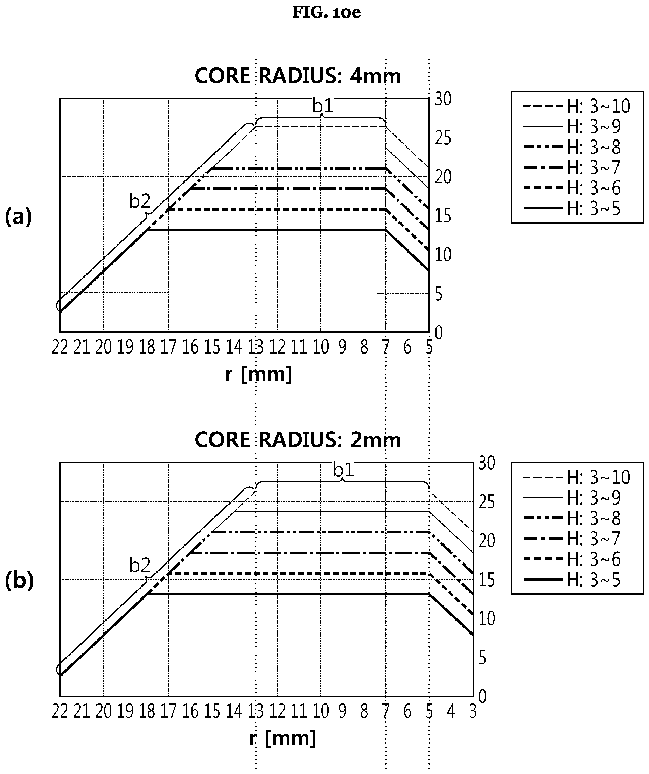

FIG. 10c is a graph showing the results of counting the number of overlapping layers of the segments along the radial direction in the bending surface region F of the positive electrode formed on the upper portion of the electrode assemblies according to Examples 1-1 to 1-7 and the comparative example. The bending surface region of the negative electrode shows substantially the same result. The horizontal axis of the graph is the radius based on the core center, and the vertical axis of the graph is the number of overlapping layers counted at each radius point, and it is the same in FIGS. 10d and 10e, which will be explained later.

Referring to FIG. 10c, the overlapping layer number uniform region b1 of the segment is commonly shown in Examples 1-1 to 1-7 and the comparative example 1. The overlapping layer number uniform region b1 is a radial region of a flat region in each graph. The length of the overlapping layer number uniform region b1 increases as the maximum height of the segment decreases, and the overlapping layer number uniform region (b1') of the comparative example is longest. Meanwhile, the number of overlapping layers of the segments increases as the maximum height ($h_N$) of the segment increases. That is, if the maximum height ($h_N$) of the segment increases so that the width of the height variable region (②) of the segment increases, the number of overlapping layers of the segments increases, but the width of the overlapping layer number uniform region b1 decreases. At an outer side of overlapping layer number uniform region b1, the overlapping layer number decreasing region b2 appears, in which the number of overlapping layers decreases as the radius increases. The overlapping layer number decreasing region b2 is a radial region where the number of overlapping layers decreases as the radius of the electrode assembly increases. The overlapping layer number uniform region b1 and the overlapping layer number decreasing region b2 are adjacent in the radial direction and are complementary to each other. That is, if the length of one region increases, the length of the other region decreases. In addition, the amount of decrease in the number of overlapping layers in the overlapping layer number decreasing region b2 is proportional to the distance spaced apart from the overlapping layer number uniform region b1.

From the viewpoint of the number of overlapping layers of the segments, in Examples 1-1 to 1-7, the number of overlapping layers of the segments is 10 or more in the overlapping layer number uniform region b1. A region in which the number of overlapping layers of segments is 10 or more may be set as a preferred welding target region. The welding target region is a region where at least a part of the current collector can be welded.

In Examples 1-1 to 1-7, the overlapping layer number uniform region b1 starts from a radius point where the height variable region (②) of the segment starts. That is, the height variable region (②) starts from the radius of 5 mm and extends toward the outer circumference.

Table 4 below shows, in Examples 1-1 to 1-7 and comparative example 1, for the positive electrode, calculation results of a ratio of the length of the segment skip region (c, ① in Fig. 10a) to the radius (b-a) of the electrode assembly excluding the core, a ratio (e/f) of the length of the overlapping layer number uniform region b1 to the length (f) from the radius point (5 mm) where the overlapping layer number uniform region starts to an outermost point of the electrode assembly (22 mm), a ratio (d/f) of the length of the height variable region (d) of the segment (d) to the length (f) from the radius point (5 mm) where the overlapping layer number uniform region starts to the outermost point (22 mm) of the electrode assembly, a ratio (h) of the length of the electrode area corresponding to the segment skip region (first portion B1) to the total length of the electrode, a ratio (i) of the length of the electrode area corresponding to the height variable region to the total length of the electrode, a ratio (j) of the electrode area corresponding to the height uniform region to total length of the electrode, and the like.

Except that the negative electrode shows a difference of 0.1 to 1.2% with respect to the parameter h, the remaining parameters are substantially the same as the positive electrode. The sum of proportions h, i and j is slightly different from 100%. The reason is that there is a region having no segment in the second portion $B_3$ corresponding to the outer circumferential uncoated portion of the electrode. For example, in Example 1-1, there is no segment in the second portion $B_3$ corresponding to approximately 4% of the total electrode length. In Table 4, a to f are parameters based on the length in the radial direction, and h, i and j are parameters based on the length in the lengthwise direction of the electrode before being wound into an electrode assembly. In addition, the parameters corresponding to the ratio (%) are values rounded to the first decimal place. These points are substantially the same in Tables 5 and 6, explained later.

Table 4

| Ref. | a. core radius (mm) | b. winding structure radius (mm) | c. segment skip region (mm) | d. height variable region (mm) | e. overlapping layer number uniform region (mm) | f. segment region (mm) | g. number of overlapping layers | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| Example 1-1 | 2 | 22 | 3 | 1 | 14 | 17 | 11 | 15% | 6% | 82% | 6% | 3% | 87% |
| Example 1-2 | 2 | 22 | 3 | 2 | 13 | 17 | 13 | 15% | 12% | 76% | 6% | 7% | 83% |
| Example 1-3 | 2 | 22 | 3 | 3 | 12 | 17 | 16 | 15% | 18% | 71% | 6% | 11% | 80% |
| Example 1-4 | 2 | 22 | 3 | 4 | 11 | 17 | 18 | 15% | 24% | 65% | 6% | 15% | 75% |
| Example 1-5 | 2 | 22 | 3 | 5 | 10 | 17 | 21 | 15% | 29% | 59% | 6% | 21% | 69% |
| Example 1-6 | 2 | 22 | 3 | 6 | 9 | 17 | 24 | 15% | 35% | 53% | 6% | 25% | 65% |
| Example 1-7 | 2 | 22 | 3 | 7 | 8 | 17 | 26 | 15% | 41% | 47% | 6% | 32% | 59% |
| Comparative Example1 | 2 | 22 | 3 | 0 | 15 | 17 | 8 | 15% | 0% | 88% | 6% | - | - |

Seeing Example 1-1 to 1-7 of Table 4, the number of overlapping layers of the segments is 11 to 26, and the ratio (d/f) of the height variable region (d) to the radius region (f) including the segment is 6 % to 41%. In addition, the ratio (e/f) of the overlapping layer number uniform region (e) to the radius region (f) including the segment is 47% to 82%. In addition, the ratio (c/(b-a)) of the segment skip region (c, ① in Fig. 10a) to the radius (b-a) of the electrode assembly excluding the core is 15%. In addition, the ratio of the length of the electrode area corresponding to the segment skip region (first portion B1) to the total length of the electrode is 6%, the ratio of the length of the electrode area corresponding to the height variable region to the total length of the electrode is 3% to 32%, and the ratio of the length of the electrode area corresponding to the height uniform region to the total length of the electrode is 59% to 87%.

The number of overlapping layers (g) of the overlapping layer number uniform region is 10 or more for all of Examples 1-1 to 1-7. The overlapping layer number uniform region (e) decreases as the height variable region (d) of the segment increases, but the number of overlapping layers (g) of the segments increases in the overlapping layer number uniform region (e). For example, the overlapping layer number uniform region (e) in which the number of overlapping layers (g) of the segments is 10 or more may be set as a welding target region.

In the cylindrical battery with form factors of 1865 and 2170, the radius of the electrode assembly is approximately 9 mm to 10 mm. Therefore, for a conventional cylindrical battery, the radial length of the segment region (f) cannot be secured at the level of 17 mm as in Examples 1-1 to 1-7, and the length of the overlapping layer number uniform region (e) in which the number of overlapping layers of the segments is 10 or more cannot be secured at the level of 8 mm to 14 mm. This is because, in the conventional cylindrical battery, when the radius of the core is designed to be 2 mm, which is the same as in Examples 1-1 to 1-7, the radial region in which the segments can be disposed is substantially only 7 mm to 8 mm. In addition, in the conventional cylindrical battery, the length of the electrode in the winding direction is in the level of 600 mm to 980 mm. Such a short electrode length is only about 15% to 24% of the length of the electrode used in Examples 1-1 to 1-7 (the positive electrode of 3948 mm, the negative electrode of 4045 mm). Accordingly, the numerical ranges for the parameters h, i and j cannot be easily derived from the design specifications of the conventional cylindrical battery.

Next, it will be explained through concrete examples how the number of overlapping layers of the segments changes in the radial direction of the bending surface region F according to the change in the minimum height ($h_1$) of the segment when the maximum height ($h_N$) of the segment is the same in the height variable region of the segment (② in FIG. 10a).

The electrode assemblies of Examples 2-1 to 2-5 has a radius of 22 mm, and the core C has a diameter of 4 mm. In the height variable region of the segment 61 (② in FIG. 10a), the minimum height ($h_1$) is the same as 4 mm, and the maximum height ($h_N$) is changed from 6 mm to 10 mm by 1 mm. Therefore, in the electrode assemblies of Examples 2-1 to 2-5, the width of the height variable region (② in FIG. 10a) of the segment is 2 mm, 3 mm, 4 mm, 5 mm, and 6 mm, respectively, and the segment skip region (① of FIG. 10a) is a radial region having a radius from 2 mm to 6 mm.

The electrode assemblies Examples 3-1 to 3-4 have radius of 22 mm, and the core C has a diameter of 4 mm. In the height variable region of (② of FIG. 10a) of the segment 61, the minimum height ($h_1$) is the same as 5 mm, and the maximum height ($h_N$) is changed from 7 mm to 10 mm by 1 mm. Therefore, in the electrode assemblies of Examples 3-1 to 3-4, the width of the segment height variable region (② in FIG. 10a) is 2 mm, 3 mm, 4 mm, and 5 mm, respectively, and the segment skip region (① in FIG. 10a) is a radial region having a radius from 2 mm to 7 mm.

The electrode assemblies of Examples 4-1 to 4-3 have a radius of 22 mm, and the core C has a diameter of 4 mm. In the height variable region (② in FIG. 10a) of the segment 61, the minimum height ($h_1$) is the same as 6 mm, and the maximum height (h) is changed from 8 mm to 10 mm by 1 mm. Therefore, in the electrode assemblies of Examples 4-1 to 4-3, the width of the height variable region (② in FIG. 10a) of the segment is 2 mm, 3 mm, and 4 mm, respectively, and the segment skip region (① in FIG. 10a) is a radius region having a radius from 2 mm to 8 mm.

The electrode assemblies of Examples 5-1 to 5-2 have a radius of 22 mm, and the core C has a diameter of 4 mm. In the height variable region (② in FIG. 10a) of the segment 61, the minimum height ($h_1$) is the same as 7 mm, and the maximum height ($h_N$) is changed from 9 mm to 10 mm by 1 mm. Therefore, in the electrode assemblies of Examples 5-1 to 5-2, the width of the height variable region (② in FIG. 10a) of the segment is 2 mm and 3 mm, respectively, and the segment skip region (① in FIG. 10a) is a radius region having a radius from 2 mm to 9 mm.

FIG. 10d is graphs showing the results of counting the number of overlapping layers of segments measured along the radial direction in the bending surface region F of the positive electrode formed on the upper portion of the electrode assemblies of Examples 2-1 to 2-5, Examples 3-1 to 3-4, Examples 4-1 to 4-3, and Examples 5-1 to 5-2. The bending surface region of the negative electrode also shows substantially the same results.

In FIG. 10d, Graph (a) shows the result of counting the number of overlapping layers of the segments along the radial direction in the bending surface region F for Examples 2-1 to 2-5, Graph (b) shows the result for Examples 3-1 to 3-4, Graph C shows the result for Examples 4-1 to 4-3, and Graph (d) shows the result for Example 5-1 to Example 5-2.

Referring to FIG. 10d, the overlapping layer number uniform region b1 of the segment appears in common in all examples. The overlapping layer number uniform region b1 is a radial region of a flat region in the graph. The length of the overlapping layer number uniform region b1 increases as the maximum height ($h_N$) of the segment decreases when the minimum height ($h_1$) of the segment is the same. Also, the length of the overlapping layer number uniform region b1 increases as the minimum height ($h_1$) of the segment decreases when the maximum height ($h_N$) of the segment is the same. Meanwhile, in the overlapping layer number uniform region b1, the number of overlapping layers of the segments increases as the maximum height ($h_N$) of the segment increases. Also in the examples, the overlapping layer number decreasing region b2 appears adjacent to the overlapping layer number uniform region b1.

In the examples, the number of overlapping layers of the segments in the overlapping layer number uniform region b1 is all 10 or more. For example, the region in which the number of overlapping layers of segments is 10 or more may be set as a preferred welding target region.

In the examples, the overlapping layer number uniform region b1 starts from a radius point where the height variable region (② in FIG. 10a) of the segment starts. In Examples 2-1 to 2-5, the height variable region (② in FIG. 10a) of the segment starts from 6 mm and extends toward the outer circumference. In Examples 3-1 to 3-4, the height variable region (② in FIG. 10a) of the segment starts from 7 mm and extends toward the outer circumference. In Examples 4-3 to 4-3, the height variable region (② in FIG. 10a) of the segment starts from 8 mm and extends toward the outer circumference. In Examples 5-1 to 5-2, the height variable region (② in FIG. 10a) of the segment starts from 9 mm and extends toward the outer circumference.

Table 5 below shows the results of calculating various parameters such as a ratio (e/f) of the length of the overlapping layer number uniform region to the length from the radius point (6 mm, 7 mm, 8 mm, 9 mm) where the overlapping layer number uniform region starts to the outermost point (22 mm) of the electrode assembly, a ratio (d/f) of the length of the height variable region (②) to the length from the radius point (6 mm, 7 mm, 8 mm, 9 mm) where the overlapping layer number uniform region starts to the outermost point (22 mm) of the electrode assembly, and the like for Examples 2-1 to 2-5, Examples 3-1 to 3-4, Examples 4-1 to 4-3, and Examples 5-1 to Example 5-2.

Table 5

| Ref. | a. core radius (mm) | b. winding structure radius (mm) | c. segment skip region (mm) | d. height variable region (mm) | e. overlapping layer number uniform region (mm) | f. segment region (mm) | g. number of overlapping layers | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| Example 2-1 | 2 | 22 | 4 | 2 | 7 | 16 | 16 | 20% | 13% | 44% | 10% | 6% | 81% |
| Example 2-2 | 2 | 22 | 4 | 3 | 8 | 16 | 18 | 20% | 19% | 50% | 10% | 11% | 77% |
| Example 2-3 | 2 | 22 | 4 | 4 | 9 | 16 | 21 | 20% | 25% | 56% | 10% | 16% | 72% |
| Example 2-4 | 2 | 22 | 4 | 5 | 10 | 16 | 24 | 20% | 31% | 63% | 10% | 20% | 68% |
| Example 2-5 | 2 | 22 | 4 | 6 | 11 | 16 | 26 | 20% | 38% | 69% | 10% | 25% | 65% |
| Example 3-1 | 2 | 22 | 5 | 2 | 6 | 15 | 18 | 25% | 13% | 40% | 13% | 7% | 77% |
| Example 3-2 | 2 | 22 | 5 | 3 | 7 | 15 | 21 | 25% | 20% | 47% | 13% | 12% | 72% |
| Example 3-3 | 2 | 22 | 5 | 4 | 8 | 15 | 24 | 25% | 27% | 53% | 13% | 16% | 68% |
| Example 3-4 | 2 | 22 | 5 | 5 | 9 | 15 | 26 | 25% | 33% | 60% | 13% | 22% | 62% |
| Example 4-1 | 2 | 22 | 6 | 2 | 5 | 14 | 21 | 30% | 14% | 36% | 16% | 9% | 72% |
| Example 4-2 | 2 | 22 | 6 | 3 | 6 | 14 | 24 | 30% | 21% | 43% | 16% | 13% | 68% |
| Example 4-3 | 2 | 22 | 6 | 4 | 7 | 14 | 26 | 30% | 29% | 50% | 16% | 19% | 62% |
| Example 5-1 | 2 | 22 | 7 | 2 | 4 | 13 | 24 | 35% | 15% | 31% | 20% | 9% | 68% |

| Ref. | a. core radius (mm) | b. winding structure radius (mm) | c. segment skip region (mm) | d. height variable region (mm) | e. overlapping layer number uniform region (mm) | f. segment region (mm) | g. number of overlapping layers | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| Example 5-2 | 2 | 22 | 7 | 3 | 5 | 13 | 26 | 35% | 23% | 38% | 20% | 15% | 62% |

Seeing Example 2-5, Example 3-4, Example 4-3, and Example 5-2 of Table 5 along with FIGS. 10a and 10d, the maximum height ($h_N$) of the segment in the height variable region (②) of the segment is the same as 10 mm, but the minimum height ($h_1$) of the segment increases to 4 mm, 5 mm, 6 mm, and 7 mm by 1 mm, and the length of the height variable region (②) decreases to 6 mm, 5 mm, 4 mm, 3 mm by 1 mm. In the four examples, the ratio (e/f) of the overlapping layer number uniform region is the maximum in Example 2-5 as 69% and the minimum in Example 5-2 as 38%, and the number of overlapping layers of the overlapping layer number uniform region is the same in all examples.

From the results shown in Table 5, when the maximum height ($h_N$) of the segment is the same and the minimum height ($h_1$) of the segment decreases, it may be understood that the width of the overlapping layer number uniform region increases proportionally as the width of the height variable region (②) of the segment increases. The reason is that as the minimum length ($h_1$) of the segment is smaller, the radius point where the segment starts is closer to the core, so that the area where the segments are stacked is extended toward the core.

Seeing Table 5, it may be found that the number of overlapping layers of the segments is 16 to 26, the ratio (d/f) of the height variable region (②) of the segment is 13% to 38%, and the ratio of the overlapping layer number uniform region (e/f) is 31% to 69%. In addition, the ratio (c/(b-a)) of the segment skip region (①) to the radius (b-a) of the electrode assembly excluding the core is 20% to 35%. In addition, the ratio of the length of the electrode area corresponding to the segment skip region (①) to the total length of the electrode is 10% to 20%, the ratio of the length of the electrode area corresponding to the height variable region (②) to the total length of the electrode is 6% to 25%, and the ratio of the length of the electrode area corresponding to the height uniform region (③) to the total length of the electrode is 62% to 81%.

In the cylindrical battery form factors of 1865 and 2170, the radius of the electrode assembly is approximately 9 mm to 10 mm. Therefore, it is impossible that the radial length of the segment region (f) is secured at the level of 13 mm to 16 mm as in the examples, and it is impossible that the length of the segment skip region (c, ①) is secured in the level of 4 mm to 7 mm while the length of the overlapping layer number uniform region (e) in which the number of overlapping layers of the segments is 10 or more is secured in the level of 5 mm to 11 mm. This is because, in the conventional cylindrical battery, when the radius of the core is designed to be 2 mm, which is the same as in the examples, the radial region in which the segments can be disposed is substantially only 7 mm to 8 mm. In addition, in the conventional cylindrical battery, the length of the electrode in the winding direction is in the level of 600 mm to 980 mm. Such a short electrode length is only about 15% to 24% of the electrode length (the positive electrode of 3948 mm, the negative electrode of 4045 mm) in the examples. Accordingly, the numerical ranges for the parameters h, i and j cannot be easily derived from the design specifications of the conventional cylindrical battery.

Next, it will be explained through specific examples how the number of overlapping layers of the segments is changed according to the diameter of the core C of the electrode assembly along the radial direction of the bending surface region F when the minimum height ($h_1$) and the maximum height ($h_N$) of the segment are the same in the height variable region (②) of the segment.

The electrode assemblies of Examples 6-1 to 6-6 have a radius of 22 mm, and the core C has a radius of 4 mm. In the height variable region (②) of the segment 61, the minimum height ($h_1$) of the segment is the same as 3 mm, and the maximum height ($h_N$) of the segment is changed from 5 mm to 10 mm by 1 mm. Therefore, in the electrode assemblies of Examples 6-1 to 6-6, the width of the height variable region (②) of the segment is 2 mm, 3 mm, 4 mm, 5 mm, 6 mm, and 7 mm, respectively, and the segment skip region (①) is a radial region having a radius from 4 mm to 7 mm.

The electrode assemblies of Examples 7-1 to 7-6 have a radius of 22 mm, and the core C has a radius of 2 mm. In the height variable region (②) of the segment 61, the minimum height ($h_1$) of the segment is the same as 3 mm, and the maximum height ($h_N$) of the segment is changed from 5 mm to 10 mm by 1 mm. Therefore, in the electrode assemblies of Examples 7-1 to 7-6, the width of the height variable region (②) of the segment is 2 mm, 3 mm, 4 mm, 5 mm, 6 mm, and 7 mm, respectively, and the segment skip region (①) is a radial region having a radius from 2 mm to 5 mm.

FIG. 10e are graphs showing the results of counting the number of overlapping layers of the segments measured along the radial direction in the bending surface region F of the positive electrode formed on the upper portion of the electrode assembly for Examples 6-1 to 6-6 and Examples 7-1 to 7-6. Substantially the same results are shown in the bending surface region of the negative electrode.

In FIG. 10e, Graph (a) shows the results of counting the number of overlapping layers of segments measured along the radial direction in the bending surface region F for Examples 6-1 to 6-6, and Graph (b) shows the results for Examples 7-1 to 7-6.

Referring to FIG. 10e, the overlapping layer number uniform region b1 of the segment appears in common in all examples. The overlapping layer number uniform region b1 is a radial region of a flat region in the graph. The radial length of the overlapping layer number uniform region b1 increases as the maximum height ($h_N$) of the segment decreases when the minimum height ($h_1$) of the segment is the same. Meanwhile, in the overlapping layer number uniform region b1, the number of overlapping layers of the segments increases as the maximum height ($h_N$) of the segment increases. In the examples, the overlapping layer number decreasing region b2 appears adjacent to the overlapping layer number uniform region b1.

In the examples, the number of overlapping layers of the segments in the overlapping layer number uniform region b1 is 10 or more for all examples. For example, a region in which the number of overlapping layers of segments is 10 or more may be set as a preferred welding target region.

In the examples, the overlapping layer number uniform region b1 starts from a radius point where the height variable region (②) of the segment starts. In Examples 6-1 to 6-6, the radius at which the segment height variable region (②) starts is 7 mm, and in Examples 7-1 to 7-6, the radius at which the segment height variable region (②) starts is 5 mm.

Table 6 below shows the results of calculating various parameters including a ratio (e/f) of the length of the overlapping layer number uniform region to the length from the radius point (7 mm, 5 mm) where the overlapping layer number uniform region starts to the outermost point (22 mm) of the electrode assembly, a ratio (d/f) of the length of the height variable region (②) to the length from the radius point (7 mm, 5 mm) where the overlapping layer number uniform region starts to the outermost point (22 mm) of the electrode assembly, for Examples 6-1 to 6-6 and Examples 7-1 to 7-6, and the like.

Table 6

| Ref. | a. | b. | c. | d. | e. | f. | g. | c/(b-a) | d/f | e/f | h. | i. | j. |
|---|---|---|---|---|---|---|---|---|---|---|---|---|---|
| | core radius (mm) | windin g structur e radius (mm) | segme nt skip region (mm) | height variabl e region (mm) | overlap ping layer numbe r uniform region (mm) | segme nt region (mm) | numbe r of overlap ping layers | (%) | (%) | (%) | ratio of segme nt skip region | ratio of height variab le region | ratio of height unifor m region |
| Example 6-1 | 4 | 22 | 3 | 2 | 11 | 15 | 13 | 17% | 13% | 73% | 6% | 7% | 83% |
| Example 6-2 | 4 | 22 | 3 | 3 | 10 | 15 | 16 | 17% | 20% | 67% | 6% | 11% | 80% |
| Example 6-3 | 4 | 22 | 3 | 4 | 9 | 15 | 18 | 17% | 27% | 60% | 6% | 15% | 75% |
| Example 6-4 | 4 | 22 | 3 | 5 | 8 | 15 | 21 | 17% | 33% | 53% | 6% | 21% | 69% |
| Example 6-5 | 4 | 22 | 3 | 6 | 7 | 15 | 24 | 17% | 40% | 47% | 6% | 25% | 65% |
| Example 6-6 | 4 | 22 | 3 | 7 | 6 | 15 | 26 | 17% | 47% | 40% | 6% | 32% | 59% |
| Example 7-1 | 2 | 22 | 3 | 2 | 13 | 17 | 13 | 15% | 12% | 76% | 6% | 7% | 83% |
| Example 7-2 | 2 | 22 | 3 | 3 | 12 | 17 | 16 | 15% | 18% | 71% | 6% | 11% | 80% |
| Example 7-3 | 2 | 22 | 3 | 4 | 11 | 17 | 18 | 15% | 24% | 65% | 6% | 15% | 75% |
| Example 7-4 | 2 | 22 | 3 | 5 | 10 | 17 | 21 | 15% | 29% | 59% | 6% | 21% | 69% |
| Example 7-5 | 2 | 22 | 3 | 6 | 9 | 17 | 24 | 15% | 35% | 53% | 6% | 25% | 65% |
| Example 7-6 | 2 | 22 | 3 | 7 | 8 | 17 | 26 | 15% | 41% | 47% | 6% | 32% | 59% |

Seeing Examples 6-6 and 7-6 in Table 6 along with FIG. 10a, the minimum height ($h_1$) and the maximum height ($h_N$) of the segment in the height variable region (②) of the segment are the same as 3 mm and 10 mm, respectively. However, in Example 6-6, the radius of the core is larger by 2 mm compared to that of Example 7-6. Therefore, in Example 6-6, the overlapping layer number uniform region (e) and the segment region (f) are smaller by 2 mm compared to those of Example 7-6, and the number of overlapping layers of the segments in the overlapping layer number uniform region is the same. These results are derived from the difference in the radius of the core. From the results shown in Table 6, it may be understood that, when the width of the height variable region (②) of the segment is the same, as the radius (a) of the core is smaller, the ratio (d/f) of the height variable region (②) decreases, whereas the ratio (e/f) of the overlapping layer number uniform region increases.

Seeing Table 6, it may be found that the number of overlapping layers of the segments is 13 to 26, the ratio (d/f) of the height variable region (②) is 12% to 47%, and the ratio (e/f) of the length of the overlapping layer number uniform region is 40% to 76%. In addition, the ratio (c/(b-a)) of the segment skip region (①) to the radius (b-a) of the electrode assembly excluding the core is 15% to 17%. In addition, the ratio of the length of the electrode area corresponding to the segment skip region (①) to the total length of the electrode is 6%, the ratio of the length of the electrode area corresponding to the height variable region (②) to the total length of the electrode is 7% to 32%, and the ratio of the length of the electrode area corresponding to the height uniform region (③) to the total length of the electrode is 59% to 83%.

For the cylindrical batteries with form factors of 1865 and 2170, the radius of the electrode assembly is approximately 9 mm to 10 mm. Therefore, it is impossible that the radial length of the segment region (f) is secured in the level of 15 mm to 17 mm, and the length of the segment skip region (①) is secured in the level of about 3 mm, and simultaneously the length of the overlapping layer number uniform region (e) in which the number of overlapping layers of the segments is 10 or more is secured in the level of 6 mm to 13 mm as in the examples. This is because, in the conventional cylindrical battery, when the radius of the core is designed to be 2 mm to 4 mm, which is the same as in the examples, the radial region in which segments can be disposed is substantially only 5 mm to 8 mm. In addition, in the conventional cylindrical battery, the length of the electrode in the winding direction is in the level of 600 mm to 980 mm. Such a short electrode length is only about 15% to 24% of the electrode length (the positive electrode of 3948 mm, the negative electrode of 4045 mm) in the examples. Accordingly, the numerical ranges for the parameters h, i and j may not be easily derived from the design specifications of the conventional cylindrical battery.

Comprehensively considering the data in Tables 4 to 6, the number of overlapping layers of the segments in the overlapping layer number uniform region of the segment may be 11 to 26. Also, the ratio (d/f) of the height variable region (②) of the segment may be 6% to 47%. In addition, the ratio (e/f) of the overlapping layer number uniform region may be 31% to 82%. In addition, the ratio (c/(b-a)) of the length of the segment skip region (①) to the radius of the electrode assembly excluding the core may be 15% to 35%. In addition, the ratio of the length of the electrode area corresponding to the segment skip region (①) to the total length (in the winding direction length) of the electrode may be 6% to 20%. In addition, the ratio of the length of the electrode area corresponding to the height variable region (②) of the segment to the total length of the electrode may be 3% to 32%. In addition, the ratio of the length of the electrode area corresponding to the height uniform region (③) of the segment to the total length of the electrode may be 59% to 87%.

Meanwhile, the parameters described through Tables 4 to 6 may be varied according to design factors including the radius (a) of the core; the radius (b) of the electrode assembly; the minimum height ($h_1$) and the maximum height ($h_N$) in the height variable region (②) of the segment; the change amount ($\triangle h$) in height of the segment per 1 mm increase in radius; the thickness of the positive electrode, the negative electrode, and the separator; and the like.

Therefore, in the overlapping layer number uniform region of the segment, the number of overlapping layers of the segments may be expanded to 10 to 35. The ratio (d/f) of the height variable region (②) of the segment may be expanded to 1% to 50%. In addition, the ratio (e/f) of the overlapping layer number uniform region may be expanded to 30% to 85%. In addition, the ratio (c/(b-a)) of the length of the segment skip region (①) to the radius of the electrode assembly excluding the core may be expanded to 10% to 40%. In addition, the ratio of the length of the electrode area corresponding to the segment skip region (①) to the total length (in the winding direction length) of the electrode may be expanded to 1% to 30%. In addition, the ratio of the length of the electrode area corresponding to the height variable region (②) of the segment to the total length of the electrode may be expanded to 1% to 40%. In addition, the ratio of the length of the electrode area corresponding to the height uniform region (③) of the segment to the total length of the electrode may be expanded to 50% to 90%. In the above examples, the height index 'N' in the maximum height ($h_N$) of the segment in the height variable region (②) and the height uniform region (③) is in the range of 2 to 8. For example, referring to Table 4, the height index 'N' for examples 1-1 and 1-7 is 2 and 8, respectively. However, the height index 'N' may vary in accordance with the height change amount ($\triangle h$) of the segment in a radial direction of the electrode assembly. When the radial length of the height variable region (②) is fixed, as the height change amount ($\triangle h$) of the segment decreases, the height index 'N' correspondingly increases and vice versa. For example, the height index 'N' may be expanded to the range of 2 to 20 and, optionally, further to the range of 2 to 30.

In the bending surface region F formed at the top and bottom of the electrode assembly, the overlapping layer number uniform region may be used as a welding target region of the current collector.

For example, the welding region of the current collector overlaps at least 50% with the overlapping layer number uniform region in the radial direction of the electrode assembly. Here, it is more preferable as the overlapping ratio is higher.

For example, the remaining region of the welding region of the current collector that does not overlap with the overlapping layer number uniform region may overlap with the overlapping layer number decreasing region adjacent to the overlapping layer number uniform region in the radial direction.

More preferably, the remaining region of the welding region of the current collector that does not overlap with the overlapping layer number uniform region may overlap with a region of the overlapping layer number decreasing region in which the number of overlapping layers of segments is 10 or more.

If the current collector is welded to the region where the number of overlapping layers of the segments is 10 or more, it is preferable in terms of welding strength and in terms of preventing damage to the separator or the active material layer during welding. In particular, it is useful when welding the current collector using a high-power laser with high penetration characteristics.

If the overlapping layer number uniform region in which 10 or more segments are stacked is welded to the current collector with a laser, even if the laser output is increased to improve the welding quality, the overlapping layer number uniform region absorbs most of the laser energy to form welding beads, so it is possible to prevent the separator and the active material layer under the bending surface region F from being damaged by the laser.

In addition, in the area irradiated with laser, the number of overlapping layers of segments is 10 or more, so welding beads are formed with sufficient volume and thickness. Accordingly, the welding strength may be sufficiently secured and the resistance of the welding interface may be lowered to a level suitable for rapid charging.

When welding the current collector, the laser output may be determined by the desired welding strength between the bending surface region F and the current collector. The welding strength increases proportionally with the number of overlapping layers of segments. This is because as the number of overlapping layers increases, the volume of welding beads formed by the laser increases. The welding beads are formed when the material of the current collector and the material of the segment are melted together. Therefore, if the volume of the welding beads is large, the current collector and the bending surface region are coupled stronger and the contact resistance of the welding interface is lowered.

For example, the welding strength may be 2 kgf/cm$^2$ or more, more preferably 4 kgf/cm$^2$ or more. The maximum welding strength may be dependent on a power of a laser welding equipment. As one example, the welding strength may be preferably set to 8 kgf/cm$^2$ or less, more preferably 6 kgf/cm$^2$ or less, but the present invention is not limited thereto.

If the welding strength satisfies the above numerical range, the physical properties of the welding interface do not deteriorate even if severe vibration is applied to the electrode assembly along the winding axis direction and/or the radial direction, and the resistance of the welding interface may also be reduced due to the sufficient volume of the welding beads.

The laser power to satisfy the welding strength condition varies depending on the laser equipment, and it may be appropriately adjusted in the range of 250W to 320W or 40% to 100% of the maximum laser power specification provided by the corresponding equipment.

The welding strength may be defined as a tensile force per unit area (kgf/cm$^2$) of the current collector when the current collector starts to separate from the bending surface region F. Specifically, after the current collector is completely welded, a tensile force may be applied to the current collector, but the magnitude of the tensile force may be gradually increased. If the tensile force exceeds a threshold, the segment begins to separate from the welding interface. At this time, the value obtained by dividing the tensile force applied to the current collector by the area of the current collector corresponds to the welding strength.

In the bending surface region F, segments are stacked into multiple layers, and according to the above examples, the number of overlapping layers of the segments may be increased from 10 sheets at minimum to 35 sheets at maximum.

The thickness of the positive electrode current collector (foil) constituting an uncoated portion 43 may be in the range of 10 um to 25 um, and the thickness of the negative electrode current collector (foil) constituting an uncoated portion 43 may be in the range of 5 um to 20 um. Therefore, the bending surface region F of the positive electrode may include a region where the total overlapping thickness of the segments is 100 um to 875um. In addition, the bending surface region F of the negative electrode may include a region where the total overlapping thickness of the segments is 50 um to 700 um.

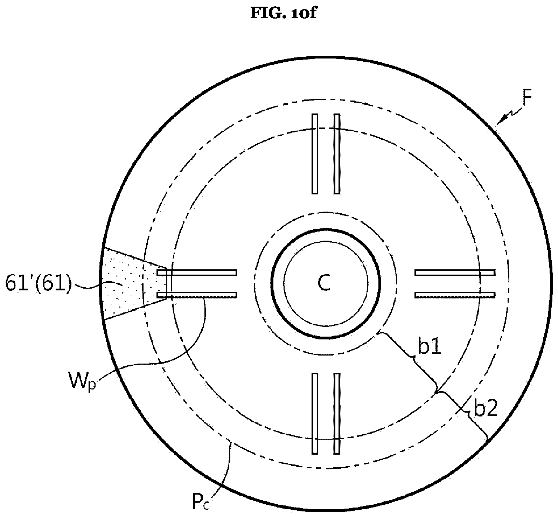

FIG. 10f is a top plan view showing an electrode assembly in which the overlapping layer number uniform region b1 and the overlapping layer number decreasing region b2 are depicted in the bending surface region F of the segments 61, 61' according to an example.

Referring to FIG. 10f, the area between two circles indicated by thick solid lines corresponds to the bending surface region F of the segment, and the area between two circles indicated by dashed-dotted lines corresponds to the overlapping layer number uniform region b1 in which the number of overlapping layers of the segments is 10 or more, and the outer region of the overlapping layer number uniform region b1 corresponds to the overlapping layer number decreasing region b2.

In one example, if the current collector ($P_c$) is welded to the bending surface region F, a welding pattern ($W_p$) is formed on the surface of the current collector ($P_c$). The welding pattern ($W_p$) may be a line pattern or a dot array pattern. The welding pattern ($W_p$) corresponds to the welding region, and may overlap with the overlapping layer number uniform region b1 of the segment by 50% or more along the radial direction. Accordingly, a part of the welding pattern ($W_p$) may be included in the overlapping layer number uniform region b1, and the remainder of the welding pattern ($W_p$) may be included in the overlapping layer number decreasing region b1 outside the overlapping layer number uniform region $b_1$. Of course, the entire welding pattern ($W_p$) may overlap with the overlapping layer number uniform region b1 in order to maximize a welding strength and lower a resistance in the welding region.

The area of the bending surface region F may be defined as the sum of the area of the overlapping layer number uniform region b1 of the segment and the area of the overlapping layer number decreasing region b2. Since the ratio (e/f) of the overlapping layer number uniform region b1 is 30% to 85%, preferably 31% to 82%, the ratio of the area of the overlapping layer number uniform region b1 to the area of the bending surface region F may be 9% ($30^2/100^2$) to 72% ($85^2/100^2$), preferably 10% ($31^2/100^2$) to 67% ($82^2/100^2$).

For example, the edge of the portion where the current collector (Pc) contacts the bending surface region F may cover the end of the segments 61, 61' bent toward the core C in the last winding turn of the height uniform region(③). In this case, since a welding pattern ($W_p$) is formed in a state where the segments 61, 61' are pressed by the current collector ($P_c$), the current collector ($P_c$) and the bending surface region F are strongly coupled. As a result, the segments 61, 61' stacked in the winding axis direction are closely adhered to each other, thereby lowering the resistance at the welding interface and preventing the segments 61, 61' from lifting.

Meanwhile, the bending direction of the segment may be opposite to that described above. That is, the segment may be bent from the core toward the outer circumference. In this case, the pattern in which the height of the segment is changed along the winding direction (X-axis direction) may be opposite to that of the former examples (modified examples). For example, the height of the segment may be lowered stepwise from the core toward the outer circumference. Also, the structure applied to the first portion B1 and the structure applied to the second portion $B_3$ may be switched with each other. For example, the height change pattern of the segment may be designed such that the height of the segment is gradually decreased from the core side to the outer circumference side, but the end of the segment is not exposed out of the outer circumference of the electrode assembly when the segment closest to the outer circumference of the electrode assembly is bent toward the outer circumference.

The electrode structure of the above examples (modifications) may be applied to at least one of the first electrode and the second electrode having different polarities included in the jelly-roll type electrode assembly or other type of electrode assembly known in the art. In addition, when the electrode structure of the above examples (modifications) is applied to any one of the first electrode and the second electrode, the conventional electrode structure may be applied to the other one. In addition, the electrode structures applied to the first electrode and the second electrode may not be identical but be different from each other.

For example, when the first electrode and the second electrode are a positive electrode and a negative electrode, respectively, any one of the above examples (modifications) may be applied to the first electrode and the conventional electrode structure (see FIG. 1) may be applied to the second electrode.

As another example, when the first electrode and the second electrode are a positive electrode and a negative electrode, respectively, any one of the above examples (modifications) may be selectively applied to the first electrode and any one of the above examples (modifications) may be selectively applied to the second electrode.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula $A[A_xM_y]O_{2+z}$ (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; and the stoichiometric modulus x, y and z are selected so that the compound maintains electrical neutrality).

In another example, the positive electrode active material may be an alkali metal compound $xLiM^1O_2$-(1-x)$Li_2M^2O_3$ disclosed in US6,677,082, US6,680,143, et al., wherein $M^1$ includes at least one element having an average oxidation state 3; $M^2$ includes at least one element having an average oxidation state 4; and $o \leq x \leq 1$).

In still another example, the positive electrode active material may be lithium metal phosphate expressed by a general formula $Li_aM^1_xFe_{1-x}M^2_yP_{1-y}M^3_zO_{4-z}$ ($M^1$ includes at least one element selected from the Ti, Si, Mn, Co, Fe, V, Cr, Mo, Ni, Nd, Al, Mg and Al; $M^2$ includes at least one element selected from Ti, Si, Mn, Co, Fe, V, Cr, Mo, Ni, Nd, Al, Mg, Al, As, Sb, Si, Ge, V and S; $M^3$ includes a halogen element optionally including F; $0 < a \leq 2$, $0 \leq x \leq 1$, $0 \leq y < 1$, $0 \leq z < 1$; the stoichiometric coefficient a, x, y and z are selected so that the compound maintains electrical neutrality), or $Li_3M_2(PO_4)_3$ (M includes at least one element selected from Ti, Si, Mn, Fe, Co, V, Cr, Mo, Ni, Al, Mg and Al).

For example, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_2$ and $SnO_2$ with a potential of less than 2V may also be used as the negative electrode active material. As the carbon material, both low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO and $Y_2O_3$.

Hereinafter, the structure of the electrode assembly according to an example will be described in detail.

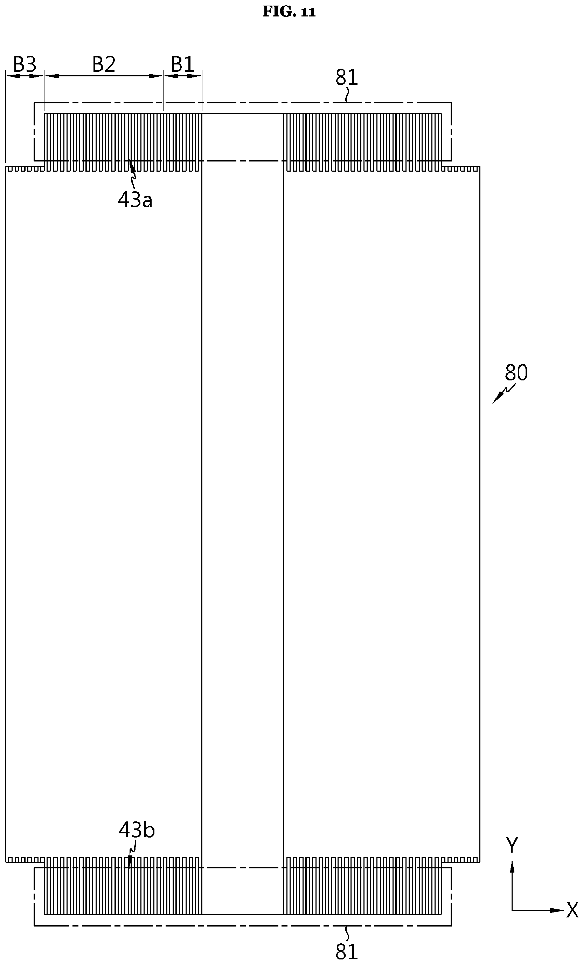

FIG. 11 is a sectional view showing a jelly-roll type electrode assembly 80 in which the electrode 40 of the first example is applied to the first electrode (the positive electrode) and the second electrode (the negative electrode), taken along the Y-axis direction (winding axis direction).

The electrode assembly 80 may be manufactured by the winding method described with reference to FIG. 2. For convenience of description, the protruding structures of the first uncoated portion 43a and the second uncoated portion 43b extending out of the separator are illustrated in detail, and the winding structures of the first electrode, the second electrode, and the separator are not depicted. The first uncoated portion 43a protruding upward extends from the first electrode, and the second uncoated portion 43b protruding downward extends from the second electrode.

The patterns in which the heights of the first and second uncoated portions 43a, 43b change are schematically illustrated. That is, the height of the uncoated portion may vary irregularly depending on the position at which the cross-section is cut. For example, at a cross-section where the sides of the trapezoidal segments 61, 61' or the cut grooves 63 are cut, the height of the uncoated portion in the cross section is lower than the height H of the segments 61, 61'. Accordingly, it should be understood that the heights of the uncoated portions depicted in the drawings showing the cross-section of the electrode assembly correspond to the average of the heights (H in FIGS. 7b and 8b) of the uncoated portion included in each winding turn.

Referring to FIG. 11, the first uncoated portion 43a includes a first portion B1 adjacent to the core of the electrode assembly 80, a second portion $B_3$ adjacent to the outer circumference of the electrode assembly 80, and a third portion B2 interposed between the first portion B1 and the second portion $B_3$.

The height (length in the Y-axis direction) of the second portion $B_3$ is relatively smaller than the height of the third portion B2. Accordingly, it is possible to prevent that an internal short circuit occurs since the beading portion and the second portion $B_3$ contact each other while the beading portion of the battery housing is being pressed near the second portion B3.

The second uncoated portion 43b has the same structure as the first uncoated portion 43a. In one modification, the second uncoated portion 43b may have a conventional electrode structure or an electrode structure of other examples (modifications).

The ends 81 of the first uncoated portion 43a and the second uncoated portion 43b may be bent in the radial direction of the electrode assembly 80, for example from the outer circumference toward the core. At this time, the second portion $B_3$ may not be substantially bent.

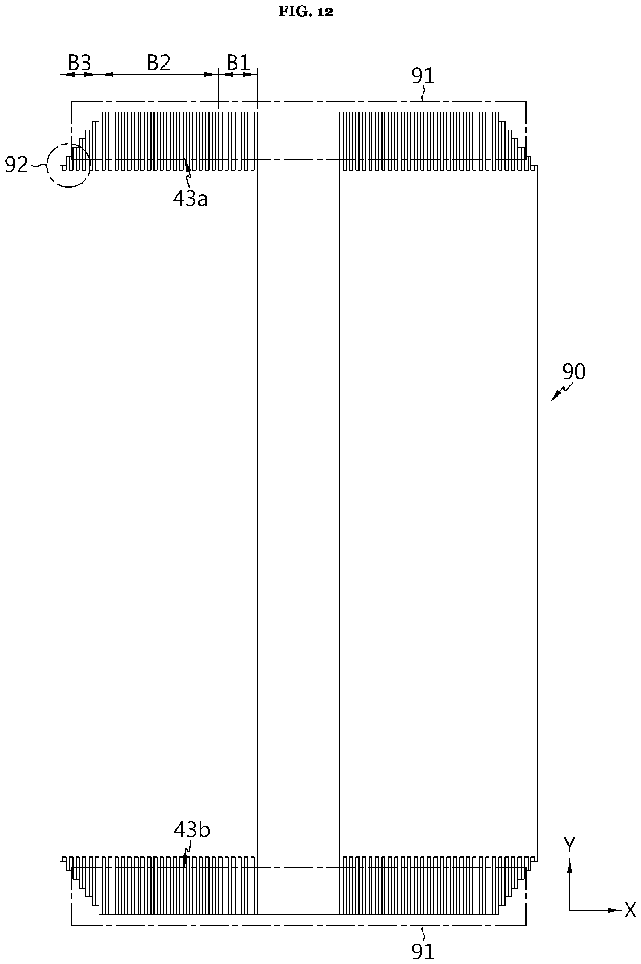

FIG. 12 is a sectional view showing a jelly-roll type electrode assembly 90 in which the electrode 45 of the second example is applied to the first electrode (the positive electrode) and the second electrode (the negative electrode), taken along the Y-axis direction (winding axis direction).

Referring to FIG. 12, the first uncoated portion 43a includes a first portion B1 adjacent to the core of the electrode assembly 90, a second portion $B_3$ adjacent to the outer circumference of the electrode assembly 90, and a third portion B2 interposed between the first portion B1 and the second portion $B_3$.

The height of the second portion $B_3$ is relatively smaller than the height of the third portion B2 and decreases gradually or stepwise from the core to the outer circumference. Accordingly, it is possible to prevent that an internal short circuit occurs since the beading portion and the second portion $B_3$ contact each other while the beading portion of the battery housing is being pressed near the second portion $B_3$.

The second uncoated portion 43b has the same structure as the first uncoated portion 43a. In one modification, the second uncoated portion 43b may have a conventional electrode structure or an electrode structure of other examples (modifications).

The ends 91 of the first uncoated portion 43a and the second uncoated portion 43b may be bent in the radial direction of the electrode assembly 90, for example from the outer circumference to the core. At this time, the outermost portion 92 of the second portion $B_3$ may not be substantially bent.

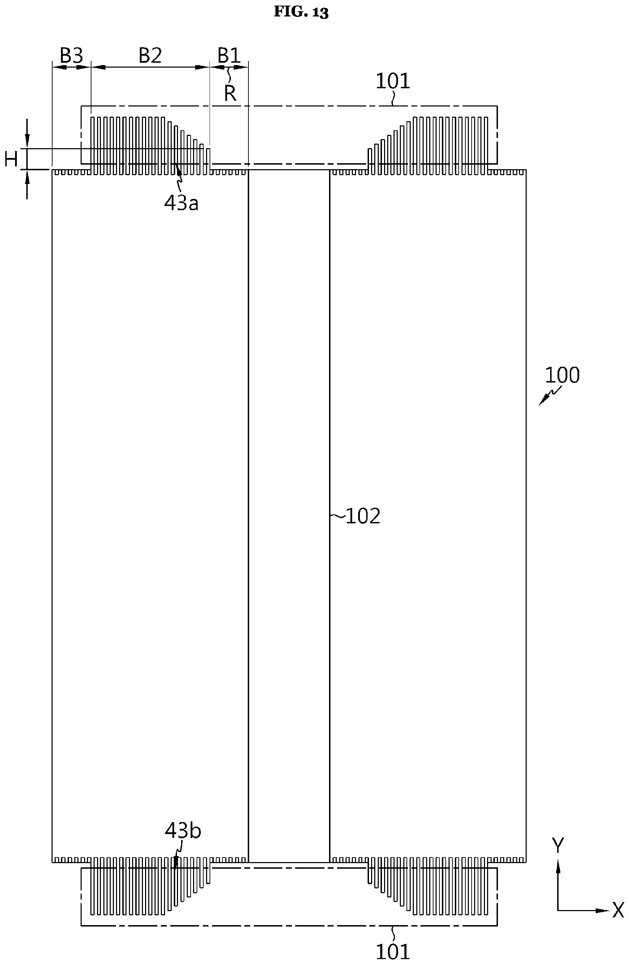

FIG. 13 is a sectional view showing a jelly-roll type electrode assembly 100 in which any one of the electrodes 50, 60, 70 of the third to fifth examples (modifications thereof) are applied to the first electrode (the positive electrode) and the second electrode (the negative electrode), taken along the Y-axis direction (winding axis direction).

Referring to FIG. 13, the first uncoated portion 43a includes a first portion B1 adjacent to the core of the electrode assembly 100, a second portion $B_3$ adjacent to the outer circumference of the electrode assembly 100, and a third portion B2 interposed between the first portion B1 and the second portion $B_3$.

The height of the first portion B1 is relatively smaller than the height of the third portion B2. In addition, the bending length of the uncoated portion 43a located at the innermost side of the third portion B2 is equal to or smaller than the radial length (R) of the first portion B1. The bending length (H) corresponds to the distance from the bending point of the uncoated portion 43a to the top of the uncoated portion 43a. In a modified example, the bending length (H) may be smaller than the sum of the radial length (R) of the first portion B1 and 10% of the radius of the core 102.

Therefore, even if the third portion B2 is bent, the core 102 of the electrode assembly 100 is open to the outside by 90% or more of the diameter of the core 102. The core 102 is a cavity at the center of the electrode assembly 100. If the core 102 is not blocked, there is no difficulty in the electrolyte injection process, and the electrolyte injection efficiency is improved. In addition, by inserting a welding jig through the core 102, the welding process may be easily performed between the current collector of the negative electrode (or, the positive electrode) and the battery housing (or, the terminal).

The height of the second portion $B_3$ is relatively smaller than the height of the third portion B2. Accordingly, while the beading portion of the battery housing is being pressed near the second portion $B_3$, it is possible to prevent the beading portion and the second portion $B_3$ from coming into contact with each other to cause an internal short circuit.

In one modification, the height of the second portion $B_3$ may be decreased gradually or stepwise, unlike that shown in FIG. 13. Also, in FIG. 13, although the height of the third portion B2 is partially the same in a circumferential direction, the height of the third portion B2 may increase gradually or stepwise from the boundary between the first portion B1 and the third portion B2 to the boundary between the third portion B2 and the second portion $B_3$. When the third portion B2 is divided into a plurality of segments, a region in which the height of the uncoated portion 43a changes corresponds to the height variable region (② in FIG. 10a) of the segment.

The second uncoated portion 43b has the same structure as the first uncoated portion 43a. In one modification, the second uncoated portion 43b may have a conventional electrode structure or an electrode structure of other examples (modifications).

The ends 101 of the first uncoated portion 43a and the second uncoated portion 43b may be bent in the radial direction of the electrode assembly 100, for example from the outer circumference to the core. At this time, the first portion B1 and the second portion $B_3$ are not substantially bent.

When the third portion B2 includes a plurality of segments, the bending stress may be relieved to prevent the uncoated portion 43a near the bending point from being torn or abnormally deformed. In addition, when the width and/or height and/or separation pitch of the segment is adjusted according to the numerical range of the above example, the segments are bent toward the core and overlap in multiple layers to sufficiently secure the welding strength, and an empty hole (gap) is not formed in the bent surface region.

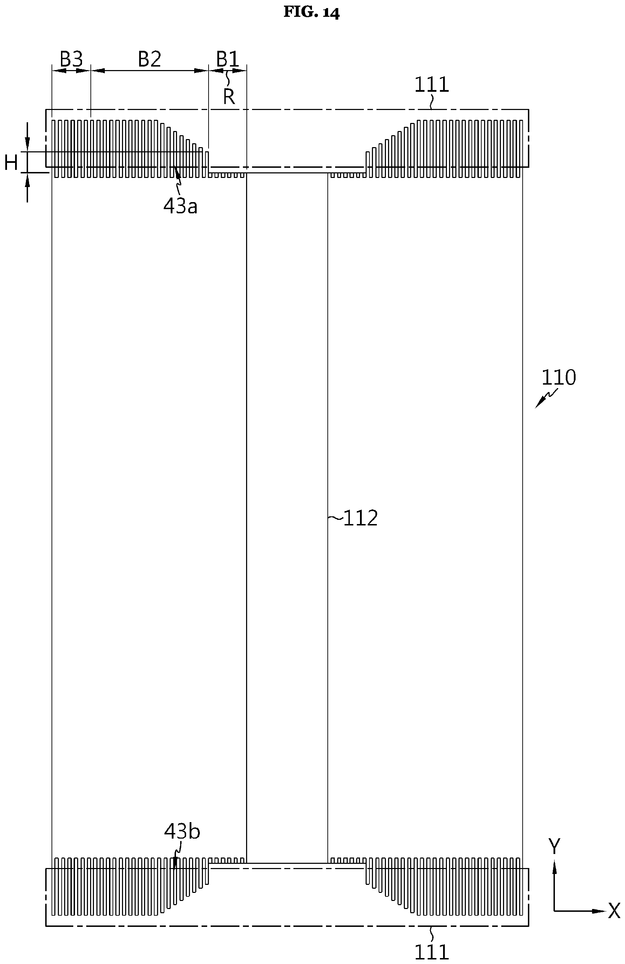

FIG. 14 is a sectional view showing an electrode assembly 110 according to an example that is outside the scope of the invention, taken along the Y-axis direction (winding axis direction).

Referring to FIG. 14, the electrode assembly 110 is substantially the same as the electrode assembly 100 of FIG. 13, except that the height of the second portion $B_3$ is substantially the same as the height of the outermost side of the third portion B2.

The second portion $B_3$ may include a plurality of segments. The configuration of the plurality of segments is substantially the same as described in the fourth and fifth examples (modifications) related to electrodes.

In the electrode assembly 110, the height of the first portion B1 is relatively smaller than the height of the third portion B2. Also, the bending length (H) of the uncoated portion located at the innermost side of the third portion B2 is equal to or smaller than the radial length (R) of the first portion B1. For example, the first portion B1 may be the segment skip region having no segment (① in FIG. 10a). In a modified example, the bending length (H) may be smaller than the sum of the radial length (R) of the first portion B1 and 10% of the radius of the core 102.

Therefore, even if the third portion B2 is bent, the core 112 of the electrode assembly 110 is opened to the outside by at least 90% or more of the diameter of the core 112. If the core 112 is not blocked, there is no difficulty in the electrolyte injection process and the electrolyte injection efficiency is improved. In addition, by inserting a welding jig through the core 112, the welding process may be easily performed between the current collector of the negative electrode (or, the positive electrode) and the battery housing (or, the terminal).

In one modification, the structure in which the height of the third portion B2 increases gradually or stepwise from the core toward the outer circumference may be extended to the second portion $B_3$. In this case, the height of the uncoated portion 43a may be increased gradually or stepwise from the boundary between the first portion B1 and the third portion B2 to the outermost surface of the electrode assembly 110.

The second uncoated portion 43b has the same structure as the first uncoated portion 43a. In one modification, the second uncoated portion 43b may have a conventional electrode structure or an electrode structure of other examples (modifications).

The ends 111 of the first uncoated portion 43a and the second uncoated portion 43b may be bent in the radial direction of the electrode assembly 110, for example from the outer circumference toward the core. At this time, the first portion B1 is not substantially bent.

When the third portion B2 and the second portion $B_3$ include a plurality of segments, the bending stress may be relieved to prevent the uncoated portions 43a, 43b near the bending point from being torn or abnormally deformed. In addition, when the width and/or height and/or separation pitch of the segment is adjusted according to the numerical range of the above example, the segments are bent toward the core and overlap in multiple layers to sufficiently secure the welding strength, and an empty hole (gap) is not formed in the bent surface region.

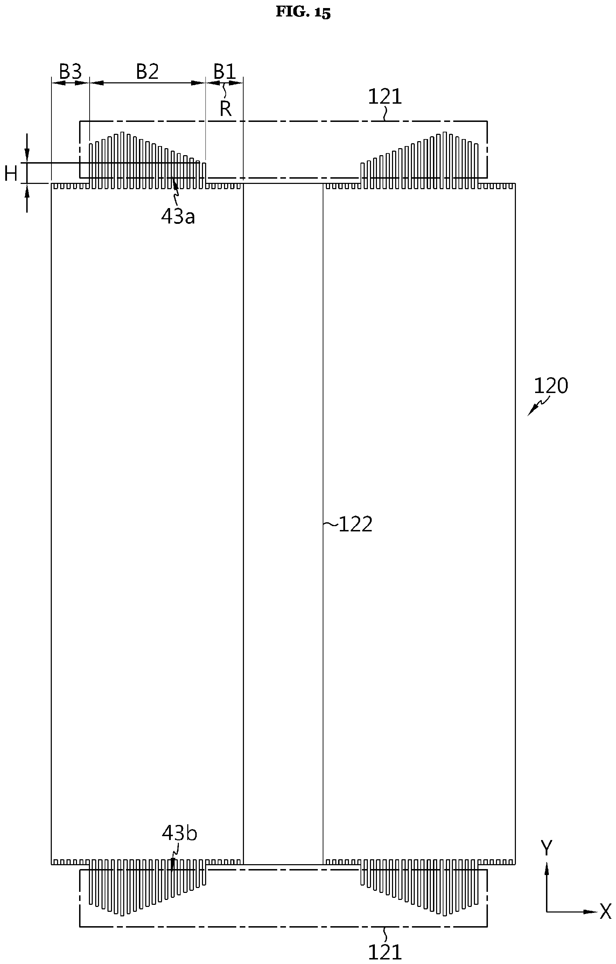

FIG. 15 is a sectional view showing an electrode assembly 120 according to still another example, taken along the Y-axis direction (winding axis direction).

Referring to FIG. 15, the electrode assembly 120 is substantially the same as the electrode assembly 100 of FIG. 13, except that the height of the third portion B2 has a pattern increasing and then decreasing gradually or stepwise. The radial region in which the height of the third portion B2 changes may be regarded as the height variable region (② in FIG. 10a) of the segment. Even in this case, the height variable region of the segment may be designed so that the overlapping layer number uniform region in which the number of overlapping layers of segments is 10 or more appears in the preferred numerical range described above in the bending surface region F formed by bending the third portion B2.

This change in height of the third portion B2 may be implemented by using the step pattern (see FIG. 6) or adjusting the height of segments (see FIG. 7a or 8a) included in the third portion B2.

In the electrode assembly 120, the height of the first portion B1 is relatively smaller than the height of the third portion B2. Also, the bending length (H) of the uncoated portion located at the innermost side of the third portion B2 is equal to or smaller than the radial length (R) of the first portion B1. The region corresponding to the first portion B1 corresponds to the segment skip region having no segment (① in FIG. 10a). In a modified example, the bending length (H) may be smaller than the sum of the radial length (R) of the first portion B1 and 10% of the radius of the core 102.

Therefore, even if the third portion B2 is bent toward the core, the core 122 of the electrode assembly 120 is opened to the outside by at least 90% or more of its diameter. If the core 122 is not blocked, there is no difficulty in the electrolyte injection process and the electrolyte injection efficiency is improved. In addition, by inserting a welding jig through the core 122, the welding process may be easily performed between the current collector of the negative electrode (or, the positive electrode) and the battery housing (or, the terminal).

Also, the height of the second portion $B_3$ is relatively smaller than the height of the third portion B2, and preferably no segment may be formed in the second portion $B_3$. Accordingly, it is possible to prevent that an internal short circuit occurs since the beading portion and the second portion $B_3$ contact each other while the beading portion of the battery housing is being pressed near the second portion $B_3$. In one modification, the height of the second portion $B_3$ may decrease gradually or stepwise toward the outer circumference.

The second uncoated portion 43b has the same structure as the first uncoated portion 43a. In a modification, the second uncoated portion 43b may have a conventional electrode structure or an electrode structure of other examples (modifications).

The ends 121 of the first uncoated portion 43a and the second uncoated portion 43b may be bent from the outer circumference of the electrode assembly 120 to the core. At this time, the first portion B1 and the second portion $B_3$ are not substantially bent.

When the third portion B2 includes a plurality of segments, the bending stress may be relieved to prevent the uncoated portions 43a, 43b from being torn or abnormally deformed. In addition, when the width and/or height and/or separation pitch of the segment is adjusted according to the numerical range of the above example, the segments are bent toward the core and overlap in multiple layers to sufficiently secure the welding strength, and an empty hole (gap) is not formed in the bent surface region.

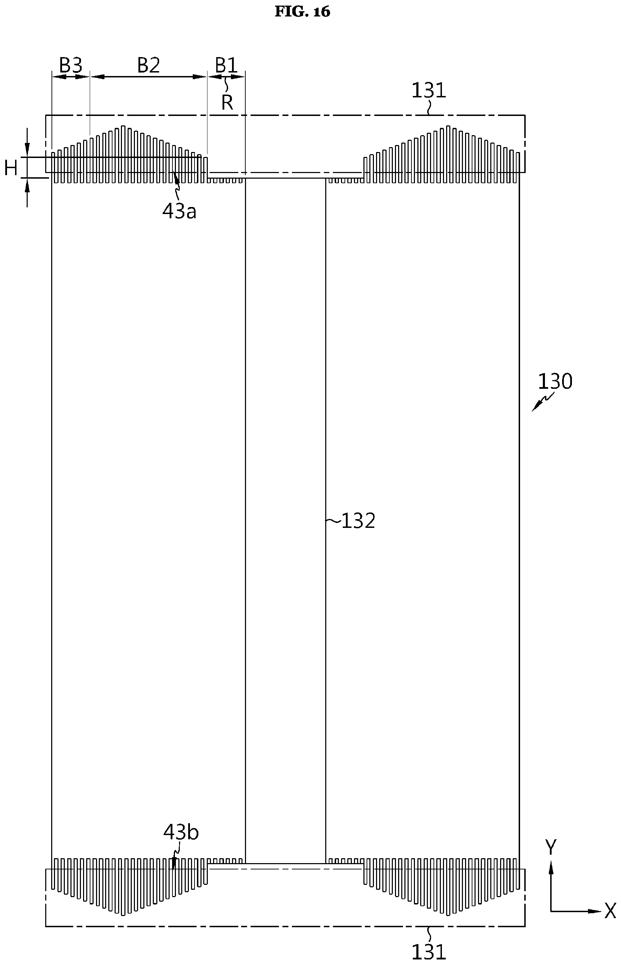

FIG. 16 is a sectional view showing an electrode assembly 130 according to still another example, taken along the Y-axis direction (winding axis direction).

Referring to FIG. 16, the electrode assembly 130 is substantially the same as the electrode assembly 120 of FIG. 15, except that the height of the second portion $B_3$ has a pattern that decreases gradually or stepwise from the boundary point of the second portion $B_3$ and the third portion B2 toward the outermost surface of the electrode assembly 130.

This change in the height of the second portion $B_3$ may be implemented by extending the step pattern (see Fig. 6) included in the third portion B2 to the second portion $B_3$ while simultaneously decreasing the height of the pattern toward the outer circumference gradually or stepwise. In addition, in another modification, the change in height of the second portion $B_3$ may be implemented by extending the segment structure of the third portion B2 to the second portion $B_3$ while simultaneously decreasing the height of the segments gradually or stepwise toward the outer circumference.

In the electrode assembly 130, the height of the first portion B1 is relatively smaller than the height of the third portion B2. Also, in the third portion B2, the bending length (H) of the innermost uncoated portion is equal to or smaller than the radial length (R) of the first portion B1. The first portion B1 corresponds to the segment skip region having no segment (① in FIG. 10a). In a modified example, the bending length (H) may be smaller than the sum of the radial length (R) of the first portion B1 and 10% of the radius of the core 102.

Accordingly, even if the third portion B2 is bent toward the core, the core 132 of the electrode assembly 130 is opened to the outside by at least 90% or more of its diameter. If the core 132 is not blocked, there is no difficulty in the electrolyte injection process and the electrolyte injection efficiency is improved. In addition, by inserting a welding jig through the core 132, the welding process may be easily performed between the current collector of the negative electrode (or, the positive electrode) and the battery housing (or, the terminal).

The second uncoated portion 43b has the same structure as the first uncoated portion 43a. In one modification, the second uncoated portion 43b may have a conventional electrode structure or an electrode structure of other examples (modifications).

The ends 131 of the first uncoated portion 43a and the second uncoated portion 43b may be bent from the outer circumference of the electrode assembly 130 to the core. At this time, the first portion B1 is not substantially bent.

When the third portion B2 and the second portion B3 include a plurality of segments, the bending stress may be relieved to prevent the uncoated portions 43a, 43b near the bending point from being torn or abnormally deformed. In addition, when the width and/or height and/or separation pitch of the segment is adjusted according to the numerical range of the above-described example, the segments are bent toward the core and overlap in multiple layers to sufficiently secure the welding strength, and an empty hole (gap) is not formed in the bent surface region.

Meanwhile, in the former examples (modified examples), the ends of the first uncoated portion 43a and the second uncoated portion 43b may be bent from the core toward the outer circumference. In this case, it is preferable that the second portion B3 is designed as the segment skip region having no segment (① in FIG. 10a) and is not bent toward the outer circumference. In addition, the width of the second portion B3 in the radial direction may be equal to or greater than the length at which the outermost uncoated portion (or segment) of the third portion B2 is bent. Only then, when the outermost uncoated portion (or segment) of the third portion B2 is bent toward the outer circumference, the end of the bent portion does not protrude toward the inner surface of the battery housing beyond the outer circumference of the electrode assembly. Also, the change pattern of the segment structure may be opposite to the former examples (modified examples). For example, the height of the segment may be increased stepwise or gradually from the core toward the outer circumference. That is, by arranging the segment skip region (① of FIG. 10a), the height variable region (② of FIG. 10a) of the segment, and the height uniform region (③ of FIG. 10a) of the segment from the outer circumference of the electrode assembly to the core in order, the overlapping layer number uniform region in which the number of overlapping layers of segments is 10 or more may appear in a desired numerical range in the bending surface region.

Various electrode assembly structures according to an examplee may be applied to a cylindrical battery.

For example, the cylindrical battery may be, for example, a cylindrical battery whose form factor ratio (defined as a value obtained by dividing the diameter of the cylindrical battery by height, namely a ratio of height (H)-to-diameter (Φ)) is greater than about 0.4. Here, the form factor means a value indicating the diameter and height of a cylindrical battery.

For example, the cylindrical battery may have a diameter of 40 mm to 50 mm and a height of 60 mm to 130 mm. The form factor of the cylindrical battery according to an example may be, for example, 46110, 4875, 48110, 4880, or 4680. In the numerical value representing the form factor, first two numbers indicate the diameter of the battery and remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collector to the bent surface region of the uncoated portion, it is necessary to sufficiently increase the number of overlapping layers of the uncoated portion on the bent surface region in order to sufficiently secure the welding strength and lower the resistance. This requirement may be achieved by the electrode and the electrode assembly according to the examples (modifications) of the present disclosure.

A battery according to an example may be a cylindrical battery having an approximately cylindrical shape, whose diameter is approximately 46 mm, height is approximately 110 mm, and form factor ratio is 0.418.

A battery according to another example may be a cylindrical battery having a substantially cylindrical shape, whose diameter is about 48 mm, height is about 75 mm, and form factor ratio is 0.640.

A battery according to still another example may be a cylindrical battery having an approximately cylindrical shape, whose diameter is approximately 48 mm, height is approximately 110 mm, and form factor ratio is 0.436.

A battery according to still another example may be a cylindrical battery having an approximately cylindrical shape, whose diameter is approximately 48 mm, height is approximately 80 mm, and form factor ratio is 0.600.

A battery according to still another example may be a cylindrical battery having an approximately cylindrical shape, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Hereinafter, the cylindrical battery according to an example will be described in detail.

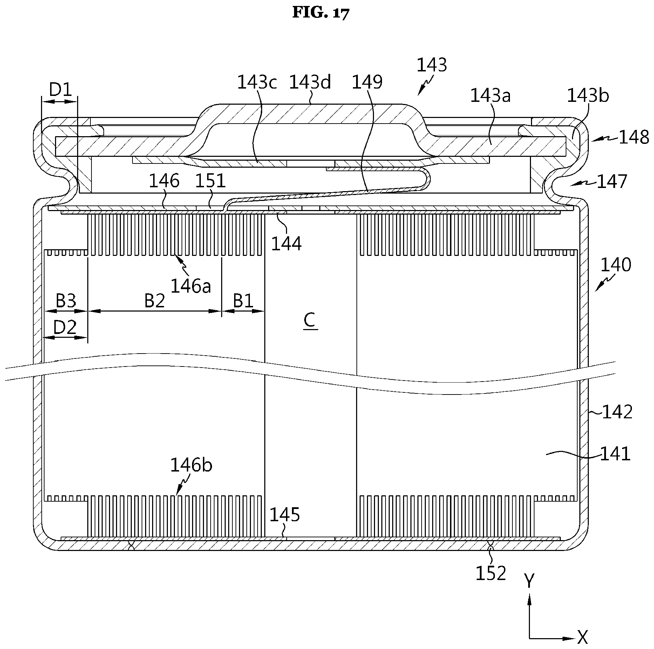

FIG. 17 is a sectional view showing a cylindrical battery 140 according to an example, taken along the Y-axis direction.

Referring to FIG. 17, the cylindrical battery 140 according to an example includes an electrode assembly 141 having a first electrode, a separator and a second electrode, a battery housing 142 for accommodating the electrode assembly 141, and a sealing body 143 for sealing an open end of the battery housing 142.

The battery housing 142 is a cylindrical container with an opening at the top. The battery housing 142 is made of a conductive metal material such as aluminum, steel or stainless steel. A nickel coating layer may be formed on the surface of the battery housing 142. The battery housing 142 accommodates the electrode assembly 141 in the inner space through the top opening and also accommodates the electrolyte.

The electrolyte may be a salt having a structure like $A^+B^-$. Here, $A^+$ includes an alkali metal cation such as $Li^+$, $Na^+$, or K+, or a combination thereof. and B- includes at least one anion selected from the group consisting of F-, Cl-, Br-, I-, $NO_3^-$, N $(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH-$, $(SF_5)_3C^-$, $(CF_3SO_2)_3C^-$, $CF_3$ $(CF_2)_7SO_3^-$, $CF_3CO_2^-$, $CH_3CO_2^-$, SCN- and $(CF_3CF_2SO_2)_2N^-$.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof.

The electrode assembly 141 may have a jelly-roll shape but the present invention is not limited thereto. The electrode assembly 141 may be manufactured by winding a laminate formed by sequentially laminating a lower separator, a first electrode, an upper separator, and a second electrode at least once, based on the winding axis of the core C, as shown in FIG. 2.

The first electrode and the second electrode have different polarities. That is, if one has positive polarity, the other has negative polarity. At least one of the first electrode and the second electrode may have an electrode structure according to the above examples (modifications). In addition, the other of the first electrode and the second electrode may have a conventional electrode structure or an electrode structure according to examples (modifications). The electrode pair included in the electrode assembly 141 is not limited to one pair, but two or more pairs may also be included.

A first uncoated portion 146a of the first electrode and a second uncoated portion 146b of the second electrode protrude from the upper and lower portions of the electrode assembly 141, respectively. The first electrode has the electrode structure of the first example (modification). Accordingly, in the first uncoated portion 146a, the height of the second portion B3 is smaller than the height of the uncoated portion of the other region. The second portion B3 is spaced apart from the inner circumference of the battery housing 142, particularly the beading portion 147, with a predetermined interval. Therefore, the second portion B3 of the first electrode does not come into contact with the battery housing 142 electrically connected to the second electrode, thereby preventing an internal short circuit of the battery 140.

The second uncoated portion 146b of the second electrode may have the same structure as the first uncoated portion 146a. In another modification, the second uncoated portion 146b may optionally have the structure of the uncoated portion of the electrode according to examples (modifications).

The sealing body 143 may include a cap 143a having a plate shape, a first gasket 143b for providing airtightness between the cap 143a and the battery housing 142 and having insulation property, and a connection plate 143c electrically and mechanically coupled to the cap 143a.

The cap 143a is a component made of a conductive metal material, and covers the top opening of the battery housing 142. The cap 143a is electrically connected to the uncoated portion 146a of the first electrode, and is electrically insulated from the battery housing 142 by means of the first gasket 143b. Accordingly, the cap 143a may function as a first electrode terminal (for example, the positive electrode) of the cylindrical battery 140.

The cap 143a is placed on the beading portion 147 formed on the battery housing 142, and is fixed by a crimping portion 148. Between the cap 143a and the crimping portion 148, the first gasket 143b may be interposed to secure the airtightness of the battery housing 142 and the electrical insulation between the battery housing 142 and the cap 143a. The cap 143a may have a protrusion 143d protruding upward from the center thereof.

The battery housing 142 is electrically connected to the second uncoated portion 146b of the second electrode.

Therefore, the battery housing 142 has the same polarity as the second electrode. If the second electrode has negative polarity, the battery housing 142 also has negative polarity.

The battery housing 142 includes the beading portion 147 and the crimping portion 148 at the top thereof. The beading portion 147 is formed by press-fitting the periphery of the outer circumference of the battery housing 142. The beading portion 147 prevents the electrode assembly 141 accommodated inside the battery housing 142 from escaping through the top opening of the battery housing 142, and may function as a support portion on which the sealing body 143 is placed.

The inner circumference of the beading portion 147 is spaced apart from the second portion B3 of the first electrode with a predetermined interval. More specifically, the lower end of the inner circumference of the beading portion 147 is spaced apart from the second portion B3 of the first electrode with a predetermined interval. In addition, since the second portion B3 has a low height, the second portion B3 is not substantially affected even when the battery housing 142 is press-fitted from the outside to form the beading portion 147. Accordingly, the second portion B3 is not compressed by other components such as the beading portion 147, and thus the shape of the electrode assembly 141 is prevented from being partially deformed, thereby preventing a short circuit inside the cylindrical battery 140.

For example, when the press-in depth of the beading portion 147 is defined as D1 and the radial length from the inner circumference of the battery housing 142 to the boundary point of the second portion B3 and the third portion B2 is defined as D2, the formula $D1 \leq D2$ may be satisfied. In this case, damage to the second portion B3 is substantially prevented when the battery housing 142 is press-fitted to form the beading portion 147.

The crimping portion 148 is formed on the beading portion 147. The crimping portion 148 has an extended and bent shape to cover the outer circumference of the cap 143a disposed on the beading portion 147 and a part of the upper surface of the cap 143a.

The cylindrical battery 140 may further include a first current collector 144 and/or a second current collector 145 and/or an insulator 146.

The first current collector 144 is coupled to the upper portion of the electrode assembly 141. The first current collector 144 is made of a conductive metal material such as aluminum, copper, steel and nickel, and is electrically connected to the uncoated portion 146a of the first electrode. The electric connection may be performed by welding. A lead 149 may be connected to the first current collector 144. The lead 149 may extend upward above the electrode assembly 141 and be coupled to the connection plate 143c or directly coupled to the lower surface of the cap 143a. The lead 149 may be connected to other components by welding.

For example, the first current collector 144 may be integrally formed with the lead 149. In this case, the lead 149 may have an elongated plate shape extending outward from the vicinity of the center of the first current collector 144.

The first current collector 144 may include a plurality of unevenness (not shown) radially formed on a lower surface thereof. When the radial unevenness is provided, the unevenness may be press-fitted into the first uncoated portion 146a of the first electrode by pressing the first current collector 144.

The first current collector 144 is coupled to the end of the first uncoated portion 146a. The first uncoated portion 146a and the first current collector 144 may be coupled, for example, by laser welding. Laser welding may be performed in a manner that partially melts a base material of the current collector 144. In a modification, the first current collector 144 and the first uncoated portion 146a may be welded in a state where a solder is interposed therebetween. In this case, the solder may have a lower melting point compared to the first current collector 144 and the first uncoated portion 146a. Laser welding may be replaced by resistance welding, ultrasonic welding, spot welding, or the like.

The second current collector 145 may be coupled to the lower surface of the electrode assembly 141. One side of the second current collector 145 may be coupled to the second uncoated portion 146b by welding, and the other side may be coupled to the inner bottom surface of the battery housing 142 by welding. The coupling structure between the second current collector 145 and the second uncoated portion 146b may be substantially the same as the coupling structure between the first current collector 144 and the first uncoated portion 146a.

The uncoated portions 146a, 146b are not limited to the illustrated structure. Accordingly, the uncoated portions 146a, 146b may selectively adopt not only a conventional uncoated portion structure but also the uncoated portion structure of the electrode according to examples (modifications).

The insulator 146 may cover the first current collector 144. The insulator 146 may cover the first current collector 144 at the upper surface of the first current collector 144, thereby preventing direct contact between the first current collector 144 and the inner circumference of the battery housing 142.

The insulator 146 has a lead hole 151 so that the lead 149 extending upward from the first current collector 144 may be withdrawn therethrough. The lead 149 is drawn upward through the lead hole 151 and coupled to the lower surface of the connection plate 143c or the lower surface of the cap 143a.

A peripheral region of the edge of the insulator 146 may be interposed between the first current collector 144 and the beading portion 147 to fix the coupled body of the electrode assembly 141 and the first current collector 144. Accordingly, in the coupled body of the electrode assembly 141 and the first current collector 144, the movement of the battery 140 in the winding axis direction Y may be restricted, thereby improving the assembly stability of the battery 140.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 140 and the internal pressure increases to a predetermined level or more, the venting portion 152 may be ruptured so that the gas generated inside the battery housing 142 is discharged to the outside. The internal pressure at which the venting portion 152 ruptures may be approximately 15 kgf/cm$^2$ to 35 kgf/cm$^2$.

The venting portion 152 may be formed continuously or discontinuously while drawing a circle at the lower surface of the battery housing 142. In a modification, the venting portion 152 may be formed in a straight pattern or other patterns.

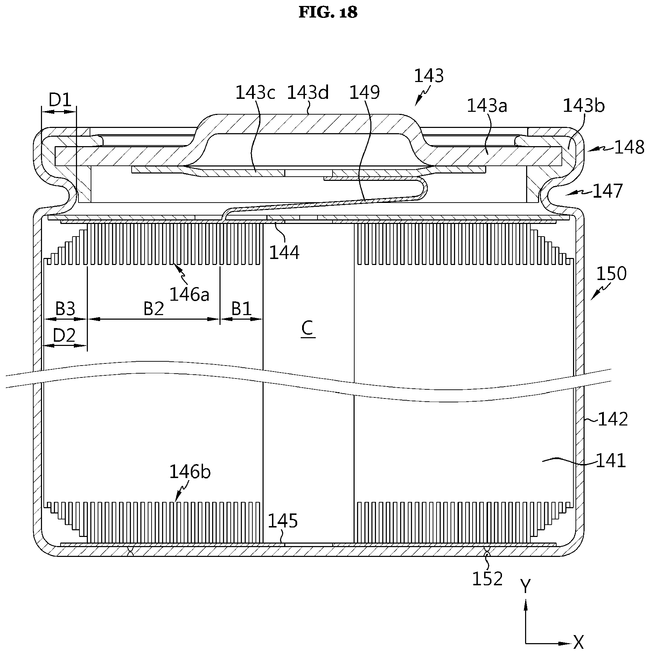

FIG. 18 is a sectional view showing a cylindrical battery 150 according to another example, taken along the Y-axis direction.

Referring to FIG. 18, the cylindrical battery 150 is substantially the same as the cylindrical battery 140 of FIG. 17, except that the electrode structure of the second example (modification) is employed in the first uncoated portion 146a of the first electrode.

Referring to FIG. 18, the first uncoated portion 146a of the first electrode may have a shape in which the height of the second portion B3 is decreased gradually or stepwise toward the inner circumference of the battery housing 142. For example, the virtual line connecting the top end of the second portion B3 may have the same or similar shape as the inner circumference of the beading portion 147.

The second portion B3 forms an inclined surface. Accordingly, when the battery housing 142 is press-fitted to form the beading portion 147, it is possible to prevent the second portion B3 from being compressed and damaged by the beading portion 147. In addition, it is possible to suppress the phenomenon that the second portion B3 comes into contact with the battery housing 142 having a different polarity to cause an internal short circuit.

The remaining components of the cylindrical battery 150 are substantially the same as the example (modification) described above.

The uncoated portions 146a, 146b are not limited to the illustrated structure. Accordingly, the uncoated portions 146a, 146b may selectively have not only a conventional uncoated portion structure but also the uncoated portion structure of the electrode according to examples (modifications).

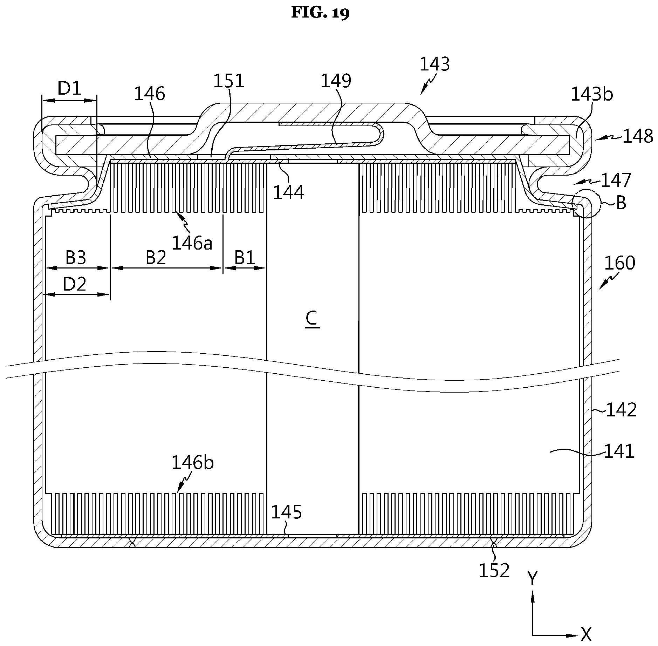

FIG. 19 is a sectional view showing a cylindrical battery 160 according to still another example, taken along the Y-axis direction.

Referring to FIG. 19, the cylindrical battery 160 is substantially the same as the cylindrical batteries 140, 150 described above, except that the lead 149 connected to the first current collector 144 is directly connected to the cap 143a of the sealing body 143 through the lead hole 151 of the insulator 146, and the insulator 146 and the first current collector 144 have a structure in close contact with the lower surface of the cap 143a.

In the cylindrical battery 160, the diameter of the first current collector 144 and the outermost diameter of the third portion B2 are smaller than the minimum inner diameter of the battery housing 142. Also, the diameter of the first current collector 144 may be equal to or greater than the outermost diameter of the third portion B2.

Specifically, the minimum inner diameter of the battery housing 142 may correspond to the inner diameter of the battery housing 142 at a position where the beading portion 147 is formed. At this time, the outermost diameter of the first current collector 144 and the third portion B2 is smaller than the inner diameter of the battery housing 142 at the position where the beading portion 147 is formed. Also, the diameter of the first current collector 144 may be equal to or greater than the outermost diameter of the third portion B2. The peripheral region of the edge of the insulator 146 may be interposed between the second portion B3 and the beading portion 147 in a state of being bent downward to fix the coupled body of the electrode assembly 141 and the first current collector 144.

For example, the insulator 146 may include a portion covering the second portion B3 and a portion covering the first current collector 144, and a portion connecting these two portions may have a form curved together in response to the curved shape of the beading portion 147. The insulator 146 may insulate the second portion B3 and the inner circumference of the beading portion 147 and at the same time insulate the first current collector 144 and the inner circumference of the beading portion 147.

The first current collector 144 may be positioned higher than the lower end of the beading portion 147, and may be coupled to the first portion B1 and the third portion B2. At this time, the press-in depth D1 of the beading portion 147 is less than or equal to the distance D2 from the inner circumference of the battery housing 142 to the boundary between the second portion B3 and the third portion B2. Accordingly, the first portion B1, the third portion B2, and the first current collector 144 coupled thereto may be positioned higher than the lower end of the beading portion 147. The lower end of the beading portion 147 means a bending point (B) between the portion of the battery housing 142 in which the electrode assembly 141 is accommodated and the beading portion 147.

Since the first portion B1 and the third portion B2 occupy the inner space of the beading portion 147 in the radial direction, an empty space between the electrode assembly 141 and the cap 143a may be minimized. In addition, the connection plate 143c located in the empty space between the electrode assembly 141 and the cap 143a is omitted. Accordingly, the lead 149 of the first current collector 144 may be directly coupled to the lower surface of the cap 143a. According to the above structure, an empty space in the battery may be reduced, and the energy density may be maximized as much as the reduced empty space.

In the cylindrical battery 160, the first current collector 144 and the second current collector 145 may be welded to the ends of the first and second uncoated portions 146a, 146b, respectively, in the same manner as in the above example.

The uncoated portions 146a, 146b are not limited to the illustrated structure. Accordingly, the uncoated portions 146a, 146b may selectively have not only a conventional uncoated portion structure but also the uncoated portion structure of the electrode according to examples (modifications).

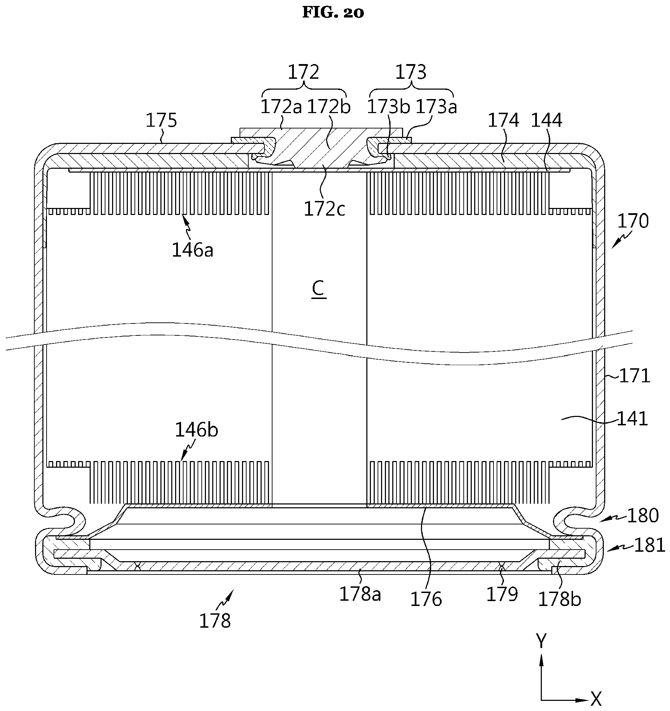

FIG. 20 is a sectional view showing a cylindrical battery 170 according to still another example, taken along the Y-axis.

Referring to FIG. 20, the structure of the electrode assembly of the cylindrical battery 170 is substantially the same as that of the cylindrical battery 140 of in FIG. 17, and the other structure except for the electrode assembly is changed.

Specifically, the cylindrical battery 170 includes a battery housing 171 through which a terminal 172 is installed. The terminal 172 is installed through a perforation hole formed in the closed surface (the upper surface in the drawing) of the battery housing 171. The terminal 172 is riveted to the perforation hole of the battery housing 171 in a state where a second gasket 173 made of an insulating material is interposed therebetween. The terminal 172 is exposed to the outside in a direction opposite to the direction of gravity.

The terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed surface of the battery housing 171. The maximum diameter of the terminal exposing portion 172a may be larger than the maximum diameter of the perforation hole formed in the battery housing 171. The terminal insert portion 172b may be electrically connected to the uncoated portion 146a of the first electrode through approximately the central portion of the closed surface of the battery housing 171. The bottom edge of the terminal insert portion 172b may be riveted onto the inner surface of the battery housing 171. That is, the bottom edge of the terminal insert portion 172b may have a shape curved toward the inner surface of the battery housing 171. A flat portion 172c is included inside the bottom edge of the terminal insert portion 172b. The maximum diameter of the riveted lower portion of the terminal insert portion 172b may be larger than the maximum diameter of the perforation hole of the battery housing 171.

The flat portion 172c of the terminal insert portion 172b may be welded to the center of the first current collector 144 connected to the first uncoated portion 146a of the first electrode. As the welding method, laser welding is preferred, but other welding methods such as ultrasonic welding may be used.

An insulator 174 made of an insulating material may be interposed between the first current collector 144 and the inner surface of the battery housing 171. The insulator 174 covers the upper portion of the first current collector 144 and the top edge of the electrode assembly 141. Accordingly, it is possible to prevent the second portion B3 of the electrode assembly 141 from contacting the inner surface of the battery housing 171 having a different polarity to cause a short circuit.

The thickness of the insulator 174 corresponds to or is slightly larger than the distance between the upper surface of the first current collector 144 and the inner surface of the closed portion of the battery housing 171. Accordingly, the insulator 174 may be in contact with the upper surface of the first current collector 144 and the inner surface of the closed portion of the battery housing 171.

The terminal insert portion 172b of the terminal 172 may be welded to the first current collector 144 through the perforation hole of the insulator 174. The diameter of the perforation hole formed in the insulator 174 may be larger than the diameter of the riveting portion at the lower end of the terminal insert portion 172b. For example, the perforation hole may expose the lower portion of the terminal insert portion 172b and the second gasket 173.

The second gasket 173 is interposed between the battery housing 171 and the terminal 172 to prevent the battery housing 171 and the terminal 172 having opposite polarities from electrically contacting each other. Accordingly, the upper surface of the battery housing 171 having an approximately flat shape may function as a second electrode terminal (for example, the negative electrode) of the cylindrical battery 170.

The second gasket 173 includes a gasket exposing portion 173a and a gasket insert portion 173b. The gasket exposing portion 173a is interposed between the terminal exposing portion 172a of the terminal 172 and the battery housing 171. The gasket insert portion 173b is interposed between the terminal insert portion 172b of the terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation.

The gasket exposing portion 173a of the second gasket 173 may have an extended shape to cover the outer circumference of the terminal exposing portion 172a of the terminal 172. When the second gasket 173 covers the outer circumference of the terminal 172, it is possible to prevent a short circuit from occurring while an electrical connection part such as a bus bar is coupled to the upper surface of the battery housing 171 and/or the terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the terminal 172 by thermal fusion. In this case, airtightness at the coupling interface between the second gasket 173 and the terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the terminal 172 may be integrally coupled with the second gasket 173 by insert injection molding.

In the upper surface of the battery housing 171, a remaining area 175 other than the area occupied by the terminal 172 and the second gasket 173 corresponds to the second electrode terminal having a polarity opposite to that of the terminal 172.

The second current collector 176 is coupled to the lower portion of the electrode assembly 141. The second current collector 176 is made of a conductive metal material such as aluminum, steel, copper or nickel, and is electrically connected to the second uncoated portion 146b of the second electrode.

For example, the second current collector 176 is electrically connected to the battery housing 171. To this end, at least a portion of the edge of the second current collector 176 may be interposed and fixed between the inner surface of the battery housing 171 and a first gasket 178b. In one example, at least a portion of the edge of the second current collector 176 may be fixed to the beading portion 180 by welding in a state of being supported on the bottom surface of the beading portion 180 formed at the bottom of the battery housing 171. In a modification, at least a portion of the edge of the second current collector 176 may be directly welded to the inner wall surface of the battery housing 171.

The second current collector 176 may include a plurality of unevenness (not shown) radially formed on a surface facing the second uncoated portion 146b. When the unevenness is formed, the unevenness may be press-fitted into the second uncoated portion 146b by pressing the second current collector 176.

For example, the second current collector 176 and the ends of the second uncoated portion 146b may be coupled by welding, for example, laser welding. In addition, the welding portions of the second current collector 176 and the second uncoated portion 146b may be spaced apart by a predetermined distance toward the core C based on the inner circumference of the beading portion 180.

A sealing body 178 for sealing the lower open end of the battery housing 171 includes a cap 178a having a plate shape and a first gasket 178b. The first gasket 178b electrically separates the cap 178a and the battery housing 171. A crimping portion 181 fixes the edge of the cap 178a and the first gasket 178b together. The cap 178a has a venting portion 179. The configuration of the venting portion 179 is substantially the same as the above example (modification). The lower surface of the cap 178a may be located higher than the lower end of the crimping portion 181. In this case, a space is formed below the cap 178a, thereby securing smooth venting. This is particularly useful when the cylindrical battery 170 is installed so that the crimping portion 181 faces the direction of gravity.

For example, the cap 178a is made of a conductive metal material. However, since the first gasket 178b is interposed between the cap 178a and the battery housing 171, the cap 178a does not have electrical polarity. The sealing body 178 mainly seals the open end of the lower portion of the battery housing 171 and functions to discharge gas when the internal pressure of the battery 170 increases over a critical value. The critical value of the internal pressure is 15 kgf/cm$^2$ to 35 kgf/cm$^2$.

For example, the terminal 172 electrically connected to the first uncoated portion 146a of the first electrode is used as the first electrode terminal. In addition, in the upper surface of the battery housing 171 electrically connected to the second uncoated portion 146b of the second electrode through the second current collector 176, a part 175 except for the terminal 172 is used as the second electrode terminal having a different polarity from the first electrode terminal. If two electrode terminals are located at the upper portion of the cylindrical battery 170 as above, it is possible to arrange electrical connection components such as bus bars at only one side of the cylindrical battery 170. This may bring about simplification of the battery pack structure and improvement of energy density. In addition, since the part 175 used as the second electrode terminal has an approximately flat shape, a sufficient connecting area may be secured for connecting electrical connection components such as bus bars. Accordingly, the cylindrical battery 170 may reduce the resistance at the connection portion of the electrical connection components to a desirable level.

Meanwhile, the structure of the uncoated portion and the structure of the electrode assembly 141 are not limited to those shown in the drawings, and may be replaced with the structures of the above examples (modifications).

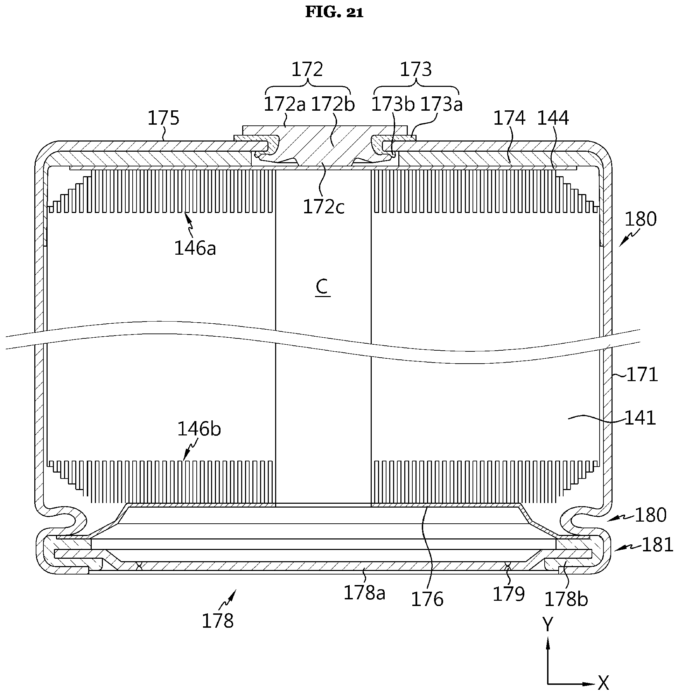

FIG. 21 is a sectional view showing a cylindrical battery 180 according to still another example, taken along the Y-axis.

Referring to FIG. 21, the structure of the electrode assembly 141 of the cylindrical battery 180 is substantially the same as that of the cylindrical battery 150 illustrated in FIG. 18, and the components other than the electrode assembly 141 are substantially the same as the cylindrical battery 170 shown in FIG. 20.

Accordingly, the configuration of the example (modification) with respect to the cylindrical batteries 150, 170 may be equally applied to the cylindrical battery 180.

In addition, the structure of the electrode assembly 141 and the structure of the uncoated portion are not limited to those shown in the drawing, and may be replaced with the structures of the above examples (modifications).

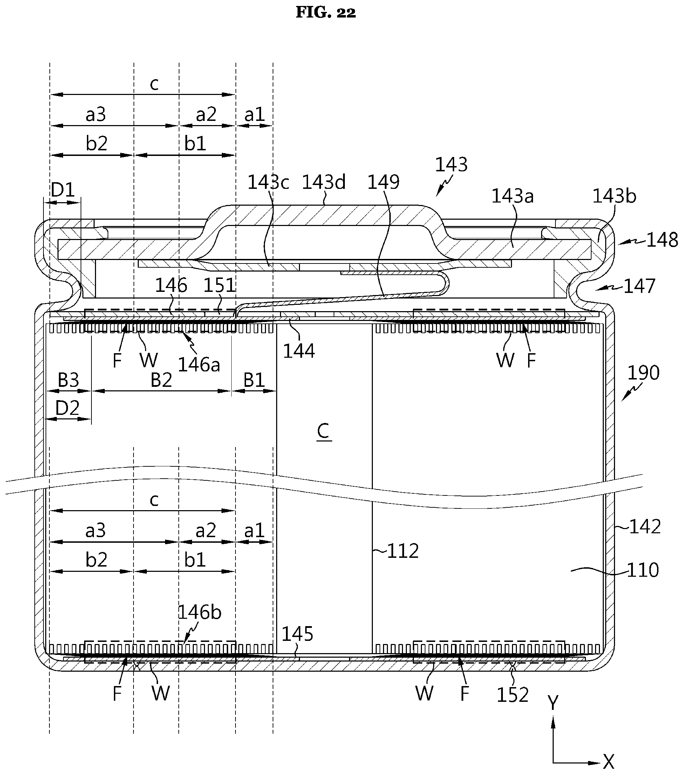

FIG. 22 is a sectional view showing a cylindrical battery 190 according to still another example, taken along the Y-axis.

Referring to FIG. 22, the cylindrical battery 190 includes the electrode assembly 110 illustrated in FIG. 14, and the components other than the electrode assembly 110 are substantially the same as the cylindrical battery 140 illustrated in FIG. 17. Accordingly, the configuration described with reference to FIGS. 14 and 17 may be applied substantially in the same manner to this example.

Referring to FIGS. 10a and 22, the first and second uncoated portions 146a, 146b of the electrode assembly 110 are bent in the radial direction of the electrode assembly 110, for example from the outer circumference to the core to form a bending surface region F.

The first portion B1 has a lower height than the other portions and corresponds to the segment skip region a1 having no segment, so it is not bent toward the core.

For example, the bending surface region F may include a segment skip region a1, a height variable region a2 of the segment, and a height uniform region a3 of the segment from the core toward the outer circumference.

As shown in FIGS. 10c, 10d and 10e, the bending surface region F includes an overlapping layer number uniform region b1 adjacent to the segment skip region a1, in which the number of overlapping layers of segments is 10 or more.

The bending surface region F may also include an overlapping layer number decreasing region b2 adjacent to the outer circumference of the electrode assembly 110, in which the number of overlapping layers of segments gradually decreases toward the outer circumference. For example, the overlapping layer number uniform region b1 may be set as the welding target region.

In the bending surface region F, the preferable numerical ranges of the ratio (a2/c) which is a ratio of the height variable region a2 to the radius region c including segments, the ratio (b1/c) of the overlapping layer number uniform region b1 to the radius region c including segments, and the ratio of the area of the overlapping layer number uniform region b1 to the area of the bending surface region F are already described above, and thus will not be described again.

The first current collector 144 may be laser-welded to the bending surface region F of the first uncoated portion 146a, and the second current collector 145 may be laser-welded to the bending surface region F of the second uncoated portion 146b. The welding method may be replaced by ultrasonic welding, resistance welding, spot welding, or the like.

For example, 50% or more of the welding region W of the first current collector 144 and the second current collector 145 may overlap with the overlapping layer number uniform region b1 of the bending surface region F. Optionally, the remaining region of the welding region W may overlap with the overlapping layer number decreasing region b2 of the bending surface region F. In terms of high welding strength, low resistance of the welding interface, and prevention of damage to the separator or the active material layer, it is more preferable that the entire welding region W overlaps with the overlapping layer number uniform region b1.

For example, in the overlapping layer number uniform region b1 overlapping with the welding region W and, optionally, the overlapping layer number decreasing region b2, the number of overlapping layers of segments may be 10 to 35.

Optionally, when the number of overlapping layers of segments in the overlapping layer number decreasing region b2 overlapping with the welding region W is less than 10, the laser power for welding the overlapping layer number decreasing region b2 may be lowered below that of the overlapping layer number uniform region b1. That is, when the welding region W overlaps with the overlapping layer number uniform region b1 and the overlapping layer number decreasing region b2 at the same time, the laser power may be varied according to the number of overlapping layers of segments. In this case, the welding strength of the overlapping layer number uniform region b1 may be greater than the welding strength of the overlapping layer number decreasing region b2.

In the bending surface region F formed at the upper and lower portions of the electrode assembly 110, the radial length of the segment skip region a1 and/or the height variable region a2 of the segment and/or the height uniform region a3 of the segment may be the same or different from each other.

In the electrode assembly 110, the height of the first portion B1 is relatively smaller than that of the other portions. Also, as shown in FIG. 14, the bending length (H) of the uncoated portion located at the innermost side of the third portion B2 is smaller than a value obtained by adding the radial length (R) of the first portion B1 and 10% of the radius of the core 112.

Accordingly, even when the first uncoated portion 146a is bent toward the core, the core 112 of the electrode assembly 110 may be opened to the outside by at least 90% or more of its diameter. If the core 112 is not blocked, there is no difficulty in the electrolyte injection process and the electrolyte injection efficiency is improved. In addition, by inserting a welding jig through the core 112, the welding process between the second current collector 145 and the battery housing 142 may be easily performed.

When the uncoated portions 146a, 146b have a segment structure, if the width and/or height and/or separation pitch of the segments are adjusted to satisfy the numerical ranges of the above example, the segments are overlapped in multiple layers to sufficiently secure welding strength when the segments are bent, and an empty space (gap) is not formed in the bent surface region F.

For example, the first current collector 144 and the second current collector 145 may have an outer diameter covering the ends of the segments 61, 61' (see FIG. 10f) bent in the last winding turn of the height uniform region a3 of the first electrode and the second electrode. In this case, welding may be performed in a state where the segments forming the bending surface region F are uniformly pressed by the current collector, and the tightly stacked state of the segments may be maintained well even after welding. The tightly stacked state means a state in which there are substantially no gaps between the segments as shown in FIG. 10a. The tightly stacked state contributes to lowering the resistance of the cylindrical battery 190 to a level suitable for rapid charging (e.g., 4 milliohms) or below. The resistance may be at least 0.5 m$\Omega$, or at least 1.0 m$\Omega$, and/or 3.8 m$\Omega$, or less, 3.5 m$\Omega$, or less, or 3 m$\Omega$, or less.

The structures of the uncoated portions 146a, 146b may be changed to the structures according to the above examples (modifications). In addition, a conventional uncoated portion structure may be applied to any one of the uncoated portions 146a, 146b without limitation.

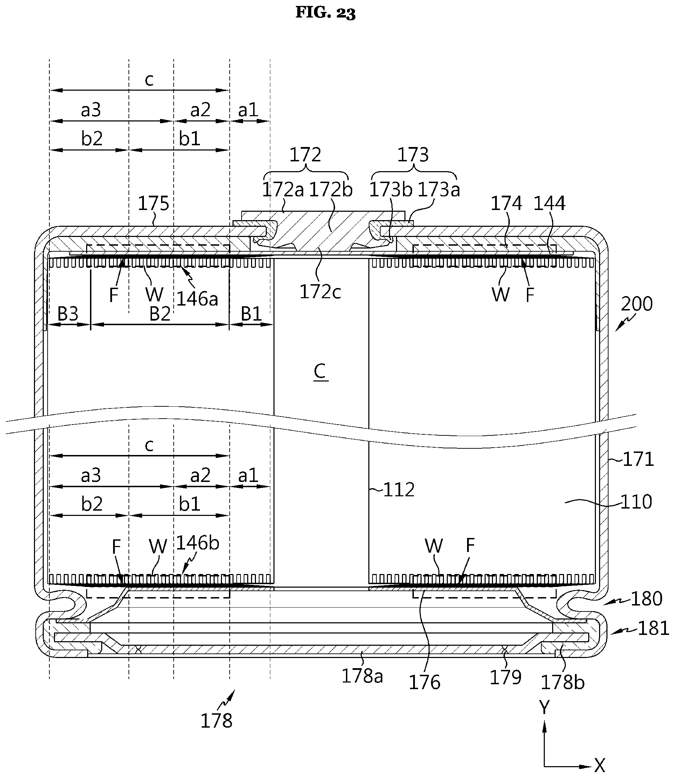

FIG. 23 is a sectional view showing a cylindrical battery 200 according to still another example, taken along the Y-axis.

Referring to FIG. 23, the cylindrical battery 200 includes the electrode assembly 110 illustrated in FIG. 14, and the components other than the electrode assembly 110 are substantially the same as those of the cylindrical battery 180 illustrated in FIG. 21. Accordingly, the configuration described with reference to FIGS. 14 and 21 may be applied substantially in the same manner to this example.

Referring to FIGS. 10a and 23, the first and second uncoated portions 146a, 146b of the electrode assembly 110 are bent in the radial direction of the electrode assembly 110, for example from the outer circumference toward the core, to form a bending surface region F.

The first portion B1 has a lower height than the other portions and corresponds to the segment skip region a1 having to segment, so it is not bent toward the core.

For example, the bending surface region F may include a segment skip region a1, a height variable region a2 of the segment, and a height uniform region a3 of the segment from the core toward the outer circumference.

As shown in FIGS. 10c, 10d and 10e, the bending surface region F includes an overlapping layer number uniform region b1 adjacent to the segment skip region a1, in which the number of overlapping layers of segments is 10 or more.

The bending surface region F may also include an overlapping layer number decreasing region b2 adjacent to the outer circumference of the electrode assembly 110, in which the number of overlapping layers of segments decreases toward the outer circumference. For example, the overlapping layer number uniform region b1 may be set as the welding target region.

In the bending surface region F, the preferable numerical ranges of the ratio (a2/c) which is a ratio of the height variable region a2 to a radius region c including segments, the ratio (b1/c) of the overlapping layer number uniform region b1 to the radius region c including segments, and the ratio of the area of the overlapping layer number uniform region b1 to the area of the bending surface region F are already described above, and thus will not be described again.

The first current collector 144 may be laser-welded to the bending surface region F of the first uncoated portion 146a, and the second current collector 176 may be laser-welded to the bending surface region F of the second uncoated portion 146b. The welding method may be replaced by ultrasonic welding, resistance welding, spot welding, or the like. The welding region W of the second current collector 176 and the second uncoated portion 146b may be spaced apart from the inner surface of the beading portion 180 by a predetermined distance.

For example, 50% or more of the welding region W of the first current collector 144 and the second current collector 176 may overlap with the overlapping layer number uniform region b1 of the bending surface region F. Optionally, the remaining region of the welding region W may overlap with the overlapping layer number decreasing region b2 of the bending surface region F. In terms of high welding strength, low resistance of the welding interface, and prevention of damage to the separator or the active material layer, it is more preferable that the entire welding region W overlaps with the overlapping layer number uniform region b1.

For example, in the overlapping layer number uniform region b1 overlapping with the welding region W and, optionally, the overlapping layer number decreasing region b2, the number of overlapping layers of segments may be 10 to 35.

Optionally, when the number of overlapping layers of segments in the overlapping layer number decreasing region b2 overlapping with the welding region W is less than 10, the laser power for welding the overlapping layer number decreasing region b2 may be lowered below that of the overlapping layer number uniform region b1. That is, when the welding region W overlaps with the overlapping layer number uniform region b1 and the overlapping layer number decreasing region b2 at the same time, the laser power may be varied according to the number of overlapping layers of segments. In this case, the welding strength of the overlapping layer number uniform region b1 may be greater than the welding strength of the overlapping layer number decreasing region b2.

In the bending surface region F formed at the upper and lower portions of the electrode assembly 110, the radial length of the segment skip region a1 and/or the height variable region a2 of the segment and/or the height uniform region a3 of the segment may be the same or different from each other.

In the electrode assembly 110, the height of the first portion B1 is relatively smaller than that of the other portions. Also, as shown in FIG. 14, the bending length (H) of the uncoated portion located at the innermost side of the third portion B2 is smaller than a value obtained by adding the radial length (R) of the first portion B1 and 10% of the radius of the core 112.

Therefore, even when the uncoated portion 146a is bent toward the core, the core 112 of the electrode assembly 110 may be opened to the outside by at least 90% or more of its diameter. If the core 112 is not blocked, there is no difficulty in the electrolyte injection process and the electrolyte injection efficiency is improved. In addition, by inserting a welding jig through the core 112, the welding process between the first current collector 144 and the terminal 172 may be easily performed.

When the first and second uncoated portions 146a, 146b have a segment structure, if the width and/or height and/or separation pitch of the segments are adjusted to satisfy the numerical ranges of the above example, the segments may be overlapped in multiple layers to sufficiently secure welding strength when the segments are bent, and an empty space (gap) is not formed in the bent surface region F.

For example, in the first current collector 144 and the second current collector 176, the regions contacting the first and second uncoated portions 146a, 146 may have an outer diameter covering the ends of the segments 61, 61' (see FIG. 10f) bent in the last winding turn of the height uniform region a3 of the first electrode and the second electrode. In this case, welding may be performed in a state where the segments forming the bending surface region F are uniformly pressed by the current collector, and the tightly stacked state of the segments may be maintained well even after welding. The tightly stacked state means a state in which there are substantially no gaps between the segments as shown in FIG. 10a. The tightly stacked state contributes to lowering the resistance of the cylindrical battery 190 to a level suitable for rapid charging (e.g., 4 milliohms) or below. The resistance may be at least 0.5 mΩ, or at least 1.0 mΩ, and/or 3.8 mΩ, or less, 3.5 mΩ, or less, or 3 mΩ or less.

The structures of the uncoated portions 146a, 146b may be changed to the structures according to the above examples (modifications). In addition, a conventional uncoated portion structure may be applied to any one of the uncoated portions 146a, 146b without limitation.

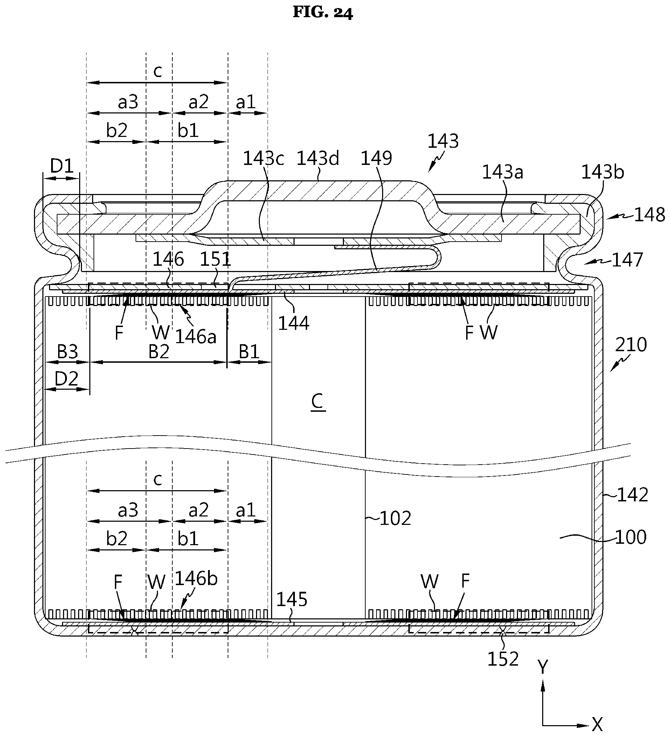

FIG. 24 is a cross-sectional view showing a cylindrical battery 210 according to still another example, taken along the Y-axis.

Referring to FIG. 24, the cylindrical battery 210 includes the electrode assembly 100 illustrated in FIG. 13, and the configuration other than the electrode assembly 100 is substantially the same as the cylindrical battery 140 illustrated in FIG. 17. Therefore, the configuration described with reference to FIGS. 13 and 17 may be applied substantially identically in this example.

For example, the first and second uncoated portions 146a, 146b of the electrode assembly too are divided into a plurality of segments, and the plurality of segments are bent in a radial direction of the electrode assembly 100, for example from the outer circumference toward the core. At this time, the first portion B1 and the second portion B3 of the first uncoated portion 146a have a lower height than the other portions and have no segment, and thus they are not substantially bent. This is the same for the second uncoated portion 146b.

Also in this example, the bending surface region F may include a segment skip region a1, a height variable region a2 of the segment, and a height uniform region a3 of the segment from the core toward the outer circumference. However, since the second portion B3 is not bent, the radial length of the bending surface region F may be shorter than that of the former example.

As shown in FIGS. 10c, 10d and 10e, the bending surface region F includes an overlapping layer number uniform region b1 adjacent to the segment skip region a1, in which the number of overlapping layers of segments is 10 or more.

The bending surface region F may also include an overlapping layer number decreasing region b2 adjacent to the second portion B3 of the electrode assembly 110, in which the number of overlapping layers of segments gradually decreases toward the outer circumference. For example, the overlapping layer number uniform region b1 may be set as the welding target region.

In the bending surface region F, the preferable numerical ranges of the ratio (a2/c) which is a ratio of the height variable region a2 to a radius region (c) including segments, the ratio (b1/c) of the overlapping layer number uniform region b1 to the radius region including segments (c), and the ratio of the area of the overlapping layer number uniform region b1 to the area of the bending surface region F are already described above, and thus will not be described again.

The first current collector 144 may be welded to the bending surface region F of the first uncoated portion 146a, and the second current collector 145 may be welded to the bending surface region F of the second uncoated portion 146b.

The overlapping relationship of the overlapping layer number uniform region b1 and the overlapping layer number decreasing region b2 with the welding region W, the outer diameter of the first current collector 144 and the second current collector 145, the configuration in which the first portion B1 does not close the core by at least 10% or more of its diameter, and the like are substantially the same as described above.

Meanwhile, the second portion B3 has no segment and has a height lower than that of the third portion B2. Accordingly, when the first uncoated portion 146a is bent, the second portion B3 is not substantially bent. In addition, since the second portion B3 is sufficiently spaced apart from the beading portion 147, it is possible to solve the problem that the second portion B3 is damaged while the beading portion 147 is press-fitted.

The structures of the uncoated portions 146a, 146b may be changed to the structures according to the above examples (modifications). In addition, a conventional uncoated portion structure may be applied to any one of the uncoated portions 146a, 146b without limitation.

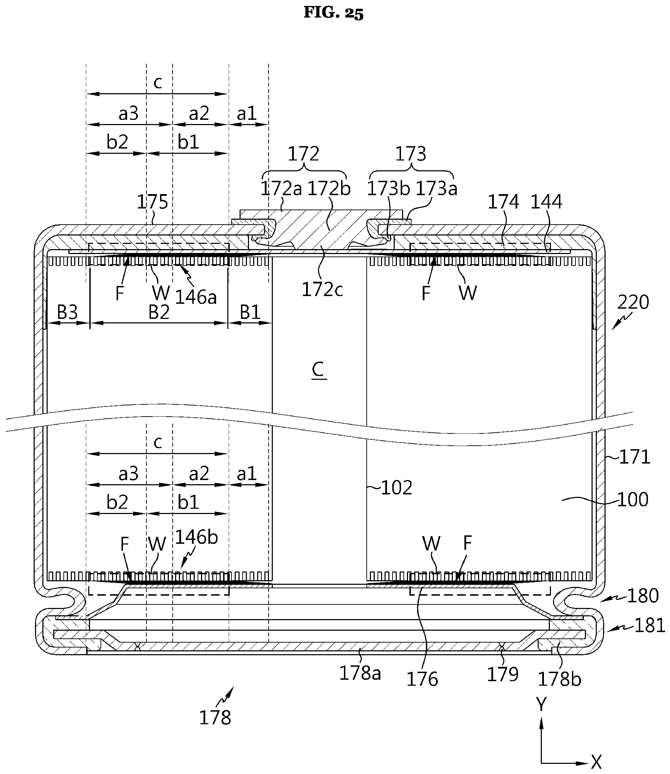

FIG. 25 is a cross-sectional view showing a cylindrical battery 220 according to still another example, taken along the Y-axis.

Referring to FIG. 25, the cylindrical battery 220 includes the electrode assembly 100 illustrated in FIG. 24, and the configuration other than the electrode assembly 100 is substantially the same as the cylindrical battery 180 illustrated in FIG. 21. Therefore, the configuration described with reference to FIGS. 21 and 24 may be applied substantially identically in this example.

For example, the first and second uncoated portions 146a, 146b of the electrode assembly 100 are divided into a plurality of segments, and the plurality of segments are bent from the outer circumference toward the core. At this time, the first portion B1 and the second portion B3 of the first uncoated portion 146a have a lower height than the other portions and have no segment, and thus they are not substantially bent. This is the same for the second uncoated portion 146b.

Therefore, in this example, similar to the example of FIG. 24, the bending surface region F may include a segment skip region a1, a height variable region a2 of the segment, and a height uniform region a3 of the segment from the core toward the outer circumference. However, since the second portion B3 is not bent, the radial length of the bending surface region F may be shorter than that of the former example.

As shown in FIGS. 10c, 10d and 10e, the bending surface region F includes an overlapping layer number uniform region b1 adjacent to the segment skip region a1, in which the number of overlapping layers of segments is 10 or more.

The bending surface region F may also include an overlapping layer number decreasing region b2 adjacent to the second portion B3 of the electrode assembly 110, in which the number of overlapping layers of segments gradually decreases toward the outer circumference. For example, the overlapping layer number uniform region b1 may be set as the welding target region.

In the bending surface region F, the preferable numerical ranges of the ratio (a2/c) which is a ratio of the height variable region a2 to a radius region including segments (c), the ratio (b1/c) of the overlapping layer number uniform region b1 to the radius region (c) including segments, and the ratio of the area of the overlapping layer number uniform region b1 to the area of the bending surface region F are already described above, and thus will not be described again.

The first current collector 144 may be welded to the bending surface region F of the first uncoated portion 146a, and the second current collector 176 may be welded to the bending surface region F of the second uncoated portion 146b.

The overlapping relationship of the overlapping layer number uniform region b1 and the overlapping layer number decreasing region b2 with the welding region W, the outer diameter of the first current collector 144 and the second current collector 176, the configuration in which the first portion B1 does not close the core by at least 10% or more of its diameter, and the like are substantially the same as described above.

The structures of the uncoated portions 146a, 146b may be changed to the structures according to the former examples (modifications). In addition, the conventional uncoated portion structure may be applied to any one of the uncoated portions 146a, 146b without limitation.

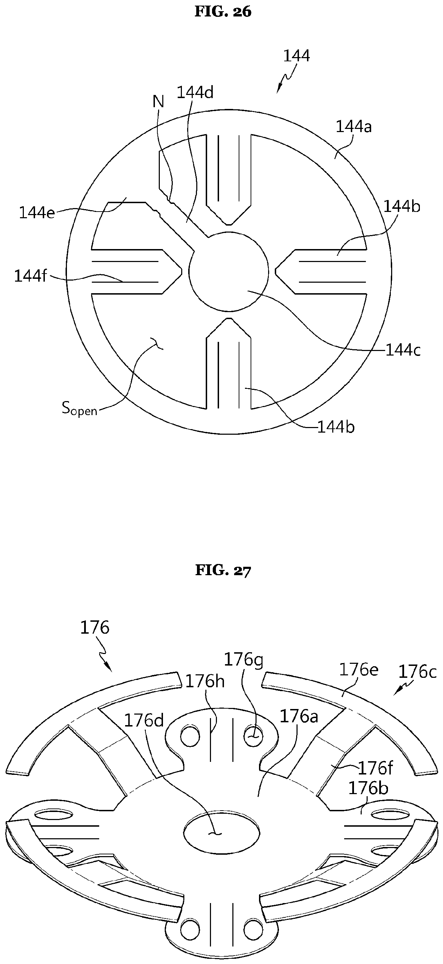

In the former examples (modified examples), the first current collector 144 and the second current collector 176 included in the cylindrical battery 170, 180, 200, 220 including the terminal 172 may have an improved structure as shown in FIGS. 26 and 27.

The improved structure of the first current collector 144 and the second current collector 176 may contribute to lowering the resistance of the cylindrical battery, improving the vibration resistance, and improving the energy density. In particular, the first current collector 144 and the second current collector 176 are more effective when used in a large cylindrical battery in which a ratio of diameter to height is greater than 0.4.

FIG. 26 is a top plan view showing the structure of the first current collector 144 according to an example.

Referring to FIGS. 23 and 26 together, the first current collector 144 may include an edge portion 144a, a first uncoated portion coupling portion 144b, and a terminal coupling portion 144c. The edge portion 144a is disposed on the electrode assembly 110. The edge portion 144a may have a substantially rim shape having an empty space ($S_{open}$) formed therein. In the drawings of the present disclosure, only a case in which the edge portion 144a has a substantially circular rim shape is illustrated, but the present disclosure is not limited thereto. The edge portion 61 may have a substantially rectangular rim shape, a hexagonal rim shape, an octagonal rim shape, or other rim shapes, unlike the illustrated one. The number of the edge portion 144a may be increased to two or more. In this case, another edge portion in a rim shape may be provided to the inner side of the edge portion 144a.

The terminal coupling portion 144c may have a diameter equal to or greater than the diameter of the flat portion 172c formed on the bottom surface of the terminal 172 in order to secure a welding area for coupling with the flat portion 172c formed on the bottom surface of the terminal 172.

The first uncoated portion coupling portion 144b extends inward from the edge portion 144a and is coupled to the uncoated portion 146a through welding. The terminal coupling portion 144c is spaced apart from the first uncoated portion coupling portion 144b and is positioned inside the edge portion 144a. The terminal coupling portion 144c may be coupled to the terminal 172 by welding. The terminal coupling portion 144c may be located, for example, approximately at the center of the inner space ($S_{open}$) surrounded by the edge portion 144a. The terminal coupling portion 144c may be provided at a position corresponding to the hole formed in the core C of the electrode assembly 110. The terminal coupling portion 144c may be configured to cover the hole formed in the core C of the electrode assembly 110 so that the hole formed in the core C of the electrode assembly 110 is not exposed out of the terminal coupling portion 144c. To this end, the terminal coupling portion 144c may have a larger diameter or width than the hole formed in the core C of the electrode assembly 110.

The first uncoated portion coupling portion 144b and the terminal coupling portion 144c may not be directly connected, but may be disposed to be spaced apart from each other and indirectly connected by the edge portion 144a. Since the first current collector 144 has a structure in which the first uncoated portion coupling portion 144b and the terminal coupling portion 144c are not directly connected to each other but are connected through the edge portion 144c as above, when shock and/or vibration occurs at the cylindrical battery 200, it is possible to disperse the shock applied to the coupling portion between the first uncoated portion coupling portion 144b and the first uncoated portion 146a and the coupling portion between the terminal coupling portion 144c and the terminal 172. In the drawings of the present disclosure, only a case in which four first uncoated portion coupling portions 144b are provided is illustrated, but the present disclosure is not limited thereto. The number of the first uncoated portion coupling portions 144b may be variously determined in consideration of manufacturing difficulty according to the complexity of the shape, electric resistance, the space ($S_{open}$) inside the edge portion 144a considering electrolyte impregnation, and the like.

The first current collector 144 may further include a bridge portion 144d extending inward from the edge portion 144a and connected to the terminal coupling portion 144c. At least a part of the bridge portion 144d may have a smaller sectional area compared to the first uncoated portion coupling portion 144b and the edge portion 144a. For example, at least a part of the bridge portion 144d may be formed to have a smaller width and/or thickness compared to the first uncoated portion coupling portion 144b. In this case, the electric resistance increases in the bridge portion 144d. As a result, when a current flows through the bridge portion 144d, the relatively large resistance causes a part of the bridge portion 144d to be melted due to overcurrent heating. Accordingly, the overcurrent is irreversibly blocked. The sectional area of the bridge portion 144d may be adjusted to an appropriate level in consideration of the overcurrent blocking function.

The bridge portion 144d may include a taper portion 144e whose width is gradually decreased from the inner surface of the edge portion 144a toward the terminal coupling portion 144c. When the taper portion 144e is provided, the rigidity of the component may be improved at the connection portion between the bridge portion 144d and the edge portion 144a. When the taper portion 144e is provided, in the process of manufacturing the cylindrical battery 200, for example, a transfer device and/or a worker may easily and safely transport the first current collector 144 and/or a coupled body of the first current collector 144 and the electrode assembly 110 by gripping the taper portion 144e. That is, when the taper portion 144e is provided, it is possible to prevent product defects that may occur by gripping a portion where welding is performed with other components such as the first uncoated portion coupling portion 144b and the terminal coupling portion 144c.

The first uncoated portion coupling portion 144b may be provided in plural. The plurality of first uncoated portion coupling portions 144b may be disposed substantially at regular intervals from each other in the extending direction of the edge portion 144a. An extension length of each of the plurality of first uncoated portion coupling portions 144b may be substantially equal to each other. The first uncoated portion coupling portion 144b may be coupled to the bending surface region F of the uncoated portion 146a by laser welding. The welding may be replaced by ultrasonic welding, spot welding, or the like.

The welding pattern 144f formed by welding between the first uncoated portion coupling portion 144b and the bending surface region F may have a structure to extend along the radial direction of the electrode assembly 110. The welding pattern 144f may be a line pattern or a dot array pattern.

The welding pattern 144f corresponds to the welding region. Therefore, the welding pattern 144f preferably overlaps with the overlapping layer number uniform region b1 of the bending surface region F by 50% or more. The welding pattern 144f that does not overlap with the overlapping layer number uniform region b1 may overlap with the overlapping layer number decreasing region b2. More preferably, the entire welding pattern 144f may overlap with the overlapping layer number uniform region b1 of the bending surface region F. In the bending surface region F below the region where the welding pattern 144f is formed, the number of overlapping layers of segments is preferably 10 or more in the overlapping layer number uniform region b1 and, optionally, the overlapping layer number decreasing region b2.

The terminal coupling portion 144c may be disposed to be surrounded by the plurality of first uncoated portion coupling portions 144b. The terminal coupling portion 144c may be coupled to the flat portion 172c of the terminal 172 by welding. The bridge portion 144d may be positioned between a pair of first uncoated portion coupling portions 144b adjacent to each other. In this case, the distance from the bridge portion 144d to any one of the pair of first uncoated portion coupling portions 144b along the extending direction of the edge portion 144a may be substantially equal to the distance from the bridge portion 144d to the other one of the pair of first uncoated portion coupling portions 144b along the extending direction of the edge portion 144a. The plurality of first uncoated portion coupling portions 144b may be formed to have substantially the same sectional area. The plurality of first uncoated portion coupling portions 144b may be formed to have substantially the same width and thickness.

Although not shown in the drawings, the bridge portion 144d may be provided in plural. Each of the plurality of bridge portions 144d may be disposed between a pair of first uncoated portion coupling portions 144b adjacent to each other. The plurality of bridge portions 144d may be disposed substantially at regular intervals to each other in the extending direction of the edge portion 144a. A distance from each of the plurality of bridge portions 144d to one of the pair of first uncoated portion coupling portions 144b adjacent to each other along the extending direction of the edge portion 144a may be substantially equal to a distance from each of the plurality of the bridge portion 144d to the other of the pair of first uncoated portion coupling portion 144b.

In the case where the first uncoated portion coupling portion 144b and/or the bridge portion 144d is provided in plural as described above, if the distance between the first uncoated portion coupling portions 144b and/or the distance between the bridge portions 144d and/or the distance between the first uncoated portion coupling portion 144b and the bridge portion 144d is uniformly formed, a current flowing from the first uncoated portion coupling portion 144b toward the bridge portion 144d or a current flowing from the bridge portion 144d toward the first uncoated portion coupling portion 144b may be smoothly and uniformly formed.

The bridge portion 144d may include a notching portion N formed to partially reduce a sectional area of the bridge portion 144d. The sectional area of the notching portion N may be adjusted, for example, by partially reducing the width and/or thickness of the bridge portion 144d. When the notching portion N is provided, electric resistance is increased in the region where the notching portion N is formed, thereby enabling rapid current interruption when overcurrent occurs.

The notching portion N is preferably provided in a region corresponding to the overlapping layer number uniform region b1 of the electrode assembly 110 in order to prevent substances generated during rupturing from flowing into the electrode assembly 110. This is because, in this region, the number of overlapping layers of the segments of the uncoated portion 146a is maintained to the maximum and thus the overlapped segments may function as a mask.

The notching portion N may be surrounded by an insulating tape. Then, since the heat generated at the notching portion N is not dissipated to the outside, the notching portion N may be ruptured more quickly when an overcurrent flows through the bridge portion 144d.

FIG. 27 is a top plan view showing the structure of the second current collector 176 according to an example.

Referring to FIGS. 23 and 27 together, the second current collector 176 is disposed below the electrode assembly 110. In addition, the second current collector 176 may be configured to electrically connect the uncoated portion 146b of the electrode assembly 110 and the battery housing 171. The second current collector 176 is made of a metal material with conductivity and is electrically connected to the bending surface region F of the uncoated portion 146b. In addition, the second current collector 176 is electrically connected to the battery housing 171. The edge portion of the second current collector 176 may be interposed and fixed between the inner surface of the battery housing 171 and the first gasket 178b. Specifically, the edge portion of the second current collector 176 may be interposed between the lower surface of the beading portion 180 of the battery housing 171 and the first gasket 178b. However, the present disclosure is not limited thereto, and the edge portion of the second current collector 176 may be welded to the inner wall surface of the battery housing 171 in a region where the beading portion 180 is not formed.

The second current collector 176 may include a support portion 176a disposed below the electrode assembly 110, a second uncoated portion coupling portion 176b extending from the support portion 176a approximately along the radial direction of the electrode assembly 110 and coupled to the bending surface region F of the uncoated portion 146b, and a housing coupling portion 176c extending from the support portion 176a toward the inner surface of the battery housing 171 approximately along an inclined direction based on the radial direction of the electrode assembly 110 and coupled to the inner surface of the battery housing 171. The second uncoated portion coupling portion 176b and the housing coupling portion 176c are indirectly connected through the support portion 176a, and are not directly connected to each other. Therefore, when an external shock is applied to the cylindrical battery 200 of the present disclosure, it is possible to minimize the possibility of damage to the coupling portion of the second current collector 176 and the electrode assembly 110 and the coupling portion of the second current collector 176 and the battery housing 171. However, the second current collector 176 of the present disclosure is not limited to the structure where the second uncoated portion coupling portion 176b and the housing coupling portion 176c are only indirectly connected. For example, the second current collector 176 may have a structure that does not include the support portion 176a for indirectly connecting the second uncoated portion coupling portion 176b and the housing coupling portion 176c and/or a structure in which the uncoated portion 146b and the housing coupling portion 176c are directly connected to each other.

The support portion 176a and the second uncoated portion coupling portion 176b are disposed below the electrode assembly 110. The second uncoated portion coupling portion 176b is coupled to the bending surface region F of the uncoated portion 146b. In addition to the second uncoated portion coupling portion 176b, the support portion 176a may also be coupled to the uncoated portion 146b. The second uncoated portion coupling portion 176b and the bending surface region F of the uncoated portion 146b may be coupled by welding. The welding may be replaced with ultrasonic welding, spot welding, or the like. The support portion 176a and the second uncoated portion coupling portion 176b are located higher than the beading portion 180 when the beading portion 180 is formed on the battery housing 171.

The support portion 176a has a current collector hole 176d formed at a location corresponding to the hole formed at the core C of the electrode assembly 110. The core C of the electrode assembly 110 and the current collector hole 176d communicating with each other may function as a passage for inserting a welding rod for welding between the terminal 172 and the terminal coupling portion 144c of the first current collector 144 or for irradiating a laser beam.

The current collector hole 176d may have a radius of 0.5 $r_c$ or more compared to the radius ($r_c$) of the hole formed in the core C of the electrode assembly 110. If the radius of the current collector hole 176d is 0.5 $r_c$ to 1.0 $r_c$, when a vent occurs in the cylindrical battery 200, it is possible to prevent that the winding structure of the separator or the electrodes near the core C of the electrode assembly 110 is pushed out of the core C due to the vent pressure. When the radius of the current collector hole 176d is greater than 1.0 $r_c$, the core C is opened to the maximum, so the electrolyte may be easily injected during the electrolyte injection process.

When the second uncoated portion coupling portion 176b is provided in plural, the plurality of second uncoated portion coupling portions 176b may have a shape extending approximately radially from the support portion 176a of the second current collector 176 toward the sidewall of the battery housing 171. The plurality of second uncoated portion coupling portions 176b may be positioned to be spaced apart from each other along the periphery of the support portion 176a.

The housing coupling portion 176c may be provided in plural. In this case, the plurality of housing coupling portions 176c may have a shape extending approximately radially from the center of the second current collector 176 toward the sidewall of the battery housing 171. Accordingly, the electrical connection between the second current collector 176 and the battery housing 171 may be made at a plurality of points. Since the coupling for electrical connection is made at a plurality of points, the coupling area may be maximized, thereby minimizing electric resistance. The plurality of housing coupling portions 176c may be positioned to be spaced apart from each other along the periphery of the support portion 176a. At least one housing coupling portion 176c may be positioned between the second uncoated portion coupling portions 176b adjacent to each other. The plurality of housing coupling portions 176c may be coupled to, for example, the beading portion 180 in the inner surface of the battery housing 171. The housing coupling portions 176c may be coupled, particularly, to the lower surface of the beading portion 180 by laser welding. The welding may be replaced with ultrasonic welding, spot welding, or the like. By coupling the plurality of housing coupling portions 176c on the beading portion 180 by welding in this way, the current path is dispersed radially, thereby limiting the resistance level of the cylindrical battery 200 to about 4 milliohms or less. In addition, as the lower surface of the beading portion 180 has a shape extending in a direction approximately parallel to the upper surface of the battery housing 171, namely in a direction approximately perpendicular to the sidewall of the battery housing 171, and the housing coupling portion 176c also has a shape extending in the same direction, namely in the radial direction and the circumferential direction, the housing coupling portion 176c may be stably in contact with the beading portion 180. In addition, as the housing coupling portion 176c is stably in contact with the flat portion of the beading portion 180, the two components may be welded smoothly, thereby improving the coupling force between the two components and minimizing the increase in resistance at the coupling portion.

The housing coupling portion 176c may include a contact portion 176e coupled onto the inner surface of the battery housing 171 and a connection portion 176f for connecting the support portion 176a and the contact portion 176e.

The contact portion 176e is coupled onto the inner surface of the battery housing 171. In the case where the beading portion 180 is formed on the battery housing 171, the contact portion 176e may be coupled onto the beading portion 180 as described above. More specifically, the contact portion 176e may be electrically coupled to the flat portion formed at the lower surface of the beading portion 180 formed on the battery housing 171, and may be interposed between the lower surface of the beading portion 180 and the first gasket 178b. In this case, for stable contact and coupling, the contact portion 176e may have a shape extending on the beading portion 180 by a predetermined length along the circumferential direction of the battery housing 171.

The connection portion 176f may be bent at an obtuse angle. The bending point may be higher than the intermediate point of the connection portion 176f. When the connection portion 176f is bent, the contact portion 176e may be stably supported on the flat surface of the beading portion 180. The connection portion 176f may be divided into a lower portion and an upper portion based on the bending point, and the length of the lower portion may be greater than that of the upper portion. In addition, the inclination angle with respect to the surface of the support portion 176a may be greater at the lower portion of the bending point rather than at the upper portion. If the connection portion 176f is bent, the connection portion 176f may buffer the pressure (force) applied in the vertical direction of the battery housing 171. For example, if a pressure is transmitted to the contact portion 176e in the sizing process for the battery housing 171 so that the contact portion 176e moves vertically toward the support portion 176b, the bending point of the connection portion 176f may move upward to deform the shape of the connection portion 176, thereby buffering the stress.

Meanwhile, the maximum distance from the center of the second current collector 176 to the end of the second uncoated portion coupling portion 176b along the radial direction of the electrode assembly 110 is preferably equal to or smaller than the inner diameter of the battery housing 171 in a region where the beading portion 180 is formed, namely the minimum inner diameter of the battery housing 171. This is to prevent the end of the second uncoated portion coupling portion 176b from pressing the edge of the electrode assembly 110 during the sizing process for compressing the battery housing 171 along the height direction.

The second uncoated portion coupling portion 176b includes a hole 176g. The hole 176g may be used as a passage through which the electrolyte may move. The welding pattern 176h formed by welding between the second uncoated portion coupling portion 176b and the bending surface region F may have a structure to extend along the radial direction of the electrode assembly 110. The welding pattern 176h may be a line pattern or a dot array pattern.

The welding pattern 176h corresponds to the welding region. Therefore, the welding pattern 176h preferably overlaps with the overlapping layer number uniform region b1 of the bending surface region F by 50% or more. The welding pattern 176h that does not overlap with the overlapping layer number uniform region b1 may overlap with the overlapping layer number decreasing region b2. More preferably, the entire welding pattern 176h may overlap with the overlapping layer number uniform region b1 of the bending surface region F. In the bending surface region F above the region where the welding pattern 176h is formed, the number of overlapping layers of segments is preferably 10 or more in the overlapping layer number uniform region b1 and, optionally, the overlapping layer number decreasing region b2.

The diameters of the first current collector 144 and the second current collector 176 described above are different from each other. The diameter is an outer periphery diameter of the contact area between the bending surface region F and the current collector. The diameter is defined as a maximum value among distances between two points where a straight line passing through the center of the core C of the electrode assembly meets the boundary of the contact area. Since the second current collector 176 is located inside the beading portion 180, the diameter of the second current collector 176 is smaller than the diameter of the first current collector 144. Also, the length of the welding pattern 144f of the first current collector 144 is longer than the length of the welding pattern 176h of the second current collector 176. For example, the welding pattern 144f and the welding pattern 176h may extend from substantially the same point toward the outer circumference with respect to the center of the core C.

The cylindrical battery 170, 180, 200, 220 according to an example have an advantage in that electrical connection can be performed at the upper portion thereof.

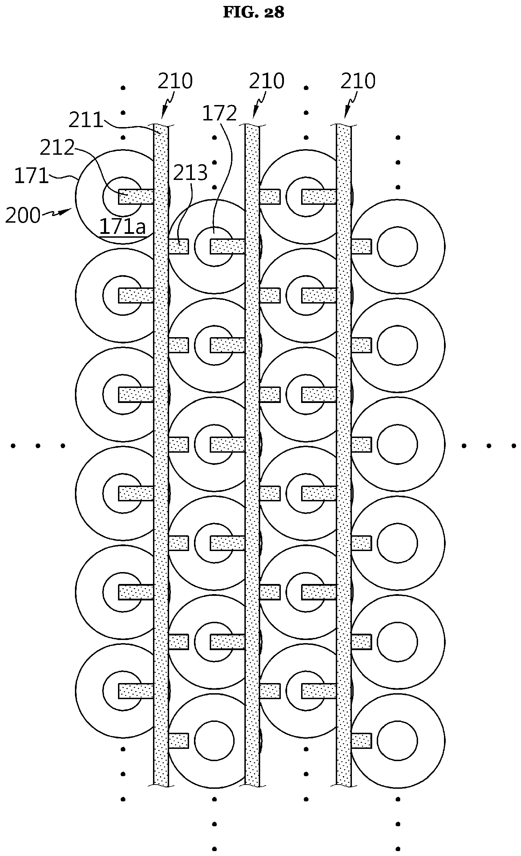

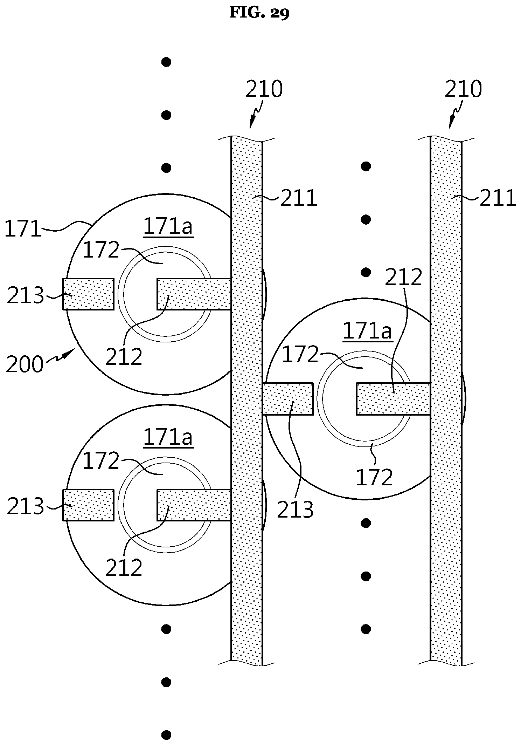

FIG. 28 is a top plan view illustrating a state in which a plurality of cylindrical batteries 200 are electrically connected, and FIG. 29 is a partially enlarged view of FIG. 28. The cylindrical battery 200 may be replaced with the cylindrical battery 170, 180, 220 having a different structure.

Referring to FIGS. 28 and 29, a plurality of cylindrical batteries 200 may be connected in series and in parallel at an upper portion of the cylindrical batteries 200 using a bus bar 210. The number of cylindrical batteries 200 may be increased or decreased in consideration of the capacity of the battery pack.

In each cylindrical battery 200, the terminal 172 may have a positive polarity, and the flat surface 171a around the terminal 172 of the battery housing 171 may have a negative polarity, or vice versa.

For example, the plurality of cylindrical batteries 200 may be arranged in a plurality of columns and rows. Columns are provided in a upper and lower direction on the drawing, and rows are provided in a left and right direction on the drawing. In addition, in order to maximize space efficiency, the cylindrical batteries 200 may be arranged in a closest packing structure. The closest packing structure is formed when an equilateral triangle is formed by connecting the centers of the terminals 172 exposed out of the battery housing 171 to each other. For example, the bus bar 210 connects the cylindrical batteries 200 arranged in the same column in parallel to each other, and connects the cylindrical batteries 200 arranged in two neighboring columns in series with each other.

For example, the bus bar 210 may include a body portion 211, a plurality of first bus bar terminals 212 and a plurality of second bus bar terminals 213 for serial and parallel connection.

The body portion 211 may extend along the column of the cylindrical battery 200 between neighboring terminals 172. Alternatively, the body portion 211 may extend along the row of the cylindrical batteries 1, and the body portion 211 may be regularly bent like a zigzag shape.

The plurality of first bus bar terminals 212 may extend from one side of the body portion 211 and may be electrically coupled to the terminal 172 of the cylindrical battery 200 located at one side. The electrical connection between the first bus bar terminal 212 and the terminal 172 may be achieved by laser welding, ultrasonic welding, or the like.

The plurality of second bus bar terminals 213 may extend from the other side of the body portion 211 and may be electrically coupled to the flat surface 171a around the terminal 172 located at the other side. The electrical coupling between the second bus bar terminal 213 and the flat surface 171a may be performed by laser welding, ultrasonic welding, or the like.

For example, the body portion 211, the plurality of first bus bar terminals 212 and the plurality of second bus bar terminals 213 may be made of one conductive metal plate. The metal plate may be, for example, an aluminum plate or a copper plate, but the present disclosure is not limited thereto. In a modified example, the body portion 211, the plurality of first bus bar terminals 212 and the second bus bar terminals 213 may be manufactured as separate pieces and then coupled to each other by welding or the like.

The cylindrical battery 200 of the present disclosure as described above has a structure in which resistance is minimized by enlarging the welding area by means of the bending surface region F, multiplexing current paths by means of the second current collector 176, minimizing a current path length, or the like. The AC resistance of the cylindrical battery 200 measured through a resistance meter between the positive electrode and the negative electrode, namely between the terminal 172 and the flat surface 171a around the terminal 172, may be about 4 milliohms or below suitable for fast charging. The resistance may be at least 0.5 mΩ, or at least 1.0 mΩ, and/or 3.8 mΩ, or less, 3.5 mΩ, or less, or 3 mΩ, or less.

In the cylindrical battery 200 according to the present disclosure, since the terminal 172 having a positive polarity and the flat surface 171a having a negative polarity are located in the same direction, it is easy to electrically connect the cylindrical batteries 200 using the bus bar 210.

In addition, since the terminal 172 of the cylindrical battery 200 and the flat surface 171a around the terminal 172 have a large area, the coupling area of the bus bar 210 may be sufficiently secured to sufficiently reduce the resistance of the battery pack including the cylindrical battery 200.

In addition, since electrical wiring can be performed at the upper portion of the cylindrical battery 200, there is an advantage in that the energy density per unit volume of a battery module/pack may be maximized.

The cylindrical battery according to the above examples (modifications) may be used to manufacture a battery pack.

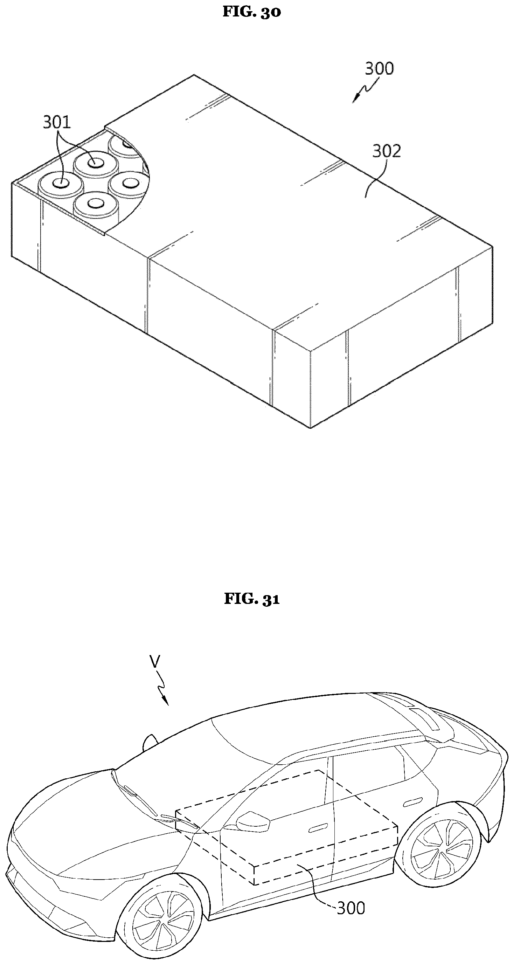

FIG. 30 is a diagram schematically showing a battery pack according to an example.

Referring to FIG. 30, a battery pack 300 according to an example includes an aggregate in which cylindrical batteries 301 are electrically connected, and a pack housing 302 for accommodating the aggregate. The cylindrical battery 301 may be any one of the batteries according to the above examples (modifications). In the drawing, components such as a bus bar, a cooling unit, and an external terminal for electrical connection of the cylindrical batteries 301 are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 31 is a diagram schematically showing a vehicle including the battery pack 300 of FIG. 30 according to an example.

Referring to FIG. 31, a vehicle V according to an example includes the battery pack 300 according to an example. The vehicle V operates by receiving power from the battery pack 300 according to an example.

According to the present disclosure, since the uncoated portions themselves protruding from the upper and lower portions of the electrode assembly are used as electrode tabs, it is possible to reduce the internal resistance of the battery and increase the energy density.

According to another example, since the structure of the uncoated portion of the electrode assembly is improved so that the electrode assembly does not interfere with the inner circumference of the battery in the process of forming the beading portion of the battery housing, it is possible to prevent a short circuit in the cylindrical battery caused by partial deformation of the electrode assembly.

According to still another example, since the structure of the uncoated portion of the electrode assembly is improved, it is possible to prevent the uncoated portion from being torn when the uncoated portion is bent, and the number of overlapping layers of the uncoated portions is sufficiently increased to improve welding strength of the current collector.

According to still another example, it is possible to improve physical properties of a region where the current collector is welded, by applying a segment structure to the uncoated portion of the electrode and optimizing the dimensions (width, height, separation pitch) of the segments to sufficiently increase the number of overlapping layers of the segments in an area used as a welding target region.

According to still another example, it is possible to provide an electrode assembly with improved energy density and reduced resistance by applying a structure in which a current collector is welded over a large area to a bending surface region formed by bending the segments.

According to still another example, it is possible to provide a cylindrical battery including an improved design so as to perform electrical wiring at an upper portion thereof.

According to still another example, since the structure of the uncoated portion adjacent to the core of the electrode assembly is improved, it is possible to prevent the cavity in the core of the electrode assembly from being blocked when the uncoated portion is bent. Thus, the electrolyte injection process and the process of welding the battery housing (or, the terminal) with the current collector may be carried out easily.

According to still another example, it is possible to provide a cylindrical battery having a structure that has a low internal resistance, prevents internal short circuit and improves welding strength between the current collector and the uncoated portion, and a battery pack and a vehicle including the cylindrical battery.

In particular, the present disclosure may provide a cylindrical battery having a diameter to a height ratio of 0.4 or more and a resistance of 4 milliohms or less, and a battery pack and a vehicle including the same. The resistance may be at least 0.5 mΩ, or at least 1.0 mΩ, and/or 3.8 mΩ, or less, 3.5 mΩ, or less, or 3 mΩ, or less.

The present disclosure has been described in detail. However, it should be understood that the detailed description and specific examples, while indicating preferred examples of the disclosure, are given by way of illustration only, since various changes and modifications within the scope of the disclosure will become apparent to those skilled in the art from this detailed description.

**Claims**

1. An electrode assembly (A; 80) comprising a first electrode (10; 11), a second electrode (10; 11), and a separator (12) interposed therebetween,

   wherein the first electrode (10; 11), the second electrode (10; 11) and the separator (12) are wound around a winding axis (Y),
   wherein the first electrode (10; 11) includes a first active material portion coated with an active material and a first uncoated portion (43; 146a) free of an active material layer (42), the first uncoated portion (43; 146a) being at an edge of the first electrode (10; 11) along a winding direction (X) of the electrode assembly (A; 80),
   wherein the first uncoated portion (43; 146a) is configured to provide an electrical connection to the first electrode (10; 11),
   wherein the first uncoated portion (43; 146a) includes a first portion (B1) including an innermost winding turn, a second portion (B3) including an outermost winding turn and a third portion (B2) interposed between the first portion (B1) and the second portion (B3),
   wherein a height the second portion (B3) is smaller than a height of the third portion (B2), the heights being determined in a winding axis direction parallel to the winding axis (Y).

2. The electrode assembly (A; 80) according to claim 1,
   wherein a height of the first portion (B1) is smaller than the height of the third portion (B2).

3. The electrode assembly (A; 80) according to claim 1 or 2,

   wherein the second portion (B3) is defined as an electrode tab in a state of being bent along a radial direction of the electrode assembly (A; 80); and/or
   wherein the third portion (B2) is defined as an electrode tab in a state of being bent along a radial direction of the electrode assembly (A; 80).

4. The electrode assembly (A; 80) according to any of claims 1 to 3,
   wherein the third portion (B2) is at least partially formed into multiple separate tabs (61) that are individually bendable.

5. The electrode assembly (A; 80) according to claim 4, wherein a width is determined in the winding direction (X), wherein the width of one or more or each of the multiple separate tabs (61):

   decreases in the winding axis direction away from the active material layer (42); or

decreases and then increases in the winding axis direction away from the active material layer (42); or increases and then decreases in the winding axis direction away from the active material layer (42); or increases and then remains constant along the winding axis direction away from the active material layer (42); or decreases and then remains constant along the winding axis direction away from the active material layer (42); or remains unchanged along the winding axis direction.

6.  The electrode assembly (A; 80) according to claim 4 or 5, wherein

    the width of at least one of the multiple separate tabs (61) at an outermost position is smaller than at an innermost position in the winding axis direction; or
    the width of at least one of the multiple separate tabs (61) at an outermost position is equal to that at an innermost position in the winding axis direction.

7.  The electrode assembly (A; 80) according to any of claims 4 to 6,

    wherein the multiple separate tabs (61) are shaped such to form internal angles proximal to the active material layer (42) that increases individually or groupwise in the winding direction (X); and/or
    wherein the internal angles of the multiple separate tabs (61) increase individually or in groups in the range of 60 to 85 degrees in one direction parallel to the winding direction (X);
    wherein the internal angle ($\theta$) is an angle between a straight line extending from a bottom portion (63a) of a cut groove (63) and a straight line extending from a side portion (63b) of the tab (61).

8.  The electrode assembly (A; 80) according to claim 4 or 6,

    wherein the width of one or more or each of the multiple separate tabs (61) decreases in the winding axis direction away from the active material layer (42),
    wherein an internal angle $\theta$ of a separate tab (61) located at a position corresponding to a radial distance r from the winding axis (Y) of the electrode assembly (A; 80) satisfies the following:

$$\cos^{-1}\left(\frac{0.5 * D}{r}\right) \leq \theta \leq \tan^{-1}\left(\frac{2 * H * \tan\theta_{refer}}{2 * H - p * \tan\theta_{refer}}\right)$$

    wherein D is a width of the separate tab (61) in the winding direction (X), r is a radial distance from the winding axis (Y) of a respective separate tab (61), H is a height of the separate tab (61) and p is a separation pitch of the separate tab (61).

9.  The electrode assembly (A; 80) according to any of claims 4 to 8,

    wherein one or more or each of the multiple separate tabs (61) has a side (63b) that is convex outward or convex inward; and/or
    wherein one or more or each of the multiple separate tabs (61) has a rounded corner at a respective outer side.

10. The electrode assembly (A; 80) according to claim 7,

    wherein the cut groove (63) is formed between each of the separate tabs (61) adjacent in the winding direction (X),
    wherein corners of the cut groove (63) are rounded.

11. The electrode assembly (A; 80) according to claim 10,
    wherein the corners of the cut groove (63) are rounded with a curvature radius of 0 to 0.1 mm, or 0.01 mm to 0.05 mm.

12. The electrode assembly (A; 80) according to claim 10 or 11,

    wherein an inner side of the cut groove (63) between the corners is flat; and/or
    wherein an inner side of the cut groove (63) is spaced from the active material layer (42) by a fixed distance, more particularly by 0.2 mm to 4 mm.

**13.** The electrode assembly (A; 80) according to any of claims 10 to 12,

wherein the multiple separate tabs (61) are spaced from each other in the winding direction (X) by a separation pitch (P),
wherein the separation pitch (P) is 0.05 mm to 1.00 mm.

**14.** The electrode assembly (A; 80) according to any of claims 10 to 13,
wherein the multiple separate tabs (61) are made of an aluminum foil.

**15.** The electrode assembly (A; 80) according to any of claims 10 to 14,
wherein one or more or each the multiple separate tabs (61) are bent at a position located at an inner side of the adjacent cut groove (63) or outwardly offset from an inner side of the adjacent cut groove (63) by 1 mm or less.

**16.** The electrode assembly (A; 80) according to any of claims 4 to 15,

wherein one or more or each of the multiple separate tabs (61) have lateral sides defining boundaries of the respective separate tab (61) in the winding direction (X),
wherein:

the lateral sides are provided such as to form, after bending of the respective separate tab (61), a central angle of 45 degrees or less at the winding axis (Y) of the electrode assembly (A; 80); and/or
the lateral sides are provided such as to form, after bending of the respective separate tab (61), central angles at the winding axis (Y) of the electrode assembly (A; 80) remain constant.

**17.** The electrode assembly (A; 80) according to claim 4 to 16,

wherein for one or more or each of the multiple separate tabs (61), D(r) satisfies the following formula:

$$1 \leq D(r) \leq (2 \cdot \pi \cdot r \, / \, 360°) \cdot 45°$$

wherein r is a distance of the respective separate tab (61) from the winding axis (Y) of the electrode assembly (A; 80) in the radial direction, and D(r) is a width of the respective separate tab (61) in the winding direction (X).

**18.** The electrode assembly (A; 80) according to claim 17,

wherein D(r) increases as r increases, continuously or stepwise; or
wherein D(r) decreases as r increases, continuously or stepwise; or
wherein D(r) increases and then decreases as r increases, continuously or stepwise.

**19.** The electrode assembly (A; 80) according to claim 4 to 18,

wherein the widths of the multiple separate tabs (61) in the winding direction (X) increase at a constant rate in the winding direction (X) of the electrode assembly (A; 80); and/or
wherein the widths of the multiple separate tabs (61) increase as a function of a distance r from the winding axis (Y) of the electrode assembly (A; 80) in the radial direction; and/or
wherein the widths of the multiple separate tabs (61) change within a range of 1 mm to 11 mm.

**20.** The electrode assembly (A; 80) according to any of the preceding claims,
wherein in at least a partial region of the second portion (B3) and/or the third portion (B2) of the first uncoated portion (43; 146a), the height of the first uncoated portion (43; 146a), more particularly the multiple separate tabs (61) thereof, changes continuously or stepwise in the winding direction (X).

**21.** The electrode assembly (A; 80) according to any of the preceding claims,

wherein the third portion (B2) is divided into multiple regions along the winding direction (X),
wherein the height of the first uncoated portion (43; 146a) differs in two different regions, and more particularly the heights of the multiple separate tabs (61) differ in two different regions.

**22.** The electrode assembly (A; 80) according to any of claims 4 to 21, wherein the first uncoated portion (43; 146a) includes:

a height variable region ($_{②}$) in which the heights of the separate tabs (61) increase stepwise from a first height ($h_1$) to an (N-1)-th height $h_{N-1}$, wherein N is a height index and a natural number of 2 or above, more particularly 2 to 30; and
a height uniform region ($_{③}$) in which the heights of the separate tabs (61) are maintained unchanged at an N-th height $h_N$, wherein $h_N$ is greater than $h_{N-1}$.

**23.** The electrode assembly (A; 80) according to claim 22,

wherein separate tabs (61) having a same height $h_k$ are disposed in a same winding turn around the winding axis (Y); and/or
wherein at least 90% of a hollow core portion of the electrode assembly (A; 80), with respect to a size in the radial direction, remains uncovered by the separate tabs (61) after bending; and/or
wherein $r_k$ indicates a distance from the winding axis (Y) in a radial direction and $r_c$ indicates a radius of a central hollow portion of the electrode assembly (A; 80), and $h_k$ indicates the height of separate tabs (61) located at $r_k$, $h_k$ and $r_k$ are such to satisfy the following:

$$2 \text{ mm} \leq h_k \leq r_k - \alpha \cdot r_c$$

wherein $\alpha$ is 0.90 to 1.

**24.** The electrode assembly (A; 80) according to any of claims 4 to 23, wherein the electrode assembly (A; 80) includes:

a tab skip region ($_{③}$), for example the first portion (B1), which has no separate tabs (61);
a height variable region ($_{②}$) where the separate tabs (61) have variable heights; and
a height uniform region ($_{③}$) where the separate tabs (61) have a uniform height in a radial direction or in the winding direction (X),
wherein the multiple separate tabs (61) disposed in the height variable region ($_{②}$) and the height uniform region ($_{③}$) are bent in the radial direction to form a bending surface region (F).

**25.** The electrode assembly (A; 80) according to claim 24,

wherein the third portion (B2) corresponds to the height variable region ($_{②}$) and the height uniform region ($_{③}$); or
wherein the height variable region ($_{②}$) and the height uniform region ($_{③}$) correspond to the second portion (B3) and the third portion (B2), respectively.

**26.** The electrode assembly (A; 80) according to claim 24 or 25,

wherein in the height variable region ($_{②}$) and the height uniform region ($_{③}$), a maximum height $h_{max}$ of the separate tabs (61) satisfies the following formula:

$$h_{max} \leq W_{foil} - W_{scrap,min} - W_{margin,min} - W_{gap}$$

wherein $W_{foil}$ is a width of a current collector foil before separate tabs (61) are formed; $W_{scrap,min}$ is a width corresponding to a minimum cut scrap margin when separate tabs (61) are formed by cutting the current collector foil; $W_{margin,min}$ is a width corresponding to a minimum meandering margin of the separator (12); and $W_{gap}$ is a width corresponding to an insulation gap between an end of the separator (12) and an end of the second electrode (10; 11) facing the first electrode (10; 11) with the separator (12) interposed therebetween.

**27.** The electrode assembly (A; 80) according to claim 26,

wherein the first electrode (10; 11) is a positive electrode (10) and the insulation gap ($W_{gap}$) is in the range of 0.2 mm to 6 mm; and/or
wherein the first electrode (10; 11) is a negative electrode (11) and the insulation gap ($W_{gap}$) is in the range of 0.1 mm to 2 mm.

**28.** The electrode assembly (A; 80) according to claim 26 or 27, wherein:

the minimum cut scrap margin ($W_{scrap,min}$) is zero or in the range of 1.5 mm to 8 mm; and/or
the minimum meandering margin ($W_{margin,min}$) is in the range of 0 to 1 mm; and/or.

**29.** The electrode assembly (A; 80) according to any of claims 24 to 28, wherein:

the heights of the separate tabs (61) disposed in the height variable region (②) increase gradually or stepwise within the range of 2 mm to 10 mm; and/or
a ratio of a radial size of the tab skip region (①) to a radius of the electrode assembly (A; 80) except for a hollow core portion in the radial direction of the electrode assembly (A; 80) is 10% to 40%; and/or
a ratio of a radial size of the height variable region (②) to a radial size corresponding to the height variable region (②) and the height uniform region (③) in the radial direction of the electrode assembly (A; 80) is 1% to 50%; and/or
a ratio of a length of an electrode area corresponding to the tab skip region (①) to a total length of the first electrode (10; 11) in the winding direction (X) is 1% to 30%; and/or
a ratio of a length of an electrode area corresponding to the height variable region (②) to a total length of the first electrode (10; 11) in the winding direction (X) is 1% to 40%; and/or
wherein a ratio of a length of an electrode area corresponding to the height uniform region (③) to a total length of the first electrode (10; 11) in the winding direction (X) is 50% to 90%.

**30.** The electrode assembly (A; 80) according to any of claim 4 to 29,
wherein widths in the winding direction (X) and/or heights in the winding axis direction of the multiple separate tabs (61):

increase continuously or stepwise in the winding direction (X); and/or
increase and then decrease in the winding direction (X); and/or
decrease and then increase in the winding direction (X).

**31.** The electrode assembly (A; 80) according to claim 4 to 30,
wherein the multiple separate tabs (61) form multiple tab groups along one direction parallel to the winding direction (X) of the electrode assembly (A; 80), wherein:

separate tabs (61) belonging to one of the tab groups have a same width in the winding direction (X) and/or a same height in the winding axis direction; and/or
separate tabs (61) belonging to one other of the tab groups have increasing widths in the winding direction (X) and/or increasing heights in the winding direction (X); and/or
three successively ones of the tab groups have widths W1, W2 and W3, respectively, in the winding direction (X), wherein a ratio W3/W2 is smaller than a ratio W2/W1.

**32.** The electrode assembly (A; 80) according to any of the preceding claims,
wherein the first portion (B1) and/or the second portion (B3) is not formed into separate tabs (61) and is not bent along a radial direction of the electrode assembly (A; 80).

**33.** The electrode assembly (A; 80) according to any of the preceding claims,
wherein an insulating coating layer, for example a polymer resin and an inorganic filler dispersed in the polymer resin, is formed at a boundary between the active material layer (42) and the first uncoated portion (43; 146a) provided.

**34.** The electrode assembly (A; 80) according to claim 33, wherein:

the insulating coating layer is formed to cover a boundary portion of the active material layer (42) and the first uncoated portion (43; 146a) along the winding direction (X); and/or
the insulating coating layer is formed to cover the boundary portion of the active material layer (42) and the first uncoated portion (43; 146a) along the winding axis direction by a width of 0.3 mm to 5 mm; and/or
an end of the insulating coating layer is located within the range of -2 mm to 2 mm along the winding axis direction with respect to an end of the separator (12); and/or

the insulating coating layer is exposed from the separator (12); and/or

an inner side of a cut groove (63) formed in the first uncoated portion (43; 146a) and the insulating coating layer are spaced apart by a distance of 0.5 mm to 2 mm; and/or

an end of the insulating coating layer in the winding axis direction is located within the range of -2 mm to +2 mm with respect to a lower end of the cut groove (63) formed in the first uncoated portion (43; 146a).

35. The electrode assembly (A; 80) according to claim 34,
wherein the second electrode (10; 11) is coated with an active material layer (42) in a second active material portion, and an end of the second active material portion in the winding axis direction overlaps the insulating coating layer in a view in a radial direction.

36. The electrode assembly (A; 80) according to any of the preceding claims,

wherein the third portion (B2) and/or the second portion (B3) is each formed into multiple separate tabs (61) that are individually bendable,
wherein the electrode assembly (A; 80) includes a bending surface region (F) formed by bending the multiple separate tabs (61) along a radial direction of the electrode assembly (A; 80).

37. The electrode assembly (A; 80) according to claim 36,

wherein when the number of separate tabs (61) meeting a virtual line parallel to the winding axis direction at any radial location of the bending surface region (F) based on a core center of the electrode assembly (A; 80) is defined as the number of overlapping layers of separate tabs (61) at the corresponding radial location, wherein the bending surface region (F) includes:

an overlapping layer number uniform region (b1) in which the number of overlapping layers of separate tabs (61) is uniform, more particularly 10 or more, or 10 to 35, along a radial direction, and
an overlapping layer number decreasing region (b2) in which the number of overlapping layers of separate tabs (61) continuously decreases in the radial direction.

38. The electrode assembly (A; 80) according to claim 37,
wherein a radial size of the overlapping layer number uniform region (b1) and the overlapping layer number decreasing region (b2) corresponds to a radial size of a region in which the multiple separate tabs (61) are formed.

39. The electrode assembly (A; 80) according to claim 37 or 38,

wherein the electrode assembly (A; 80) includes a tab skip region (①) having no separate tabs (61), a height variable region (②) where separate tabs (61) have variable heights, and a height uniform region (③) where separate tabs (61) have a uniform height in order along the radial direction; and/or
wherein a radial position from the winding axis (Y) of the electrode assembly (A; 80) at which the overlapping layer number uniform region (b1) starts corresponds to a radial position at which the height variable region (②) starts.

40. The electrode assembly (A; 80) according to any of claims 37 to 39,

wherein the first electrode (10; 11) is a positive electrode (10), and in the overlapping layer number uniform region (b1), an overlapping thickness of separate tabs (61) is between 100 $\mu$m and 875 $\mu$m; and/or
wherein the first electrode (10; 11) is a negative electrode (11), and in the overlapping layer number uniform region (b1), an overlapping thickness of separate tabs (61) is between 50 $\mu$m and 700 $\mu$m.

41. The electrode assembly (A; 80) according to claim 37,
wherein a ratio of to a radial size of the overlapping layer number uniform region (b1) to a radial size of the overlapping layer number uniform region (b1) and the overlapping layer number decreasing region (b2) is 30% to 85%.

42. The electrode assembly (A; 80) according to any of claims 36 to 41, further comprising:

a current collector (41) welded to the bending surface region (F),
wherein a welding region (W) of the current collector (41) overlaps the overlapping layer number uniform region (b1) by at least 50% in the radial direction of the electrode assembly (A; 80).

**43.** The electrode assembly (A; 80) according to claim 42,
wherein the welding region (W) of the current collector (41) extends such as also to overlap the overlapping layer number decreasing region (b2).

**44.** The electrode assembly (A; 80) according to claim 42 or 43,
wherein an edge of the current collector (41) is disposed on the bending surface region (F) to cover an end of a bent portion of outermost separate tabs (61) in the radial direction of the electrode assembly (A; 80).

**45.** The electrode assembly (A; 80) according to claim 43 or 44,
wherein the current collector (41) is welded to the bending surface region (F), particularly such to have a welding strength of 196 kPa (2 kgf/cm$^2$) or more, or 392 kPa (4 kgf/cm$^2$) or more.

**46.** The electrode assembly (A; 80) according to any of the preceding claims,

wherein the first uncoated portion (43; 146a) is made of a metal foil, particularly an aluminum foil
wherein the metal foil has an elongation of 1.5% to 3.0% and a tensile strength of 245 MPa(25 kgf/mm$^2$) to 343MPa(35 kgf/mm$^2$).

**47.** The electrode assembly (A; 80) according to claim 46,
wherein the first electrode (10; 11) has a camber length smaller than 20 mm.

**48.** The electrode assembly (A; 80) according to any of the preceding claims,

wherein the first active material portion has a short side along to the winding axis direction and a long side along the winding direction (X),
wherein a size ratio of the short side to the long side is 1% to 4%.

**49.** The electrode assembly (A; 80) according to any of the preceding claims,
wherein a height of the second portion (B3) decreases continuously or stepwise in the radial or winding direction (X).

**50.** The electrode assembly (A; 80) according to any of the preceding claims,

wherein the second portion (B3) and the third portion (B2) are formed into multiple separate tabs (61) that are individually bendable,
wherein widths and/or heights of the separate tabs (61) in the second portion (B3) are greater than those of the separate tabs (61) in the third portion (B2).

**51.** The electrode assembly (A; 80) according to any of claims 4 to 50,
wherein the third portion (B2) includes a tab skip region (①) having no separate tabs (61).

**52.** The electrode assembly (A; 80) according to claim 51, wherein:

the third portion (B2) includes multiple tab skip regions (①), which optionally have widths that increase or decrease along the winding direction (X); and/or
a height of the tab skip region (①) is equal to a height of the first portion (B1) or the second portion (B3); and/or
the multiple separate tabs (61) are located within a preset central angle, which is for example 20 degrees or more, at the winding axis (Y) of the electrode assembly (A; 80); and/or
the multiple separate tabs (61) are located in at least two circular-sectoral regions or polygonal regions disposed in a plan view in the winding axis direction of the electrode assembly (A; 80).

**53.** The electrode assembly (A; 80) according to any of the preceding claims,

wherein the second electrode (10; 11) includes a second active material portion coated with another active material layer (42) and a second uncoated portion (145) free of the other active material layer (42) at an edge of the second electrode (10; 11) extending along the winding direction (X),
wherein the second uncoated portion (145) is configured to provide an electrical connection to the first electrode (10; 11),

wherein the second uncoated portion (145) is partly divided into multiple separate tabs (61) that are individually bendable,

wherein the multiple separate tabs (61) are bent along a radial direction of the electrode assembly (A; 80) to form a bending surface region (F).

54. An electrode assembly (A; 80) comprising a first electrode (10; 11), a second electrode (10; 11), and a separator (12) interposed therebetween,

wherein the first electrode (10; 11), the second electrode (10; 11) and the separator (12) are wound around a winding axis (Y),

wherein the first electrode (10; 11) includes a first active material portion coated with an active material layer (42) and a first uncoated portion (43; 146a) free of the active material layer (42), the first uncoated portion (43; 146a) being at an edge of the first electrode (10; 11) that extends along a winding direction (X),

wherein the first uncoated portion (43; 146a) is partly formed into multiple separate tabs (61) that are individually bendable in a radial direction of the electrode assembly (A; 80),

wherein a height of an outermost region including an outermost winding turn of the first uncoated portion (43; 146a) is smaller than heights of the multiple separate tabs (61),

wherein the multiple separate tabs (61) are bent along the radial direction towards the winding axis (Y) of the electrode assembly (A; 80) to form a bending surface region (F), and

wherein the bending surface region (F) includes an overlapping layer number uniform region (b1) in which the number of overlapping layers of the separate tabs (61) is 10 or more, and an overlapping layer number decreasing region (b2) located adjacent to the overlapping layer number uniform region (b1) in which the number of overlapping layers of the separate tabs (61) decreases in the radial direction away from the overlapping layer number uniform region (b1).

55. The electrode assembly (A; 80) according to claim 54,

wherein the electrode assembly (A; 80) includes a tab skip region (①) having no separate tabs (61), a height variable region (②) in which the separate tabs (61) have heights that increase stepwise along the radial direction of the electrode assembly (A; 80), and a height uniform region (③) in which the separate tabs (61) have a uniform height along the radial direction of the electrode assembly (A; 80),

wherein, from a winding axis (Y) of the electrode assembly (A; 80), a radial position at which the overlapping layer number uniform region (b1) starts corresponds to a radial position at which the height variable region (②) starts.

56. The electrode assembly (A; 80) according to claim 55,

wherein an innermost region of the first uncoated portion (43; 146a) is not formed into separate tabs (61); and/or

wherein a ratio of to a radial size of the overlapping layer number uniform region (b1) to a radial size of the overlapping layer number uniform region (b1) and the overlapping layer number decreasing region (b2) is 30% to 85%; and/or

wherein a ratio of a length of an electrode area in the winding direction (X) corresponding to the tab skip region (①) to a total length of the first electrode (10; 11) in the winding direction (X) is 1% to 30%; and/or

wherein a ratio of a length of an electrode area in the winding direction (X) corresponding to the height variable region (②) to a total length of the first electrode (10; 11) in the winding direction (X) is 1% to 40%; and/or

wherein a ratio of a length of an electrode area in the winding direction (X) corresponding to the height uniform region (③) to a total length of the first electrode (10; 11) in the winding direction (X) is 50% to 90%.

57. The electrode assembly (A; 80) according to any of claims 54 to 56,

wherein in the region divided into the multiple separate tabs (61), at least one selected from widths of the separate tabs (61) in the winding direction (X), heights thereof in the winding axis direction, and a lower internal angle ($\theta$) thereof increases stepwise along one direction parallel to the winding direction (X); and/or

wherein a height of the innermost region of the first uncoated portion (43; 146a) or an outermost region of the first uncoated portion (43; 146a) is smaller than heights of the multiple separate tabs (61); and/or

wherein the multiple separate tabs (61) are bent toward the winding axis (Y) of the electrode assembly (A; 80), and at least 90% or more, based on a radial size, of a central cylindrical region surrounded by the electrode assembly (A; 80) is not covered by the bent portion of the separate tabs (61).

58. An electrode assembly (A; 80) comprising a positive electrode (10), a negative electrode (11), and a separator (12) interposed therebetween,

wherein the positive electrode (10), the negative electrode (11) and the separator (12) are wound around a winding axis (Y),

wherein the positive electrode (10) includes a positive active material portion coated with a positive active material and a first uncoated portion (43; 146a) free of the positive active material, the first uncoated portion (43; 146a) being at an edge of the positive electrode (10) that extends along a winding direction (X) of the electrode assembly (A; 80),

wherein the first uncoated portion (43; 146a) is configured to provide an electrical connection to the positive electrode (10),

wherein the first uncoated portion (43; 146a) includes multiple separate tabs (61) that are individually bendable in a radial direction of the electrode assembly (A; 80),

wherein a height of an outermost region including an outermost winding turn of the first uncoated portion (43; 146a) is smaller than heights of the multiple separate tabs (61),

wherein the multiple separate tabs (61) are bent towards the winding axis (Y) to form a bending surface region (F),

wherein the bending surface region (F) includes an overlapping layer number uniform region (b1) in which the number of overlapping layers of the separate tabs (61) is uniform and an overlapping layer number decreasing region (b2) located adjacent to the overlapping layer number uniform region (b1) in which the number of overlapping layers of the separate tabs (61) decreases in a direction away from the overlapping layer number uniform region (b1), and

wherein a combined thickness of the overlapping layers of the separate tabs (61) in the overlapping layer number uniform region (b1) is between 100 $\mu$m and 875 $\mu$m.

59. The electrode assembly (A; 80) according to claim 58,
wherein a height of an innermost region including an innermost winding turn of the first uncoated portion (43; 146a) is smaller than heights of the multiple separate tabs (61).

60. An electrode assembly (A; 80) comprising a positive electrode (10), a negative electrode (11), and a separator (12) interposed therebetween,

wherein the positive electrode (10), the negative electrode (11) and the separator (12) are wound around a winding axis (Y),

wherein the negative electrode (11) includes a negative active material portion coated with a negative active material and an uncoated portion free of the negative active material, the uncoated portion being at an edge of the negative electrode (11) extending along a winding direction (X),

wherein the uncoated portion configured to provide an electrical connection to the negative electrode (11),

wherein the uncoated portion includes multiple separate tabs (61) that are individually bendable in a radial direction,

wherein a height of an outermost region including an outermost winding turn of the uncoated portion is smaller than heights of the multiple separate tabs (61),

wherein the multiple separate tabs (61) are bent toward the winding axis (Y) to form a bending surface region (F),

wherein the bending surface region (F) includes an overlapping layer number uniform region (b1) in which the number of overlapping layers of the separate tabs (61) is uniform and an overlapping layer number decreasing region (b2) adjacent to the overlapping layer number uniform region (b1) in which the number of overlapping layers of the separate tabs (61) decreases in a direction away from the overlapping layer number uniform region (b1), and

wherein a combined thickness of the overlapping layers of the separate tabs (61) in the overlapping layer number uniform region (b1) is between 50 $\mu$m and 700 $\mu$m.

61. The electrode assembly (A; 80) according to claim 60,
wherein a height of an innermost region including an innermost winding turn of the uncoated portion is smaller than heights of the multiple separate tabs (61).

62. A battery, comprising:

the electrode assembly (A; 80) of any of claims 1 to 52;

a battery housing (142) including an open first end face and a second end face opposite to the first end face, wherein the electrode assembly (A; 80) is accommodated in the battery housing (142), and the battery housing (142) is electrically connected to one of the first electrode (10; 11) and the second electrode (10; 11) of the electrode assembly (A; 80);

a sealing body (143) configured to seal the open first end face of the battery housing (142); and

a terminal (172) electrically connected to the other one of the first electrode (10; 11) and the second electrode (10; 11), wherein the terminal (172) has a surface exposed to the outside of the battery housing (142),

wherein the battery housing (142) includes a beading portion (147) pressed inwardly at a region adjacent to the first end face, wherein the beading portion (147) faces and the second portion (B3) are spaced apart by a predetermined distance.

63. The battery according to claim 62,
wherein a press-in depth (D1) of the beading portion (147) is equal to or larger than a distance (D2) from the inner circumference of the battery housing (142) to a boundary between the second portion (B3) and the third portion (B2).

64. The battery according to claim 62 or 63, further comprising:

a current collector (41) electrically coupled to the third portion (B2); and

an insulator (146) configured to cover the current collector (41) and have an edge interposed and fixed between the inner circumference of the beading portion (147) and the current collector (41).

65. The battery according to claim 64,

wherein a diameter of the current collector (41) is smaller than a minimum inner diameter of the inner circumference of the beading portion (147), and a diameter of the current collector (41) is equal to or greater than an outermost diameter of the third portion (B2); and/or

wherein the current collector (41) is located higher than the beading portion (147) in the winding axis direction.

66. The battery according to any of claims 62 to 65,
wherein the sealing body (143) includes a cap (143a), which for example is the terminal (172), configured to seal the open first end side of the battery housing (142), a gasket (143b; 178b) interposed between an edge of the cap (143a) and the open end of the battery housing (142), and a crimping portion (148) bent and extended into the battery housing (142) and configured to surround and fix the edge of the cap (143a) together with the gasket (143b; 178b).

67. The battery according to claim 62 to 66, further comprising:

a first current collector (144) electrically connected to the first uncoated portion (43; 146a),

wherein the terminal (172) is a feed-through terminal inserted into a perforation hole formed in the second end face of the battery housing (142),

wherein the feed-through terminal is insulated from the battery housing (142) and electrically connected to the first current collector (144), for example by an insulator (146) interposed between an inner surface of a bottom portion of the battery housing (142) and an upper surface of the first current collector (144) to electrically insulate the inner surface of the bottom portion of the battery housing (142) and the first current collector (144).

68. The battery according to claim 67,

wherein the insulator (146) has a thickness corresponding to a distance between the inner surface of the bottom portion of the battery housing (142) and the upper surface of the first current collector (144) and is in close contact with the inner surface of the bottom portion of the battery housing (142) and the upper surface of the first current collector (144); and/or

wherein the terminal (172) includes a flat portion (172c) at a lower end thereof, the insulator (146) has an opening for exposing the flat portion (172c), and the flat portion (172c) is welded to the first current collector (144) through the opening.

69. The battery according to claim 62 to 68,
wherein the second electrode (10; 11) includes a second active material portion coated with an active material layer (42) and a second uncoated portion (145) not coated with an active material layer (42) along the winding direction (X), the second electrode (10; 11) has a first polarity, at least a part of the second uncoated portion (145) is defined as an electrode tab by itself, and the battery further includes a second current collector (145; 176) electrically connected to the second uncoated portion (145) and having an edge at least partially coupled to a sidewall of the battery housing (142).

70. The battery according to any of claims 67 to 69,

   wherein the second electrode (10; 11) includes a second active material portion coated with a second active material and a second uncoated portion (145) free of the second active material, the second uncoated portion (145) being at an edge of the second electrode (10; 11) extending along the winding direction (X),
   wherein the second uncoated portion (145) provides an electrical connection to the second electrode (10; 11),
   wherein the battery further includes a second current collector (145; 176) electrically connected to the second uncoated portion (145) and having an edge electrically coupled to a sidewall of the battery housing (142) extending between the first end face and the second end face,
   wherein the first current collector (144) has an outer diameter equal to or greater than that of the second current collector (145; 176).

71. The battery according to claim 70,

   wherein the first current collector (144) and the second current collector (145; 176) are respectively welded to the first uncoated portion (43; 146a) and the second uncoated portion (145) along a radial direction of the electrode assembly (A; 80) to form a respective welding pattern,
   wherein a length of the welding pattern of the first current collector (144) is longer than a length of the welding pattern of the second current collector (145; 176).

72. The battery according to claim 71,
   wherein the welding pattern of the first current collector (144) and the welding pattern of the second current collector (145; 176) are located substantially at the same distance from the winding axis (Y) of the electrode assembly (A; 80).

73. The battery according to any of claims 70 to 72,

   wherein the battery housing (142) includes a beading portion (147) pressed inwardly adjacent to the first end face,
   wherein the edge of the second current collector (145; 176) is electrically connected, more particularly welded, to the beading portion (147).

74. The battery according to claim 73,
   wherein a region of the second current collector (145; 176) in electrical contact with the second uncoated portion (145) is surrounded by the beading portion (147) in a plan view in the winding axis direction.

75. The battery according to claim 73 or 74,
   wherein the battery includes a cap (143a) having an edge supported by the beading portion (147) and having no polarity, a gasket (143b; 178b) interposed between the edge of the cap (143a) and the open end of the battery housing (142), and a crimping portion (148) bent and extended into the open end of the battery housing (142) and configured to surround and fix the edge of the cap (143a) together with the gasket (143b; 178b), and the edge of the second current collector (145; 176) is interposed and fixed between the beading portion (147) and the gasket (143b; 178b) by the crimping portion (148).

76. The battery according to any of claims 62 to 75,

   wherein the battery further comprises a current collector (41) comprising a welding region (W) welded to an overlapping layer number uniform region (b1) of the first uncoated region, and
   wherein:

      the first electrode (10; 11) is a positive electrode (10) and the overlapping layers of separate tabs (61) in the welding region (W) has a thickness in the range of 100um to 875um; or
      the first electrode (10; 11) is a negative electrode (11) and the overlapping layers of separate tabs (61) in the welding region (W) has a thickness in the range of 50um to 700um.

**77.** A battery, comprising:

the electrode assembly (A; 80) of any of claims 54 to 57;
a battery housing (142) including an open end and a bottom portion opposite thereto, wherein the electrode assembly (A; 80) is accommodated in the battery housing (142), wherein the battery housing (142) is electrically connected to one of the first electrode (10; 11) and the second electrode (10; 11);
a sealing body (143) configured to seal the open first end face of the battery housing (142); and
a terminal (172) electrically connected to the other one of the first electrode (10; 11) and the second electrode (10; 11) and having a surface exposed to the outside of the battery housing (142).

**78.** A battery, comprising:

the electrode assembly (A; 80) of claim 58;
a battery housing (142) including an open first end face and a second end face opposite to the first end face, wherein the electrode assembly (A; 80) is accommodated in the battery housing (142), and the battery housing (142) is electrically connected to one of the first electrode (10; 11) and the second electrode (10; 11);
a sealing body (143) configured to seal the open first end face of the battery housing (142); and
a terminal (172) electrically connected to the other one of the first electrode (10; 11) and the second electrode (10; 11) and having a surface exposed to the outside of the battery housing (142).

**79.** The battery according to claim 78,

wherein the battery further comprises a current collector (41) welded to the overlapping layer number uniform region (b1) such that at least a part of a welding region (W) of the current collector (41) overlaps with the overlapping layer number uniform region (b1), and
wherein a combined thickness of the overlapping layers of separate tabs (61) in the welding region (W) is in the range of 100 $\mu$m to 875 $\mu$m.

**80.** A battery, comprising:

the electrode assembly (A; 80) of claim 60;
a battery housing (142) including an open first end face and a second end face opposite to the first end face, wherein the electrode assembly (A; 80) is accommodated in the battery housing (142), and the battery housing (142) is electrically connected to one of the first electrode (10; 11) and the second electrode (10; 11);
a sealing body (143) configured to seal the open first end face of the battery housing (142); and
a terminal (172) electrically connected to the other one of the first electrode (10; 11) and the second electrode (10; 11) and having a surface exposed to the outside of the battery housing (142).

**81.** The battery according to claim 80,

wherein the battery further comprises a current collector (41) welded to the overlapping layer number uniform region (b1) such that at least a part of a welding region (W) of the current collector (41) overlaps with the overlapping layer number uniform region (b1), and
wherein the overlapping layers of separate tabs (61) in the welding region (W) has a thickness in the range of 50 $\mu$m to 700 $\mu$m.

**82.** A battery pack (300), comprising multiple batteries (301) according to any one of claims 62 to 81.

**83.** The battery pack (300) according to claim 82,
wherein a ratio of diameter to height of the battery is greater than 0.4.

**84.** The battery pack (300) according to claim 82 or 83,
wherein the battery has a form factor of 46110, 4875, 48110, 4880 or 4680.

**85.** The battery pack (300) according to any of claims 82 to 84,
wherein the multiple batteries (301) are arranged in a predetermined number of columns, so that a terminal (172) of each battery and an outer surface of a bottom portion of a battery housing (142) of each battery face upward.

**86.** The battery pack (300) according to claim 85, further comprising:

multiple bus bars (210) configured to connect the multiple batteries (301) in series and in parallel, wherein the multiple bus bars (21) are disposed at an upper portion of the multiple batteries (301), and each of the bus bars (210) includes a body portion (211) configured to extend between the terminals (172) of neighboring batteries; a multiple first bus bar terminals (213) configured to extend from one side of the body portion (211) and electrically coupled to a terminal (172) of a battery located at one side; and a multiple second bus bar terminals (213) configured to extend from the other side of the body portion (211) and electrically coupled to an outer surface of the bottom of the battery housing (142) of a battery located at the other side.

**87.** A vehicle (V), comprising the battery pack (300) according to any one of claims 82 to 86.


**Patentansprüche**

**1.** Elektrodenanordnung (A; 80) aufweisend eine erste Elektrode (10; 11), eine zweite Elektrode (10; 11) und einen dazwischen angeordneten Separator (12),

wobei die erste Elektrode (10; 11), die zweite Elektrode (10; 11) und der Separator (12) um eine Wicklungsachse (Y) gewickelt sind,
wobei die erste Elektrode (10; 11) einen ersten Aktivmaterialabschnitt, der mit einem Aktivmaterial beschichtet ist, und einen ersten unbeschichteten Abschnitt (43; 146a) aufweist, der frei von einer Aktivmaterialschicht (42) ist, wobei sich der erste unbeschichtete Abschnitt (43; 146a) an einem Rand der ersten Elektrode (10; 11) entlang einer Wicklungsrichtung (X) der Elektrodenanordnung (A; 80) befindet,
wobei der erste unbeschichtete Abschnitt (43; 146a) konfiguriert ist, um eine elektrische Verbindung mit der ersten Elektrode (10; 11) bereitzustellen,
wobei der erste unbeschichtete Abschnitt (43; 146a) einen ersten Abschnitt (B1), der eine innerste Wicklungswindung aufweist, einen zweiten Abschnitt (B3), der eine äußerste Wicklungswindung aufweist, und einen dritten Abschnitt (B2) aufweist, der zwischen dem ersten Abschnitt (B1) und dem zweiten Abschnitt (B3) angeordnet ist,
wobei eine Höhe des zweiten Abschnitts (B3) kleiner als eine Höhe des dritten Abschnitts (B2) ist, wobei die Höhen in einer Wicklungsachsenrichtung parallel zur Wicklungsachse (Y) bestimmt werden.

**2.** Elektrodenanordnung (A; 80) nach Anspruch 1,
wobei eine Höhe des ersten Abschnitts (B1) kleiner als die Höhe des dritten Abschnitts (B2) ist.

**3.** Elektrodenanordnung (A; 80) nach Anspruch 1 oder 2,

wobei der zweite Abschnitt (B3) als eine Elektrodenlasche in einem entlang einer radialen Richtung der Elektrodenanordnung (A; 80) gebogenen Zustand definiert ist; und/oder
wobei der dritte Abschnitt (B2) als eine Elektrodenlasche in einem entlang einer radialen Richtung der Elektrodenanordnung (A; 80) gebogenen Zustand definiert ist.

**4.** Elektrodenanordnung (A; 80) nach einem der Ansprüche 1 bis 3,
wobei der dritte Abschnitt (B2) zumindest teilweise zu mehreren separaten Laschen (61) ausgebildet ist, die einzeln biegbar sind.

**5.** Elektrodenanordnung (A; 80) nach Anspruch 4, wobei eine Breite in der Wicklungsrichtung (X) bestimmt wird, wobei die Breite einer oder mehrerer oder jeder der mehreren separaten Laschen (61):

in der Wicklungsachsenrichtung von der Aktivmaterialschicht (42) weg abnimmt; oder
in der Wicklungsachsenrichtung von der Aktivmaterialschicht (42) weg abnimmt und dann zunimmt; oder
in der Wicklungsachsenrichtung von der Aktivmaterialschicht (42) weg zunimmt und dann abnimmt; oder
entlang der Wicklungsachsenrichtung von der Aktivmaterialschicht (42) weg zunimmt und dann konstant bleibt; oder
entlang der Wicklungsachsenrichtung von der Aktivmaterialschicht (42) weg abnimmt und dann konstant bleibt; oder
entlang der Wicklungsachsenrichtung unverändert bleibt.

**6.** Elektrodenanordnung (A; 80) nach Anspruch 4 oder 5, wobei

die Breite mindestens einer der mehreren separaten Laschen (61) an einer äußersten Position kleiner als an einer innersten Position in der Wicklungsachsenrichtung ist; oder
die Breite mindestens einer der mehreren separaten Laschen (61) an einer äußersten Position gleich der an einer innersten Position in der Wicklungsachsenrichtung ist.

**7.** Elektrodenanordnung (A; 80) nach einem der Ansprüche 4 bis 6,

wobei die mehreren separaten Laschen (61) so geformt sind, dass sie Innenwinkel proximal zu der Aktivmaterialschicht (42) bilden, die einzeln oder gruppenweise in der Wicklungsrichtung (X) zunehmen; und/oder
wobei die Innenwinkel der mehreren separaten Laschen (61) einzeln oder in Gruppen im Bereich von 60 bis 85 Grad in einer Richtung parallel zu der Wicklungsrichtung (X) zunehmen;
wobei der Innenwinkel ($\theta$) ein Winkel zwischen einer geraden Linie, die sich von einem Bodenabschnitt (63a) einer Schnittnut (63) erstreckt, und einer geraden Linie, die sich von einem Seitenabschnitt (63b) der Lasche (61) erstreckt, ist.

**8.** Elektrodenanordnung (A; 80) nach Anspruch 4 oder 6,

wobei die Breite einer oder mehrerer oder jeder der mehreren separaten Laschen (61) in der Wicklungsachsenrichtung von der Aktivmaterialschicht (42) weg abnimmt,
wobei ein Innenwinkel $\theta$ einer separaten Lasche (61), die sich an einer Position befindet, die einem radialen Abstand r von der Wicklungsachse (Y) der Elektrodenanordnung (A; 80) entspricht, Folgendes erfüllt:

$$\cos^{-1}\left(\frac{0.5 * D}{r}\right) \leq \theta \leq tan^{-1}\left(\frac{2 * H * tan\theta_{refer}}{2 * H - p * tan\theta_{refer}}\right)$$

wobei D eine Breite der separaten Lasche (61) in der Wicklungsrichtung (X) ist, r ein radialer Abstand von der Wicklungsachse (Y) einer jeweiligen separaten Lasche (61) ist, H eine Höhe der separaten Lasche (61) ist und p ein Trennungsabstand der separaten Lasche (61) ist.

**9.** Elektrodenanordnung (A; 80) nach einem der Ansprüche 4 bis 8,

wobei eine oder mehrere oder jede der mehreren separaten Laschen (61) eine Seite (63b) aufweist, die nach außen konvex oder nach innen konvex ist; und/oder
wobei eine oder mehrere oder jede der mehreren separaten Laschen (61) eine abgerundete Ecke an einer jeweiligen Außenseite aufweist.

**10.** Elektrodenanordnung (A; 80) nach Anspruch 7,

wobei die Schnittnut (63) zwischen jeder der separaten Laschen (61), die in der Wicklungsrichtung (X) benachbart sind, ausgebildet ist,
wobei Ecken der Schnittnut (63) abgerundet sind.

**11.** Elektrodenanordnung (A; 80) nach Anspruch 10,
wobei die Ecken der Schnittnut (63) mit einem Krümmungsradius von 0 bis 0,1 mm oder 0,01 mm bis 0,05 mm abgerundet sind.

**12.** Elektrodenanordnung (A; 80) nach Anspruch 10 oder 11,

wobei eine Innenseite der Schnittnut (63) zwischen den Ecken eben ist; und/oder
wobei eine Innenseite der Schnittnut (63) um einen festen Abstand, insbesondere um 0,2 mm bis 4 mm, von der Aktivmaterialschicht (42) beabstandet ist.

**13.** Elektrodenanordnung (A; 80) nach einem der Ansprüche 10 bis 12,

wobei die mehreren separaten Laschen (61) in der Wicklungsrichtung (X) um einen Trennungsabstand (P) voneinander beabstandet sind,
wobei der Trennungsabstand (P) 0,05 mm bis 1,00 mm beträgt.

14. Elektrodenanordnung (A; 80) nach einem der Ansprüche 10 bis 13,
wobei die mehreren separaten Laschen (61) aus einer Aluminiumfolie hergestellt sind.

15. Elektrodenanordnung (A; 80) nach einem der Ansprüche 10 bis 14,
wobei eine oder mehrere oder jede der mehreren separaten Laschen (61) an einer Position, die sich an einer Innenseite der benachbarten Schnittnut (63) befindet, gebogen sind oder von einer Innenseite der benachbarten Schnittnut (63) um 1 mm oder weniger nach außen versetzt sind.

16. Elektrodenanordnung (A; 80) nach einem der Ansprüche 4 bis 15,

wobei eine oder mehrere oder jede der mehreren separaten Laschen (61) laterale Seiten aufweisen, die Grenzen der jeweiligen separaten Lasche (61) in der Wicklungsrichtung (X) definieren,
wobei:

die lateralen Seiten so bereitgestellt sind, dass sie nach dem Biegen der jeweiligen separaten Lasche (61) einen Mittelwinkel von 45 Grad oder weniger an der Wicklungsachse (Y) der Elektrodenanordnung (A; 80) bilden; und/oder
die lateralen Seiten so bereitgestellt sind, dass sie nach dem Biegen der jeweiligen separaten Lasche (61) Mittelwinkel an der Wicklungsachse (Y) der Elektrodenanordnung (A; 80) konstant bleiben.

17. Elektrodenanordnung (A; 80) nach Anspruch 4 bis 16,

wobei, für eine oder mehrere oder jede der mehreren separaten Laschen (61), D(r) die folgende Formel erfüllt:

$$1 \leq D(r) \leq (2 \cdot \pi \cdot r \,/\, 360°) \cdot 45°$$

wobei r ein Abstand der jeweiligen separaten Lasche (61) von der Wicklungsachse (Y) der Elektrodenanordnung (A; 80) in der radialen Richtung ist und D(r) eine Breite der jeweiligen separaten Lasche (61) in der Wicklungsrichtung (X) ist.

18. Elektrodenanordnung (A; 80) nach Anspruch 17,

wobei D(r) kontinuierlich oder schrittweise zunimmt, wenn r zunimmt; oder
wobei D(r) kontinuierlich oder schrittweise abnimmt, wenn r zunimmt; oder
wobei D(r) zunimmt und dann abnimmt, kontinuierlich oder schrittweise, wenn r zunimmt.

19. Elektrodenanordnung (A; 80) nach Anspruch 4 bis 18,

wobei die Breiten der mehreren separaten Laschen (61) in der Wicklungsrichtung (X) mit einer konstanten Rate in der Wicklungsrichtung (X) der Elektrodenanordnung (A; 80) zunehmen; und/oder
wobei die Breiten der mehreren separaten Laschen (61) als eine Funktion eines Abstands r von der Wicklungsachse (Y) der Elektrodenanordnung (A; 80) in der radialen Richtung zunehmen; und/oder
wobei sich die Breiten der mehreren separaten Laschen (61) innerhalb eines Bereichs von 1 mm bis 11 mm ändern.

20. Elektrodenanordnung (A; 80) nach einem der vorhergehenden Ansprüche,
wobei sich in zumindest einem Teilbereich des zweiten Abschnitts (B3) und/oder des dritten Abschnitts (B2) des ersten unbeschichteten Abschnitts (43; 146a) die Höhe des ersten unbeschichteten Abschnitts (43; 146a), insbesondere der mehreren separaten Laschen (61) derselben, kontinuierlich oder schrittweise in der Wicklungsrichtung (X) ändert.

21. Elektrodenanordnung (A; 80) nach einem der vorhergehenden Ansprüche,

wobei der dritte Abschnitt (B2) entlang der Wicklungsrichtung (X) in mehrere Bereiche unterteilt ist,

wobei sich die Höhe des ersten unbeschichteten Abschnitts (43; 146a) in zwei verschiedenen Bereichen unterscheidet und insbesondere sich die Höhen der mehreren separaten Laschen (61) in zwei verschiedenen Bereichen unterscheiden.

22. Elektrodenanordnung (A; 80) nach einem der Ansprüche 4 bis 21, wobei der erste unbeschichtete Abschnitt (43; 146a) umfasst:

einen höhenvariablen Bereich ((2)), in dem die Höhen der separaten Laschen (61) schrittweise von einer ersten Höhe (h1) zu einer (N-1)-ten Höhe $h_{N-1}$ zunehmen, wobei N ein Höhenindex und eine natürliche Zahl von 2 oder mehr, insbesondere 2 bis 30, ist; und

einen höheneinheitlichen Bereich (③), in dem die Höhen der separaten Laschen (61) bei einer N-ten Höhe $h_N$ unverändert gehalten werden, wobei $h_N$ größer als $h_{N-1}$ ist.

23. Elektrodenanordnung (A; 80) nach Anspruch 22,

wobei separate Laschen (61) mit einer gleichen Höhe $h_k$ in einer gleichen Wicklungswindung um die Wicklungsachse (Y) angeordnet sind; und/oder

wobei mindestens 90 % eines hohlen Kernabschnitts der Elektrodenanordnung (A; 80), bezüglich einer Größe in der radialen Richtung, nach dem Biegen von den separaten Laschen (61) unbedeckt bleibt; und/oder

wobei rk einen Abstand von der Wicklungsachse (Y) in einer radialen Richtung angibt und $r_c$ einen Radius eines mittleren hohlen Abschnitts der Elektrodenanordnung (A; 80) angibt und $h_k$ die Höhe von separaten Laschen (61) angibt, die sich bei $r_k$ befinden, $h_k$ und $r_k$ so sind, dass sie Folgendes erfüllen:

$$2\,\mathrm{mm} \leq h_k \leq r_k - \alpha \cdot r_c$$

wobei $\alpha$ 0,90 bis 1 beträgt.

24. Elektrodenanordnung (A; 80) nach einem der Ansprüche 4 bis 23, wobei die Elektrodenanordnung (A; 80) umfasst:

einen Laschenüberspringbereich (①), beispielsweise den ersten Abschnitt (B1), der keine separaten Laschen (61) aufweist;

einen höhenvariablen Bereich (②), in dem die separaten Laschen (61) variable Höhen aufweisen; und

einen höheneinheitlichen Bereich (③), in dem die separaten Laschen (61) eine einheitliche Höhe in einer radialen Richtung oder in der Wicklungsrichtung (X) aufweisen,

wobei die mehreren separaten Laschen (61), die im höhenvariablen Bereich (②) und im höheneinheitlichen Bereich (③) angeordnet sind, in der radialen Richtung gebogen sind, um einen Biegeflächenbereich (F) zu bilden.

25. Elektrodenanordnung (A; 80) nach Anspruch 24,

wobei der dritte Abschnitt (B2) dem höhenvariablen Bereich (②) und dem höheneinheitlichen Bereich (③) entspricht; oder

wobei der höhenvariable Bereich (②) und der höheneinheitliche Bereich (③) dem zweiten Abschnitt (B3) und dem dritten Abschnitt (B2) entsprechen.

26. Elektrodenanordnung (A; 80) nach Anspruch 24 oder 25,

wobei in dem höhenvariablen Bereich (②) und in dem höheneinheitlichen Bereich (③) eine maximale Höhe $h_{max}$ der separaten Laschen (61) die folgende Formel erfüllt:

$$h_{max} \leq W_{foil} - W_{scrap,min} - W_{margin,min} - W_{gap}$$

wobei $W_{foil}$ eine Breite einer Stromabnehmerfolie ist, bevor separate Laschen (61) gebildet werden; $W_{scrap,min}$ eine Breite ist, die einem minimalen Schnittabfallrand entspricht, wenn separate Laschen (61) durch Schneiden der Stromabnehmerfolie gebildet werden; $W_{margin,min}$ eine Breite ist, die einem minimalen Schlingenrand des Separators (12) entspricht; und $W_{gap}$ eine Breite ist, die einem Isolationsspalt zwischen einem Ende des Separators (12) und einem Ende der zweiten Elektrode (10; 11) entspricht, das der ersten Elektrode (10; 11) zugewandt ist, wobei der Separator (12) dazwischen angeordnet ist.

27. Elektrodenanordnung (A; 80) nach Anspruch 26,

   wobei die erste Elektrode (10; 11) eine positive Elektrode (10) ist und der Isolationsspalt ($W_{gap}$) 0,2 mm bis 6 mm beträgt; und/oder
   wobei die erste Elektrode (10; 11) eine negative Elektrode (11) ist und der Isolationsspalt ($W_{gap}$) 0,1 mm bis 2 mm beträgt.

28. Elektrodenanordnung (A; 80) nach Anspruch 26 oder 27, wobei:

   der minimale Schnittabfallrand ($W_{scrap,min}$) null oder 1,5 mm bis 8 mm beträgt; und/oder
   der minimale Schlingenrand ($W_{margin,min}$) 0 bis 1 mm beträgt; und/oder.

29. Elektrodenanordnung (A; 80) nach einem der Ansprüche 24 bis 28, wobei:

   die Höhen der separaten Laschen (61), die im höhenvariablen Bereich (②) angeordnet sind, innerhalb des Bereichs von 2 mm bis 10 mm allmählich oder schrittweise zunehmen; und/oder
   ein Verhältnis einer radialen Größe des Laschenüberspringbereichs (①) zu einem Radius der Elektrodenanordnung (A; 80) mit Ausnahme eines hohlen Kernabschnitts in der radialen Richtung der Elektrodenanordnung (A; 80) 10 % bis 40 % beträgt; und/oder
   ein Verhältnis einer radialen Größe des höhenvariablen Bereichs (②) zu einer radialen Größe, die dem höhenvariablen Bereich (②) und dem höheneinheitlichen Bereich (③) in der radialen Richtung der Elektrodenanordnung (A; 80) entspricht, 1 % bis 50 % beträgt; und/oder
   ein Verhältnis einer Länge einer Elektrodenfläche, die dem Laschenüberspringbereich (①) entspricht, zu einer Gesamtlänge der ersten Elektrode (10; 11) in der Wicklungsrichtung (X) 1 % bis 30 % beträgt; und/oder
   ein Verhältnis einer Länge einer Elektrodenfläche, die dem höhenvariablen Bereich (②) entspricht, zu einer Gesamtlänge der ersten Elektrode (10; 11) in der Wicklungsrichtung (X) 1 % bis 40 % beträgt; und/oder
   wobei ein Verhältnis einer Länge einer Elektrodenfläche, die dem höheneinheitlichen Bereich (③) entspricht, zu einer Gesamtlänge der ersten Elektrode (10; 11) in der Wicklungsrichtung (X) 50 % bis 90 % beträgt.

30. Elektrodenanordnung (A; 80) nach einem der Ansprüche 4 bis 29,
   wobei Breiten in der Wicklungsrichtung (X) und/oder Höhen in der Wicklungsachsenrichtung der mehreren separaten Laschen (61):

   in der Wicklungsrichtung (X) kontinuierlich oder schrittweise zunehmen; und/oder
   in der Wicklungsrichtung (X) zunehmen und dann abnehmen; und/oder
   in der Wicklungsrichtung (X) abnehmen und dann zunehmen.

31. Elektrodenanordnung (A; 80) nach Anspruch 4 bis 30,
   wobei die mehreren separaten Laschen (61) mehrere Laschengruppen entlang einer Richtung parallel zu der Wicklungsrichtung (X) der Elektrodenanordnung (A; 80) bilden, wobei:

   separate Laschen (61), die zu einer der Laschengruppen gehören, eine gleiche Breite in der Wicklungsrichtung (X) und/oder eine gleiche Höhe in der Wicklungsachsenrichtung aufweisen; und/oder
   separate Laschen (61), die zu einer anderen der Laschengruppen gehören, zunehmende Breiten in der Wicklungsrichtung (X) und/oder zunehmende Höhen in der Wicklungsrichtung (X) aufweisen; und/oder
   drei aufeinanderfolgende der Laschengruppen Breiten W1, W2 bzw. W3 in der Wicklungsrichtung (X) aufweisen, wobei ein Verhältnis W3/W2 kleiner als ein Verhältnis W2/W1 ist.

32. Elektrodenanordnung (A; 80) nach einem der vorhergehenden Ansprüche,
   wobei der erste Abschnitt (B1) und/oder der zweite Abschnitt (B3) nicht zu separaten Laschen (61) gebildet ist und nicht entlang einer radialen Richtung der Elektrodenanordnung (A; 80) gebogen ist.

33. Elektrodenanordnung (A; 80) nach einem der vorhergehenden Ansprüche,
   wobei eine isolierende Beschichtungsschicht, zum Beispiel ein Polymerharz und ein anorganischer Füllstoff, der in dem Polymerharz dispergiert ist, an einer Grenze zwischen der Aktivmaterialschicht (42) und dem bereitgestellten ersten unbeschichteten Abschnitt (43; 146a) gebildet ist.

34. Elektrodenanordnung (A; 80) nach Anspruch 33, wobei:

die isolierende Beschichtungsschicht gebildet ist, um einen Grenzabschnitt der Aktivmaterialschicht (42) und den ersten unbeschichteten Abschnitt (43; 146a) entlang der Wicklungsrichtung (X) zu bedecken; und/oder
die isolierende Beschichtungsschicht gebildet ist, um den Grenzabschnitt der Aktivmaterialschicht (42) und den ersten unbeschichteten Abschnitt (43; 146a) entlang der Wicklungsachsenrichtung um eine Breite von 0,3 mm bis 5 mm zu bedecken; und/oder
ein Ende der isolierenden Beschichtungsschicht innerhalb des Bereichs von -2 mm bis 2 mm entlang der Wicklungsachsenrichtung bezüglich eines Endes des Separators (12) angeordnet ist; und/oder
die isolierende Beschichtungsschicht von dem Separator (12) freigelegt ist; und/oder
eine Innenseite einer Schnittnut (63), die in dem ersten unbeschichteten Abschnitt (43; 146a) gebildet ist, und die isolierende Beschichtungsschicht um einen Abstand von 0,5 mm bis 2 mm voneinander beabstandet sind; und/oder
ein Ende der isolierenden Beschichtungsschicht in der Wicklungsachsenrichtung innerhalb des Bereichs von -2 mm bis +2 mm bezüglich eines unteren Endes der Schnittnut (63), die in dem ersten unbeschichteten Abschnitt (43; 146a) gebildet ist, angeordnet ist.

35. Elektrodenanordnung (A; 80) nach Anspruch 34,
wobei die zweite Elektrode (10; 11) mit einer Aktivmaterialschicht (42) in einem zweiten Aktivmaterialabschnitt beschichtet ist und ein Ende des zweiten Aktivmaterialabschnitts in der Wicklungsachsenrichtung die isolierende Beschichtungsschicht in einer Ansicht in einer radialen Richtung überlappt.

36. Elektrodenanordnung (A; 80) nach einem der vorhergehenden Ansprüche,

wobei der dritte Abschnitt (B2) und/oder der zweite Abschnitt (B3) jeweils zu mehreren separaten Laschen (61) gebildet ist, die einzeln biegbar sind,
wobei die Elektrodenanordnung (A; 80) einen Biegeflächenbereich (F) umfasst, der durch Biegen der mehreren separaten Laschen (61) entlang einer radialen Richtung der Elektrodenanordnung (A; 80) gebildet ist.

37. Elektrodenanordnung (A; 80) nach Anspruch 36,

wobei, wenn die Anzahl von separaten Laschen (61), die eine virtuelle Linie parallel zu der Wicklungsachsenrichtung an einer beliebigen radialen Stelle des Biegeflächenbereichs (F) basierend auf einer Kernmitte der Elektrodenanordnung (A; 80) treffen, als die Anzahl von überlappenden Schichten von separaten Laschen (61) an der jeweiligen radialen Stelle definiert ist,
wobei der Biegeflächenbereich (F) umfasst:

einen überlappungsschichtzahleinheitlichen Bereich (b1), in dem die Anzahl von überlappenden Schichten von separaten Laschen (61) einheitlich ist, insbesondere 10 oder mehr oder 10 bis 35, entlang einer radialen Richtung, und
einen überlappungsschichtzahlabnehmenden Bereich (b2), in dem die Anzahl von überlappenden Schichten von separaten Laschen (61) in der radialen Richtung kontinuierlich abnimmt.

38. Elektrodenanordnung (A; 80) nach Anspruch 37,
wobei eine radiale Größe des überlappungsschichtzahleinheitlichen Bereichs (b1) und des überlappungsschichtzahlabnehmenden Bereichs (b2) einer radialen Größe eines Bereichs entspricht, in dem die mehreren separaten Laschen (61) gebildet sind.

39. Elektrodenanordnung (A; 80) nach Anspruch 37 oder 38,

wobei die Elektrodenanordnung (A; 80) einen Laschenüberspringbereich (①), der keine separaten Laschen (61) aufweist, einen höhenvariablen Bereich ((2)), in dem separate Laschen (61) variable Höhen aufweisen, und einen höheneinheitlichen Bereich (③) umfasst, in dem separate Laschen (61) in der Reihenfolge entlang der radialen Richtung eine einheitliche Höhe aufweisen; und/oder
wobei eine radiale Position von der Wicklungsachse (Y) der Elektrodenanordnung (A; 80), an der der überlappungsschichtzahleinheitliche Bereich (b1) beginnt, einer radialen Position entspricht, an der der höhenvariable Bereich ((2)) beginnt.

40. Elektrodenanordnung (A; 80) nach einem der Ansprüche 37 bis 39,

   wobei die erste Elektrode (10; 11) eine positive Elektrode (10) ist und in dem überlappungsschichtzahleinheitlichen Bereich (b1) eine Überlappungsdicke von separaten Laschen (61) zwischen 100 µm und 875 µm liegt; und/oder
   wobei die erste Elektrode (10; 11) eine negative Elektrode (11) ist und in dem überlappungsschichtzahleinheitlichen Bereich (b1) eine Überlappungsdicke von separaten Laschen (61) zwischen 50 µm und 700 µm beträgt.

41. Elektrodenanordnung (A; 80) nach Anspruch 37,
   wobei ein Verhältnis einer radialen Größe des überlappungsschichtzahleinheitlichen Bereichs (b1) zu einer radialen Größe des überlappungsschichtzahleinheitlichen Bereichs (b1) und des überlappungsschichtzahlabnehmenden Bereichs (b2) 30 % bis 85 % beträgt.

42. Elektrodenanordnung (A; 80) nach einem der Ansprüche 36 bis 41, ferner aufweisend:

   einen Stromabnehmer (41), der an den Biegeflächenbereich (F) geschweißt ist,
   wobei ein Schweißbereich (W) des Stromabnehmers (41) den überlappungsschichtzahleinheitlichen Bereich (b1) um mindestens 50 % in der radialen Richtung der Elektrodenanordnung (A; 80) überlappt.

43. Elektrodenanordnung (A; 80) nach Anspruch 42,
   wobei sich der Schweißbereich (W) des Stromabnehmers (41) dergestalt erstreckt, dass er auch den überlappungsschichtzahlabnehmenden Bereich (b2) überlappt.

44. Elektrodenanordnung (A; 80) nach Anspruch 42 oder 43,
   wobei ein Rand des Stromabnehmers (41) auf dem Biegeflächenbereich (F) angeordnet ist, um ein Ende eines gebogenen Abschnitts der äußersten separaten Laschen (61) in der radialen Richtung der Elektrodenanordnung (A; 80) zu bedecken.

45. Elektrodenanordnung (A; 80) nach Anspruch 43 oder 44,
   wobei der Stromabnehmer (41) an den Biegeflächenbereich (F) geschweißt ist, insbesondere so, um eine Schweißfestigkeit von 196 kPa (2 kgf/cm2) oder mehr oder 392 kPa (4 kgf/cm2) oder mehr aufzuweisen.

46. Elektrodenanordnung (A; 80) nach einem der vorhergehenden Ansprüche,

   wobei der erste unbeschichtete Abschnitt (43; 146a) aus einer Metallfolie, insbesondere einer Aluminiumfolie, hergestellt ist,
   wobei die Metallfolie eine Dehnung von 1,5 % bis 3,0 % und eine Zugfestigkeit von 245 MPa (25 kgf/mm2) bis 343 MPa (35 kgf/mm2) aufweist.

47. Elektrodenanordnung (A; 80) nach Anspruch 46,
   wobei die erste Elektrode (10; 11) eine Wölbungslänge von weniger als 20 mm aufweist.

48. Elektrodenanordnung (A; 80) nach einem der vorhergehenden Ansprüche,

   wobei der erste Aktivmaterialabschnitt eine kurze Seite entlang der Wicklungsachsenrichtung und eine lange Seite entlang der Wicklungsrichtung (X) aufweist,
   wobei ein Größenverhältnis der kurzen Seite zu der langen Seite 1 % bis 4 % beträgt.

49. Elektrodenanordnung (A; 80) nach einem der vorhergehenden Ansprüche,
   wobei eine Höhe des zweiten Abschnitts (B3) in der radialen oder Wicklungsrichtung (X) kontinuierlich oder schrittweise abnimmt.

50. Elektrodenanordnung (A; 80) nach einem der vorhergehenden Ansprüche,

   wobei der zweite Abschnitt (B3) und der dritte Abschnitt (B2) zu mehreren separaten Laschen (61) gebildet sind, die einzeln biegbar sind,

wobei Breiten und/oder Höhen der separaten Laschen (61) in dem zweiten Abschnitt (B3) größer als diejenigen der separaten Laschen (61) in dem dritten Abschnitt (B2) sind.

51. Elektrodenanordnung (A; 80) nach einem der Ansprüche 4 bis 50, wobei der dritte Abschnitt (B2) einen Laschenüberspringbereich (①) umfasst, der keine separaten Laschen (61) aufweist.

52. Elektrodenanordnung (A; 80) nach Anspruch 51, wobei:

der dritte Abschnitt (B2) mehrere Laschenüberspringbereiche (①) umfasst, die optional Breiten aufweisen, die entlang der Wicklungsrichtung (X) zunehmen oder abnehmen; und/oder eine Höhe des Laschenüberspringbereichs (①) gleich einer Höhe des ersten Abschnitts (B1) oder des zweiten Abschnitts (B3) ist; und/oder die mehreren separaten Laschen (61) sich innerhalb eines voreingestellten Mittelwinkels, der zum Beispiel 20 Grad oder mehr beträgt, an der Wicklungsachse (Y) der Elektrodenanordnung (A; 80) befinden; und/oder die mehreren separaten Laschen (61) sich in mindestens zwei kreissektoralen Bereichen oder polygonalen Bereichen befinden, die in einer Draufsicht in der Wicklungsachsenrichtung der Elektrodenanordnung (A; 80) angeordnet sind.

53. Elektrodenanordnung (A; 80) nach einem der vorhergehenden Ansprüche,

wobei die zweite Elektrode (10; 11) einen zweiten Aktivmaterialabschnitt, der mit einer anderen Aktivmaterialschicht (42) beschichtet ist, und einen zweiten unbeschichteten Abschnitt (145) aufweist, der frei von der anderen Aktivmaterialschicht (42) an einem Rand der zweiten Elektrode (10; 11) ist, der sich entlang der Wicklungsrichtung (X) erstreckt, wobei der zweite unbeschichtete Abschnitt (145) konfiguriert ist, um eine elektrische Verbindung mit der ersten Elektrode (10; 11) bereitzustellen, wobei der zweite unbeschichtete Abschnitt (145) teilweise in mehrere separate Laschen (61) unterteilt ist, die einzeln biegbar sind, wobei die mehreren separaten Laschen (61) entlang einer radialen Richtung der Elektrodenanordnung (A; 80) gebogen sind, um einen Biegeflächenbereich (F) zu bilden.

54. Elektrodenanordnung (A; 80) aufweisend eine erste Elektrode (10; 11), eine zweite Elektrode (10; 11) und einen dazwischen angeordneten Separator (12),

wobei die erste Elektrode (10; 11), die zweite Elektrode (10; 11) und der Separator (12) um eine Wicklungsachse (Y) gewickelt sind, wobei die erste Elektrode (10; 11) einen ersten Aktivmaterialabschnitt, der mit einer Aktivmaterialschicht (42) beschichtet ist, und einen ersten unbeschichteten Abschnitt (43; 146a) aufweist, der frei von der Aktivmaterialschicht (42) ist, wobei sich der erste unbeschichtete Abschnitt (43; 146a) an einem Rand der ersten Elektrode (10; 11) befindet, der sich entlang einer Wicklungsrichtung (X) erstreckt, wobei der erste unbeschichtete Abschnitt (43; 146a) teilweise zu mehreren separaten Laschen (61) ausgebildet ist, die einzeln in einer radialen Richtung der Elektrodenanordnung (A; 80) biegbar sind, wobei eine Höhe eines äußersten Bereichs, der eine äußerste Wicklungswindung des ersten unbeschichteten Abschnitts (43; 146a) aufweist, kleiner als Höhen der mehreren separaten Laschen (61) ist, wobei die mehreren separaten Laschen (61) entlang der radialen Richtung in Richtung der Wicklungsachse (Y) der Elektrodenanordnung (A; 80) gebogen sind, um einen Biegeflächenbereich (F) zu bilden, und wobei der Biegeflächenbereich (F) einen überlappungsschichtzahleinheitlichen Bereich (b1), in dem die Anzahl von überlappenden Schichten der separaten Laschen (61) 10 oder mehr beträgt, und einen überlappungsschichtzahlabnehmenden Bereich (b2) umfasst, der benachbart zu dem überlappungsschichtzahleinheitlichen Bereich (b1) angeordnet ist und in dem die Anzahl von überlappenden Schichten der separaten Laschen (61) in der radialen Richtung weg von dem überlappungsschichtzahleinheitlichen Bereich (b1) abnimmt.

55. Elektrodenanordnung (A; 80) nach Anspruch 54,

wobei die Elektrodenanordnung (A; 80) einen Laschenüberspringbereich (①), der keine separaten Laschen (61) aufweist, einen höhenvariablen Bereich (②), in dem die separaten Laschen (61) Höhen aufweisen, die schrittweise entlang der radialen Richtung der Elektrodenanordnung (A; 80) zunehmen, und einen höheneinheitlichen Bereich (③) umfasst, in dem die separaten Laschen (61) eine einheitliche Höhe entlang der radialen Richtung der Elektrodenanordnung (A; 80) aufweisen,

wobei von einer Wicklungsachse (Y) der Elektrodenanordnung (A; 80) eine radiale Position, an der der überlappungsschichtzahleinheitliche Bereich (b1) beginnt, einer radialen Position entspricht, an der der höhenvariable Bereich ((2)) beginnt.

56. Elektrodenanordnung (A; 80) nach Anspruch 55,

wobei ein innerster Bereich des ersten unbeschichteten Abschnitts (43; 146a) nicht zu separaten Laschen (61) gebildet ist; und/oder

wobei ein Verhältnis einer radialen Größe des überlappungsschichtzahleinheitlichen Bereichs (b1) zu einer radialen Größe des überlappungsschichtzahleinheitlichen Bereichs (b1) und des überlappungsschichtzahlabnehmenden Bereichs (b2) 30 % bis 85 % beträgt; und/oder

wobei ein Verhältnis einer Länge einer Elektrodenfläche in der Wicklungsrichtung (X), die dem Laschenüberspringbereich (①) entspricht, zu einer Gesamtlänge der ersten Elektrode (10; 11) in der Wicklungsrichtung (X) 1 % bis 30 % beträgt; und/oder

wobei ein Verhältnis einer Länge einer Elektrodenfläche in der Wicklungsrichtung (X), die dem höhenvariablen Bereich ((2)) entspricht, zu einer Gesamtlänge der ersten Elektrode (10; 11) in der Wicklungsrichtung (X) 1 % bis 40 % beträgt; und/oder

wobei ein Verhältnis einer Länge einer Elektrodenfläche in der Wicklungsrichtung (X), die dem höheneinheitlichen Bereich (③) entspricht, zu einer Gesamtlänge der ersten Elektrode (10; 11) in der Wicklungsrichtung (X) 50 % bis 90 % beträgt.

57. Elektrodenanordnung (A; 80) nach einem der Ansprüche 54 bis 56,

wobei in dem Bereich, der in die mehreren separaten Laschen (61) unterteilt ist, mindestens eines ausgewählt aus Breiten der separaten Laschen (61) in der Wicklungsrichtung (X), Höhen derselben in der Wicklungsachsenrichtung und einem unteren Innenwinkel (θ) derselben entlang einer Richtung parallel zu der Wicklungsrichtung (X) schrittweise zunimmt; und/oder

wobei eine Höhe des innersten Bereichs des ersten unbeschichteten Abschnitts (43; 146a) oder eines äußersten Bereichs des ersten unbeschichteten Abschnitts (43; 146a) kleiner als Höhen der mehreren separaten Laschen (61) ist; und/oder

wobei die mehreren separaten Laschen (61) in Richtung der Wicklungsachse (Y) der Elektrodenanordnung (A; 80) gebogen sind und mindestens 90 % oder mehr, basierend auf einer radialen Größe, eines mittleren zylindrischen Bereichs, der von der Elektrodenanordnung (A; 80) umgeben ist, nicht von dem gebogenen Abschnitt der separaten Laschen (61) bedeckt ist.

58. Elektrodenanordnung (A; 80) aufweisend eine positive Elektrode (10), eine negative Elektrode (11) und einen dazwischen angeordneten Separator (12),

wobei die positive Elektrode (10), die negative Elektrode (11) und der Separator (12) um eine Wicklungsachse (Y) gewickelt sind,

wobei die positive Elektrode (10) einen positiven Aktivmaterialabschnitt, der mit einem positiven Aktivmaterial beschichtet ist, und einen ersten unbeschichteten Abschnitt (43; 146a) aufweist, der frei von dem positiven Aktivmaterial ist, wobei sich der erste unbeschichtete Abschnitt (43; 146a) an einem Rand der positiven Elektrode (10) befindet, der sich entlang einer Wicklungsrichtung (X) der Elektrodenanordnung (A; 80) erstreckt,

wobei der erste unbeschichtete Abschnitt (43; 146a) konfiguriert ist, um eine elektrische Verbindung mit der positiven Elektrode (10) bereitzustellen,

wobei der erste unbeschichtete Abschnitt (43; 146a) mehrere separate Laschen (61) aufweist, die einzeln in einer radialen Richtung der Elektrodenanordnung (A; 80) biegbar sind,

wobei eine Höhe eines äußersten Bereichs, der eine äußerste Wicklungswindung des ersten unbeschichteten Abschnitts (43; 146a) aufweist, kleiner als Höhen der mehreren separaten Laschen (61) ist,

wobei die mehreren separaten Laschen (61) in Richtung der Wicklungsachse (Y) gebogen sind, um einen Biegeflächenbereich (F) zu bilden,

wobei der Biegeflächenbereich (F) einen überlappungsschichtzahleinheitlichen Bereich (b1), in dem die Anzahl von überlappenden Schichten der separaten Laschen (61) einheitlich ist, und einen überlappungsschichtzahlabnehmenden Bereich (b2) umfasst, der benachbart zu dem überlappungsschichtzahleinheitlichen Bereich (b1) angeordnet ist und in dem die Anzahl von überlappenden Schichten der separaten Laschen (61) in einer Richtung weg von dem überlappungsschichtzahleinheitlichen Bereich (b1) abnimmt, und
wobei eine kombinierte Dicke der überlappenden Schichten der separaten Laschen (61) in dem überlappungsschichtzahleinheitlichen Bereich (b1) zwischen 100 μm und 875 μm beträgt.

59. Elektrodenanordnung (A; 80) nach Anspruch 58,
wobei eine Höhe eines innersten Bereichs, der eine innerste Wicklungswindung des ersten unbeschichteten Abschnitts (43; 146a) aufweist, kleiner als Höhen der mehreren separaten Laschen (61) ist.

60. Elektrodenanordnung (A; 80) aufweisend eine positive Elektrode (10), eine negative Elektrode (11) und einen dazwischen angeordneten Separator (12),

wobei die positive Elektrode (10), die negative Elektrode (11) und der Separator (12) um eine Wicklungsachse (Y) gewickelt sind,
wobei die negative Elektrode (11) einen negativen Aktivmaterialabschnitt, der mit einem negativen Aktivmaterial beschichtet ist, und einen unbeschichteten Abschnitt aufweist, der frei von dem negativen Aktivmaterial ist,
wobei sich der unbeschichtete Abschnitt an einem Rand der negativen Elektrode (11) befindet, der sich entlang einer Wicklungsrichtung (X) erstreckt,
wobei der unbeschichtete Abschnitt konfiguriert ist, um eine elektrische Verbindung mit der negativen Elektrode (11) bereitzustellen,
wobei der unbeschichtete Abschnitt mehrere separate Laschen (61) aufweist, die einzeln in einer radialen Richtung biegbar sind,
wobei eine Höhe eines äußersten Bereichs, der eine äußerste Wicklungswindung des unbeschichteten Abschnitts aufweist, kleiner als Höhen der mehreren separaten Laschen (61) ist,
wobei die mehreren separaten Laschen (61) in Richtung der Wicklungsachse (Y) gebogen sind, um einen Biegeflächenbereich (F) zu bilden,
wobei der Biegeflächenbereich (F) einen überlappungsschichtzahleinheitlichen Bereich (b1), in dem die Anzahl von überlappenden Schichten der separaten Laschen (61) einheitlich ist, und einen überlappungsschichtzahlabnehmenden Bereich (b2) umfasst, der benachbart zu dem überlappungsschichtzahleinheitlichen Bereich (b1) angeordnet ist und in dem die Anzahl von überlappenden Schichten der separaten Laschen (61) in einer Richtung weg von dem überlappungsschichtzahleinheitlichen Bereich (b1) abnimmt, und
wobei eine kombinierte Dicke der überlappenden Schichten der separaten Laschen (61) in dem überlappungsschichtzahleinheitlichen Bereich (b1) zwischen 50 μm und 700 μm beträgt.

61. Elektrodenanordnung (A; 80) nach Anspruch 60,
wobei eine Höhe eines innersten Bereichs, der eine innerste Wicklungswindung des unbeschichteten Abschnitts aufweist, kleiner als Höhen der mehreren separaten Laschen (61) ist.

62. Batterie, aufweisend:

die Elektrodenanordnung (A; 80) nach einem der Ansprüche 1 bis 52;
ein Batteriegehäuse (142), das eine offene erste Endfläche und eine zweite Endfläche gegenüber der ersten Endfläche aufweist, wobei die Elektrodenanordnung (A; 80) in dem Batteriegehäuse (142) aufgenommen ist und das Batteriegehäuse (142) elektrisch mit einer der ersten Elektrode (10; 11) und der zweiten Elektrode (10; 11) der Elektrodenanordnung (A; 80) verbunden ist;
einen Verschlusskörper (143), der konfiguriert ist, um die offene erste Endfläche des Batteriegehäuses (142) zu verschließen; und
einen Anschluss (172), der elektrisch mit der anderen der ersten Elektrode (10; 11) und der zweiten Elektrode (10; 11) verbunden ist, wobei der Anschluss (172) eine Fläche aufweist, die zur Außenseite des Batteriegehäuses (142) freigelegt ist,
wobei das Batteriegehäuse (142) einen Sickenabschnitt (147) aufweist, der in einem Bereich benachbart zu der ersten Endfläche nach innen gedrückt ist, wobei der Sickenabschnitt (147) dem zweiten Abschnitt (B3) zugewandt ist und um einen vorbestimmten Abstand von demselben beabstandet ist.

63. Batterie nach Anspruch 62,
wobei eine Eindrücktiefe (D1) des Sickenabschnitts (147) gleich oder größer als ein Abstand (D2) von dem Innenumfang des Batteriegehäuses (142) zu einer Grenze zwischen dem zweiten Abschnitt (B3) und dem dritten Abschnitt (B2) ist.

64. Batterie nach Anspruch 62 oder 63, ferner aufweisend:

einen Stromabnehmer (41), der elektrisch mit dem dritten Abschnitt (B2) gekoppelt ist; und
einen Isolator (146), der konfiguriert ist, um den Stromabnehmer (41) zu bedecken und einen Rand aufweist, der zwischen dem Innenumfang des Sickenabschnitts (147) und dem Stromabnehmer (41) angeordnet und fixiert ist.

65. Batterie nach Anspruch 64,

wobei ein Durchmesser des Stromabnehmers (41) kleiner als ein minimaler Innendurchmesser des Innenumfangs des Sickenabschnitts (147) ist und ein Durchmesser des Stromabnehmers (41) gleich oder größer als ein äußerster Durchmesser des dritten Abschnitts (B2) ist; und/oder
wobei der Stromabnehmer (41) höher in der Wicklungsachsenrichtung als der Sickenabschnitt (147) angeordnet ist.

66. Batterie nach einem der Ansprüche 62 bis 65,
wobei der Verschlusskörper (143) eine Kappe (143a), die beispielsweise den Anschluss (172) bildet, die konfiguriert ist, die offene erste Endseite des Batteriegehäuses (142) zu verschließen, eine Dichtung (143b; 178b), die zwischen einem Rand der Kappe (143a) und dem offenen Ende des Batteriegehäuses (142) angeordnet ist, und einen Crimpabschnitt (148) aufweist, der gebogen ist und sich in das Batteriegehäuse (142) erstreckt und konfiguriert ist, um den Rand der Kappe (143a) zusammen mit der Dichtung (143b; 178b) zu umgeben und zu fixieren.

67. Batterie nach Anspruch 62 bis 66, ferner aufweisend:

einen ersten Stromabnehmer (144), der elektrisch mit dem ersten unbeschichteten Abschnitt (43; 146a) verbunden ist,
wobei der Anschluss (172) ein Durchführungsanschluss ist, der in ein Perforationsloch eingesetzt ist, das in der zweiten Endfläche des Batteriegehäuses (142) ausgebildet ist,
wobei der Durchführungsanschluss von dem Batteriegehäuse (142) isoliert ist und mit dem ersten Stromabnehmer (144) elektrisch verbunden ist, beispielsweise durch einen Isolator (146), der zwischen einer Innenfläche eines Bodenabschnitts des Batteriegehäuses (142) und einer oberen Fläche des ersten Stromabnehmers (144) angeordnet ist, um die Innenfläche des Bodenabschnitts des Batteriegehäuses (142) und den ersten Stromabnehmer (144) voneinander elektrisch zu isolieren.

68. Batterie nach Anspruch 67,

wobei der Isolator (146) eine Dicke aufweist, die einem Abstand zwischen der Innenfläche des Bodenabschnitts des Batteriegehäuses (142) und der oberen Fläche des ersten Stromabnehmers (144) entspricht, und in engem Kontakt mit der Innenfläche des Bodenabschnitts des Batteriegehäuses (142) und der oberen Fläche des ersten Stromabnehmers (144) steht; und/oder
wobei der Anschluss (172) einen ebenen Abschnitt (172c) an einem unteren Ende davon aufweist, der Isolator (146) eine Öffnung zum Freilegen des ebenen Abschnitts (172c) aufweist und der ebene Abschnitt (172c) durch die Öffnung an den ersten Stromabnehmer (144) geschweißt ist.

69. Batterie nach Anspruch 62 bis 68,
wobei die zweite Elektrode (10; 11) einen zweiten Aktivmaterialabschnitt, der mit einer Aktivmaterialschicht (42) beschichtet ist, und einen zweiten unbeschichteten Abschnitt (145) aufweist, der nicht mit einer Aktivmaterialschicht (42) entlang der Wicklungsrichtung (X) beschichtet ist, die zweite Elektrode (10; 11) eine erste Polarität aufweist, zumindest ein Teil des zweiten unbeschichteten Abschnitts (145) selbst als eine Elektrodenlasche definiert ist und die Batterie ferner einen zweiten Stromabnehmer (145; 176) aufweist, der elektrisch mit dem zweiten unbeschichteten Abschnitt (145) verbunden ist und einen Rand aufweist, der zumindest teilweise mit einer Seitenwand des Batteriegehäuses (142) gekoppelt ist.

70. Batterie nach einem der Ansprüche 67 bis 69,

wobei die zweite Elektrode (10; 11) einen zweiten Aktivmaterialabschnitt, der mit einem zweiten Aktivmaterial beschichtet ist, und einen zweiten unbeschichteten Abschnitt (145) aufweist, der frei von dem zweiten Aktivmaterial ist, wobei sich der zweite unbeschichtete Abschnitt (145) an einem Rand der zweiten Elektrode (10;

11) befindet, der sich entlang der Wicklungsrichtung (X) erstreckt,

wobei der zweite unbeschichtete Abschnitt (145) eine elektrische Verbindung mit der zweiten Elektrode (10; 11) bereitstellt,

wobei die Batterie ferner einen zweiten Stromabnehmer (145; 176) aufweist, der elektrisch mit dem zweiten unbeschichteten Abschnitt (145) verbunden ist und einen Rand aufweist, der elektrisch mit einer Seitenwand des Batteriegehäuses (142) gekoppelt ist, die sich zwischen der ersten Endfläche und der zweiten Endfläche erstreckt,

wobei der erste Stromabnehmer (144) einen Außendurchmesser aufweist, der gleich oder größer als derjenige des zweiten Stromabnehmers (145; 176) ist.

71. Batterie nach Anspruch 70,

wobei der erste Stromabnehmer (144) und der zweite Stromabnehmer (145; 176) jeweils an den ersten unbeschichteten Abschnitt (43; 146a) und den zweiten unbeschichteten Abschnitt (145) entlang einer radialen Richtung der Elektrodenanordnung (A; 80) geschweißt sind, um ein jeweiliges Schweißmuster zu bilden,

wobei eine Länge des Schweißmusters des ersten Stromabnehmers (144) länger als eine Länge des Schweißmusters des zweiten Stromabnehmers (145; 176) ist.

72. Batterie nach Anspruch 71,

wobei das Schweißmuster des ersten Stromabnehmers (144) und das Schweißmuster des zweiten Stromabnehmers (145; 176) im Wesentlichen im gleichen Abstand von der Wicklungsachse (Y) der Elektrodenanordnung (A; 80) angeordnet sind.

73. Batterie nach einem der Ansprüche 70 bis 72,

wobei das Batteriegehäuse (142) einen Sickenabschnitt (147) aufweist, der benachbart zu der ersten Endfläche nach innen gedrückt ist,

wobei der Rand des zweiten Stromabnehmers (145; 176) elektrisch mit dem Sickenabschnitt (147) verbunden, insbesondere geschweißt, ist.

74. Batterie nach Anspruch 73,

wobei ein Bereich des zweiten Stromabnehmers (145; 176) in elektrischem Kontakt mit dem zweiten unbeschichteten Abschnitt (145) von dem Sickenabschnitt (147) in einer Draufsicht in der Wicklungsachsenrichtung umgeben ist.

75. Batterie nach Anspruch 73 oder 74,

wobei die Batterie eine Kappe (143a) mit einem Rand, der von dem Sickenabschnitt (147) getragen wird und keine Polarität aufweist, eine Dichtung (143b; 178b), die zwischen dem Rand der Kappe (143a) und dem offenen Ende des Batteriegehäuses (142) angeordnet ist, und einen Crimpabschnitt (148) aufweist, der gebogen ist und sich in das offene Ende des Batteriegehäuses (142) erstreckt und konfiguriert ist, um den Rand der Kappe (143a) zusammen mit der Dichtung (143b; 178b) zu umgeben und zu fixieren, und der Rand des zweiten Stromabnehmers (145; 176) zwischen dem Sickenabschnitt (147) und der Dichtung (143b; 178b) durch den Crimpabschnitt (148) angeordnet und fixiert ist.

76. Batterie nach einem der Ansprüche 62 bis 75,

wobei die Batterie ferner einen Stromabnehmer (41) aufweist, der einen Schweißbereich (W) aufweist, der an einem überlappungsschichtzahleinheitlichen Bereich (b1) des ersten unbeschichteten Bereichs geschweißt ist, und

wobei:

die erste Elektrode (10; 11) eine positive Elektrode (10) ist und die überlappenden Schichten von separaten Laschen (61) im Schweißbereich (W) eine Dicke von 100 $\mu$m bis 875 $\mu$m aufweisen; oder die erste Elektrode (10; 11) eine negative Elektrode (11) ist und die überlappenden Schichten von separaten Laschen (61) in dem Schweißbereich (W) eine Dicke von 50 $\mu$m bis 700 $\mu$m aufweisen.

77. Batterie, aufweisend:

die Elektrodenanordnung (A; 80) nach einem der Ansprüche 54 bis 57;

ein Batteriegehäuse (142), das ein offenes Ende und einen Bodenabschnitt gegenüber diesem aufweist, wobei die Elektrodenanordnung (A; 80) in dem Batteriegehäuse (142) aufgenommen ist, wobei das Batteriegehäuse (142) elektrisch mit einer der ersten Elektrode (10; 11) und der zweiten Elektrode (10; 11) verbunden ist;
einen Verschlusskörper (143), der konfiguriert ist, um die offene erste Endfläche des Batteriegehäuses (142) zu verschließen; und
einen Anschluss (172), der elektrisch mit der anderen der ersten Elektrode (10; 11) und der zweiten Elektrode (10; 11) verbunden ist und eine Fläche aufweist, die zur Außenseite des Batteriegehäuses (142) freigelegt ist.

78. Batterie, aufweisend:

die Elektrodenanordnung (A; 80) nach Anspruch 58;
ein Batteriegehäuse (142), das eine offene erste Endfläche und eine zweite Endfläche gegenüber der ersten Endfläche aufweist, wobei die Elektrodenanordnung (A; 80) in dem Batteriegehäuse (142) aufgenommen ist und das Batteriegehäuse (142) elektrisch mit einer der ersten Elektrode (10; 11) und der zweiten Elektrode (10; 11) verbunden ist;
einen Verschlusskörper (143), der konfiguriert ist, um die offene erste Endfläche des Batteriegehäuses (142) zu verschließen; und
einen Anschluss (172), der elektrisch mit der anderen der ersten Elektrode (10; 11) und der zweiten Elektrode (10; 11) verbunden ist und eine Fläche aufweist, die zur Außenseite des Batteriegehäuses (142) freigelegt ist.

79. Batterie nach Anspruch 78,

wobei die Batterie ferner einen Stromabnehmer (41) aufweist, der an den überlappungsschichtzahleinheitlichen Bereich (b1) derart geschweißt ist, dass mindestens ein Teil eines Schweißbereichs (W) des Stromabnehmers (41) den überlappungsschichtzahleinheitlichen Bereich (b1) überlappt, und
wobei eine kombinierte Dicke der überlappenden Schichten von separaten Laschen (61) in dem Schweißbereich (W) 100 $\mu$m bis 875 $\mu$m beträgt.

80. Batterie, aufweisend:

die Elektrodenanordnung (A; 80) nach Anspruch 60;
ein Batteriegehäuse (142), das eine offene erste Endfläche und eine zweite Endfläche gegenüber der ersten Endfläche aufweist, wobei die Elektrodenanordnung (A; 80) in dem Batteriegehäuse (142) aufgenommen ist und das Batteriegehäuse (142) elektrisch mit einer der ersten Elektrode (10; 11) und der zweiten Elektrode (10; 11) verbunden ist;
einen Verschlusskörper (143), der konfiguriert ist, um die offene erste Endfläche des Batteriegehäuses (142) zu verschließen; und
einen Anschluss (172), der elektrisch mit der anderen der ersten Elektrode (10; 11) und der zweiten Elektrode (10; 11) verbunden ist und eine Fläche aufweist, die zur Außenseite des Batteriegehäuses (142) freigelegt ist.

81. Batterie nach Anspruch 80,

wobei die Batterie ferner einen Stromabnehmer (41) aufweist, der an den überlappungsschichtzahleinheitlichen Bereich (b1) derart geschweißt ist, dass mindestens ein Teil eines Schweißbereichs (W) des Stromabnehmers (41) den überlappungsschichtzahleinheitlichen Bereich (b1) überlappt, und
wobei die überlappenden Schichten von separaten Laschen (61) in dem Schweißbereich (W) eine Dicke von 50 $\mu$m bis 700 $\mu$m aufweisen.

82. Batteriepack (300), aufweisend mehrere Batterien (301) nach einem der Ansprüche 62 bis 81.

83. Batteriepack (300) nach Anspruch 82,
wobei ein Verhältnis von Durchmesser zu Höhe der Batterie größer als 0,4 ist.

84. Batteriepack (300) nach Anspruch 82 oder 83,
wobei die Batterie einen Formfaktor von 46110, 4875, 48110, 4880 oder 4680 aufweist.

85. Batteriepack (300) nach einem der Ansprüche 82 bis 84,
wobei die mehreren Batterien (301) in einer vorbestimmten Anzahl von Spalten angeordnet sind, so dass ein Anschluss (172) jeder Batterie und eine Außenfläche eines Bodenabschnitts eines Batteriegehäuses (142) jeder Batterie nach oben gewandt sind.

86. Batteriepack (300) nach Anspruch 85, ferner aufweisend:

mehrere Sammelschienen (210), die konfiguriert sind, um die mehreren Batterien (301) in Reihe und parallel zu verbinden,
wobei die mehreren Sammelschienen (21) an einem oberen Abschnitt der mehreren Batterien (301) angeordnet sind, und
jede der Sammelschienen (210) einen Körperabschnitt (211), der konfiguriert ist, um sich zwischen den Anschlüssen (172) benachbarter Batterien zu erstrecken; mehrere erste Sammelschienenanschlüsse (213), die konfiguriert sind, um sich von einer Seite des Körperabschnitts (211) zu erstrecken und elektrisch mit einem Anschluss (172) einer Batterie gekoppelt sind, die sich an einer Seite befindet; und mehrere zweite Sammelschienenanschlüsse (213) aufweist, die konfiguriert sind, um sich von der anderen Seite des Körperabschnitts (211) zu erstrecken und elektrisch mit einer Außenfläche des Bodens des Batteriegehäuses (142) einer Batterie gekoppelt sind, die sich an der anderen Seite befindet.

87. Fahrzeug (V), aufweisend den Batteriepack (300) nach einem der Ansprüche 82 bis 86.

**Revendications**

1. Ensemble d'électrodes (A ; 80) comprenant une première électrode (10 ; 11), une deuxième électrode (10 ; 11) et un séparateur (12) interposé entre celles-ci,

dans lequel la première électrode (10 ; 11), la deuxième électrode (10 ; 11) et le séparateur (12) sont enroulés autour d'un axe d'enroulement (Y),
dans lequel la première électrode (10 ; 11) inclut une première partie de matériau actif revêtue d'un matériau actif et une première partie non revêtue (43 ; 146a) exempte d'une couche de matériau actif (42), la première partie non revêtue (43 ; 146a) étant à un bord de la première électrode (10 ; 11) le long d'une direction d'enroulement (X) de l'ensemble d'électrodes (A ; 80),
dans lequel la première partie non revêtue (43 ; 146a) est configurée pour fournir une connexion électrique à la première électrode (10 ; 11),
dans lequel la première partie non revêtue (43 ; 146a) inclut une première partie (B1) incluant une spire la plus intérieure, une deuxième partie (B3) incluant une spire la plus extérieure et une troisième partie (B2) interposée entre la première partie (B1) et la deuxième partie (B3),
dans lequel une hauteur de la deuxième partie (B3) est inférieure à une hauteur de la troisième partie (B2), les hauteurs étant déterminées dans une direction d'axe d'enroulement parallèle à l'axe d'enroulement (Y).

2. Ensemble d'électrodes (A ; 80) selon la revendication 1,
dans lequel une hauteur de la première partie (B1) est inférieure à la hauteur de la troisième partie (B2).

3. Ensemble d'électrodes (A ; 80) selon la revendication 1 ou 2,

dans lequel la deuxième partie (B3) est définie comme étant une languette d'électrode en état d'être pliée le long d'une direction radiale de l'ensemble d'électrodes (A ; 80) ; et/ou
dans lequel la troisième partie (B2) est définie comme étant la languette d'électrode en état d'être pliée le long d'une direction radiale de l'ensemble d'électrodes (A ; 80).

4. Ensemble d'électrodes (A ; 80) selon l'une quelconque des revendications 1 à 3,
dans lequel la troisième partie (B2) est au moins partiellement formée en languettes distinctes multiples (61) qui sont pliables individuellement.

5. Ensemble d'électrodes (A ; 80) selon la revendication 4, dans lequel une largeur est déterminée dans la direction d'enroulement (X), dans lequel la largeur d'une ou de plusieurs ou de chacune des languettes distinctes multiples (61) :

diminue dans la direction de l'axe d'enroulement en s'éloignant de la couche de matériau actif (42) ; ou

diminue, puis augmente dans la direction de l'axe d'enroulement en s'éloignant de la couche de matériau actif (42) ; ou

augmente, puis diminue dans la direction de l'axe d'enroulement en s'éloignant de la couche de matériau actif (42) ; ou

augmente, puis reste constante le long de la direction de l'axe d'enroulement en s'éloignant de la couche de matériau actif (42) ; ou

diminue, puis reste constante le long de la direction de l'axe d'enroulement en s'éloignant de la couche de matériau actif (42) ; ou

reste inchangée le long de la direction de l'axe d'enroulement.

6. Ensemble d'électrodes (A ; 80) selon la revendication 4 ou 5, dans lequel

la largeur d'au moins une des languettes distinctes multiples (61) à une position la plus extérieure est inférieure à la largeur à une position la plus intérieure dans la direction de l'axe d'enroulement ; ou

la largeur d'au moins une des languettes distinctes multiples (61) à une position la plus extérieure est égale à la largeur à une position la plus intérieure dans la direction de l'axe d'enroulement.

7. Ensemble d'électrodes (A ; 80) selon l'une quelconque des revendications 4 à 6,

dans lequel les languettes distinctes multiples (61) sont d'une forme permettant de former des angles internes proches de la couche de matériau actif (42) qui augmentent individuellement ou par groupes dans la direction d'enroulement (X) ; et/ou

dans lequel les angles internes des languettes distinctes multiples (61) augmentent individuellement ou par groupes dans la plage de 60 à 85 degrés dans une direction parallèle à la direction d'enroulement (X) ;

dans lequel l'angle interne ($\theta$) est un angle entre une ligne droite s'étendant d'une partie inférieure (63a) d'une rainure découpée (63) et une ligne droite s'étendant d'une partie latérale (63b) de la languette (61).

8. Ensemble d'électrodes (A ; 80) selon la revendication 4 ou 6,

dans lequel la largeur d'une ou de plusieurs ou de chacune des languettes distinctes multiples (61) diminue dans la direction de l'axe d'enroulement en s'éloignant de la couche de matériau actif (42),

dans lequel un angle interne $\theta$ d'une languette distincte (61) située à une position correspondant à une distance radiale r de l'axe d'enroulement (Y) de l'ensemble d'électrodes (A ; 80) satisfait à l'équation suivante :

$$\cos^{-1}\left(\frac{0.5 * D}{r}\right) \leq \theta \leq \tan^{-1}\left(\frac{2 * H * \tan\theta_{refer}}{2 * H - p * \tan\theta_{refer}}\right)$$

dans lequel D est une largeur de la languette distincte (61) dans la direction d'enroulement (X), r est une distance radiale de l'axe d'enroulement (Y) d'une languette distincte respective (61), H est une hauteur de la languette distincte (61) et p est un pas de séparation de la languette distincte (61).

9. Ensemble d'électrodes (A ; 80) selon l'une quelconque des revendications 4 à 8,

dans lequel une ou plusieurs ou chacune des languettes distinctes multiples (61) ont un côté (63b) qui est convexe vers l'extérieur ou convexe vers l'intérieur ; et/ou

dans lequel une ou plusieurs ou chacune des languettes distinctes multiples (61) ont un coin arrondi sur un côté extérieur respectif.

10. Ensemble d'électrodes (A ; 80) selon la revendication 7,

dans lequel la rainure découpée (63) est formée entre chacune des languettes distinctes (61) adjacentes dans la direction d'enroulement (X),

dans lequel des coins de la rainure découpée (63) sont arrondis.

11. Ensemble d'électrodes (A ; 80) selon la revendication 10,

dans lequel les coins de la rainure découpée (63) sont arrondis avec un rayon de courbure compris entre 0 et 0,1 mm, ou entre 0,01 mm et 0,05 mm.

**12.** Ensemble d'électrodes (A ; 80) selon la revendication 10 ou 11,

dans lequel un côté intérieur de la rainure découpée (63) entre les coins est plat ; et/ou
dans lequel un côté intérieur de la rainure découpée (63) est espacé de la couche de matériau actif (42) d'une distance fixe, plus particulièrement entre 0,2 mm et 4 mm.

**13.** Ensemble d'électrodes (A ; 80) selon l'une quelconque des revendications 10 à 12,

dans lequel les languettes distinctes multiples (61) sont espacées l'une de l'autre dans la direction d'enroulement (X) d'un pas de séparation (P),
dans lequel le pas de séparation (P) est compris entre 0,05 mm et 1,00 mm.

**14.** Ensemble d'électrodes (A ; 80) selon l'une quelconque des revendications 10 à 13,
dans lequel les languettes multiples (61) sont faites d'une feuille d'aluminium.

**15.** Ensemble d'électrodes (A ; 80) selon l'une quelconque des revendications 10 à 14,
dans lequel une ou plusieurs ou chacune des languettes multiples (61) sont pliées à une position située sur un côté intérieur de la rainure découpée (63) ou décalées vers l'extérieur depuis un côté intérieur de la rainure découpée adjacente (63) de 1 mm ou moins.

**16.** Ensemble d'électrodes (A ; 80) selon l'une quelconque des revendications 4 à 15,

dans lequel une ou plusieurs ou chacune des languettes distinctes multiples (61) ont des partie latérales définissant des limites de la languette distincte respective (61) dans la direction d'enroulement (X),
dans lequel :

les partie latérales sont fournies de façon à former, après avoir plié la languette distincte respective (61), un angle central égal ou inférieur à 45 degrés à l'axe d'enroulement (Y) de l'ensemble d'électrodes (A ; 80) ; et/ou
les partie latérales sont fournies de façon à former, après avoir plié la languette distincte respective (61), des angles centraux à l'axe d'enroulement (Y) de l'ensemble d'électrodes (A ; 80) qui restent constants.

**17.** Ensemble d'électrodes (A ; 80) selon les revendications 4 à 16,

dans lequel pour une ou plusieurs ou chacune des languettes distinctes multiples (61), D(r) satisfait à la formule suivante :

$$1 \leq D(r) \leq (2 \cdot \pi\, r\, /\, 360^{\circ}) \cdot 45^{\circ}$$

dans lequel r est une distance de la languette distincte respective (61) depuis l'axe d'enroulement (Y) de l'ensemble d'électrodes (A ; 80) dans la direction radiale, et D(r) est une largeur de la languette distincte respective (61) dans la direction d'enroulement (X).

**18.** Ensemble d'électrodes (A ; 80) selon la revendication 17,
dans lequel D(r) augmente à mesure que r augmente, en continu ou par étapes ; ou

dans lequel D(r) diminue à mesure que r augmente, en continu ou par étapes ; ou
dans lequel D(r) augmente, puis diminue à mesure que r augmente, en continu ou par étapes.

**19.** Ensemble d'électrodes (A ; 80) selon la revendication 4 à 18,

dans lequel les largeurs des languettes distinctes multiples (61) dans la direction d'enroulement (X) augmentent à un rythme constant dans la direction d'enroulement (X) de l'ensemble d'électrodes (A ; 80) ; et/ou
dans lequel les largeurs des languettes distinctes multiples (61) augmentent en fonction d'une distance r de l'axe d'enroulement (Y) de l'ensemble d'électrodes (A ; 80) dans la direction radiale ; et/ou

dans lequel les largeurs des languettes distinctes multiples (61) changent dans une plage de 1 mm à 11 mm.

**20.** Ensemble d'électrodes (A ; 80) selon l'une quelconque des revendications précédentes,
dans lequel dans au moins une région partielle de la deuxième partie (B3) et/ou la troisième partie (B2) de la première partie non revêtue (43 ; 146a), la hauteur de la première partie non revêtue (43 ; 146a), plus particulièrement les languettes multiples (61) de celle-ci, change en continu ou par étapes dans la direction d'enroulement (X).

**21.** Ensemble d'électrodes (A ; 80) selon l'une quelconque des revendications précédentes,

dans lequel la troisième partie (B2) est divisée en multiples régions le long de la direction d'enroulement (X),
dans lequel la hauteur de la première partie non revêtue (43 ; 146a) diffère dans deux régions différentes, et plus particulièrement les hauteurs des languettes distinctes multiples (61) diffèrent dans deux régions différentes.

**22.** Ensemble d'électrodes (A ; 80) selon l'une quelconque des revendications 4 à 21, dans lequel la première partie non revêtue (43 ; 146a) inclut :

une région de hauteur variable (②) dans laquelle les hauteurs des languettes distinctes (61) augmentent par étapes d'une première hauteur ($h_1$) à une (N-1)-ème hauteur $h_{N-1}$, dans lequel N est un indice de hauteur et un nombre naturel de 2 ou plus, plus particulièrement 2 à 30 ; et
une région de hauteur uniforme (②) dans laquelle les hauteurs des languettes distinctes (61) sont maintenues inchangées à une N-ème hauteur $h_N$, dans lequel $h_N$ est supérieur à $h_{N-1}$.

**23.** Ensemble d'électrodes (A ; 80) selon la revendication 22,

dans lequel des languettes distinctes (61) ayant une hauteur identique $h_k$ sont disposées dans une même spire autour de l'axe d'enroulement (Y) ; et/ou
dans lequel au moins 90 % d'une partie centrale creuse de l'ensemble d'électrodes (A ; 80), par rapport à une dimension dans la direction radiale, reste non couverte par les languettes distinctes (61) après le pliage ; et/ou
dans lequel $r_k$ indique une distance de l'axe d'enroulement (Y) dans une direction radiale et $r_c$ indique un rayon d'une partie creuse centrale de l'ensemble d'électrodes (A ; 80), et $h_k$ indique la hauteur de languettes distinctes (61) situées à $r_k$, $h_k$ et $r_k$ sont tels qu'ils satisfont à :

$$2 \text{ mm} \leq h_k \leq r_k - \alpha \, r_c$$

dans lequel $\alpha$ est compris entre 0,90 et 1.

**24.** Ensemble d'électrodes (A ; 80) selon l'une quelconque des revendications 4 à 23, dans lequel l'ensemble d'électrodes (A ; 80) inclut :

une région de saut de languettes (①), par exemple la première partie (B1), qui n'a pas de languettes distinctes (61) ;
une région de hauteur variable (②) où les languettes distinctes (61) ont des hauteurs variables ; et
une région de hauteur uniforme (③) où les languettes distinctes (61) ont une hauteur uniforme dans une direction radiale ou dans la direction d'enroulement (X),
dans lequel les languettes multiples (61) disposées dans la région de hauteur variable (②) et la région de hauteur uniforme (②) sont pliées dans la direction radiale pour former une région de surface de pliage (F).

**25.** Ensemble d'électrodes (A ; 80) selon la revendication 24,

dans lequel la troisième partie (B2) correspond à la région de hauteur variable (②) et la région de hauteur uniforme (②) ; ou
dans lequel la région de hauteur variable (②) et la région de hauteur uniforme (③) correspondent à la deuxième partie (B3) et à la troisième partie (B2), respectivement.

**26.** Ensemble d'électrodes (A ; 80) selon la revendication 24 ou 25,

dans lequel dans la région de hauteur variable (②) et la région de hauteur uniforme (③), une hauteur maximale

$h_{max}$ des languettes distinctes (61) satisfait à la formule suivante :

$$h_{max} \leq W_{feuille} - W_{déchet,min} - W_{marge,min} - W_{espace}$$

dans lequel $W_{feuille}$ est une largeur d'une feuille de collecteur de courant avant que des languettes distinctes (61) ne soient formées ; $W_{déchet,min}$ est une largeur correspondant à une marge de déchets coupés minimale lorsque des languettes distinctes (61) sont formées en coupant la feuille de collecteur de courant ; $W_{marge,min}$ est une largeur correspondant à une marge sinueuse minimale du séparateur (12) ; et $W_{espace}$ est une largeur correspondant à un espace d'isolation entre une extrémité du séparateur (12) et une extrémité de la deuxième électrode (10 ; 11) face à la première électrode (10 ; 11) avec le séparateur (12) interposé entre celles-ci.

27. Ensemble d'électrodes (A ; 80) selon la revendication 26,

dans lequel la première électrode (10 ; 11) est une électrode positive (10) et l'espace d'isolation ($W_{espace}$) est dans la plage de 0,2 mm à 6 mm ; et/ou
dans lequel la première électrode (10 ; 11) est une électrode négative (11) et l'espace d'isolation ($W_{espace}$) est dans la plage de 0,1 mm à 2 mm.

28. Ensemble d'électrodes (A ; 80) selon la revendication 26 ou 27, dans lequel :

la marge de déchets coupés minimale ($W_{déchet,min}$) est zéro ou dans la plage de 1,5 mm à 8 mm ; et/ou
la marge sinueuse minimale ($W_{marge,min}$) est dans la plage de 0 à 1 mm ; et/ou.

29. Ensemble d'électrodes (A ; 80) selon l'une quelconque des revendications 24 à 28, dans lequel :

les hauteurs des languettes distinctes (61) disposées dans la région de hauteur variable (@) augmentent graduellement ou par étapes dans la plage de 2 mm à 10 mm ; et/ou
un rapport d'une dimension radiale de la région de saut de languettes (①) à un rayon de l'ensemble d'électrodes (A ; 80) sauf pour une partie centrale creuse dans la direction radiale de l'ensemble d'électrodes (A ; 80) est compris entre 10 % et 40 % ; et/ou
un rapport d'une dimension radiale de la région de hauteur variable (@) à une dimension radiale correspondant à la région de hauteur variable (@) et la région de hauteur uniforme (③) dans la direction radiale de l'ensemble d'électrodes (A ; 80) est compris entre 1 % et 50 % ; et/ou
un rapport d'une longueur d'une zone d'électrode correspondant à la région de saut de languettes (①) à une longueur totale de la première électrode (10 ; 11) dans la direction d'enroulement (X) est compris entre 1 % et 30 % ; et/ou
un rapport d'une longueur d'une zone d'électrode correspondant à la région de hauteur variable (@) à une longueur totale de la première électrode (10 ; 11) dans la direction d'enroulement (X) est compris entre 1 % et 40 % ; et/ou
dans lequel un rapport d'une longueur d'une zone d'électrode correspondant à la région de hauteur uniforme (③) à une longueur totale de la première électrode (10 ; 11) dans la direction d'enroulement (X) est compris entre 50 % et 90 %.

30. Ensemble d'électrodes (A ; 80) selon l'une quelconque des revendications 4 à 29,
dans lequel des largeurs dans la direction d'enroulement (X) et/ou des hauteurs dans la direction de l'axe d'enroulement des languettes distinctes multiples (61) :

augmentent en continu ou par étapes dans la direction d'enroulement (X) ; et/ou
augmentent, puis diminuent dans la direction d'enroulement (X) ; et/ou
diminuent, puis augmentent dans la direction d'enroulement (X).

31. Ensemble d'électrodes (A ; 80) selon les revendications 4 à 30,
dans lequel les languettes multiples (61) forment des groupes de languettes multiples le long d'une direction parallèle à la direction d'enroulement (X) de l'ensemble d'électrodes (A ; 80), dans lequel :

des languettes distinctes (61) appartenant à un des groupes de languettes ont une largeur identique dans la direction d'enroulement (X) et/ou une hauteur identique dans la direction de l'axe d'enroulement ; et/ou

des languettes distinctes (61) appartenant à un autre des groupes de languettes ont des largeurs croissantes dans la direction d'enroulement (X) et/ou des hauteurs croissantes dans la direction d'enroulement (X) ; et/ou trois groupes de languettes successifs ont des largeurs W1, W2 et W3, respectivement, dans la direction d'enroulement (X), dans lequel un rapport W3/W2 est inférieur à un rapport W2/W1.

32. Ensemble d'électrodes (A ; 80) selon l'une quelconque des revendications précédentes,
dans lequel la première partie (B1) et/ou la deuxième partie (B3) ne sont pas formées en languettes distinctes (61) et ne sont pas pliées le long d'une direction radiale de l'ensemble d'électrodes (A ; 80).

33. Ensemble d'électrodes (A ; 80) selon l'une quelconque des revendications précédentes,
dans lequel une couche de revêtement d'isolation, par exemple une résine polymère et une charge inorganique dispersée dans la résine polymère, est formée à une limite entre la couche de matériau actif (42) et la première partie non revêtue (43 ; 146a) fournie.

34. Ensemble d'électrodes (A ; 80) selon la revendication 33, dans lequel :

la couche de revêtement d'isolation est formée pour couvrir une partie limite de la couche de matériau actif (42) et la première partie non revêtue (43 ; 146a) le long de la direction d'enroulement (X) ; et/ou
la couche de revêtement d'isolation est formée pour couvrir la partie limite de la couche de matériau actif (42) et la première partie non revêtue (43 ; 146a) le long de la direction de l'axe d'enroulement d'une largeur comprise entre 0,3 mm et 5 mm ; et/ou
une extrémité de la couche de revêtement d'isolation est située dans la plage de -2 mm à 2 mm le long de la direction de l'axe d'enroulement par rapport à une extrémité du séparateur (12) ; et/ou
la couche de revêtement d'isolation est exposée depuis le séparateur (12) ; et/ou
un côté intérieur d'une rainure découpée (63) formée dans la première partie non revêtue (43 ; 146a) et la couche de revêtement d'isolation sont espacées d'une distance comprise entre 0,5 mm et 2 mm ; et/ou
une extrémité de la couche de revêtement d'isolation dans la direction de l'axe d'enroulement est située dans la plage de -2 mm à +2 mm par rapport à une extrémité inférieure de la rainure découpée (63) formée dans la première partie non revêtue (43 ; 146a).

35. Ensemble d'électrodes (A ; 80) selon la revendication 34,
dans lequel la deuxième électrode (10 ; 11) est revêtue d'une couche de matériau actif (42) dans une deuxième partie de matériau actif, et une extrémité de la deuxième partie de matériau actif dans la direction de l'axe d'enroulement chevauche la couche de revêtement d'isolation dans une vue dans une direction radiale.

36. Ensemble d'électrodes (A ; 80) selon l'une quelconque des revendications précédentes,

dans lequel la troisième partie (B2) et/ou la deuxième partie (B3) sont chacune formées en languettes distinctes multiples (61) qui sont pliables individuellement,
dans lequel l'ensemble d'électrodes (A ; 80) inclut une région de surface de pliage (F) formée en pliant les languettes multiples (61) le long d'une direction radiale de l'ensemble d'électrodes (A ; 80).

37. Ensemble d'électrodes (A ; 80) selon la revendication 36,

dans lequel lorsque le nombre de languettes distinctes (61) rencontrant une ligne virtuelle parallèle à la direction d'axe d'enroulement à un emplacement radial quelconque de la région de surface de pliage (F) sur la base d'une partie centrale de l'ensemble d'électrodes (A ; 80) est défini comme étant le nombre de couches chevauchantes de languettes distinctes (61) à l'emplacement radial correspondant,
dans lequel la région de surface de pliage (F) inclut :

une région ayant un nombre de couches chevauchantes uniforme (b1) dans laquelle le nombre de couches chevauchantes de languettes distinctes (61) est uniforme, plus particulièrement 10 ou plus, ou 10 à 35, le long d'une direction radiale, et
une région ayant un nombre de couches chevauchantes décroissant (b2) dans laquelle le nombre de couches chevauchantes de languettes distinctes (61) en continu diminue dans la direction radiale.

38. Ensemble d'électrodes (A ; 80) selon la revendication 37,
dans lequel une dimension radiale de la région ayant un nombre de couches chevauchantes uniforme (b1) et de la région ayant un nombre de couches chevauchantes décroissant (b2) correspond à une dimension radiale d'une région dans laquelle les languettes distinctes multiples (61) sont formées.

39. Ensemble d'électrodes (A ; 80) selon la revendication 37 ou 38,

dans lequel l'ensemble d'électrodes (A ; 80) inclut une région de saut de languettes (①) n'ayant pas de languettes distinctes (61), une région de hauteur variable (②) où des languettes distinctes (61) ont des hauteurs variables, et une région de hauteur uniforme (③) où des languettes distinctes (61) ont une hauteur uniforme dans l'ordre le long de la direction radiale ; et/ou
dans lequel une position radiale de l'axe d'enroulement (Y) de l'ensemble d'électrodes (A; 80) à laquelle la région ayant un nombre de couches chevauchantes uniforme (b1) commence, correspond à une position radiale à laquelle la région de hauteur variable (②) commence.

40. Ensemble d'électrodes (A ; 80) selon l'une quelconque des revendications 37 à 39,

dans lequel la première électrode (10 ; 11) est une électrode positive (10) et, dans la région ayant un nombre de couches chevauchantes uniforme (b1), une épaisseur chevauchante de languettes distinctes (61) est entre 100 µm et 875 µm ; et/ou
dans lequel la première électrode (10 ; 11) est une électrode négative (11) et, dans la région ayant un nombre de couches chevauchantes uniforme (b1), une épaisseur chevauchante de languettes distinctes (61) est comprise entre 50 µm et 700 µm.

41. Ensemble d'électrodes (A ; 80) selon la revendication 37,
dans lequel un rapport d'une dimension radiale de la région ayant un nombre de couches chevauchantes uniforme (b1) à une dimension radiale de la région ayant un nombre de couches chevauchantes uniforme (b1) et la région ayant un nombre de couches chevauchantes décroissant (b2) est compris entre 30 % et 85 %.

42. Ensemble d'électrodes (A ; 80) selon l'une quelconque des revendications 36 à 41, comprenant en outre :

un collecteur de courant (41) soudé à la région de surface de pliage (F),
dans lequel une région de soudure (W) du collecteur de courant (41) chevauche la région ayant un nombre de couches chevauchantes uniforme (b1) d'au moins 50 % dans la direction radiale de l'ensemble d'électrodes (A ; 80).

43. Ensemble d'électrodes (A ; 80) selon la revendication 42,
dans lequel la région de soudure (W) du collecteur de courant (41) s'étend de façon à aussi chevaucher la région ayant un nombre de couches chevauchantes décroissant (b2).

44. Ensemble d'électrodes (A ; 80) selon la revendication 42 ou 43,
dans lequel un bord du collecteur de courant (41) est disposé sur la région de surface de pliage (F) pour couvrir une extrémité d'une partie pliée des languettes distinctes les plus à l'extérieur (61) dans la direction radiale de l'ensemble d'électrodes (A ; 80).

45. Ensemble d'électrodes (A ; 80) selon la revendication 43 ou 44,
dans lequel le collecteur de courant (41) est soudé à la région de surface de pliage (F), en particulier de façon à avoir une résistance de soudure égale ou supérieure à 196 kPa (2 kgf/cm$^2$), ou égale ou supérieure à 392 kPa (4 kgf/cm$^2$).

46. Ensemble d'électrodes (A ; 80) selon l'une quelconque des revendications précédentes,

dans lequel la première partie non revêtue (43 ; 146a) est faite d'une feuille métallique, en particulier d'une feuille d'aluminium
dans lequel la feuille métallique a un allongement compris entre 1,5 % et 3,0 % et une résistance à la traction comprise entre 245 MPa (25 kgf/mm$^2$) et 343MPa (35 kgf/mm$^2$).

47. Ensemble d'électrodes (A ; 80) selon la revendication 46,
dans lequel la première électrode (10 ; 11) a une longueur de cambrure inférieure à 20 mm.

**48.** Ensemble d'électrodes (A ; 80) selon l'une quelconque des revendications précédentes,

dans lequel la première partie de matériau actif a un côté court le long de la direction d'axe d'enroulement et un côté long le long de la direction d'enroulement (X),

dans lequel un rapport de dimension du côté court au côté long est compris entre 1 % et 4%.

**49.** Ensemble d'électrodes (A ; 80) selon l'une quelconque des revendications précédentes, dans lequel une hauteur de la deuxième partie (B3) diminue en continu ou par étapes dans la direction radiale ou d'enroulement (X).

**50.** Ensemble d'électrodes (A ; 80) selon l'une quelconque des revendications précédentes,

dans lequel la deuxième partie (B3) et la troisième partie (B2) sont formées en languettes distinctes multiples (61) qui sont pliables individuellement,

dans lequel des largeurs et/ou des hauteurs des languettes distinctes (61) dans la deuxième partie (B3) sont supérieures à celles des languettes distinctes (61) dans la troisième partie (B2).

**51.** Ensemble d'électrodes (A ; 80) selon l'une quelconque des revendications 4 à 50, dans lequel la troisième partie (B2) inclut une région de saut de languettes (①) n'ayant pas de languettes distinctes (61).

**52.** Ensemble d'électrodes (A ; 80) selon la revendication 51, dans lequel :

la troisième partie (B2) inclut des régions de saut de languettes multiples (①), qui, en option, ont des largeurs qui augmentent ou diminuent le long de la direction d'enroulement (X) ; et/ou

une hauteur de la région de saut de languettes (①) est égale à une hauteur de la première partie (B1) ou de la deuxième partie (B3) ; et/ou

les languettes multiples (61) sont situées dans un angle central préréglé, qui est, par exemple, égal ou supérieur à 20 degrés, à l'axe d'enroulement (Y) de l'ensemble d'électrodes (A ; 80) ; et/ou

les languettes distinctes multiples (61) sont situées dans au moins deux régions circulaires sectorielles ou régions polygonales disposées dans une vue en plan dans la direction de l'axe d'enroulement de l'ensemble d'électrodes (A ; 80).

**53.** Ensemble d'électrodes (A ; 80) selon l'une quelconque des revendications précédentes,

dans lequel la deuxième électrode (10 ; 11) inclut une deuxième partie de matériau actif revêtue d'une autre couche de matériau actif (42) et une deuxième partie non revêtue (145) exempte de l'autre couche de matériau actif (42) à un bord de la deuxième électrode (10 ; 11) s'étendant le long de la direction d'enroulement (X),

dans lequel la deuxième partie non revêtue (145) est configurée pour fournir une connexion électrique à la première d'électrode (10 ; 11),

dans lequel la deuxième partie non revêtue (145) est partiellement divisée en languettes distinctes multiples (61) qui sont pliables individuellement,

dans lequel les languettes multiples (61) sont pliées le long d'une direction radiale de l'ensemble d'électrodes (A ; 80) pour former une région de surface de pliage (F).

**54.** Ensemble d'électrodes (A ; 80) comprenant une première électrode (10 ; 11), une deuxième électrode (10 ; 11), et un séparateur (12) interposé entre celles-ci,

dans lequel la première électrode (10 ; 11), la deuxième électrode (10 ; 11) et le séparateur (12) sont enroulés autour d'un axe d'enroulement (Y),

dans lequel la première électrode (10 ; 11) inclut une première partie de matériau actif revêtue d'une couche de matériau actif (42) et une première partie non revêtue (43 ; 146a) exempte de la couche de matériau actif (42), la première partie non revêtue (43 ; 146a) étant à un bord de la première électrode (10 ; 11) qui s'étend le long d'une direction d'enroulement (X),

dans lequel la première partie non revêtue (43 ; 146a) est partiellement formée en languettes distinctes multiples (61) qui sont pliables individuellement dans une direction radiale de l'ensemble d'électrodes (A ; 80),

dans lequel une hauteur d'une région la plus extérieure incluant une spire la plus extérieure de la première partie non revêtue (43 ; 146a) est inférieure à des hauteurs des languettes distinctes multiples (61),

dans lequel les languettes multiples (61) sont pliées le long de la direction radiale vers l'axe d'enroulement (Y) de l'ensemble d'électrodes (A ; 80) pour former une région de surface de pliage (F), et

dans lequel la région de surface de pliage (F) inclut une région ayant un nombre de couches chevauchantes uniforme (b1) dans laquelle le nombre de couches chevauchantes des languettes distinctes (61) est égal ou supérieur à 10, et une région ayant un nombre de couches chevauchantes décroissant (b2) située adjacente à la région ayant un nombre de couches chevauchantes uniforme (b1) dans laquelle le nombre de couches chevauchantes des languettes distinctes (61) diminue dans la direction radiale en s'éloignant de la région ayant un nombre de couches chevauchantes uniforme (b1).

**55.** Ensemble d'électrodes (A ; 80) selon la revendication 54,

dans lequel l'ensemble d'électrodes (A ; 80) inclut une région de saut de languettes (①) n'ayant pas de languettes distinctes (61), une région de hauteur variable (@) dans laquelle les languettes distinctes (61) ont des hauteurs qui augmentent par étapes le long de la direction radiale de l'ensemble d'électrodes (A ; 80), et une région de hauteur uniforme (@) dans laquelle les languettes distinctes (61) ont une hauteur uniforme le long de la direction radiale de l'ensemble d'électrodes (A ; 80),

dans lequel, depuis un axe d'enroulement (Y) de l'ensemble d'électrodes (A ; 80), une position radiale à laquelle la région ayant un nombre de couches chevauchantes uniforme (b1) commence, correspond à une position radiale à laquelle la région de hauteur variable (@) commence.

**56.** Ensemble d'électrodes (A ; 80) selon la revendication 55,

dans lequel une région la plus intérieure de la première partie non revêtue (43 ; 146a) n'est pas formée en languettes distinctes (61) ; et/ou

dans lequel un rapport d'une dimension radiale de la région ayant un nombre de couches chevauchantes uniforme (b1) à une dimension radiale de la région ayant un nombre de couches chevauchantes uniforme (b1) et la région ayant un nombre de couches chevauchantes décroissant (b2) est compris entre 30 % et 85 % ; et/ou

dans lequel un rapport d'une longueur d'une zone d'électrode dans la direction d'enroulement (X) correspondant à la région de saut de languettes (①) à une longueur totale de la première électrode (10 ; 11) dans la direction d'enroulement (X) est compris entre 1 % et 30% ; et/ou

dans lequel un rapport d'une longueur d'une zone d'électrode dans la direction d'enroulement (X) correspondant à la région de hauteur variable (@) à une longueur totale de la première électrode (10 ; 11) dans la direction d'enroulement (X) est compris entre 1 % et 40 % ; et/ou

dans lequel un rapport d'une longueur d'une zone d'électrode dans la direction d'enroulement (X) correspondant à la région de hauteur uniforme (③) à une longueur totale de la première électrode (10 ; 11) dans la direction d'enroulement (X) est compris entre 50 % et 90 %.

**57.** Ensemble d'électrodes (A ; 80) selon l'une quelconque des revendications 54 à 56,

dans lequel dans la région divisée en languettes multiples (61), au moins une sélectionnée parmi des largeurs des languettes distinctes (61) dans la direction d'enroulement (X), leurs hauteurs dans la direction d'axe d'enroulement, et leur angle interne inférieur (θ) augmente par étapes le long d'une direction parallèle à la direction d'enroulement (X) ; et/ou

dans lequel une hauteur de la région la plus intérieure de la première partie non revêtue (43 ; 146a) ou d'une région la plus extérieure de la première partie non revêtue (43 ; 146a) est inférieure à des hauteurs des languettes distinctes multiples (61) ; et/ou

dans lequel les languettes multiples (61) sont pliées vers l'axe d'enroulement (Y) de l'ensemble d'électrodes (A ; 80), et au moins 90 % ou plus, sur la base d'une dimension radiale, d'une région cylindrique centrale entourée par l'ensemble d'électrodes (A ; 80) n'est pas couvert par la partie pliée des languettes distinctes (61).

**58.** Ensemble d'électrodes (A ; 80) comprenant une électrode positive (10), une électrode négative (11) et un séparateur (12) interposé entre celles-ci,

dans lequel l'électrode positive (10), l'électrode négative (11) et le séparateur (12) sont enroulés autour d'un axe d'enroulement (Y),

dans lequel l'électrode positive (10) inclut une partie positive de matériau actif revêtue d'un matériau actif positif et une première partie non revêtue (43 ; 146a) exempte du matériau actif positif, la première partie non revêtue (43 ; 146a) étant à un bord de l'électrode positive (10) qui s'étend le long d'une direction d'enroulement (X) de l'ensemble d'électrodes (A ; 80),

dans lequel la première partie non revêtue (43 ; 146a) est configurée pour fournir une connexion électrique à l'électrode positive (10),

dans lequel la première partie non revêtue (43 ; 146a) inclut des languettes distinctes multiples (61) qui sont pliables individuellement dans une direction radiale de l'ensemble d'électrodes (A ; 80),

dans lequel une hauteur d'une région la plus extérieure incluant une spire la plus extérieure de la première partie non revêtue (43 ; 146a) est inférieure à des hauteurs des languettes distinctes multiples (61),

dans lequel les languettes multiples (61) sont pliées vers l'axe d'enroulement (Y) pour former une région de surface de pliage (F),

dans lequel la région de surface de pliage (F) inclut une région ayant un nombre de couches chevauchantes uniforme (b1) dans laquelle le nombre de couches chevauchantes des languettes distinctes (61) est uniforme et une région ayant un nombre de couches chevauchantes décroissant (b2) situées adjacentes à la région ayant un nombre de couches chevauchantes uniforme (b1) dans laquelle le nombre de couches chevauchantes des languettes distinctes (61) diminue dans une direction en s'éloignant de la région ayant un nombre de couches chevauchantes uniforme (b1), et

dans lequel une épaisseur combinée des couches chevauchantes des languettes distinctes (61) dans la région ayant un nombre de couches chevauchantes uniforme (b1) est entre 100 $\mu$m et 875 $\mu$m.

59. Ensemble d'électrodes (A ; 80) selon la revendication 58,
dans lequel une hauteur d'une région la plus intérieure incluant une spire la plus intérieure de la première partie non revêtue (43 ; 146a) est inférieure à des hauteurs des languettes distinctes multiples (61).

60. Ensemble d'électrodes (A ; 80) comprenant une électrode positive (10), une électrode négative (11), et un séparateur (12) interposé entre celles-ci,

dans lequel l'électrode positive (10), l'électrode négative (11) et le séparateur (12) sont enroulés autour d'un axe d'enroulement (Y),

dans lequel l'électrode négative (11) inclut une partie de matériau actif négatif revêtue d'un matériau actif négatif et une partie non revêtue exempte du matériau actif négatif, la partie non revêtue étant à un bord de l'électrode négative (11) s'étendant le long d'une direction d'enroulement (X),

dans lequel la partie non revêtue est configurée pour fournir une connexion électrique à l'électrode négative (11),

dans lequel la partie non revêtue inclut des languettes distinctes multiples (61) qui sont pliables individuellement dans une direction radiale,

dans lequel une hauteur d'une région la plus extérieure incluant une spire la plus extérieure de la partie non revêtue est inférieure à des hauteurs des languettes distinctes multiples (61),

dans lequel les languettes multiples (61) sont pliées vers l'axe d'enroulement (Y) pour former une région de surface de pliage (F),

dans lequel la région de surface de pliage (F) inclut une région ayant un nombre de couches chevauchantes uniforme (b1) dans laquelle le nombre de couches chevauchantes des languettes distinctes (61) est uniforme et une région ayant un nombre de couches chevauchantes décroissant (b2) adjacentes à la région ayant un nombre de couches chevauchantes uniforme (b1) dans laquelle le nombre de couches chevauchantes des languettes distinctes (61) diminue dans une direction en s'éloignant de la région ayant un nombre de couches chevauchantes uniforme (b1), et

dans lequel une épaisseur combinée des couches chevauchantes des languettes distinctes (61) dans la région ayant un nombre de couches chevauchantes uniforme (b1) est entre 50 $\mu$m et 700 $\mu$m.

61. Ensemble d'électrodes (A ; 80) selon la revendication 60,
dans lequel une hauteur d'une région la plus intérieure incluant une spire la plus intérieure de la partie non revêtue est inférieure à des hauteurs des languettes distinctes multiples (61).

62. Batterie, comprenant :

l'ensemble d'électrodes (A ; 80) selon l'une quelconque des revendications 1 à 52 ;

un boîtier de batterie (142) incluant une première face d'extrémité ouverte et une deuxième face d'extrémité opposée à la première face d'extrémité, dans lequel l'ensemble d'électrodes (A ; 80) est accueilli dans le boîtier de batterie (142), et le boîtier de batterie (142) est connecté électriquement à soit la première électrode (10 ; 11), soit la deuxième électrode (10 ; 11) de l'ensemble d'électrodes (A ; 80) ;

un corps d'étanchéité (143) configuré pour étanchéiser la première face d'extrémité ouverte du boîtier de batterie (142) ; et
une borne (172) connectée électriquement à l'autre de la première électrode (10 ; 11) et la deuxième électrode (10 ; 11), dans lequel la borne (172) a une surface exposée à l'extérieur du boîtier de batterie (142), dans lequel le boîtier de batterie (142) inclut une partie cordon de soudure (147) pressée vers l'intérieur à une région adjacente à la première face d'extrémité, dans lequel les faces de la partie cordon de soudure (147) et la deuxième partie (B3) sont espacées d'une distance prédéterminée.

**63.** Batterie selon la revendication 62,
dans laquelle une profondeur d'enfoncement (D1) de la partie cordon de soudure (147) est égale ou supérieure à une distance (D2) entre la circonférence intérieure du boîtier de batterie (142) et une limite entre la deuxième partie (B3) et la troisième partie (B2).

**64.** Batterie selon la revendication 62 ou 63, comprenant en outre :

un collecteur de courant (41) électriquement couplé à la troisième partie (B2) ; et
un isolateur (146) configuré pour couvrir le collecteur de courant (41) et avoir un bord interposé et fixé entre la circonférence intérieure de la partie cordon de soudure (147) et le collecteur de courant (41).

**65.** Batterie selon la revendication 64,

dans laquelle un diamètre du collecteur de courant (41) est inférieur à un diamètre intérieur minimal de la circonférence intérieure de la partie cordon de soudure (147), et un diamètre du collecteur de courant (41) est égal à ou supérieur à un diamètre le plus extérieur de la troisième partie (B2) ; et/ou
dans laquelle le collecteur de courant (41) est situé plus haut que la partie cordon de soudure (147) dans la direction de l'axe d'enroulement.

**66.** Batterie selon l'une quelconque des revendications 62 à 65,
dans laquelle le corps d'étanchéité (143) inclut un capuchon (143a) qui, par exemple, est la borne (172), configuré pour étanchéiser le premier côté d'extrémité ouvert du boîtier de batterie (142), un joint d'étanchéité (143b ; 178b) interposé entre un bord du capuchon (143a) et l'extrémité ouverte du boîtier de batterie (142), et une partie de sertissage (148) pliée et étendue dans le boîtier de batterie (142) et configurée pour entourer et fixer le bord du capuchon (143a) avec le joint d'étanchéité (143b ; 178b).

**67.** Batterie selon la revendication 62 à 66, comprenant en outre :

un premier collecteur de courant (144) connecté électriquement à la première partie non revêtue (43 ; 146a),
dans laquelle la borne (172) est une borne d'alimentation introduite dans un trou de perforation formé dans la deuxième face d'extrémité du boîtier de batterie (142),
dans laquelle la borne d'alimentation est isolée du boîtier de batterie (142) et connectée électriquement au premier collecteur de courant (144), par exemple par un isolateur (146) interposé entre une surface intérieure d'une partie inférieure du boîtier de batterie (142) et une surface supérieure du premier collecteur de courant (144) pour isoler électriquement la surface intérieure de la partie inférieure du boîtier de batterie (142) et le premier collecteur de courant (144).

**68.** Batterie selon la revendication 67,

dans laquelle l'isolateur (146) a une épaisseur correspondant à une distance entre la surface intérieure de la partie inférieure du boîtier de batterie (142) et la surface supérieure du premier collecteur de courant (144) et est en contact étroit avec la surface intérieure de la partie inférieure du boîtier de batterie (142) et la surface supérieure du premier collecteur de courant (144) ; et/ou
dans lequel la borne (172) inclut une partie plate (172c) à une extrémité inférieure de celle-ci, l'isolateur (146) a une ouverture pour exposer la partie plate (172c), et la partie plate (172c) est soudée au premier collecteur de courant (144) à travers l'ouverture.

**69.** Batterie selon les revendications 62 à 68,
dans laquelle la deuxième électrode (10 ; 11) inclut une deuxième partie de matériau actif revêtue d'une couche de matériau actif (42) et une deuxième partie non revêtue (145) non revêtue d'une couche de matériau actif (42) le long de la direction d'enroulement (X), la deuxième électrode (10 ; 11) a une première polarité, au moins une partie de la deuxième partie non revêtue (145) est définie comme étant une languette d'électrode en soi, et la batterie inclut en outre un deuxième collecteur de courant (145 ; 176) connecté électriquement à la deuxième partie non revêtue (145) et ayant un bord au moins partiellement couplé à une paroi du boîtier de batterie (142).

**70.** Batterie selon l'une quelconque des revendications 67 à 69,

dans laquelle la deuxième électrode (10 ; 11) inclut une deuxième partie de matériau actif revêtue d'un matériau deuxième actif et une deuxième partie non revêtue (145) exempte du matériau deuxième actif, la deuxième partie non revêtue (145) étant à un bord de la deuxième électrode (10 ; 11) s'étendant le long de la direction d'enroulement (X),
dans laquelle la deuxième partie non revêtue (145) fournit une connexion électrique à la deuxième électrode (10 ; 11),
dans laquelle la batterie inclut en outre un deuxième collecteur de courant (145 ; 176) connecté électriquement à la deuxième partie non revêtue (145) et ayant un bord couplé électriquement à une paroi du boîtier de batterie (142) s'étendant entre la première face d'extrémité et la deuxième face d'extrémité,
dans laquelle le premier collecteur de courant (144) a un diamètre extérieur égal ou supérieur à celui du deuxième collecteur de courant (145 ; 176).

**71.** Batterie selon la revendication 70,

dans laquelle le premier collecteur de courant (144) et le deuxième collecteur de courant (145 ; 176) sont respectivement soudés à la première partie non revêtue (43 ; 146a) et à la deuxième partie non revêtue (145) le long d'une direction radiale de l'ensemble d'électrodes (A ; 80) pour former un motif de soudure respectif,
dans laquelle une longueur du motif de soudure du premier collecteur de courant (144) est plus longue qu'une longueur du motif de soudure du deuxième collecteur de courant (145 ; 176).

**72.** Batterie selon la revendication 71,
dans laquelle le motif de soudure du premier collecteur de courant (144) et le motif de soudure du deuxième collecteur de courant (145 ; 176) sont situés sensiblement à la même distance de l'axe d'enroulement (Y) de l'ensemble d'électrodes (A ; 80).

**73.** Batterie selon l'une quelconque des revendications 70 à 72,

dans laquelle le boîtier de batterie (142) inclut une partie cordon de soudure (147) pressée vers l'intérieur, adjacente à la première face d'extrémité,
dans laquelle le bord du deuxième collecteur de courant (145 ; 176) est électriquement connecté, plus particulièrement soudé, à la partie cordon de soudure (147).

**74.** Batterie selon la revendication 73,
dans laquelle une région du deuxième collecteur de courant (145 ; 176) en contact électrique avec la deuxième partie non revêtue (145) est entourée par la partie cordon de soudure (147) dans une vue en plan dans la direction de l'axe d'enroulement.

**75.** Batterie selon la revendication 73 ou 74,
dans laquelle la batterie inclut un capuchon (143a) ayant un bord porté par la partie cordon de soudure (147) et n'ayant aucune polarité, un joint d'étanchéité (143b ; 178b) interposé entre le bord du capuchon (143a) et l'extrémité ouverte du boîtier de batterie (142), et une partie de sertissage (148) pliée et étendue dans l'extrémité ouverte du boîtier de batterie (142) et configurée pour entourer et fixer le bord du capuchon (143a) avec le joint d'étanchéité (143b ; 178b), et le bord du deuxième collecteur de courant (145 ; 176) est interposé et fixé entre la partie cordon de soudure (147) et le joint d'étanchéité (143b ; 178b) par la partie de sertissage (148).

**76.** Batterie selon l'une quelconque des revendications 62 à 75,

dans laquelle la batterie comprend en outre un collecteur de courant (41) comprenant une région de soudure (W) soudée à une région ayant un nombre de couches chevauchantes uniforme (b1) de la première région non revêtue, et
dans laquelle :

la première électrode (10; 11) est une électrode positive (10) et les couches chevauchantes de languettes distinctes (61) dans la région de soudure (W) ont une épaisseur dans la plage de 100 μm à 875 μm ; ou la première électrode (10; 11) est une électrode négative (11) et les couches chevauchantes de languettes distinctes (61) dans la région de soudure (W) ont une épaisseur dans la plage de 50 μm à 700 μm.

**77.** Batterie, comprenant :

l'ensemble d'électrodes (A ; 80) selon l'une quelconque des revendications 54 à 57 ;
un boîtier de batterie (142) incluant une extrémité ouverte et une partie inférieure opposée à celle-ci, dans laquelle l'ensemble d'électrodes (A ; 80) est accueilli dans le boîtier de batterie (142), dans laquelle le boîtier de batterie (142) est connecté électriquement à soit la première électrode (10 ; 11), soit la deuxième électrode (10 ; 11) ;
un corps d'étanchéité (143) configuré pour étanchéiser la première face d'extrémité ouverte du boîtier de batterie (142) ; et
une borne (172) connectée électriquement à l'autre de la première électrode (10 ; 11) et la deuxième électrode (10 ; 11) et ayant une surface exposée à l'extérieur du boîtier de batterie (142).

**78.** Batterie, comprenant :

l'ensemble d'électrodes (A ; 80) selon la revendication 58 ;
un boîtier de batterie (142) incluant une première face d'extrémité ouverte et une deuxième face d'extrémité opposée à la première face d'extrémité, dans laquelle l'ensemble d'électrodes (A ; 80) est accueilli dans le boîtier de batterie (142), et le boîtier de batterie (142) est connecté électriquement à soit la première électrode (10 ; 11), soit la deuxième électrode (10 ; 11) ;
un corps d'étanchéité (143) configuré pour étanchéiser la première face d'extrémité ouverte du boîtier de batterie (142) ; et
une borne (172) connectée électriquement à l'autre de la première électrode (10 ; 11) et la deuxième électrode (10 ; 11) et ayant une surface exposée à l'extérieur du boîtier de batterie (142).

**79.** Batterie selon la revendication 78,

dans laquelle la batterie comprend en outre un collecteur de courant (41) soudé à la région ayant un nombre de couches chevauchantes uniforme (b1) de sorte qu'au moins une partie d'une région de soudure (W) du collecteur de courant (41) chevauche la région ayant un nombre de couches chevauchantes uniforme (b1), et dans laquelle une épaisseur combinée des couches chevauchantes de languettes distinctes (61) dans la région de soudure (W) est dans la plage de 100 μm à 875 μm.

**80.** Batterie, comprenant :

l'ensemble d'électrodes (A ; 80) selon la revendication 60 ;
un boîtier de batterie (142) incluant une première face d'extrémité ouverte et une deuxième face d'extrémité opposée à la première face d'extrémité, dans laquelle l'ensemble d'électrodes (A ; 80) est accueilli dans le boîtier de batterie (142), et le boîtier de batterie (142) est connecté électriquement à soit la première électrode (10 ; 11), soit la deuxième électrode (10 ; 11) ;
un corps d'étanchéité (143) configuré pour étanchéiser la première face d'extrémité ouverte du boîtier de batterie (142) ; et
une borne (172) connectée électriquement à l'autre de la première électrode (10 ; 11) et la deuxième électrode (10 ; 11) et ayant une surface exposée à l'extérieur du boîtier de batterie (142).

**81.** Batterie selon la revendication 80,

dans laquelle la batterie comprend en outre un collecteur de courant (41) soudé à la région ayant un nombre de couches chevauchantes uniforme (b1) de sorte qu'au moins une partie d'une région de soudure (W) du collecteur de courant (41) chevauche la région ayant un nombre de couches chevauchantes uniforme (b1), et dans laquelle les couches chevauchantes de languettes distinctes (61) dans la région de soudure (W) ont une épaisseur dans la plage de 50 μm à 700 μm.

**82.** Bloc-batterie (300), comprenant des batteries multiples (301) selon l'une quelconque des revendications 62 à 81.

**83.** Bloc-batterie (300) selon la revendication 82,
dans lequel un rapport du diamètre à la hauteur de la batterie est supérieur à 0,4.

**84.** Bloc-batterie (300) selon la revendication 82 ou 83,
dans lequel la batterie a un facteur de forme de 46110, 4875, 48110, 4880 ou 4680.

**85.** Bloc-batterie (300) selon l'une quelconque des revendications 82 à 84,
dans lequel les batteries multiples (301) sont agencées dans un nombre de colonnes prédéterminé, de sorte qu'une borne (172) de chaque batterie et une surface extérieure d'une partie inférieure d'un boîtier de batterie (142) de chaque batterie sont tournées vers le haut.

**86.** Bloc-batterie (300) selon la revendication 85, comprenant en outre :

des barres bus multiples (210) configurées pour connecter les batteries multiples (301) en série et en parallèle, dans lequel les barres bus multiples (21) sont disposées à une partie supérieure des batteries multiples (301), et chacune des barres bus (210) inclut une partie corps (211) configurée pour s'étendre entre les bornes (172) de batteries voisines ; des premières bornes de barres omnibus multiples (213) configurées pour s'étendre d'un côté de la partie corps (211) et électriquement couplées à une borne (172) d'une batterie située d'un côté ; et des deuxièmes bornes de barres omnibus multiples (213) configurées pour s'étendre de l'autre côté de la partie corps (211) et électriquement couplées à une surface extérieure de la partie inférieure du boîtier de batterie (142) d'une batterie située de l'autre côté.

**87.** Véhicule (V), comprenant le bloc-batterie (300) selon l'une quelconque des revendications 82 à 86.

## FIG. 1

**FIG. 2**

**FIG. 3**

**FIG. 4**

FIG. 5

EP 4 044 336 B1

## FIG. 6

**FIG. 7a**

**FIG. 7b**

**FIG. 7c**

**FIG. 7d**

$h_4 \leq r_4 - a^* r_c$

$h_3 \leq r_3 - a^* r_c$

$h_2 \leq r_2 - a^* r_c$

$h_1 \leq r_1 - a^* r_c$

**FIG. 7e**

**FIG. 7f**

**FIG. 7g**

**FIG. 7h**

FIG. 8a

EP 4 044 336 B1

120

**FIG. 8b**

FIG. 8c

CORE

OUTER CIRCUMFERENCE

**FIG. 9**

FIG. 10a

EP 4 044 336 B1

124

**FIG. 10b**

**FIG. 10c**

**FIG. 10d**

MINIMUM HEIGHT OF SEGMENT: 4mm

**(a)**

Legend:
H: 4~10
H: 4~9
H: 4~8
H: 4~7
H: 4~6

MINIMUM HEIGHT OF SEGMENT: 5mm

**(b)**

Legend:
H: 5~10
H: 5~9
H: 5~8
H: 5~7

MINIMUM HEIGHT OF SEGMENT: 6mm

**(c)**

Legend:
H: 6~10
H: 6~9
H: 6~8

MINIMUM HEIGHT OF SEGMENT: 7mm

**(d)**

Legend:
H: 7~10
H: 7~9

**FIG. 10e**

**FIG. 1of**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

**FIG. 23**

**FIG. 24**

**FIG. 25**

**FIG. 26**

**FIG. 27**

**FIG. 28**

**FIG. 29**

**FIG. 30**

**FIG. 31**

**EP 4 044 336 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2564670 A
- US 2016226056 A1
- EP 2472641 A1
- US 2005260487 A1
- US 4794773 A
- US 6677082 B
- US 6680143 B